(19) **Europäisches Patentamt**
**European Patent Office**
**Office européen des brevets**

(11) **EP 4 557 815 A1**

(12) **EUROPEAN PATENT APPLICATION**
published in accordance with Art. 153(4) EPC

(43) Date of publication:
**21.05.2025 Bulletin 2025/21**

(21) Application number: **22950664.7**

(22) Date of filing: **14.07.2022**

(51) International Patent Classification (IPC):
**H04W 24/10** (2009.01)

(52) Cooperative Patent Classification (CPC):
**H04W 24/10**

(86) International application number:
**PCT/CN2022/105830**

(87) International publication number:
**WO 2024/011543 (18.01.2024 Gazette 2024/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **BASIS VECTOR SELECTING, INDICATING AND REPORTING METHOD AND APPARATUS**

(57) Disclosed in embodiments of the present disclosure are a basis vector selecting, indicating and reporting method and apparatus, applicable to the technical field of communication. The method executed by a terminal comprises: the terminal sends, to a network device, basis vector indication information for calculating precoding, wherein the basis vector indication information is used for indicating a basis vector and/or a basis vector pair selected by the terminal, and the basis vector and/or the basis vector pair comprises one or more of a TD basis vector, a DD basis vector, an SD-FD basis vector pair, a TD-FD basis vector pair, and a DD-FD basis vector pair. Therefore, the terminal is supported to select, indicate and report other basis vectors and/or basis vector pair other than an SD basis vector and an FD basis vector, to make predicted precoding match a channel at a future corresponding moment, so that the system performance is improved, and the basis vector indication overheads may be reduced.

basis vector indication information for calculating precoding is sent to a network device, in which the basis vector indication information is used to indicate the basis vector and/or a basis vector pair selected by the terminal

S21

FIG. 2

EP 4 557 815 A1

**Description**

**FIELD**

The present disclosure relates to the field of communication technology, and in particular to a method and device for reporting a selection indication of a basis vector.

**BACKGROUND**

In the related art, for a Rel-16 Type II codebook, a Rel-16 Type II port selection codebook, or a Rel-17 Type II port selection codebook, reporting of the selection indication of a spatial domain (SD) basis vector, a frequency domain (FD) basis vector, and a port is supported.

However, it does not support the reporting of the selection indication of a basis vector and/or a basis vector pair other than the SD basis vector and the FD basis vector, which is an urgent problem to be solved.

**SUMMARY**

The embodiments of the present disclosure provide a method and a device for reporting the selection indication of the basis vector, which support terminals to select, indicate and report basis vectors and/or basis vector pairs other than SD basis vectors and FD basis vectors, so that the predicted precoding matches the channel at a corresponding moment in the future, thereby improving system performance and reducing basis vector indication overhead.

In a first aspect, an embodiment of the present disclosure provides a method for reporting the selection indication of the basis vector, which is executed by a terminal, and the method includes: sending basis vector indication information for calculating precoding to a network device, in which the basis vector indication information is used to indicate the basis vector and/or a basis vector pair selected by the terminal.

In this technical solution, the terminal sends the basis vector indication information for calculating the precoding to the network device, in which the basis vector indication information is used to indicate the basis vector and/or the basis vector pair selected by the terminal, and the basis vector and/or the basis vector pair includes one or more time domain (TD) basis vectors; one or more doppler domain (DD) basis vectors; one or more spatial domain (SD)-frequency domain (FD) basis vector pairs; one or more TD-FD basis vector pairs; or one or more DD-FD basis vector pairs. Thus, the terminal is supported to select, indicate and report other basis vectors and/or basis vector pairs other than the SD basis vector and the FD basis vector, so that the predicted precoding matches the channel at the corresponding moment in the future, so as to improve the system performance, and reduce the basis vector indication overhead.

In a second aspect, an embodiment of the present disclosure provides another method for reporting the selection indication of the basis vector, which is executed by a network device, and the method includes: receiving basis vector indication information for calculating precoding sent by a terminal, in which the basis vector indication information is used to indicate the basis vector and/or a basis vector pair selected by the terminal; determining the basis vector and/or the basis vector pair selected by the terminal based on the basis vector indication information, to calculate the precoding at different times based on the basis vector and/or the basis vector pair for downlink transmission.

In a third aspect, an embodiment of the present disclosure provides a communication device, which has some or all of the functions of the terminal in the method described in the first aspect. For example, the functions of the communication device may have some or all of the functions in the embodiments of the present disclosure, or may have the functions of implementing any one of the embodiments of the present disclosure alone. The functions may be implemented by hardware, or may be implemented by hardware executing corresponding software. The hardware or software includes one or more units or modules corresponding to the above functions.

In one implementation, the structure of the communication device may include a transceiver module and a processing module, and the processing module is configured to support the communication device to perform the corresponding functions in the above method. The transceiver module is used to support communication between the communication device and other devices. The communication device may also include a storage module, which is used to couple with the transceiver module and the processing module, and store the computer programs and data necessary for the communication device.

In one implementation, the communication device includes: a transceiver module, configured to send basis vector indication information for calculating precoding to a network device, in which the basis vector indication information is used to indicate the basis vector and/or a basis vector pair selected by a terminal, and the basis vector and/or basis vector pair include one or more time domain (TD) basis vectors; one or more doppler domain (DD) basis vectors; one or more spatial domain (SD)-frequency domain (FD) basis vector pairs; one or more TD-FD basis vector pairs; or one or more DD-FD basis vector pairs.

In a fourth aspect, an embodiment of the present disclosure provides another communication device, which has some or all of the functions of the network device in the method examples described in the second aspect, such as the functions of the communication device may have some or all of the functions in the embodiments of the present disclosure, or may have the functions of implementing any one of the embodiments of the present disclosure alone. The functions may be implemented by hardware, or by hardware executing corresponding software. The hardware or software includes one or more units or modules corresponding to the above functions.

In one implementation, the structure of the communication device may include a transceiver module and a processing module, and the processing module is configured to support the communication device to perform the corresponding functions in the above method. The transceiver module is used to support communication between the communication device and other devices. The communication device may also include a storage module, which is used to couple with the transceiver module and the processing module, and store the computer programs and data necessary for the communication device.

In one implementation, the communication device includes: a transceiver module, configured to receive basis vector indication information for calculating precoding sent by a terminal, in which the basis vector indication information is used to indicate the basis vector and/or basis vector pair selected by the terminal; and a processing module, configured to determine the basis vector and/or the basis vector pair selected by the terminal based on the basis vector indication information, so as to calculate the precoding at different times based on the basis vector and/or basis vector pair for downlink transmission, the basis vector and/or basis vector pair includes one or more time domain (TD) basis vectors; one or more doppler domain (DD) basis vectors; one or more spatial domain (SD)-frequency domain (FD) basis vector pairs; one or more TD-FD basis vector pairs; or one or more DD-FD basis vector pairs.

In a fifth aspect, an embodiment of the present disclosure provides a communication device, which includes a processor. When the processor calls a computer program in a memory, the method described in the first aspect is performed.

In a sixth aspect, an embodiment of the present disclosure provides a communication device, which includes a processor. When the processor calls a computer program in a memory, the method described in the second aspect is performed.

In a seventh aspect, an embodiment of the present disclosure provides a communication device, which includes a processor and a memory, in which a computer program is stored; the processor executes the computer program stored in the memory so that the communication device performs the method described in the first aspect.

In an eighth aspect, an embodiment of the present disclosure provides a communication device, which includes a processor and a memory, in which a computer program is stored; the processor executes the computer program stored in the memory so that the communication device performs the method described in the second aspect.

In a ninth aspect, an embodiment of the present disclosure provides a communication device, which includes a processor and an interface circuit, in which the interface circuit is used to receive code instructions and transmit the code instructions to the processor, and the processor is used to run the code instructions to enable the device to execute the method described in the first aspect.

In a tenth aspect, an embodiment of the present disclosure provides a communication device, which includes a processor and an interface circuit, in which the interface circuit is used to receive code instructions and transmit the code instructions to the processor, and the processor is used to run the code instructions to enable the device to execute the method described in the second aspect.

In an eleventh aspect, an embodiment of the present disclosure provides a system for reporting the selection indication of the basis vector, the system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, an embodiment of the present invention provides a computer readable storage medium for storing instructions for the above-mentioned terminal, and when the instructions are executed, the terminal performs the method described in the first aspect.

In a thirteenth aspect, an embodiment of the present invention provides a readable storage medium for storing instructions used by the above-mentioned network device, and when the instructions are executed, the network device performs the method described in the above-mentioned second aspect.

In a fourteenth aspect, the present disclosure further provides a computer program product including a computer program, the computer program is executed on a computer to enable the computer to execute the method described in the first aspect.

In a fifteenth aspect, the present disclosure further provides a computer program product comprising a computer program, the computer program is executed on a computer to enable the computer to execute the method described in the second aspect.

In a sixteenth aspect, the present disclosure provides a chip system, which includes at least one processor and an interface, is used to support a terminal to implement the functions involved in the first aspect, for example, determining or processing at least one of the data and information involved in the above method. In a possible design, the chip system also includes a memory, which is used to store computer programs and data necessary for the terminal. The chip system may be composed of a chip, or it may include a chip and other discrete devices.

In a seventeenth aspect, the present disclosure provides a chip system, which includes at least one processor and an interface, and is used to support a network device to implement the functions involved in the second aspect, for example, determining or processing at least one of the data and information involved in the above method. In a possible design, the chip system also includes a memory, and the memory is used to store computer programs and data necessary for the network device. The chip system may be composed of a chip, or it may include a chip and other discrete devices.

In an eighteenth aspect, the present disclosure provides a computer program, the computer program is executed by a computer to enable the computer to perform the method described in the first aspect.

In a nineteenth aspect, the present disclosure provides a computer program, the computer program is executed by a computer to enable the computer to perform the method described in the second aspect.

## BRIEF DESCRIPTION OF THE DRAWINGS

In order to more clearly illustrate the technical solutions in the embodiments of the present disclosure or the background technology, the drawings in the embodiments of the present disclosure or the background technology will be described below.

FIG. 1 is an architecture diagram of a communication system according to an embodiment of the present disclosure;
FIG. 2 is a flow chart of a method for reporting a selection indication of a basis vector according to an embodiment of the present disclosure;
FIG. 3 is a flowchart of another method for reporting the selection indication of the basis vector according to an embodiment of the present disclosure;
FIG. 4 is a flowchart of another method for reporting the selection indication of the basis vector according to an embodiment of the present disclosure;
FIG. 5 is a flowchart of another method for reporting the selection indication of the basis vector according to an embodiment of the present disclosure;
FIG. 6 is a flowchart of another method for reporting the selection indication of the basis vector according to an embodiment of the present disclosure;
FIG. 7 is a flowchart of another method for reporting the selection indication of the basis vector according to an embodiment of the present disclosure;
FIG. 8 is a flowchart of another method for reporting the selection indication of the basis vector according to an embodiment of the present disclosure;
FIG. 9 is a flowchart of another method for reporting the selection indication of the basis vector according to an embodiment of the present disclosure;
FIG. 10 is a flowchart of another method for reporting the selection indication of the basis vector according to an embodiment of the present disclosure;
FIG. 11 is a flowchart of another method for reporting the selection indication of the basis vector according to an embodiment of the present disclosure;
FIG. 12 is a flowchart of another method for reporting the selection indication of the basis vector according to an embodiment of the present disclosure;
FIG. 13 is a flowchart of another method for reporting the selection indication of the basis vector according to an embodiment of the present disclosure;
FIG. 14 is a flowchart of another method for reporting the selection indication of the basis vector according to an embodiment of the present disclosure;
FIG. 15 is a flowchart of another method for reporting the selection indication of the basis vector according to an embodiment of the present disclosure;
FIG. 16 is a flowchart of another method for reporting the selection indication of the basis vector according to an embodiment of the present disclosure;
FIG. 17 is a flowchart of another method for reporting the selection indication of the basis vector according to an embodiment of the present disclosure;
FIG. 18 is a flowchart of another method for reporting the selection indication of the basis vector according to an embodiment of the present disclosure;
FIG. 19 is a flowchart of another method for reporting the selection indication of the basis vector according to an embodiment of the present disclosure;
FIG. 20 is a flowchart of another method for reporting the selection indication of the basis vector according to an embodiment of the present disclosure;

FIG. 21 is a flowchart of another method for reporting the selection indication of the basis vector according to an embodiment of the present disclosure;

FIG. 22 is a flowchart of another method for reporting the selection indication of the basis vector according to an embodiment of the present disclosure;

FIG. 23 is a structural diagram of a communication device according to an embodiment of the present disclosure;

FIG. 24 is a structural diagram of another communication device according to an embodiment of the present disclosure;

FIG. 25 is a schematic diagram of the structure of a chip according to an embodiment of the present disclosure.

## DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. The implementations described in the following exemplary embodiments do not represent all embodiments consistent with the present disclosure. Instead, they are merely examples of devices and methods consistent with some aspects of the present disclosure as detailed in the appended claims.

It is to be understood that in the present disclosure, "plurality" refers to two or more than two, and other quantifiers are similar. "And/or" describes the association relationship of associated objects, indicating that three relationships may exist. For example, A and/or B may represent: A exists alone, A and B exist at the same time, and B exists alone. The character "/" generally indicates that the associated objects before and after are in an "or" relationship. The singular forms "a" and "the" are also intended to include plural forms, unless the context clearly indicates other meanings.

It is further understood that, although the operations are described in a specific order in the drawings in the embodiments of the present disclosure, it should not be understood as requiring the operations to be performed in a specific order or in a serial order, or requiring the execution of all the operations shown to obtain the desired results. In certain environments, multitasking and parallel processing may be advantageous.

In order to facilitate understanding of the technical solution of the present disclosure, some terms involved in the embodiments of the present disclosure are briefly introduced below.

1. Spatial Domain (SD) basis vector

In an embodiment of the present disclosure, the spatial domain may include a transmitting side spatial domain and a receiving side spatial domain, and the spatial domain basis vector may be determined based on the transmitting side spatial domain basis vector. Each transmitting side spatial domain basis vector may correspond to a transmitting beam of a transmitting device. Each receiving side spatial domain basis vector may correspond to a receiving beam of a receiving device.

The following description will be made using the transmitting side spatial basis vector as an example, and the receiving side spatial basis vector is similar to the transmitting side spatial basis vector. The transmitting side spatial basis vector is usually associated with the expression of the transmitting side antenna array. For example, many parameters involved in the transmitting side spatial basis vector may be understood as different properties used to represent the transmitting side antenna array. Therefore, in order to facilitate the understanding of the transmitting side spatial basis vector involved in an embodiment of the present disclosure, the transmitting side spatial basis vector will be described in conjunction with the transmitting side antenna array. Nevertheless, those skilled in the art should understand that the transmitting side spatial basis vector involved in an embodiment of the present disclosure is not limited to a specific antenna array. In the specific implementation process, a suitable antenna array may be selected according to specific needs, and various parameters involved in the transmitting side spatial basis vector involved in an embodiment of the present disclosure are set based on the selected antenna array.

2. Frequency Domain (FD) basis vector

The frequency domain basis vectors are used to represent the variation law of the channel in the frequency domain. The frequency domain basis vector may be used to specifically represent the variation law of the weighted coefficients of each spatial domain basis vector in each frequency domain unit. The change rule represented by the frequency domain basis vector is related to factors such as multipath delay. It is understandable that when a signal is transmitted through a wireless channel, there may be different transmission delays on different transmission paths. The variation law of the channel in the frequency domain caused by different transmission delays may be represented by different frequency domain basis vectors.

In an embodiment of the present disclosure, the dimension of the frequency domain basis vector is Nf, that is, one frequency domain basis vector contains Nf elements.

Optionally, the dimension of the frequency domain basis vector may be equal to the number of frequency domain units that need to perform CSI measurement. Since the number of frequency domain units that need to perform CSI measurement may be different at different times, the dimension of the frequency domain basis vector may also be different. In other words, the dimension of the frequency domain basis vector is variable.

Optionally, the dimension of the frequency domain basis vector may also be equal to the number of frequency domain units included in the available bandwidth of the terminal. The available bandwidth of the terminal may be configured by the network device. The available bandwidth of the terminal is part or all of the system bandwidth. The available bandwidth of the terminal may also be referred to as a bandwidth part (BWP), which is not limited in the embodiments of the present disclosure.

Optionally, the length of the frequency domain basis vector may also be equal to the length of the signaling used to indicate the position and number of frequency domain units to be reported, and for example, the length of the frequency domain basis vector may be equal to the number of bits of the signaling, etc. For example, in new radio (NR), the signaling used to indicate the position and number of frequency domain units to be reported may be the signaling used to report the bandwidth (reporting band). The signaling may, for example, indicate the position and number of frequency domain units to be reported in the form of a bitmap. Therefore, the dimension of the frequency domain basis vector may be the number of bits of the bitmap.

3. Time Domain (TD) basis vector or Doppler domain (DD) basis vector

TD basis vector or DD basis vector is used to represent the variation law of the channel in the time domain. That is, the TD basis vector or DD basis vector is used to represent the time variation of the channel. The time variation of the channel means that the transfer function of the channel changes over time. The time variation of the channel is related to factors such as Doppler shift.

In an embodiment of the present disclosure, the dimension of the TD basis vector or the DD basis vector is Nt, that is, one TD basis vector or one DD basis vector contains Nt elements.

Optionally, the dimension of the TD basis vector or the DD basis vector may be equal to the number of time units for which CSI measurement is required. It is understandable that, since the number of time units for which CSI measurement is required may be different in different scenarios, the dimension of the TD basis vector or the dimension of the DD basis vector may also be different. In other words, the dimension of the TD basis vector or the dimension of the DD basis vector is variable.

In order to better understand a method and a device for reporting the selection indication of the basis vector in an embodiment of the present disclosure, a communication system to which the embodiments of the present disclosure are applicable is firstly described below.

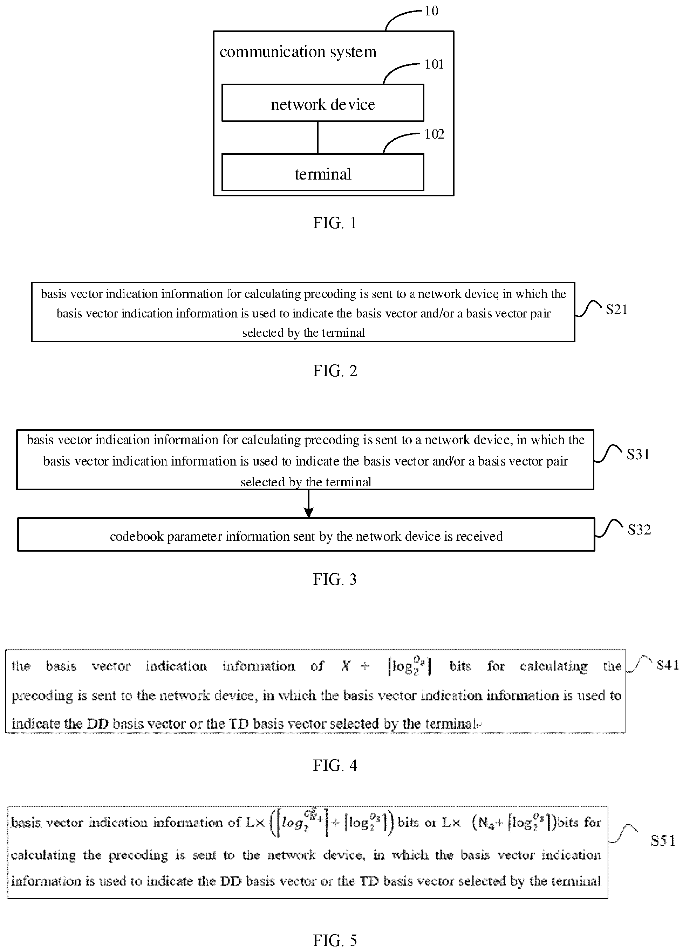

FIG. 1 is a schematic diagram of the architecture of a communication system provided by an embodiment of the present disclosure. The communication system may include, but is not limited to, a network device and a terminal. The number and form of devices shown in FIG. 1 are only used as examples and do not constitute a limitation on the embodiments of the present disclosure. In actual applications, two or more network devices and two or more terminals may be included. The communication system 10 shown in FIG. 1 includes, for example, a network device 101 and a terminal 102.

It should be noted that the technical solution of the embodiments of the present disclosure may be applied to various communication systems. For example: a long term evolution (LTE) system, a fifth generation (5G) mobile communication system, a 5G new radio (NR) system, or other future new mobile communication systems. It should also be noted that the sidelink in the embodiments of the present disclosure may also be called a side link or a direct link.

The network device 101 in the embodiments of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiments of the present disclosure do not limit the specific technology and specific device form adopted by the base station. The base station in the embodiments of the present disclosure may include a central unit (CU) and a distributed unit (DU), in which the CU may also be referred to as a control unit. The CU-DU structure may be used to split the base station, such as the protocol layer of the base station, and the functions of some protocol layers are placed in the CU for centralized control, and the functions of the remaining part or all of the protocol layers are distributed in the DU, and the DU is centrally controlled by the CU.

The terminal 102 in the embodiments of the present disclosure is an entity on the user side for receiving or transmitting signals, such as a mobile phone. The terminal may also be referred to as a terminal device (terminal), user equipment (UE), mobile station (MS), mobile terminal (MT), etc. The terminal may be a car with communication function, a smart car, a mobile phone, a wearable device, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and specific device form adopted by the terminal.

It may be understood that the communication system described in the embodiments of the present disclosure is for the purpose of more clearly illustrating the technical solution of the embodiments of the present disclosure, and does not constitute a limitation on the technical solution provided by the embodiments of the present disclosure. A person skilled in the art may know that with the evolution of the system architecture and the emergence of new business scenarios, the technical solution provided by the embodiments of the present disclosure is also applicable to similar technical problems.

In the related art, for a Rel-16 Type II codebook, a Rel-16 Type II port selection codebook, or a Rel-17 Type II port selection codebook, the corresponding SD basis vectors, FD basis vectors, and port selection indication methods are as follows.

1. Rel-16 Type II codebook, the codebook structure is $W_1 \widetilde{W}_2 W_f^H$, in which $W_1$ consists of 2L SD basis vectors, L identical SD basis vectors are respectively contained in the first polarization direction and the second polarization direction, and $W_f$ consists of M FD basis vectors.

The selection and indication method of SD basis vector is as follows.

Selection method: the same SD basis vector is selected for the two polarization directions, corresponding to a rank for the data transmission = v, and v data transmission layers use the same SD basis vector.

Indication method: $\left\lceil \log_2^{C_{N_1 N_2}^L} \right\rceil + \left\lceil \log_2^{O_1 O_2} \right\rceil$ bits indicate the L SD basis vectors selected by the UE, $O_1$ and $O_2$ respectively indicate oversampling factors of the SD basis vectors in the horizontal and vertical directions, $N_1 N_2$ respectively indicate the number of antenna ports in the horizontal and vertical directions in a single polarization direction. $C_{N_1 N_2}^L$ indicates the combination number calculation by selecting the L SD basis vectors from $N_1 N_2$, $\lceil x \rceil$ indicates the rounding up of x.

The selection method and indication method of FD basis vector is as follows.

Selection method: all SD basis vectors correspond to the same FD basis vector, and each layer selects the same FD basis vector or different FD basis vectors.

Indication method: for any transmission layer, $\left\lceil \log_2^{C_{N_3}^M} \right\rceil$ bits or $\left\lceil \log_2^{C_{N_3-1}^{M-1}} \right\rceil$ bits indicate the M FD basis vectors selected by the UE. $N_3$ is the number of PMI subbands.

2. Rel-16 Type II port selection codebook, the codebook structure is $W_1 \widetilde{W}_2 W_f^H$, in which $W_1$ consists of 2L unit basis vectors, and L identical unit basis vectors are respectively contained in the first polarization direction and the second polarization direction.

The port selection and indication method is as follows.

Selection method: The same L consecutive CSI-RS ports are selected in both polarization directions, and the same port is selected for v transmissions.

Indication method: $\left\lceil \log_2 \left\lceil \frac{P_{CSI-RS}}{2d} \right\rceil \right\rceil$ bits indication, $P_{CSI-RS}$ indicates the number of CSI-RS ports, d $\in$ {1,2,3,4} indicates configurable parameters.

The indication method of the FD basis vector is the same as Rel-16 Type II codebook

3. Rel-17 Type II port selection codebook, the codebook structure is $W_1 \widetilde{W}_2 W_f^H$, in which $W_1$ consists of 2L unit basis vectors, and L identical unit basis vectors are respectively contained in the first polarization direction and the second polarization direction.

Port selection and indication method is as follows.

Selection method: the same L CSI-RS ports are selected in both polarization directions and the same port is selected for v transmissions.

Indication method: $\left\lceil \log_2 \binom{P_{CSI-RS}/2}{K_1/2} \right\rceil$, $K_1 = \alpha P_{CSI-RS}$. $\alpha$ is a configurable parameter.

The indication method of the FD basis vector is as follows.

Selection method: All selected $K_1$ correspond to the same FD basis vector, v transmissions select the same FD basis vector

Indication mode: $\lceil \log_2(N-1) \rceil$ bits indication or no reporting, $N \in \{2,4\}$ is a configurable parameter.

In the related technology, the selection indication reporting of the SD basis vector and the FD basis vector is supported, but the selection indication reporting of the SD-FD basis vector pair is not supported. The selection indication reporting of the TD basis vector or the DD basis vector, as well as the selection indication reporting of the TD-FD basis vector pair and the DD-FD basis vector pair are not supported. This is a problem that needs to be solved urgently.

Based on this, in this embodiment of the present disclosure, a method for reporting the selection indication of a basis vector is provided, in which a terminal sends basis vector indication information for calculating precoding to a network device, the basis vector indication information is used to indicate the basis vector and/or a basis vector pair selected by the terminal, and the precoding is calculated based on $(W_f^* \otimes W_1) W_2 W_t^H$ or $W_1 \tilde{W}_2 (W_f \otimes W_d)^H$.

The basis vector and/or the basis vector pair includes at least one of:

one or more time domain (TD) basis vectors;
one or more doppler domain (DD) basis vectors;
one or more spatial domain (SD)-frequency domain (FD) basis vector pairs;
one or more TD-FD basis vector pairs; or
one or more DD-FD basis vector pairs.

In the embodiments of the present disclosure, the reporting of the selection indication of other basis vectors and/or basis vector pairs other than the SD basis vector and the FD basis vector are supported to meet the requirements of precoding calculation to improve system performance and reduce basis vector indication overhead.

For terminals moving at medium and high speeds, due to the rapid change of the channel in the time domain, Channel Status Information (CSI) is still fed back based on the traditional Type II codebook. The fed-back CSI no longer matches the current channel information, resulting in a degradation of system performance. To solve this problem, the time domain TD basis vector or Doppler domain (DD) basis vector is introduced on the basis of the Rel-16/17 Type II codebook, which may realize the precoding prediction at the future moment, so that the predicted precoding matches the channel at the corresponding moment in the future. The codebook structure corresponding to the enhanced CSI feedback based on the Rel-16/17 Type II codebook may be written as $(W_f^* \otimes W_1) W_2 W_t^H$ or $W_1 \tilde{W}_2 (W_f \otimes W_d)^H$. In these two codebook structures, $W_1$, $W_2$ and $W_f$ respectively represent one or more SD basis vectors combination, the combination coefficient matrix and one or more FD basis vectors combination, and $W_d$ and $W_t$ respectively represent the one or more DD basis vectors combination and the one or more TD basis vectors combination. The DD basis vector and the TD basis vector may be represented by oversampled or non-oversampled DFT or DCT basis vectors, or a Slepian sequence. In order to determine the $W_d$ and $W_t$ in the codebook, the terminal needs to report the selected DD/TD basis vector indication to the gNB.

For independent reporting of DD/TD basis vectors, there are two modes to select and report the relationship between DD/TD basis vectors and SD/FD basis vectors as follows.

Mode 1: for all SD basis vectors and/or FD basis vectors, the terminal selects the same DD/TD basis vector.

Mode 2: for different SD basis vectors and/or FD basis vectors, the terminal selects the same basis vector or different DD/TD basis vectors.

The terminal may not only report the DD/TD basis vector independently, but also directly report the FD-DD/TD basis vector pair. For the latter, the corresponding codebook structure is $W_1 \tilde{W}_2 (W_f \otimes W_d)^H$. Similarly, there are the following two modes of selection and reporting relationship between the DD/TD-FD basis vector pair and the SD basis vector.

Mode 3: for all SD basis vectors, the terminal selects the same DD/TD-FD basis vector pair

Mode 4: for different SD basis vectors, the terminal selects the same DD/TD-FD basis vector pair or different DD/TD-FD basis vector pairs

For the codebook structure $(W_f^* \otimes W_1) W_2 W_t^H$, the terminal reports the SD-FD basis vector pair. The SD base vector and the FD basis vector may be indicated separately or jointly for reporting.

The SD, FD and DD/TD basis vectors may be indicated by a bitmap or a combination number. Assuming that the number of the lengths of the DD/TD basis vector is $N_4$, the terminal selects S DD/TD basis vectors from $N_4$ orthogonal basis vectors, then the terminal may report a bitmap with the size of $N_4$ bits or $\lceil \log_2 C_{N_4}^S \rceil$ bits is used to indicate the DD/TD basis vector selected by the terminal, in which $C_{N_4}^S$ indicates the combination number calculation by selecting S from $N_4$.

In addition, in order to facilitate understanding of the embodiments of the present disclosure, the following contents are explained.

First, in the embodiments of the present disclosure, "used to indicate" may include being used for direct indication and being used for indirect indication. When describing that a certain indication information is used to indicate A, it may include that the indication information directly indicates A or indirectly indicates A, but it does not mean that A must be included in the indication information.

Second, $N_4$ is a number of lengths of the DD basis vectors or of the lengths of the TD basis vectors; S is the number of DD basis vectors selected by the terminal or the number of TD basis vectors selected by the terminal; L is the number of SD basis vectors selected by the terminal; M is the number of FD basis vectors selected by the terminal; N is the number of DD - FD basis vector pairs or the number of TD-FD basis vector pairs; N' is the number of SD-FD basis vector pairs in each polarization direction; $N_3$ is the number of frequency domain PMI subbands; $O_1$ is an oversampling factor of the SD basis vector in the horizontal direction; $O_2$ is an oversampling factor of the SD basis vector in the vertical direction; $O_3$ is an oversampling factor of the DD basis vector or the TD basis vector; $O_4$ is an oversampling factor of the FD basis vector; $N_1$ is a number of antenna ports in the horizontal direction in a single polarization direction; $N_2$ is a number of antenna ports in the vertical direction in the single polarization direction; $C_{N_4}^{S}$ represents the combination number calculation by selecting S from $N_4$, $\lceil x \rceil$ represents rounding up of x.

Third, in the embodiments of the present disclosure, the first, second and various digital numbers (e.g., "#1", "#2") are only used for the convenience of description and are not used to limit the scope of the embodiments of the present disclosure, for example, used to distinguish different messages.

A method and device for reporting the selection indication of the basis vectors provided by an embodiment of the present disclosure are described in detail below in conjunction with the accompanying drawings.

FIG. 2 is a method for reporting the selection indication of the basis vector provided in an embodiment of the present disclosure.

As shown in FIG. 2, the method is executed by a terminal, and the method may include but is not limited to the following step.

S21: basis vector indication information for calculating precoding is sent to a network device, in which the basis vector indication information is used to indicate the basis vector and/or a basis vector pair selected by the terminal.

The basis vector and/or the basis vector pair includes at least one of:

one or more time domain (TD) basis vectors;
one or more doppler domain (DD) basis vectors;
one or more spatial domain (SD)-frequency domain (FD) basis vector pairs;
one or more TD-FD basis vector pairs; or
one or more DD-FD basis vector pairs.

In an embodiment of the present disclosure, for terminals moving at medium and high speeds, due to the rapid change of the channel in the time domain, the CSI is still fed back based on the traditional Type II codebook, and the fed-back CSI does not match the current channel information, resulting in a decrease in system performance. In order to solve this problem, the time domain (TD) or Doppler domain (DD) basis vectors are introduced on the basis of the Rel-16/17 Type II codebook, which may realize the precoding prediction at the future moment, so that the predicted precoding matches the channel at the corresponding moment in the future.

The codebook structure corresponding to the enhanced CSI feedback based on the Rel-16/17 Type II codebook is $\left(W_f^* \otimes W_1\right) W_2 W_t^H$ or $W_1 \tilde{W}_2 (W_f \otimes W_d)^H$. In these two codebook structures, $W_1$, $W_2$ and $W_f$ respectively represent one or more SD basis vectors combination, the combination coefficient matrix and one or more FD basis vectors combination, and $W_d$ and $W_t$ respectively represent the one or more DD basis vectors combination and the one or more TD basis vectors combination. The DD basis vector and the TD basis vector may be represented by oversampled or non-oversampled DFT or DCT basis vectors, or a Slepian sequence. In order to determine the $W_d$ and $W_t$ in the codebook, the terminal needs to report the selected DD/TD basis vector indication to the network device.

In an embodiment of the present disclosure, the terminal sends basis vector indication information for calculating the precoding to the network device, in which the basis vector indication information is used to indicate a basis vector and/or a basis vector pair selected by the terminal, and the precoding is calculated based on $\left(W_f^* \otimes W_1\right) W_2 W_t^H$ or $W_1 \tilde{W}_2 (W_f \otimes W_d)^H$.

It may be understood that the precoding is calculated based on $\left(W_f^* \otimes W_1\right) W_2 W_t^H$ or $W_1 \tilde{W}_2 (W_f \otimes W_d)^H$, the precoding calculation based on $\left(W_f^* \otimes W_1\right) W_2 W_t^{\mathrm{H}}$ or $W_1 \bar{W}_2 (W_f \otimes W_d)^H$ requires the terminal to report the selected TD basis vector or DD basis vector.

In an embodiment of the present disclosure, the basis vector indication information indicates the basis vector and/or the basis vector pair selected by the terminal, which includes at least one of:

one or more time domain (TD) basis vectors;
one or more doppler domain (DD) basis vectors;
one or more spatial domain (SD)-frequency domain (FD) basis vector pairs;
one or more TD-FD basis vector pairs; or
one or more DD-FD basis vector pairs.

In an embodiment of the present disclosure, the basis vector indication information indicates the TD basis vector selected by the terminal.

In an embodiment of the present disclosure, the basis vector indication information indicates the DD basis vector selected by the terminal.

In an embodiment of the present disclosure, the basis vector indication information indicates the SD-FD basis vector pair selected by the terminal.

In an embodiment of the present disclosure, the basis vector indication information indicates the TD-FD basis vector pair selected by the terminal.

In an embodiment of the present disclosure, the basis vector indication information indicates the DD-FD basis vector pair selected by the terminal.

In an embodiment of the present disclosure, the basis vector indication information indicates the basis vectors and/or the basis vector pairs selected by the terminal, and the basis vectors and/or the basis vector pairs include one or more of TD basis vectors, DD basis vectors, SD-FD basis vector pairs, TD-FD basis vector pairs, and DD-FD basis vector pairs. After the network device receives the basis vector indication information sent by the terminal, it may determine the basis vectors and/or the basis vector pairs selected by the terminal, so that it may calculate precoding based on $\left(W_f^* \otimes W_1\right) W_2 W_t^{\mathrm{H}}$ or $W_1 \bar{W}_2 (W_f \otimes W_d)^H$, and predict the precoding at a future moment, so that the predicted precoding matches the channel at a corresponding moment in the future, so as to improve system performance and reduce the basis vector indication overhead.

By implementing the embodiments of the present disclosure, the terminal sends basis vector indication information for calculating the precoding to the network device, in which the basis vector indication information is used to indicate the basis vector and/or the basis vector pair selected by the terminal, and the basis vector and/or the basis vector pair includes one or more of the TD basis vectors, the DD basis vectors, the SD-FD basis vector pairs, the TD-FD basis vector pair, and the DD-FD basis vector pairs. Thus, the terminal is supported to select, indicate and report other basis vectors and/or basis vectors other than the SD basis vector and the FD basis vector, so that the predicted precoding matches the channel at a corresponding moment in the future, so as to improve the system performance, and may reduce the basis vector indication overhead.

In some embodiments, $W_1$ is an SD basis vector or a port selection matrix.

In an embodiment of the present disclosure, the precoding is calculated based on $\left(W_f^* \otimes W_1\right) W_2 W_t^{\mathrm{H}}$ or $W_1 \bar{W}_2 (W_f \otimes W_d)^H$ $W_1$ is the SD basis vector or the port selection matrix, that is, it may be a port selection matrix $W_1$ in the version 16 (Rel-16) or version 17 (Rel-17) type 2 (Type II) port selection codebook.

In some embodiments, sending, by the terminal, the basis vector indication information for calculating the precoding to the network device, includes:
sending the basis vector indication information for calculating the precoding of any data transmission layer.

In an embodiment of the present disclosure, the terminal sends the basis vector indication information for calculating the precoding to the network device. The basis vector indication information is used to indicate the basis vector and/or the basis vector pair selected by the terminal, and may be the basis vector and/or the basis vector pair selected by the terminal for calculating the precoding of a certain data transmission layer.

In some embodiments, when a rank of data transmission is greater than 1, each data transmission layer uses the same or different basis vectors, and/or each data transmission layer uses the same or different basis vector pairs.

In an embodiment of the present disclosure, when the rank of data transmission is greater than 1, each data transmission layer may use the same or different basis vectors, and/or each data transmission layer may use the same or different basis vector pairs.

In some embodiments, if different data transmission layers use different basis vectors and/or basis vector pairs, each data transmission layer independently indicates the basis vectors and/or the basis vector pairs used.

In the embodiments of the present disclosure, if different data transmission layers adopt different basis vectors and/or basis vector pairs, each data transmission layer independently indicates the basis vectors and/or basis vector pairs used, that is, the terminal may send the basis vectors and/or the basis vector pairs selected by the terminals for each data transmission layer to the network device, and the basis vectors and/or basis vector pairs selected by the terminal for each data transmission layer are respectively indicated through independent basis vector indication information.

In some embodiments, receiving, by the terminal, codebook parameter information sent by the network device, in which the codebook parameter information includes at least one of:

lengths of one or more SD basis vectors;
lengths of one or more FD basis vectors;
lengths of the one or more TD basis vectors;
lengths of the one or more DD basis vectors;
a number of one or more SD basis vectors;
a number of one or more FD basis vectors;
a number of one or more TD basis vectors;
a number of one or more DD basis vectors;
a number of one or more SD-FD basis vector pairs;
a number of one or more TD-FD basis vector pairs; or
a number of one or more DD-FD basis vector pairs.

In an embodiment of the present disclosure, the terminal receives the codebook parameter information sent by the network device to select the basis vectors and/or the basis vector pairs according to the codebook parameter information.

The terminal receives the codebook parameter information sent by the network device, and the codebook parameter information includes the lengths of the SD basis vectors.

The terminal receives the codebook parameter information sent by the network device, and the codebook parameter information includes the lengths of the FD basis vectors.

The terminal receives the codebook parameter information sent by the network device, and the codebook parameter information includes the lengths the TD basis vectors.

The terminal receives the codebook parameter information sent by the network device, and the codebook parameter information includes the lengths the DD basis vectors.

The terminal receives the codebook parameter information sent by the network device, and the codebook parameter information includes the number of SD basis vectors.

The terminal receives the codebook parameter information sent by the network device, and the codebook parameter information includes the number of FD basis vectors.

The terminal receives the codebook parameter information sent by the network device, and the codebook parameter information includes the number of TD basis vectors.

The terminal receives the codebook parameter information sent by the network device, and the codebook parameter information includes the number of DD basis vectors.

The terminal receives the codebook parameter information sent by the network device, and the codebook parameter information includes the number of SD-FD basis vector pairs.

The terminal receives the codebook parameter information sent by the network device, and the codebook parameter information includes the number of TD-FD basis vector pairs.

The terminal receives codebook parameter information sent by the network device, and the codebook parameter information includes the number of DD-FD basis vector pairs.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

In some embodiments, the basis vector includes the one or more DD basis vectors or the one or more TD basis vectors,

for the one or more SD basis vectors, the terminal selects the same DD basis vector; or
for the one or more FD basis vectors, the terminal selects the same DD basis vector; or
for the one or more SD basis vectors and the one or more FD basis vectors, the terminal selects the same DD basis vector; or
for the one or more SD basis vectors, the terminal selects the same TD basis vector; or
for the one or more FD basis vectors, the terminal selects the same TD basis vector; or

for the one or more SD basis vectors and all FD basis vectors, the terminal selects the same TD basis vector.

In an embodiment of the present disclosure, the basis vector indication information is used to indicate the basis vector selected by the terminal, and the basis vector includes the one or more DD basis vectors, in which for the one or more SD basis vectors, the terminal selects the same DD basis vector.

In an embodiment of the present disclosure, the basis vector indication information is used to indicate the basis vector selected by the terminal, and the basis vector includes the one or more DD basis vectors, in which for the one or more FD basis vectors, the terminal selects the same DD basis vector.

In an embodiment of the present disclosure, the basis vector indication information is used to indicate the basis vector selected by the terminal, and the basis vector includes the one or more DD basis vectors, in which for the one or more SD basis vectors and the one or more FD basis vectors, the terminal selects the same DD basis vector.

In an embodiment of the present disclosure, the basis vector indication information is used to indicate the basis vector selected by the terminal, and the basis vector includes the one or more TD basis vectors, in which for the one or more SD basis vectors, the terminal selects the same TD basis vector.

In an embodiment of the present disclosure, the basis vector indication information is used to indicate the basis vector selected by the terminal, and the basis vector includes the one or more TD basis vectors, in which for the one or more FD basis vectors, the terminal selects the same TD basis vector.

In an embodiment of the present disclosure, the basis vector indication information is used to indicate the basis vector selected by the terminal, and the basis vector includes the one or more TD basis vectors, in which for the one or more SD basis vectors and the one or more FD basis vectors, the terminal selects the same TD basis vector.

In some embodiments, sending, by the terminal, the basis vector indication information for calculating the precoding to the network device, includes:

sending the basis vector indication information of $X + \left\lceil \log_2^{O_3} \right\rceil$ bits for calculating the precoding to the network device,

in which the basis vector indication information is used to indicate the one or more DD basis vectors or the one or more TD basis vectors selected by the terminal, $O_3 \geq 1$, $O_3$ is a sampling factor of the one or more DD basis vectors or a sampling factor of the one or more TD basis vectors; in a case that X is indicated by a combination coefficient,

$X = \left\lceil \log_2^{C_{N_4}^{S}} \right\rceil$ or $X = \left\lceil \log_2^{C_{N_4-1}^{S-1}} \right\rceil$ , in a case that X is indicated by a bitmap, $X = N_4$ or $X = N_4 - 1$, in which $N_4$ is a number of the lengths of the one or more DD basis vectors or of the lengths of the one or more TD basis vectors, S is a number of the one or more DD basis vectors or of the one or more TD basis vectors selected by the terminal, $C_{N_4}^{S}$ indicates a combination number calculation by selecting S from $N_4$, $C_{N_4-1}^{S-1}$ indicates a combination number calculation by selecting S-1 from $N_4 - 1$, and $\lceil x \rceil$ indicates rounding up of x.

In an embodiment of the present disclosure, for the one or more SD basis vectors and/or the one or more FD basis vectors, the terminal selects the same DD basis vector or TD basis vector, and the terminal sends the basis vector indication information of $X + \left\lceil \log_2^{O_3} \right\rceil$ bits to the network device; the basis vector indication information is used to indicate the DD basis vector or TD basis vector selected by the terminal.

In a case that X is indicated by a combination coefficient, $X = \left\lceil \log_2^{C_{N_4}^{S}} \right\rceil$ ; in a case that X is indicated by a bitmap, $X = N_4$.

The first DD basis vector or the first TD basis vector is always selected through a phase offset, then in a case that X is indicated by a combination coefficient, $X = \left\lceil \log_2^{C_{N_4-1}^{S-1}} \right\rceil$ , in a case that X is indicated by a bitmap, $X = N_4 - 1$.

Exemplarily, for the one or more SD basis vectors and/or the one or more FD basis vectors, the terminal selects the same DD basis vector or TD basis vector.

A number of the lengths of the DD basis vector or of the length of the TD basis vector is $N_4 = 4$, the number of DD basis vectors or the number of TD basis vectors selected by the terminal is S=2, the number of SD basis vectors selected by the terminal is L=2, the number of FD basis vectors selected by the terminal is M=4, the number of DD-FD basis vector pairs or the number of TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical direction $O_1$ and $O_2$ are both 4, the oversampling factor of the DD basis vector or the TD basis vector $O_3$ is 1, the oversampling factor of the FD basis vector $O_4$ is 1, that is oversampling is not implemented. The number of antenna ports in the horizontal direction in a single polarization direction $N_1$ = 2, and the number of antenna ports in the vertical direction in a single polarization direction $N_2$ = 4.

The following description is based on that the terminal reports the basis vector indication information to the network device, the basis vector indication information indicates the DD basis vector or the TD basis vector selected by the terminal, the basis vector indication information is used to indicate the precoding of a certain data transmission layer, the DD basis vector or the TD basis vector selected by the terminal, or the DD-FD basis vector pair, or the TD-FD basis vector pair.

The one or more SD basis vectors and the one or more FD basis vectors correspond to the same DD basis vector or TD basis vector. The terminal only needs to send the basis vector indication information of $\left\lceil \log_2^{C_{N_4}^S} \right\rceil + \left\lceil \log_2^{O_3} \right\rceil = 3$ bits to the network device to indicate the selected DD basis vector or TD basis vector.

Optionally, the terminal always select the first DD basis vector or TD basis vector by the phase offset, and the terminal sends the basis vector indication information of $\left\lceil \log_2^{C_{N_4-1}^{S-1}} \right\rceil + \left\lceil \log_2^{O_3} \right\rceil = 2\text{bits}$ to the network device to indicate the selected DD basis vector or TD basis vector.

In some embodiments, the basis vectors include the one or more DD basis vectors or the one or more TD basis vectors,

for different SD basis vectors, the terminal selects the same DD basis vector; or
for different SD basis vectors, the terminal selects different DD basis vectors; or
for different FD basis vectors, the terminal selects the same DD basis vector; or
for different FD basis vectors, the terminal selects different DD basis vectors; or
for different SD basis vectors, the terminal selects the same TD basis vector; or
for different SD basis vectors, the terminal selects different TD basis vectors; or
for different FD basis vectors, the terminal selects the same TD basis vector; or
for different FD basis vectors, the terminal selects different TD basis vectors.

In an embodiment of the present disclosure, the basis vector indication information is used to indicate the basis vector selected by the terminal, and the basis vector includes the one or more DD basis vectors, in which for different SD basis vectors, the terminal selects the same DD basis vector.

In an embodiment of the present disclosure, the basis vector indication information is used to indicate the basis vector selected by the terminal, and the basis vector includes the one or more DD basis vectors, in which for different SD basis vectors, the terminal selects different DD basis vectors.

In an embodiment of the present disclosure, the basis vector indication information is used to indicate the basis vector selected by the terminal, and the basis vector includes the one or more DD basis vectors, in which for different FD basis vectors, the terminal selects the same DD basis vector.

In an embodiment of the present disclosure, the basis vector indication information is used to indicate the basis vector selected by the terminal, and the basis vector includes the one or more DD basis vectors, in which for different FD basis vectors, the terminal selects different DD basis vectors.

In an embodiment of the present disclosure, the basis vector indication information is used to indicate the basis vector selected by the terminal, and the basis vector includes the one or more TD basis vectors, in which for different SD basis vectors, the terminal selects the same TD basis vector.

In an embodiment of the present disclosure, the basis vector indication information is used to indicate the basis vector selected by the terminal, and the basis vector includes the one or more TD basis vectors, in which for different SD basis vectors, the terminal selects different TD basis vectors.

In an embodiment of the present disclosure, the basis vector indication information is used to indicate the basis vector selected by the terminal, and the basis vector includes the one or more TD basis vector, in which for different FD basis vectors, the terminal selects the same TD basis vector.

In an embodiment of the present disclosure, the basis vector indication information is used to indicate the basis vector selected by the terminal, and the basis vector includes the one or more TD basis vectors, in which for different FD basis vectors, the terminal selects different TD basis vectors.

In some embodiments, for the same SD basis vectors in two polarization directions, the terminal selects the same DD basis vector; or for the same SD basis vectors in two polarization directions, the terminal selects the same TD basis vector.

In an embodiment of the present disclosure, the basis vector indication information is used to indicate the basis vector selected by the terminal, and the basis vector includes the one or more DD basis vectors, in which for the same SD basis vectors in two polarization directions, the terminal selects the same DD basis vector.

In an embodiment of the present disclosure, the basis vector indication information is used to indicate the basis vector selected by the terminal, and the basis vector includes the one or more TD basis vectors, in which for the same SD basis vectors in two polarization directions, the terminal selects the same TD basis vector.

In some embodiments, sending, by the terminal, the basis vector indication information for calculating the precoding to the network device, includes:

sending the basis vector indication information of $L \times \left( \left\lceil log_2^{C_{N_4}^S} \right\rceil + \left\lceil \log_2^{O_3} \right\rceil \right)$ bits or $\left( N_4 + \left\lceil \log_2^{O_3} \right\rceil \right)$ bits for calculating the precoding to the network device,

in which the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the one or more DD basis vectors or of the lengths of the one or more TD basis vectors, and S is a number of the one or more DD basis vectors or of the one or more TD basis vectors selected by the terminal.

In the embodiments of the present disclosure, for different SD basis vectors or different FD basis vectors, the terminal selects the same DD basis vector, or, for different SD basis vectors or different FD basis vectors, the terminal selects the same TD basis vector, or, for different SD basis vectors or different FD basis vectors, the terminal selects different DD basis vectors, or, for different SD basis vectors or different FD basis vectors, the terminal selects different TD basis vectors.

In an embodiment of the present disclosure, for the same SD basis vectors in two polarization directions, the terminal selects the same DD basis vector; or for the same SD basis vectors in two polarization directions, the terminal selects the same TD basis vector.

Based on this, the terminal sends the basis vector indication information of $L \times \left( \left\lceil log_2^{C_{N_4}^S} \right\rceil + \left\lceil \log_2^{O_3} \right\rceil \right)$ bits to the network device, in which the basis vector indication information is used to indicate the DD basis vector or TD basis vector selected by the terminal.

Alternatively, the terminal sends the basis vector indication information of $L \times \left( N_4 + \left\lceil \log_2^{O_3} \right\rceil \right)$ bits to the network device, in which the basis vector indication information is used to indicate the DD basis vector or TD basis vector selected by the terminal.

In some embodiments, for different SD basis vectors in each polarization direction, the terminal selects different DD basis vectors; or

for different SD basis vectors in each polarization direction, the terminal selects different TD basis vectors; or
for different SD basis vectors in each polarization direction, the terminal selects the same DD basis vector; or
for different SD basis vectors in each polarization direction, the terminal selects the same TD basis vector; or
for different SD basis vectors in two polarization directions, the terminal selects the same DD basis vector; or
for different SD basis vectors in two polarization directions, the terminal selects different DD basis vectors; or
for different SD basis vectors in two polarization directions, the terminal selects the same TD basis vector; or
for different SD basis vectors in two polarization directions, the terminal selects different TD basis vectors.

In an embodiment of the present disclosure, the basis vector indication information is used to indicate the basis vector selected by the terminal, and the basis vector includes the one or more DD basis vectors, and for different SD basis vectors in each polarization direction, the terminal selects different DD basis vectors.

In an embodiment of the present disclosure, the basis vector indication information is used to indicate the basis vector selected by the terminal, and the basis vector includes the one or more TD basis vectors, in which for different SD basis vectors in each polarization direction, the terminal selects different TD basis vectors.

In an embodiment of the present disclosure, the basis vector indication information is used to indicate the basis vector selected by the terminal, and the basis vector includes the one or more DD basis vectors, in which for different SD basis vectors in each polarization direction, the terminal selects the same DD basis vector.

In an embodiment of the present disclosure, the basis vector indication information is used to indicate the basis vector selected by the terminal, and the basis vector includes the one or more TD basis vectors, in which for different SD basis vectors in each polarization direction, the terminal selects the same TD basis vector.

In an embodiment of the present disclosure, the basis vector indication information is used to indicate the basis vector selected by the terminal, and the basis vector includes the one or more DD basis vectors, in which for different SD basis vectors in two polarization directions, the terminal selects the same DD basis vector.

In an embodiment of the present disclosure, the basis vector indication information is used to indicate the basis vector selected by the terminal, and the basis vector includes the one or more DD basis vectors, in which for different SD basis vectors in two polarization directions, the terminal selects different DD basis vectors.

In an embodiment of the present disclosure, the basis vector indication information is used to indicate the basis vector selected by the terminal, and the basis vector includes the one or more TD basis vectors, in which for different SD basis vectors in two polarization directions, the terminal selects the same TD basis vector.

In an embodiment of the present disclosure, the basis vector indication information is used to indicate the basis vector selected by the terminal, and the basis vector includes the one or more TD basis vectors, in which for different SD basis vectors in two polarization directions, the terminal selects different TD basis vectors.

In some embodiments, sending, by the terminal, the basis vector indication information for calculating the precoding to the network device, including:

sending the basis vector indication information of $2L \times \left( \left\lceil log_2^{C_{N_4}^S} \right\rceil + \left\lceil log_2^{O_3} \right\rceil \right)$ bits or $2L \times \left( N_4 + \left\lceil log_2^{O_3} \right\rceil \right)$ bits for calculating the precoding to the network device,

in which the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the DD basis vectors or of the TD basis vectors, and S is a number of the one or more DD basis vectors or of the one or more TD basis vectors selected by the terminal.

In an embodiment of the present disclosure, for different SD basis vectors in each polarization direction, the terminal selects the same or different DD basis vectors; or for different SD basis vectors in each polarization direction, the terminal selects the same or different TD basis vectors.

In an embodiment of the present disclosure, for different SD basis vectors in two polarization directions, the terminal selects the same or different DD basis vectors; or for different SD basis vectors in two polarization directions, the terminal selects the same or different TD basis vectors.

Based on this, the terminal sends the basis vector indication information of $2L \times \left( \left\lceil log_2^{C_{N_4}^S} \right\rceil + \left\lceil log_2^{O_3} \right\rceil \right)$ bits to the network device, in which the basis vector indication information is used to indicate the DD basis vector or TD basis vector selected by the terminal.

Alternatively, the terminal sends the basis vector indication information of $2L \times \left( N_4 + \left\lceil log_2^{O_3} \right\rceil \right)$ bits to the network device, in which the basis vector indication information is used to indicate the DD basis vector or TD basis vector selected by the terminal.

In some embodiments, the basis vectors include the one or more DD basis vectors or the one or more TD basis vectors,

for different SD basis vectors and different FD basis vectors, the terminal selects the same DD basis vector; or
for different SD basis vectors and different FD basis vectors, the terminal selects different DD basis vectors; or
for different SD basis vectors and different FD basis vectors, the terminal selects the same TD basis vector; or
for different SD basis vectors and different FD basis vectors, the terminal selects different TD basis vectors.

In an embodiment of the present disclosure, the basis vector indication information is used to indicate the basis vector selected by the terminal, and the basis vector includes the one or more DD basis vectors, in which for different SD basis vectors and different FD basis vectors, the terminal selects the same DD basis vector.

In an embodiment of the present disclosure, the basis vector indication information is used to indicate the basis vector selected by the terminal, and the basis vector includes the one or more DD basis vectors, in which for different SD basis vectors and different FD basis vectors, the terminal selects different DD basis vectors.

In an embodiment of the present disclosure, the basis vector indication information is used to indicate the basis vector selected by the terminal, and the basis vector includes the one or more TD basis vectors, in which for different SD basis vectors and different FD basis vectors, the terminal selects the same TD basis vector.

In an embodiment of the present disclosure, the basis vector indication information is used to indicate the basis vector selected by the terminal, and the basis vector includes the one or more TD basis vectors, in which for different SD basis vectors and different FD basis vectors, the terminal selects different TD basis vectors.

In some embodiments, for same SD-FD basis vector pairs in two polarization directions, the terminal selects the same DD basis vector; or

for same SD-FD basis vector pairs in two polarization directions, the terminal selects the same TD basis vector; or
for different SD-FD basis vector pairs in each polarization direction, the terminal selects the same DD basis vector; or
for different SD-FD basis vector pairs in each polarization direction, the terminal selects different DD basis vectors; or
for different SD-FD basis vector pairs in each polarization direction, the terminal selects the same TD basis vector; or
for different SD-FD basis vector pairs in each polarization direction, the terminal selects different TD basis vectors.

In an embodiment of the present disclosure, the basis vector indication information is used to indicate the basis vector selected by the terminal, and the basis vector includes the one or more DD basis vectors, in which for the same SD-FD basis vector pairs in two polarization directions, the terminal selects the same DD basis vector.

In an embodiment of the present disclosure, the basis vector indication information is used to indicate the basis vector selected by the terminal, and the basis vector includes the one or more TD basis vectors, in which for the same SD-FD basis vector pairs in two polarization directions, the terminal selects the same TD basis vector.

In an embodiment of the present disclosure, the basis vector indication information is used to indicate the basis vector selected by the terminal, and the basis vector includes the one or more DD basis vectors, in which for different SD-FD basis vector pairs in each different polarization direction, the terminal selects the same DD basis vector.

In an embodiment of the present disclosure, the basis vector indication information is used to indicate the basis vector selected by the terminal, and the basis vector includes the one or more DD basis vectors, in which for different SD-FD basis vector pairs in each different polarization direction, the terminal selects different DD basis vectors.

In an embodiment of the present disclosure, the basis vector indication information is used to indicate the basis vector selected by the terminal, and the basis vector includes the one or more TD basis vectors, in which for different SD-FD basis vector pairs and FD in each polarization direction, the terminal selects the same TD basis vector.

In an embodiment of the present disclosure, the basis vector indication information is used to indicate the basis vector selected by the terminal, and the basis vector includes the one or more TD basis vectors, in which different pair of SD-FD basis vector pairs in each different polarization direction, and the terminal selects different TD basis vectors.

In some embodiments, sending, by the terminal, the basis vector indication information for calculating the precoding to the network device, includes:

sending the basis vector indication information of $\mathrm{N'} \times \left( \left\lceil log_2^{C_{N_4}^S} \right\rceil + \left\lceil \log_2^{O_3} \right\rceil \right)$ bits or $\mathrm{N'} \times \left( N_4 + \left\lceil \log_2^{O_3} \right\rceil \right)$ bits for calculating the precoding to the network device,

in which the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of one or more TD basis vectors selected by the terminal.

In an embodiment of the present disclosure, for different SD basis vectors and different FD basis vectors, the terminal selects the same or different TD basis vectors, or the terminal selects the same or different DD basis vectors.

For different SD-FD basis vector pairs in each polarization direction, the terminal selects the same or different DD basis vectors, or for different SD-FD basis vector pairs in each polarization direction, the terminal selects the same or different TD basis vectors, or for the same SD-FD basis vector pairs in two polarization directions, the terminal selects the same DD basis vector or the same TD basis vector.

Based on this, the terminal sends the basis vector indication information of $\mathrm{N'} \times \left( \left\lceil log_2^{C_{N_4}^S} \right\rceil + \left\lceil \log_2^{O_3} \right\rceil \right)$ bits to the network device, in which the basis vector indication information is used to indicate the DD basis vector or the TD basis vector selected by the terminal.

Alternatively, the terminal sends the basis vector indication information of $\left( N_4 + \left\lceil \log_2^{O_3} \right\rceil \right)$ bits to the network device, in which the basis vector indication information is used to indicate the DD basis vector or the TD basis vector selected by the terminal.

In some embodiments, for different SD-FD basis vector pairs in each polarization direction, the terminal selects different DD basis vectors; or

for different SD-FD basis vector pairs in each polarization direction, the terminal selects different TD basis vectors; or
for different SD-FD basis vector pairs in two polarization directions, the terminal selects the same DD basis vector; or
for different SD-FD basis vector pairs in two polarization directions, the terminal selects different DD basis vectors; or
for different SD-FD basis vector pairs in two polarization directions, the terminal selects the same TD basis vector; or
for different SD-FD basis vector pairs in two polarization directions, the terminal selects different TD basis vectors.

In an embodiment of the present disclosure, the basis vector indication information is used to indicate the basis vector selected by the terminal, and the basis vector includes the one or more DD basis vectors, in which for different SD-FD basis vector pairs in each polarization direction, the terminal selects different DD basis vectors.

In an embodiment of the present disclosure, the basis vector indication information is used to indicate the basis vector selected by the terminal, and the basis vector includes the one or more TD basis vectors, in which for different SD-FD basis vector pairs in each polarization direction, the terminal selects different TD basis vectors.

In an embodiment of the present disclosure, the basis vector indication information is used to indicate the basis vector selected by the terminal, and the basis vector includes the one or more DD basis vectors, in which for different SD-FD basis vector pairs in two polarization directions, the terminal selects the same DD basis vector.

In an embodiment of the present disclosure, the basis vector indication information is used to indicate the basis vector selected by the terminal, and the basis vector includes the one or more DD basis vectors, in which for different SD-FD basis vector pairs in two polarization directions, the terminal selects different DD basis vectors.

In an embodiment of the present disclosure, the basis vector indication information is used to indicate the basis vector selected by the terminal, and the basis vector includes the one or more TD basis vector, in which for different SD-FD basis vector pairs in two polarization directions, the terminal selects the same TD basis vector.

In an embodiment of the present disclosure, the basis vector indication information is used to indicate the basis vector selected by the terminal, and the basis vector includes the one or more TD basis vectors, in which for different SD-FD basis vector pairs in two polarization directions, the terminal selects different TD basis vectors.

In some embodiments, sending, by the terminal, the basis vector indication information for calculating the precoding to the network device, includes:

sending the basis vector indication information of $2N' \times \left( \left\lceil log_2^{C_{N_4}^S} \right\rceil + \left\lceil log_2^{O_3} \right\rceil \right)$ bits or $2N' \times \left( N_4 + \left\lceil log_2^{O_3} \right\rceil \right)$ bits for calculating the precoding to the network device,

in which the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of the one or more TD basis vectors selected by the terminal.

In an embodiment of the present disclosure, for different SD basis vectors and different FD basis vectors, the terminal selects the same or different TD basis vectors, or the terminal selects the same or different DD basis vectors.

For different SD-FD basis vector pairs in each polarization direction, the terminal selects different DD basis vectors or different TD basis vectors, or for different SD-FD basis vector pairs in two polarization directions, the terminal selects the same or different DD basis vectors, or for different SD-FD basis vector pairs in two polarization directions, the terminal selects the same or different TD basis vectors.

Based on this, the terminal sends the basis vector indication information of $2N' \times \left( \left\lceil log_2^{C_{N_4}^S} \right\rceil + \left\lceil log_2^{O_3} \right\rceil \right)$ bits for calculating the precoding to the network device, in which the basis vector indication information is used to indicate the DD basis vector or TD basis vector selected by the terminal.

Alternatively, the terminal sends the basis vector indication information of $2N' \times \left( N_4 + \left\lceil log_2^{O_3} \right\rceil \right)$ bits for calculating the precoding to the network device, in which the basis vector indication information is used to indicate the DD basis vector or the TD basis vector selected by the terminal.

In some embodiments, the basis vector pair includes the one or more DD-FD basis vector pairs or one or more TD-FD basis vector pairs,

for the one or more SD basis vectors, the terminal selects the same DD-FD basis vector pair; or
for the one or more SD basis vectors, the terminal selects the same TD-FD basis vector pair.

In an embodiment of the present disclosure, the basis vector indication information is used to indicate the basis vector pair selected by the terminal, the basis vector pair includes the one or more DD-FD basis vector pairs, in which for the one or more SD basis vectors, the terminal selects the same DD-FD basis vector pair.

In an embodiment of the present disclosure, the basis vector indication information is used to indicate the basis vector pair selected by the terminal, the basis vector pair includes the one or more TD-FD basis vector pairs, in which for the one or more SD basis vectors, the terminal selects the same TD-FD basis vector pair.

In some embodiments, sending, by the terminal, the basis vector indication information for calculating the precoding to the network device, includes at least one of:

sending the basis vector indication information of $\left\lceil log_2^{C_{N_3 N_4}^N} \right\rceil + \left\lceil log_2^{O_3} \right\rceil + \left\lceil log_2^{O_4} \right\rceil$ bits for calculating the precoding to the network device, in which the basis vector indication information is used to indicate the one or more DD-FD basis vector pairs or the one or more TD-FD basis vector pairs selected by the terminal;

sending the basis vector indication information of $\left\lceil log_2^{C_{N_3 (N_4-1)}^N} \right\rceil + \left\lceil log_2^{O_3} \right\rceil + \left\lceil log_2^{O_4} \right\rceil$ bits for calculating the precoding to the network device, in which the basis vector indication information is used to indicate the one or more DD-FD basis vector pairs or the one or more TD-FD basis vector pairs selected by the terminal;

sending the basis vector indication information of $\left\lceil log_2^{C_{(N_3-1) N_4}^N} \right\rceil + \left\lceil log_2^{O_3} \right\rceil + \left\lceil log_2^{O_4} \right\rceil$ bits for calculating the precoding to the network device, in which the basis vector indication information is used to indicate the one or more DD-FD basis vector pairs or the one or more TD-FD basis vector pairs selected by the terminal; or

sending the basis vector indication information of $\left\lceil log_2^{C_{(N_3-1)(N_4-1)}^{N-1}} \right\rceil + \left\lceil log_2^{O_3} \right\rceil + \left\lceil log_2^{O_4} \right\rceil$ bits for calculating the precoding to the network device, in which the basis vector indication information is used to indicate the one or more DD-FD basis vector pairs or the one or more TD-FD basis vector pairs selected by the terminal,

in which, $N_3$ is a number of frequency domain PMI subbands, N is the number of the one or more DD-FD basis vector pairs or the number of the one or more TD-FD basis vector pairs, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, the basis vector indication information is used to indicate the basis vector pair selected by a terminal, the basis vector pair includes the one or more DD-FD basis vector pairs, in which, for the one or more SD basis vectors, the terminal selects the same DD-FD basis vector pair, or for the one or more SD basis vectors, the terminal selects the same TD-FD basis vector pair.

Based on this, the terminal sends the basis vector indication information of $\left\lceil log_2^{C_{N_3 N_4}^N} \right\rceil + \left\lceil log_2^{O_3} \right\rceil + \left\lceil log_2^{O_4} \right\rceil$ bits for calculating the precoding to the network device, in which the basis vector indication information is used to indicate the DD-FD basis vector pair or the TD-FD basis vector pair selected by the terminal.

Alternatively, the terminal sends the basis vector indication information of $\left\lceil log_2^{C_{N_3 (N_4-1)}^N} \right\rceil + \left\lceil log_2^{O_3} \right\rceil + \left\lceil log_2^{O_4} \right\rceil$ bits for calculating the precoding to the network device, in which the basis vector indication information is used to indicate the DD-FD basis vector pair or the TD-FD basis vector pair selected by the terminal.

Alternatively, the terminal sends the basis vector indication information of

$$\left\lceil log_2^{C_{(N_3-1)N_4}^N}\right\rceil + \left\lceil log_2^{O_3}\right\rceil + \left\lceil log_2^{O_4}\right\rceil$$ bits for calculating the precoding to the network device, in which the basis vector indication information is used to indicate the DD-FD basis vector pair or the TD-FD basis vector pair selected by the terminal.

Alternatively, the terminal sends the basis vector indication information of $$\left\lceil log_2^{C_{(N_3-1)(N_4-1)}^{N-1}}\right\rceil + \left\lceil log_2^{O_3}\right\rceil + \left\lceil log_2^{O_4}\right\rceil$$ bits for calculating the precoding to the network device, in which the basis vector indication information is used to indicate the DD-FD basis vector pair or the TD-FD basis vector pair selected by the terminal.

In some embodiments, sending, by the terminal, the basis vector indication information for calculating the precoding to the network device, includes:

sending first basis vector indication information of $$\left\lceil log_2^{C_{N_4}^S}\right\rceil + \left\lceil log_2^{O_3}\right\rceil$$ bits or $$\left\lceil log_2^{C_{N_4-1}^{S-1}}\right\rceil + \left\lceil log_2^{O_3}\right\rceil$$ bits for calculating the precoding to the network device, in which the first basis vector indication information is used to indicate S DD basis vectors or S TD basis vectors selected by the terminal and S is a positive integer;

sending second basis vector indication information of $$\left\lceil log_2^{C_{N_3}^M}\right\rceil + \left\lceil log_2^{O_4}\right\rceil$$ bits for calculating precoding to the network device, in which the second basis vector indication information is used to indicate M FD basis vectors selected by the terminal and M is a positive integer;

sending third basis vector indication information of M× S bits for calculating the precoding to the network device, in which the third basis vector indication information is used to indicate the one or more DD-FD basis vector pairs or the one or more TD-FD basis vector pairs selected by the terminal,

in which, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, the basis vector indication information is used to indicate the basis vector pair selected by the terminal, the basis vector pair includes the one or more DD-FD basis vector pairs, in which, for the one or more SD basis vectors, the terminal selects the same DD-FD basis vector pair, or for the one or more SD basis vectors, the terminal selects the same TD-FD basis vector pair.

Based on this, the terminal sends the first basis vector indication information of $$\left\lceil log_2^{C_{N_4}^S}\right\rceil + \left\lceil log_2^{O_3}\right\rceil$$ bits or $$\left\lceil log_2^{C_{N_4-1}^{S-1}}\right\rceil + \left\lceil log_2^{O_3}\right\rceil$$ bits for calculating of the precoding to the network device, in which the first basis vector indication information is used to indicate S DD basis vectors or S TD basis vectors selected by the terminal, and S is a positive integer.

Afterwards, the terminal sends the second basis vector indication information of $$\left\lceil log_2^{C_{N_3}^M}\right\rceil + \left\lceil log_2^{O_4}\right\rceil$$ bits for calculating of the precoding to the network device, in which the second basis vector indication information is used to indicate the M FD basis vectors selected by the terminal, and M is a positive integer.

Afterwards, the terminal sends the third basis vector indication information of M× S bits for calculating of the precoding to the network device, in which the third basis vector indication information is used to indicate the DD-FD basis vector pair or the TD-FD basis vector pair selected by the terminal.

In some embodiments, sending, by the terminal, the basis vector indication information for calculating the precoding to the network device, includes:

sending first basis vector indication information of $$\left\lceil log_2^{C_{N_4-1}^{S-1}}\right\rceil + \left\lceil log_2^{O_3}\right\rceil$$ bits for calculating the precoding to the network device, in which the first basis vector indication information is used to indicate S DD basis vectors or DD basis vectors selected by the terminal and S is a positive integer;

sending second basis vector indication information of $\left\lceil log_2^{C_{N_3}^M} \right\rceil + \left\lceil \log_2^{O_4} \right\rceil$ bits for calculating the precoding to the network device, in which the second basis vector indication information is used to indicate M FD basis vectors selected by the terminal and M is a positive integer;

sending third basis vector indication information of $\left\lceil log_2^{C_{MS}^N} \right\rceil$ bits for calculating the precoding to the network device, in which the third basis vector indication information is used to indicate the one or more DD-FD basis vector pairs or the one or more TD-FD basis vector pairs selected by the terminal,

in which, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, $O_4$ is an oversampling factor of the one or more FD basis vectors, and N is the number of the one or more the DD-FD basis vector pairs or the number of the one or more the TD-FD basis vector pairs.

In an embodiment of the present disclosure, the basis vector indication information is used to indicate the basis vector pair selected by the terminal, the basis vector pair includes the one or more DD-FD basis vector pairs, in which, for the one or more SD basis vectors, the terminal selects the same DD-FD basis vector pair, or for the one or more SD basis vectors, the terminal selects the same TD-FD basis vector pair.

Based on this, the terminal sends the first basis vector indication information of $\left\lceil log_2^{C_{N_4-1}^{S-1}} \right\rceil + \left\lceil \log_2^{O_3} \right\rceil$ bits for calculating the precoding to the network device, in which the first basis vector indication information is used to indicate S DD basis vectors or DD basis vectors selected by the terminal, and S is a positive integer.

Afterwards, the terminal sends the second basis vector indication information of $\left\lceil log_2^{C_{N_3}^M} \right\rceil + \left\lceil \log_2^{O_4} \right\rceil$ bits for calculating the precoding to the network device, in which the second basis vector indication information is used to indicate the M FD basis vectors selected by the terminal, and M is a positive integer.

Afterwards, the terminal sends the third basis vector indication information of $\left\lceil log_2^{C_{MS}^N} \right\rceil$ bits for calculating the precoding to the network device, in which the third basis vector indication information is used to indicate the DD-FD basis vector pair or the TD-FD basis vector pair selected by the terminal.

In some embodiments, the basis vector pair includes the one or more DD-FD basis vector pairs or the one or more TD-FD basis vector pairs,

for the same SD basis vector, the terminal selects the same DD-FD basis vector pair; or
for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or
for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

In an embodiment of the present disclosure, the basis vector indication information is used to indicate the basis vector pair selected by the terminal, the basis vector pair includes the one or more DD-FD basis vector pairs, in which for the same SD basis vector, the terminal selects the same DD-FD basis vector pair.

In an embodiment of the present disclosure, the basis vector indication information is used to indicate the basis vector pair selected by the terminal, the basis vector pair includes the one or more DD-FD basis vector pairs, in which for the same SD basis vector, the terminal selects different DD-FD basis vector pairs.

In an embodiment of the present disclosure, the basis vector indication information is used to indicate the basis vector pair selected by the terminal, the basis vector pair includes the one or more DD-FD basis vector pairs, in which for different SD basis vectors, the terminal selects the same DD-FD basis vector pair.

In an embodiment of the present disclosure, the basis vector indication information is used to indicate the basis vector pair selected by the terminal, the basis vector pair includes the one or more DD-FD basis vector pairs, in which for different SD basis vectors, the terminal selects different DD-FD basis vector pairs.

In an embodiment of the present disclosure, the basis vector indication information is used to indicate the basis vector pair selected by the terminal, the basis vector pair includes the one or more TD-FD basis vector pairs, in which for the SD basis vector, the terminal selects the same TD-FD basis vector pair.

In an embodiment of the present disclosure, the basis vector indication information is used to indicate the basis vector pair selected by the terminal, the basis vector pair includes the one or more TD-FD basis vector pairs, in which for the same SD basis vector, the terminal selects different TD-FD basis vector pairs.

In an embodiment of the present disclosure, the basis vector indication information is used to indicate the basis vector pair selected by the terminal, the basis vector pair includes the one or more TD-FD basis vector pairs, in which for different SD basis vectors, the terminal selects the same TD-FD basis vector pair.

In an embodiment of the present disclosure, the basis vector indication information is used to indicate the basis vector pair selected by the terminal, the basis vector pair includes the one or more TD-FD basis vector pairs, in which for different SD basis vectors, the terminal selects different TD-FD basis vector pairs.

In some embodiments, for different SD basis vectors in each polarization direction, the terminal selects the same DD-FD basis vector pair; or

for different SD basis vectors in each polarization direction, the terminal selects the same TD-FD basis vector pair; or
for different SD basis vectors in each polarization direction, the terminal selects different DD-FD basis vector pairs; or
for different SD basis vectors in each polarization direction, the terminal selects different TD-FD basis vector pairs; or
for different SD basis vectors in each polarization direction, and same SD basis vectors in two polarization directions, the terminal selects the same DD-FD basis vector pair; or
for different SD basis vectors in each polarization direction, and same SD basis vectors in two polarization directions, the terminal selects the same TD-FD basis vector pair.

In an embodiment of the present disclosure, the basis vector indication information is used to indicate the basis vector pair selected by the terminal, the basis vector pair includes the one or more DD-FD basis vector pairs, in which for different SD basis vectors in each polarization direction, the terminal selects the same DD-FD basis vector pair.

In an embodiment of the present disclosure, the basis vector indication information is used to indicate the basis vector pair selected by the terminal, the basis vector pair includes the one or more TD-FD basis vector pairs, in which for different SD basis vectors in each polarization direction, the terminal selects the same TD-FD basis vector pair.

In an embodiment of the present disclosure, the basis vector indication information is used to indicate the basis vector pair selected by the terminal, the basis vector pair includes the one or more DD-FD basis vector pairs, in which for different SD basis vectors in each polarization direction, the terminal selects different DD-FD basis vector pairs.

In an embodiment of the present disclosure, the basis vector indication information is used to indicate the basis vector pair selected by the terminal, the basis vector pair includes the one or more TD-FD basis vector pairs, in which for different SD basis vectors in each polarization direction, the terminal selects different TD-FD basis vector pairs.

In an embodiment of the present disclosure, the basis vector indication information is used to indicate the basis vector pair selected by the terminal, the basis vector pair includes the one or more DD-FD basis vector pairs, in which for different SD basis vectors in each polarization direction and the same SD basis vectors in two polarization directions, the terminal selects the same DD-FD basis vector pair.

In an embodiment of the present disclosure, basis vector indication information is used to indicate the basis vector pair selected by the terminal, the basis vector pair includes the one or more TD-FD basis vector pairs, in which for different SD basis vectors in each polarization direction and the same SD basis vectors in two polarization directions, the terminal selects the same TD-FD basis vector pair.

In some embodiments, sending, by the terminal, the basis vector indication information for calculating the precoding to the network device, includes:

sending the basis vector indication information of $L \times \left( \left\lceil log_2^{C_{N_3 N_4}^N} \right\rceil + \left\lceil log_2^{O_3} \right\rceil + \left\lceil log_2^{O_4} \right\rceil \right)$ bits for calculating the precoding to the network device,

in which the basis vector indication information is used to indicate the one or more DD-FD basis vector pairs or the one or more TD-FD basis vector pairs selected by the terminal, L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more the DD-FD basis vector pairs or the number of one or more the TD-FD basis vector pairs, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different pairs of DD-FD basis vector pairs, or the terminal selects the same or different TD-FD basis vector pairs.

In an embodiment of the present disclosure, for different SD basis vectors in each polarization direction, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects the same DD-FD basis vector pair, or the terminal selects the same TD-FD basis vector pair.

Based on this, the terminal sends the basis vector indication information of

$$L \times \left( \left\lceil log_2^{C_{N_3N_4}^N} \right\rceil + \left\lceil log_2^{O_3} \right\rceil + \left\lceil log_2^{O_4} \right\rceil \right)$$

bits for calculating the precoding to the network device, in which the basis vector indication information is used to indicate the DD-FD basis vector pair or the TD-FD basis vector pair selected by the terminal.

Exemplarily, for the same or different SD basis vectors, the terminal selects the same or different DD-FD basis vector pairs, or the terminal selects the same or different TD-FD basis vector pairs.

Among them, the number of the lengths of the DD basis vector or of the lengths of the TD basis vector is $N_4$=4, the number of DD basis vectors or the number of TD basis vectors selected by the terminal is S=2, the number of SD basis vectors selected by the terminal is L=2, the number of FD basis vectors selected by the terminal is M=4, the number of DD-FD basis vector pairs or the number of TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical directions $O_1$ and $O_2$ are both 4, the oversampling factor of the DD basis vector or the TD basis vector $O_3$ is 1, the oversampling factor of the FD basis vector $O_4$ is 1, that is, the oversampling is not performed, the number of antenna ports in the horizontal direction in a single polarization direction $N_1$ = 2, and the number of antenna ports in the vertical direction in a single polarization direction $N_2$ = 4.

The following description is based on that the terminal reports the basis vector indication information to the network device, in which the basis vector indication information indicates the DD basis vector or the TD basis vector selected by the terminal, the basis vector indication information is used to indicate the precoding of a certain data transmission layer, the DD basis vector or the TD basis vector, or the DD-FD basis vector pair, or the TD-FD basis vector pair selected by the terminal.

If the same SD basis vectors in two polarization directions correspond to the same or different DD-FD basis vector pairs, or the same SD basis vectors in two polarization directions correspond to the same or different TD-FD basis vector pairs, the terminal sends the basis vector indication information of $L \times \left( \left\lceil log_2^{C_{N_3N_4}^N} \right\rceil + \left\lceil log_2^{O_3} \right\rceil + \left\lceil log_2^{O_4} \right\rceil \right) = 32$ bits for calculating the precoding to the network device to indicate the DD-FD basis vector pairs corresponding to at least two SD basis vectors respectively, or to indicate the TD-FD basis vector pairs corresponding to at least two SD basis vectors respectively.

In some embodiments, sending, by the terminal, the basis vector indication information for calculating the precoding to the network device, includes:

sending first basis vector indication information of $\left\lceil log_2^{C_{N_4}^S} \right\rceil + \left\lceil log_2^{O_3} \right\rceil$ bits for calculating the precoding to the network device, in which the first basis vector indication information is used to indicate S DD basis vectors or S TD basis vectors selected by the terminal and S is a positive integer;

sending second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate M FD basis vectors selected by the terminal and M is a positive integer;

sending third basis vector indication information of $L \times M \times S$ bits for calculating the precoding to the network device, in which the third basis vector indication information is used to indicate a DD-FD basis vector pair corresponding to each SD basis vector or a TD-FD basis vector pair corresponding to each SD basis vector,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different pairs of DD-FD basis vector pairs, or the terminal selects the same or different TD-FD basis vector pairs.

In an embodiment of the present disclosure, for different SD basis vectors in each polarization direction, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects the same DD-FD basis vector pair, or the terminal selects the same TD-FD basis vector pair.

Based on this, the terminal sends the first basis vector indication information of $\left\lceil log_2^{C_{N_4}^S} \right\rceil + \left\lceil \log_2^{O_3} \right\rceil$ bits for calculating the precoding to the network device, in which the first basis vector indication information is used to indicate the S DD basis vectors or S TD basis vectors selected by the terminal, and S is a positive integer.

Afterwards, the terminal sends the second basis vector indication information of $\left\lceil log_2^{C_{N_3}^M} \right\rceil + \left\lceil \log_2^{O_4} \right\rceil$ bits for calculating the precoding to the network device, in which the second basis vector indication information is used to indicate the M FD basis vectors selected by the terminal, and M is a positive integer.

Afterwards, the terminal sends of third basis vector indication information of L × M × S bits for calculating the precoding to the network device, in which the third basis vector indication information is used to indicate the DD-FD basis vector pair corresponding to each SD basis vector or the TD-FD basis vector pair corresponding to each SD basis vector.

Exemplarily, for the same or different SD basis vectors, the terminal selects the same or different DD-FD basis vector pairs, or the terminal selects the same or different pairs TD-FD basis vector pairs.

Among them, the number of the lengths of the DD basis vectors or of the lengths of the TD basis vectors is $N_4$=4, the number of DD basis vectors or the number of TD basis vectors selected by the terminal is S=2, the number of SD basis vectors selected by the terminal is L=2, the number of FD basis vectors selected by the terminal is M=4, the number of the DD-FD basis vector pairs or the number of the TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical directions $O_1$ *and* $O_2$ are both 4, the oversampling factor of the DD basis vector or the TD basis vector $O_3$ is 1, the oversampling factor of the FD basis vector $O_4$ is 1, that is, the oversampling is not performed, the number of antenna ports in the horizontal direction in a single polarization direction $N_1$ = 2, and the number of antenna ports in the vertical direction in a single polarization direction $N_2$ = 4.

The following description is based on that the terminal reports the basis vector indication information to the network device, in which the basis vector indication information indicates the DD basis vector or the TD basis vector selected by the terminal, the basis vector indication information is used to indicate the precoding of a certain data transmission layer, the DD basis vector or the TD basis vector, or the DD-FD basis vector pair, or the TD-FD basis vector pair selected by the terminal.

If the same SD basis vectors in two polarization directions correspond to the same or different DD-FD basis vector pairs, or the same SD basis vectors in two polarization directions correspond to the same or different TD-FD basis vector pairs, the terminal first sends the first basis vector indication information of $\left\lceil \log_2^{C_{N_4}^S} \right\rceil + \left\lceil \log_2^{O_3} \right\rceil = 3$ bits to the network device, to indicate S=2 DD basis vectors or TD basis vectors selected by the terminal, and afterwards, sends the second basis vector indication information of $\left\lceil \log_2^{C_{N_3}^M} \right\rceil + \left\lceil \log_2^{O_4} \right\rceil = 9$ bits to the network device, to indicate the M FD basis vectors selected by the terminal, and afterwards, the terminal sends the third basis vector indication information of L × M × S = 16 bits to the network device, to indicate the DD-FD basis vector pair corresponding to each SD basis vector, or indicates the TD-FD basis vector pair corresponding to each SD basis vector.

In some embodiments, sending, by the terminal, the basis vector indication information for calculating the precoding to the network device, includes:

sending first basis vector indication information of $\left\lceil log_2^{C_{N_4}^S} \right\rceil + \left\lceil \log_2^{O_3} \right\rceil$ bits for calculating the precoding to the network device, in which the first basis vector indication information is used to indicate S DD basis vectors or S TD basis vectors selected by the terminal and S is a positive integer;

sending second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate M FD basis vectors selected by the terminal and M is a positive integer;

sending third basis vector indication information of $\mathrm{L} \times \left\lceil log_2^{C_{MS}^N} \right\rceil$ bits for calculating the precoding to the network device, in which the third basis vector indication information is used to indicate a DD-FD basis vector pair corresponding to each SD basis vector or a TD-FD basis vector pair corresponding to each SD basis vector, in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of one or more DD-FD basis vector pairs or the number of one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects the same DD-FD basis vector pair, or the terminal selects the same TD-FD basis vector pair.

Based on this, the terminal sends the first basis vector indication information of $\left\lceil log_2^{C_{N_4}^S} \right\rceil + \left\lceil log_2^{O_3} \right\rceil$ bits for calculating the precoding to the network device, in which the first basis vector indication information is used to indicate the S DD basis vectors or S TD basis vectors selected by the terminal, and S is a positive integer.

Afterwards, the terminal sends the second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate the M FD basis vectors selected by the terminal, and M is a positive integer.

Afterwards, the terminal sends the third basis vector indication information of $\mathrm{L} \times \left\lceil log_2^{C_{MS}^N} \right\rceil$ bits for calculating the precoding to the network device, in which the third basis vector indication information is used to indicate the DD-FD basis vector pair corresponding to each SD basis vector or the TD-FD basis vector pair corresponding to each SD basis vector.

Exemplarily, for the same or different SD basis vectors, the terminal selects the same or different DD-FD basis vector pairs, or the terminal selects the same or different TD-FD basis vector pairs.

Among them, the number of the lengths of the DD basis vectors or of the lengths of the TD basis vectors is $N_4$=4, the number of DD basis vectors or the number of TD basis vectors selected by the terminal is S=2, the number of SD basis vectors selected by the terminal is L=2, the number of FD basis vectors selected by the terminal is M=4, the number of DD-FD basis vector pairs or the number of TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical direction $O_1$ and $O_2$ is 4, the oversampling factor of the DD basis vector or of the TD basis vector $O_3$ is 1, the oversampling factor of the FD basis vector $O_4$ is 1, that is, the oversampling is not performed. The number of antenna ports in the horizontal direction in a single polarization direction $N_1$ = 2, and the number of antenna ports in the vertical direction in a single polarization direction $N_2$ = 4.

The following description is based on that the terminal reports the basis vector indication information to the network device, in which the basis vector indication information indicates the DD basis vector or the TD basis vector selected by the terminal, the basis vector indication information is used to indicate the precoding of a certain data transmission layer, the DD basis vector or the TD basis vector, or a DD-FD basis vector pair, or a TD-FD basis vector pair selected by the terminal.

If the same SD basis vectors in two polarization directions correspond to the same or different DD-FD basis vector pairs, or the same SD basis vectors in two polarization directions correspond to the same or different TD-FD basis vector pairs, the terminal first sends the first basis vector indication information of $\left\lceil log_2^{C_{N_4}^S} \right\rceil + \lceil log_2^{O_3} \rceil = 3$ bits to the network device, to inidcate S=2 DD basis vectors or TD basis vectors selected by the terminal, and afterwards, the terminal sends the second basis vector indication information of $\left\lceil log_2^{C_{N_3}^M} \right\rceil + \lceil log_2^{O_4} \rceil = 9$ bits to the network device to indicate M FD basis vectors selected by the terminal, and then the terminal sends the third basis vector indication information of $L \times \left\lceil log_2^{C_{MS}^N} \right\rceil$ bits to the network device, to indicate the DD-FD basis vector pair corresponding to each SD basis vector, or indicates the TD-FD basis vector pair corresponding to each SD basis vector.

In some embodiments, for different SD basis vectors in each polarization direction, and same SD basis vectors in two polarization directions, the terminal selects different DD-FD basis vector pairs; or

for different SD basis vectors in each polarization direction, and same SD basis vectors in two polarization directions, the terminal selects different TD-FD basis vector pairs; or
for different SD basis vectors in each polarization direction, and different SD basis vectors in two polarization directions, the terminal selects the same DD-FD basis vector pair; or
for different SD basis vectors in each polarization direction, and different SD basis vectors in two polarization directions, the terminal selects the same TD-FD basis vector pair; or
for different SD basis vectors in each polarization direction, and different SD basis vectors in two polarization directions, the terminal selects different DD-FD basis vector pairs; or
for different SD basis vectors in each polarization direction, and different SD basis vectors in two polarization directions, the terminal selects different TD-FD basis vector pairs.

In an embodiment of the present disclosure, the basis vector indication information is used to indicate the basis vector pair selected by the terminal, the basis vector pair includes the one or more DD-FD basis vector pair, for different SD basis vectors in each polarization direction and the same SD basis vectors in two polarization directions, the terminal selects different DD-FD basis vector pairs.

In an embodiment of the present disclosure, the basis vector indication information is used to indicate the basis vector pair selected by the terminal, the basis vector pair includes the one or more TD-FD basis vector pairs, for different SD basis vectors in each polarization direction and the same SD basis vectors in two polarization directions, the terminal selects different TD-FD basis vector pairs.

In an embodiment of the present disclosure, the basis vector indication information is used to indicate the basis vector pair selected by the terminal, the basis vector pair includes the one or more DD-FD basis vector pairs, in which for different SD basis vectors in each polarization direction and different SD basis vectors in two polarization directions, the terminal selects the same DD-FD basis vector pair.

In an embodiment of the present disclosure, the basis vector indication information is used to indicate the basis vector pair selected by the terminal, the basis vector pair includes the one or more TD-FD basis vector pair, in which for different SD basis vectors in each polarization direction and different SD basis vectors in two polarization directions, the terminal selects the same TD-FD basis vector pair.

In an embodiment of the present disclosure, the basis vector indication information is used to indicate the basis vector pair selected by the terminal, the basis vector pair includes the one or more DD-FD basis vector pair, in which for different SD basis vectors in each polarization direction and different SD basis vectors in two polarization directions, the terminal selects different DD-FD basis vector pairs.

In an embodiment of the present disclosure, the basis vector indication information is used to indicate the basis vector pair selected by the terminal, the basis vector pair includes the one or more DD-FD basis vector pair, in which for different SD basis vectors in each polarization direction and different SD basis vectors in two polarization directions, the terminal selects different TD-FD basis vector pairs.

In some embodiments, sending, by the terminal, the basis vector indication information for calculating the precoding to the network device, includes:

sending the basis vector indication information of $2L \times \left( \left\lceil log_2^{C_{N_3 N_4}^N} \right\rceil + \lceil log_2^{O_3} \rceil + \lceil log_2^{O_4} \rceil \right)$ bits for calculating the precoding to the network device, in which the basis vector indication information is used to indicate the one or more DD-FD basis vector pairs or the one or more TD-FD basis vector pairs selected by the terminal,
in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more DD-FD basis vector pairs or the number of the one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects different DD-FD basis vector pairs, or the terminal selects different TD-FD basis vector pairs.

In an embodiment of the present disclosure, for different SD basis vectors in each polarization direction and different SD basis vectors in two polarization directions, the terminal selects the same or different DD-FD basis vector pairs, or the terminal selects the same or different TD-FD basis vector pairs.

Based on this, the terminal sends the basis vector indication information of $2L$

$$\times \left( \left\lceil log_2^{C_{N_3N_4}^N} \right\rceil + \left\lceil log_2^{O_3} \right\rceil + \left\lceil log_2^{O_4} \right\rceil \right)$$ bits to the network device, in which the basis vector indication information is used to indicate the one or more DD-FD basis vector pairs or the one or more TD-FD basis vector pairs selected by the terminal.

In some embodiments, sending, by the terminal, the basis vector indication information for calculating the precoding to the network device, includes:

sending first basis vector indication information of $\left\lceil log_2^{C_{N_4}^S} \right\rceil + \left\lceil log_2^{O_3} \right\rceil$ bits for calculating the precoding to the network device, in which the first basis vector indication information is used to indicate S DD basis vectors or S TD basis vectors selected by the terminal and S is a positive integer;

sending second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate M FD basis vectors selected by the terminal and M is a positive integer;

sending third basis vector indication information of $2L \times M \times S$ bits for calculating the precoding to the network device, in which the third basis vector indication information is used to indicate the DD-FD basis vector pair corresponding to each SD basis vector or the TD-FD basis vector pair corresponding to each SD basis vector,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects different DD-FD basis vector pairs, or the terminal selects different TD-FD basis vector pairs.

In an embodiment of the present disclosure, for different SD basis vectors in each polarization direction and different SD basis vectors in two polarization directions, the terminal selects the same or different DD-FD basis vector pairs, or the terminal selects the same or different TD-FD basis vector pairs.

Based on this, the terminal sends the first basis vector indication information of $\left\lceil log_2^{C_{N_4}^S} \right\rceil + \left\lceil log_2^{O_3} \right\rceil$ bits for calculating the precoding to the network device, in which the first basis vector indication information is used to indicate the S DD basis vectors or S TD basis vectors selected by the terminal, and S is a positive integer.

Afterwards, the terminal sends the second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate the M FD basis vectors selected by the terminal, and M is a positive integer.

Afterwards, the terminal sends third basis vector indication information of $2L \times M \times S$ bits for calculating the precoding to the network device, in which the third basis vector indication information is used to indicate the DD-FD basis vector pair corresponding to each SD basis vector or the TD-FD basis vector pair corresponding to each SD basis vector.

In some embodiments, sending, by the terminal, the basis vector indication information for calculating the precoding to the network device, includes:

sending first basis vector indication information of $\left\lceil log_2^{C_{N_4}^S} \right\rceil + \left\lceil \log_2^{O_3} \right\rceil$ bits for calculating the precoding to the network device, in which the first basis vector indication information is used to indicate S DD basis vectors or S TD basis vectors selected by the terminal and S is a positive integer;

sending second basis vector indication information of $\left\lceil log_2^{C_{N_3}^M} \right\rceil + \left\lceil \log_2^{O_4} \right\rceil$ bits for calculating the precoding to the network device, in which the second basis vector indication information is used to indicate M FD basis vectors selected by the terminal and M is a positive integer;

sending third basis vector indication information of $2\mathrm{L} \times \left\lceil log_2^{C_{MS}^N} \right\rceil$ bits for calculating the precoding to the network device, in which the third basis vector indication information is used to indicate a DD-FD basis vector pair corresponding to each SD basis vector or a TD-FD basis vector pair corresponding to each SD basis vector;

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects different DD-FD basis vector pairs, or the terminal selects different TD-FD basis vector pairs.

In an embodiment of the present disclosure, for different SD basis vectors in each polarization direction and different SD basis vectors in two polarization directions, the terminal selects the same or different DD-FD basis vector pairs, or the terminal selects the same or different TD-FD basis vector pairs.

Based on this, the terminal sends the first basis vector indication information of $\left\lceil log_2^{C_{N_4}^S} \right\rceil + \left\lceil \log_2^{O_3} \right\rceil$ bits for calculating the precoding to the network device, in which the first basis vector indication information is used to indicate the S DD basis vectors or S TD basis vectors selected by the terminal, and S is a positive integer.

Afterwards, the terminal sends the second basis vector indication information of $\left\lceil log_2^{C_{N_3}^M} \right\rceil + \left\lceil \log_2^{O_4} \right\rceil$ bits for calculating the precoding to the network device, in which the second basis vector indication information is used to indicate the M FD basis vectors selected by the terminal, and M is a positive integer.

Afterwards, the terminal sends third basis vector indication information of $2\mathrm{L} \times \left\lceil log_2^{C_{MS}^N} \right\rceil$ bits for calculating the precoding to the network device, in which the third basis vector indication information is used to indicate the DD-FD basis vector pair corresponding to each SD basis vector or the TD-FD basis vector pair corresponding to each SD basis vector.

In some embodiments, the basis vector pair includes the one or more SD-FD basis vector pairs, and sending, by the terminal, the basis vector indication information for calculating precoding to the network device, includes:

sending the basis vector indication information of $\left\lceil log_2^{C_{N_1 N_2 N_3}^{N'}} \right\rceil + \left\lceil \log_2^{O_4} \right\rceil + \left\lceil \log_2^{O_1 O_2} \right\rceil$ bits or $\left\lceil log_2^{C_{N_1 N_2 (N_3-1)}^{N'}} \right\rceil + \left\lceil \log_2^{O_4} \right\rceil + \left\lceil \log_2^{O_1 O_2} \right\rceil$ bits for calculating the precoding to the network device, in which the basis vector indication information is used to indicate the one or more SD-FD basis vector pairs selected by the terminal,

in which $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

In an embodiment of the present disclosure, the basis vector indication information is used to indicate the basis vector pair selected by the terminal, and the basis vector pair includes the one or more SD-FD basis vector pairs.

Based on this, the terminal sends the basis vector indication information of

$$\left\lceil log_2^{C_{N_1 N_2 (N_3-1)}^{N'}} \right\rceil + \left\lceil \log_2^{O_4} \right\rceil + \left\lceil \log_2^{O_1 O_2} \right\rceil$$ or $$\left\lceil log_2^{C_{N_1 N_2 N_3}^{N'}} \right\rceil + \left\lceil \log_2^{O_4} \right\rceil + \left\lceil \log_2^{O_1 O_2} \right\rceil$$ bits for calculating

the precoding to the network device, in which the basis vector indication information is used to indicate the one or more SD-FD basis vector pair selected by the terminal.

In some embodiments, the basis vector pair includes the one or more SD-FD basis vector pairs, and sending, by the terminal, the basis vector indication information for calculating the precoding to the network device, includes:

sending first basis vector indication information of $\left\lceil log_2^{C_{N_3}^{M}} \right\rceil + \left\lceil \log_2^{O_4} \right\rceil$ bits or $\left\lceil log_2^{C_{N_3-1}^{M-1}} \right\rceil + \left\lceil \log_2^{O_4} \right\rceil$ bits for calculating the precoding to the network device, in which the first basis vector indication information is used to indicate M FD basis vectors selected by the terminal and M is a positive integer;

sending second basis vector indication information of $\left\lceil log_2^{C_{N_1 N_2}^{L}} \right\rceil + \left\lceil \log_2^{O_1 O_2} \right\rceil$ bits for calculating the precoding to the network device, in which the second basis vector indication information is used to indicate L SD basis vectors selected by the terminal and L is a positive integer;

sending third basis vector indication information of $M \times L$ bits for calculating the precoding to the network device, in which the third basis vector indication information is used to indicate the one or more SD-FD basis vector pairs selected by the terminal,

in which L is a number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

In an embodiment of the present disclosure, the basis vector indication information is used to indicate the basis vector pair selected by the terminal, and the basis vector pair includes the one or more SD-FD basis vector pairs.

Based on this, the terminal sends first basis vector indication information of $\left\lceil log_2^{C_{N_3}^{M}} \right\rceil + \left\lceil \log_2^{O_4} \right\rceil$ or $\left\lceil log_2^{C_{N_3-1}^{M-1}} \right\rceil + \left\lceil \log_2^{O_4} \right\rceil$ bits for calculating the precoding to the network device, in which the first basis vector indication information is used to indicate M FD basis vectors selected by the terminal, and M is a positive integer.

Afterwards, the terminal sends the second basis vector indication information of $\left\lceil log_2^{C_{N_1 N_2}^{L}} \right\rceil + \left\lceil \log_2^{O_1 O_2} \right\rceil$ bits for calculating the precoding to the network device, in which the second basis vector indication information is used to indicate L SD basis vectors selected by the terminal, and L is a positive integer.

Afterwards, the terminal sends third basis vector indication information of $M \times L$ bits for calculating the precoding to the network device, in which the third basis vector indication information is used to indicate the one or more SD-FD basis vector pair selected by the terminal.

In some embodiments, the basis vector pair includes the one or more SD-FD basis vector pairs, and sending, by the terminal, the basis vector indication information for calculating the precoding to the network device, includes:

sending first basis vector indication information of $\left\lceil log_2^{C_{N_3}^{M}} \right\rceil + \left\lceil \log_2^{O_4} \right\rceil$ bits or $\left\lceil log_2^{C_{N_3-1}^{M-1}} \right\rceil + \left\lceil \log_2^{O_4} \right\rceil$ bits for

calculating the precoding to the network device, in which the first basis vector indication information is used to indicate M FD basis vectors selected by the terminal and M is a positive integer;

sending second basis vector indication information of $\left\lceil \log_2^{C_{N_1 N_2}^L} \right\rceil + \left\lceil \log_2^{O_1 O_2} \right\rceil$ bits for calculating the precoding to the network device, in which the second basis vector indication information is used to indicate L SD basis vectors selected by the terminal and L is a positive integer;

sending third basis vector indication information of $\left\lceil log_2^{C_{ML}^{N'}} \right\rceil$ bits for calculating the precoding to the network device, in which the third basis vector indication information is used to indicate the one or more SD-FD basis vector pairs selected by the terminal,

in which L is the number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, N' is the number of the one or more SD-FD basis vector pairs in each polarization direction, $O_1$ is an oversampling factor of the one or more SD basis vectors in the horizontal direction, $O_2$ is an oversampling factor of the one or more SD basis vectors in the vertical direction, $O_4$ is an oversampling factor of the one or more FD basis vectors.

In an embodiment of the present disclosure, the basis vector indication information is used to indicate the basis vector pair selected by the terminal, and the basis vector pair includes the one or more SD-FD basis vector pairs.

Based on this, the terminal sends the first basis vector indication information of $\left\lceil log_2^{C_{N_3}^M} \right\rceil + \left\lceil \log_2^{O_4} \right\rceil$ *or* $\left\lceil log_2^{C_{N_3-1}^{M-1}} \right\rceil + \left\lceil \log_2^{O_4} \right\rceil$ bits for calculating the precoding to the network device, in which the first basis vector indication information is used to indicate M FD basis vectors selected by the terminal, and M is a positive integer.

Afterwards, the terminal sends the second basis vector indication information of $\left\lceil \log_2^{C_{N_1 N_2}^L} \right\rceil + \left\lceil \log_2^{O_1 O_2} \right\rceil$ bits for calculating the precoding to the network device, in which the second basis vector indication information is used to indicate L SD basis vectors selected by the terminal, and L is a positive integer.

Afterwards, the terminal sends the third basis vector indication information of $\left\lceil log_2^{C_{ML}^{N'}} \right\rceil$ bits for calculating the precoding to the network device, in which the third basis vector indication information is used to indicate the SD-FD basis vector pair selected by the terminal.

FIG. 3 is a flowchart of another method for reporting the selection indication of the basis vectors provided in an embodiment of the present disclosure.

As shown in FIG. 3, the method is executed by a terminal, and the method may include but is not limited to the following steps.

S31: basis vector indication information for calculating precoding is sent to a network device, in which the basis vector indication information is used to indicate the basis vector and/or a basis vector pair selected by the terminal.

Among them, the relevant description of S31 may refer to the relevant description in the above embodiment, and will not be repeated here.

S32: codebook parameter information sent by the network device is received.

In an embodiment of the present disclosure, the terminal may receive the codebook parameter information sent by the network device, and then select the basis vector and/or the basis vector pair according to the codebook parameter information, and then send the basis vector indication information for calculating the precoding to the network device, and S32 may be executed before S31.

The codebook parameter information includes at least one of:

lengths of one or more SD basis vectors;
lengths of one or more FD basis vectors;
lengths of the one or more TD basis vectors;
lengths of the one or more DD basis vectors;
a number of one or more SD basis vectors;

a number of one or more FD basis vectors;
a number of one or more TD basis vectors;
a number of one or more DD basis vectors;
a number of one or more SD-FD basis vector pairs;
a number of one or more TD-FD basis vector pairs; or
a number of one or more DD-FD basis vector pairs.

In an embodiment of the present disclosure, the terminal receives the codebook parameter information sent by the network device to select the basis vector and/or the basis vector pair according to the codebook parameter information.

The terminal receives the codebook parameter information sent by the network device, and the codebook parameter information includes the lengths of the SD basis vectors.

The terminal receives the codebook parameter information sent by the network device, and the codebook parameter information includes the lengths of the FD basis vectors.

The terminal receives the codebook parameter information sent by the network device, and the codebook parameter information includes the lengths of the TD basis vectors.

The terminal receives the codebook parameter information sent by the network device, and the codebook parameter information includes the lengths of the DD basis vectors.

The terminal receives the codebook parameter information sent by the network device, and the codebook parameter information includes the number of SD basis vectors.

The terminal receives the codebook parameter information sent by the network device, and the codebook parameter information includes the number of FD basis vectors.

The terminal receives the codebook parameter information sent by the network device, and the codebook parameter information includes the number of TD basis vectors.

The terminal receives the codebook parameter information sent by the network device, and the codebook parameter information includes the number of DD basis vectors.

The terminal receives the codebook parameter information sent by the network device, and the codebook parameter information includes the number of SD-FD basis vector pairs.

The terminal receives the codebook parameter information sent by the network device, and the codebook parameter information includes the number of TD-FD basis vector pairs.

The terminal receives the codebook parameter information sent by the network device, and the codebook parameter information includes the number of DD-FD basis vector pairs.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

It should be noted that, in an embodiment of the present disclosure, S31 may be implemented alone or in combination with any other step in the embodiments of the present disclosure, for example, in combination with S21 in the embodiments of the present disclosure, and the embodiments of the present disclosure are not limited to this.

FIG. 4 is a flowchart of another method for reporting the selection indication of the basis vectors provided in an embodiment of the present disclosure.

As shown in FIG. 4, the method is executed by a terminal, and the method may include but is not limited to the following steps.

S41: the basis vector indication information of $X+ \left\lceil \log_2^{O_3} \right\rceil$ bits for calculating the precoding is sent to the network device.

The basis vector indication information is used to indicate the DD basis vector or the TD basis vector selected by the terminal.

For the one or more SD basis vectors, the terminal selects the same DD basis vector; or
for the one or more FD basis vectors, the terminal selects the same DD basis vector; or
for the one or more SD basis vectors and the one or more FD basis vectors, the terminal selects the same DD basis vector; or
for the one or more SD basis vectors, the terminal selects the same TD basis vector; or
for the one or more FD basis vectors, the terminal selects the same TD basis vector; or
for the one or more SD basis vectors and all FD basis vectors, the terminal selects the same TD basis vector.

In an embodiment of the present disclosure, the basis vector indication information is used to indicate the DD basis vector selected by the terminal, in which, for the one or more SD vectors, the terminal selects the same DD basis vector.

In an embodiment of the present disclosure, the basis vector indication information is used to indicate the DD basis vector selected by the terminal, in which for the one or more FD basis vectors, the terminal selects the same DD basis vector.

In an embodiment of the present disclosure, the basis vector indication information is used to indicate the DD basis vector selected by the terminal, in which for the one or more SD basis vectors and the one or more basis vectors, the terminal selects the same DD basis vector.

In an embodiment of the present disclosure, the basis vector indication information is used to indicate the TD basis vector selected by the terminal, in which for the one or more SD vectors, the terminal selects the same TD basis vector.

In an embodiment of the present disclosure, the basis vector indication information is used to indicate the TD basis vector selected by the terminal, in which for the one or more FD basis vectors, the terminal selects the same TD basis vector.

In an embodiment of the present disclosure, the basis vector indication information is used to indicate the TD basis vector selected by the terminal, in which for the one or more SD basis vectors and the one or more FD basis vectors, the terminal selects the same TD basis vector.

In an embodiment of the present disclosure, for the one or more SD basis vectors and/or the one or more FD basis vectors, the terminal selects the same DD basis vector or TD basis vector, and the terminal sends the basis vector indication information of $X + \left\lceil \log_2^{O_3} \right\rceil$ bits; the basis vector indication information is used to indicate the DD basis vector or TD basis vector selected by the terminal.

In a case that X is indicated by a combination coefficient, $X = \left\lceil \log_2^{C_{N_4}^{S}} \right\rceil$ in a case that X is indicated by a bitmap, $X = N_4$.

The first DD basis vector or the first TD basis vector is always selected through a phase offset, then in a case that X is indicated by a combination coefficient, $X = \left\lceil \log_2^{C_{N_4 - 1}^{S-1}} \right\rceil$, in a case that X is indicated by a bitmap, $X = N_4 - 1$.

Among them, $O_3 \geq 1$, $O_3$ is the sampling factor of the DD basis vector or the sampling factor of the TD basis vector; $N_4$ is a number of the lengths of the one or more DD basis vectors or of the lengths of the one or more TD basis vectors, S is a number of the one or more DD basis vectors or of the one or more TD basis vectors selected by the terminal, $C_{N_4}^{S}$ indicates a combination number calculation by selecting S from $N_4$, $C_{N_4 - 1}^{S-1}$ indicates a combination number calculation by selecting S-1 from $N_4$ - 1, and $\lceil x \rceil$ indicates rounding up of x.

Exemplarily, for the one or more SD basis vectors and/or the one or more FD basis vectors, the terminal selects the same DD basis vector or TD basis vector.

A number of the lengths of the DD basis vectors or of the lengths of the TD basis vectors is $N_4 = 4$, the number of DD basis vectors or the number of TD basis vectors selected by the terminal is S=2, the number of SD basis vectors selected by the terminal is L=2, the number of FD basis vectors selected by the terminal is M=4, the number of DD-FD basis vector pairs or the number of TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical direction $O_1$ and $O_2$ are both 4, the oversampling factor of the DD basis vector or the TD basis vector $O_3$ is 1, the oversampling factor of the FD basis vector $O_4$ is 1, that is oversampling is not implemented. The number of antenna ports in the horizontal direction in a single polarization direction $N_1 = 2$, and the number of antenna ports in the vertical direction in a single polarization direction $N_2 = 4$.

The following description is based on that a terminal reports the basis vector indication information to a network device, in which the basis vector indication information indicates the DD basis vector or the TD basis vector selected by the terminal, the basis vector indication information is used to indicate the precoding of a certain data transmission layer, the DD basis vector or the TD basis vector selected by the terminal, or the DD-FD basis vector pair, or the TD-FD basis vector pair.

The one or more SD basis vectors and the one or more FD basis vectors correspond to the same DD basis vector or TD basis vector. The terminal only needs to send the basis vector indication information of $\left\lceil \log_2^{C_{N_4}^{S}} \right\rceil + \left\lceil \log_2^{O_3} \right\rceil = 3$ bits to the network device to indicate the selected DD basis vector or TD basis vector.

Optionally, the terminal always select the first DD basis vector or TD basis vector by the phase offset, and the terminal sends the basis vector indication information of $\left\lceil \log_2^{C_{N_4-1}^{S-1}} \right\rceil + \left\lceil \log_2^{O_3} \right\rceil = 2$ bits to the network device to indicate the selected DD basis vector or TD basis vector.

It should be noted that in an embodiment of the present disclosure, S41 may be implemented alone or in combination with any other step in the embodiments of the present disclosure, for example, in combination with S21 and/or S31 in the embodiments of the present disclosure, and the embodiments of the present disclosure are not limited to this.

FIG. 5 is a flowchart of another method for reporting the selection indication of the basis vector provided in an embodiment of the present disclosure.

As shown in FIG. 5, the method is executed by the terminal, and the method may include but is not limited to the following steps.

S51: basis vector indication information of $L \times \left( \left\lceil \log_2^{C_{N_4}^{S}} \right\rceil + \left\lceil \log_2^{O_3} \right\rceil \right)$ bits or $L \times \left( N_4 + \left\lceil \log_2^{O_3} \right\rceil \right)$ bits for calculating the precoding is sent to the network device, in which the basis vector indication information is used to indicate the DD basis vector or the TD basis vector selected by the terminal.

> For different SD basis vectors, the terminal selects the same DD basis vector; or
> for different SD basis vectors, the terminal selects different DD basis vectors; or
> for different FD basis vectors, the terminal selects the same DD basis vector; or
> for different FD basis vectors, the terminal selects different DD basis vectors; or
> for different SD basis vectors, the terminal selects the same TD basis vector; or
> for different SD basis vectors, the terminal selects different TD basis vectors; or
> for different FD basis vectors, the terminal selects the same TD basis vector; or
> for different FD basis vectors, the terminal selects different TD basis vectors.

In an embodiment of the present disclosure, the basis vector indication information is used to indicate the DD basis vector selected by the terminal, in which for different SD basis vectors, the terminal selects the same DD basis vector.

In an embodiment of the present disclosure, the basis vector indication information is used to indicate the DD basis vector selected by the terminal, in which for different SD basis vectors, the terminal selects different DD basis vectors.

In an embodiment of the present disclosure, the basis vector indication information is used to indicate the DD basis vector selected by the terminal, in which for different FD basis vectors, the terminal selects the same DD basis vector.

In an embodiment of the present disclosure, the basis vector indication information is used to indicate the DD basis vector selected by the terminal, in which for different FD basis vectors, the terminal selects different DD basis vectors.

In an embodiment of the present disclosure, the basis vector indication information is used to indicate the TD basis vector selected by the terminal, in which for different SD basis vectors, the terminal selects the same TD basis vector.

In an embodiment of the present disclosure, the basis vector indication information is used to indicate the TD basis vector selected by the terminal, in which for different SD basis vectors, the terminal selects different TD basis vectors.

In an embodiment of the present disclosure, the basis vector indication information is used to indicate the TD basis vector selected by the terminal, in which for different FD basis vectors, the terminal selects the same TD basis vector.

In an embodiment of the present disclosure, the basis vector indication information is used to indicate the TD basis vector selected by the terminal, in which for different FD basis vectors, the terminal selects different TD basis vectors.

> For the same SD basis vectors in two polarization directions, the terminal selects the same DD basis vector; or
> for the same SD basis vectors in the two polarization directions, the terminal selects the same TD basis vector.

In an embodiment of the present disclosure, the basis vector indication information is used to indicate the DD basis vector selected by the terminal, in which for the same SD basis vectors in two polarization directions, the terminal selects the same DD basis vector.

In an embodiment of the present disclosure, the basis vector indication information is used to indicate the TD basis vector selected by the terminal, in which for the same SD basis vectors in two polarization directions, the terminal selects the same TD basis vector.

$O_3$ is a sampling factor of the one or more DD basis vector or a sampling factor of the one or more TD basis vector, L is the number of the one or more SD basis vectors selected by the terminal, $N_4$ is a number of the lengths of the one or more DD basis vectors or of the lengths of the one or more TD basis vectors, and S is a number of the one or more DD basis vectors or of the one or more TD basis vectors selected by the terminal.

In the embodiments of the present disclosure, for different SD basis vectors or different FD basis vectors, the terminal selects the same DD basis vector, or, for different SD basis vectors or different FD basis vectors, the terminal selects the same TD basis vector, or, for different SD basis vectors or different FD basis vectors, the terminal selects different DD basis vectors, or, for different SD basis vectors or different FD basis vectors, the terminal selects different TD basis vectors.

In an embodiment of the present disclosure, for the same SD basis vectors in two polarization directions, the terminal selects the same DD basis vector; or for the same SD basis vectors in two polarization directions, the terminal selects the same TD basis vector.

Based on this, the terminal sends the basis vector indication information of L $\times \left( \left\lceil log_2^{C_{N_4}^S} \right\rceil + \left\lceil log_2^{O_3} \right\rceil \right)$ bits to the network device, in which the basis vector indication information is used to indicate the DD basis vector or TD basis vector selected by the terminal.

Alternatively, the terminal sends the basis vector indication information of L $\times \left( N_4 + \left\lceil log_2^{O_3} \right\rceil \right)$ bits to the network device, in which the basis vector indication information is used to indicate the DD basis vector or TD basis vector selected by the terminal.

It should be noted that in the embodiments of the present disclosure, S51 may be implemented alone or in combination with any other step in the embodiments of the present disclosure, for example, in combination with S21 and/or S31 and/or S41 in the embodiments of the present disclosure, and the embodiments of the present disclosure are not limited to this.

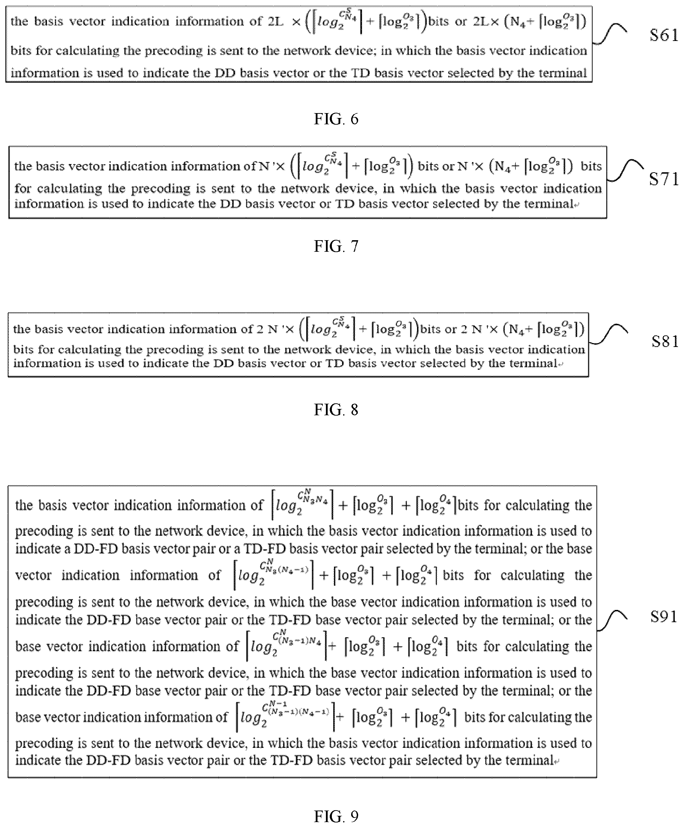

FIG. 6 is a flowchart of another method for reporting the selection indication of the basis vectors provided in an embodiment of the present disclosure.

As shown in FIG. 6, the method is executed by a terminal, and the method may include but is not limited to the following steps.

S61: the basis vector indication information of $2L \times \left( \left\lceil log_2^{C_{N_4}^S} \right\rceil + \left\lceil log_2^{O_3} \right\rceil \right)$ bits or $2L \times \left( N_4 + \left\lceil log_2^{O_3} \right\rceil \right)$ bits for calculating the precoding is sent to the network device, in which the basis vector indication information is used to indicate the DD basis vector or the TD basis vector selected by the terminal.

For different SD basis vectors, the terminal selects the same DD basis vector; or
for different SD basis vectors, the terminal selects different DD basis vectors; or
for different FD basis vectors, the terminal selects the same DD basis vector; or
for different FD basis vectors, the terminal selects different DD basis vectors; or
for different SD basis vectors, the terminal selects the same TD basis vector; or
for different SD basis vectors, the terminal selects different TD basis vectors; or
for different FD basis vectors, the terminal selects the same TD basis vector; or
for different FD basis vectors, the terminal selects different TD basis vectors.

In an embodiment of the present disclosure, the basis vector indication information is used to indicate the DD basis vector selected by the terminal, in which for different SD basis vectors, the terminal selects the same DD basis vector.

In an embodiment of the present disclosure, the basis vector indication information is used to indicate the DD basis vector selected by the terminal, in which for different SD basis vectors, the terminal selects different DD basis vectors.

In an embodiment of the present disclosure, the basis vector indication information is used to indicate the DD basis vector selected by the terminal, in which for different FD basis vectors, the terminal selects the same DD basis vector.

In an embodiment of the present disclosure, the basis vector indication information is used to indicate the DD basis vector selected by the terminal, in which for different FD basis vectors, the terminal selects different DD basis vectors.

In an embodiment of the present disclosure, the basis vector indication information is used to indicate the TD basis vector selected by the terminal, in which for different SD basis vectors, the terminal selects the same TD basis vector.

In an embodiment of the present disclosure, the basis vector indication information is used to indicate the TD basis vector selected by the terminal, in which for different SD basis vectors, the terminal selects different TD basis vectors.

In an embodiment of the present disclosure, the basis vector indication information is used to indicate the TD basis vector selected by the terminal, in which for different FD basis vectors, the terminal selects the same TD basis vector.

In an embodiment of the present disclosure, the basis vector indication information is used to indicate the TD basis vector selected by the terminal, in which for different FD basis vectors, the terminal selects different TD basis vectors.

For different SD basis vectors in each polarization direction, the terminal selects different DD basis vectors; or for different SD basis vectors in each polarization direction, the terminal selects different TD basis vectors; or for different SD basis vectors in each polarization direction, the terminal selects the same DD basis vector; or for different SD basis vectors in each polarization direction, the terminal selects the same TD basis vectors; or for different SD basis vectors in two polarization directions, the terminal selects the same DD basis vector; or for different SD basis vectors in two polarization directions, the terminal selects different DD basis vectors; or for different SD basis vectors in two polarization directions, the terminal selects the same TD basis vector; or for different SD basis vectors in two polarization directions, the terminal selects different TD basis vectors.

In an embodiment of the present disclosure, the basis vector indication information is used to indicate the DD basis vector selected by the terminal, in which for different SD basis vectors in each polarization direction, the terminal selects different DD basis vectors.

In an embodiment of the present disclosure, the basis vector indication information is used to indicate the TD basis vector selected by the terminal, in which for different SD basis vectors in each polarization direction, the terminal selects different TD basis vectors.

In an embodiment of the present disclosure, the basis vector indication information is used to indicate the DD basis vector selected by the terminal, in which for different SD basis vectors in each polarization direction, the terminal selects the same DD basis vector.

In an embodiment of the present disclosure, the basis vector indication information is used to indicate the TD basis vector selected by the terminal, for which for different SD basis vectors in each polarization direction, and the terminals have the same or different TD basis vectors.

In an embodiment of the present disclosure, the basis vector indication information is used to indicate the DD basis vector selected by the terminal, in which for different SD basis vectors in two polarization directions, the terminal selects the same DD basis vector.

In an embodiment of the present disclosure, the basis vector indication information is used to indicate the DD basis vector selected by the terminal, in which for different SD basis vectors in two polarization directions, the terminal selects different DD basis vectors.

In an embodiment of the present disclosure, the basis vector indication information is used to indicate the TD basis vector selected by the terminal, in which for different SD basis vectors in two polarization directions, the terminal selects the same TD basis vector.

In an embodiment of the present disclosure, the basis vector indication information is used to indicate the TD basis vector selected by the terminal, in which for different SD basis vectors in two polarization directions, the terminal selects different TD basis vectors.

$O_3$ is a sampling factor of the one or more DD basis vector or a sampling factor of the one or more TD basis vector, L is the number of the one or more SD basis vectors selected by the terminal, $N_4$ is a number of the lengths of the DD basis vectors or of the TD basis vectors, and S is a number of the one or more DD basis vectors or of the one or more TD basis vectors selected by the terminal.

In an embodiment of the present disclosure, for different SD basis vectors in each polarization direction, the terminal selects the same or different DD basis vectors; or for different SD basis vectors in two polarization directions, the terminal selects the same or different TD basis vectors.

In an embodiment of the present disclosure, for different SD basis vectors in two polarization directions, the terminal selects the same or different DD basis vectors; or for different SD basis vectors in two polarization directions, the terminal selects the same or different TD basis vectors.

Based on this, the terminal sends the basis vector indication information of 2L $\times \left( \left\lceil log_2^{c_{N_4}^S} \right\rceil + \left\lceil log_2^{O_3} \right\rceil \right)$ bits to the network device, in which the basis vector indication information is used to indicate the DD basis vector or TD basis vector selected by the terminal.

Alternatively, the terminal sends the basis vector indication information of 2L $\times \left( N_4 + \left\lceil log_2^{O_3} \right\rceil \right)$ bits to the network device, in which the basis vector indication information is used to indicate the DD basis vector or TD basis vector selected by the terminal.

It should be noted that in the embodiments of the present disclosure, S61 may be implemented alone or in combination with any other step in the embodiments of the present disclosure, for example, in combination with S21 and/or S31 and/or S41 and/or S51 in the embodiments of the present disclosure, and the embodiments of the present disclosure are not limited to this.

FIG. 7 is a flowchart of another method for reporting the selection indication of the basis vectors provided in an embodiment of the present disclosure.

As shown in FIG. 7, the method is executed by a terminal, and the method may include but is not limited to the following steps.

S71: the basis vector indication information of $N' \times \left( \left\lceil log_2^{c_{N_4}^S} \right\rceil + \left\lceil \log_2^{O_3} \right\rceil \right)$ bits or $N' \times \left( N_4 + \left\lceil \log_2^{O_3} \right\rceil \right)$ for calculating the precoding is sent to the network device, in which the basis vector indication information is used to indicate the DD basis vector or TD basis vector selected by the terminal.

> For different SD basis vectors and different FD basis vectors, the terminal selects the same DD basis vector; or
> for different SD basis vectors and different FD basis vectors, the terminal selects different DD basis vectors; or
> for different SD basis vectors and different FD basis vectors, the terminal selects the same TD basis vector; or
> for different SD basis vectors and different FD basis vectors, the terminal selects different TD basis vectors.

In an embodiment of the present disclosure, the basis vector indication information is used to indicate the DD basis vector selected by the terminal, in which for different SD basis vectors and different FD basis vectors, the terminal selects the same DD basis vector.

In an embodiment of the present disclosure, the basis vector indication information is used to indicate the DD basis vector selected by the terminal, in which for different SD basis vectors and different FD basis vectors, the terminal selects different DD basis vectors.

In an embodiment of the present disclosure, the basis vector indication information is used to indicate the TD basis vector selected by the terminal, in which for different SD basis vectors and different FD basis vectors, the terminal selects the same TD basis vector.

In an embodiment of the present disclosure, the basis vector indication information is used to indicate the TD basis vector selected by the terminal, in which for different SD basis vectors and different FD basis vectors, the terminal selects different TD basis vectors.

In some embodiments, for same SD-FD basis vector pairs in two polarization directions, the terminal selects the same DD basis vector; or

> for same SD-FD basis vector pairs in two polarization directions, the terminal selects the same TD basis vector; or
> for different SD-FD basis vector pairs in each polarization direction, the terminal selects the same DD basis vector; or
> for different SD-FD basis vector pairs in each polarization direction, the terminal selects different DD basis vectors; or
> for different SD-FD basis vector pairs in each polarization direction, the terminal selects the same TD basis vector; or
> for different SD-FD basis vector pairs in each polarization direction, the terminal selects the same TD basis vector.

In an embodiment of the present disclosure, the basis vector indication information is used to indicate the DD basis vector selected by the terminal, in which for the same SD-FD basis vector pairs in two polarization directions, the terminal selects the same DD basis vector.

In an embodiment of the present disclosure, the basis vector indication information is used to indicate the TD basis vector selected by the terminal, in which for the same SD-FD basis vector pairs in two polarization directions, the terminal selects the same TD basis vector.

In an embodiment of the present disclosure, the basis vector indication information is used to indicate the DD basis vector selected by the terminal, in which for different SD-FD basis vector pairs in each different polarization direction, the terminal selects the same DD basis vector.

In an embodiment of the present disclosure, the basis vector indication information is used to indicate the DD basis vector selected by the terminal, in which for different SD-FD basis vector pairs in each different polarization direction, the terminal selects different DD basis vectors.

In an embodiment of the present disclosure, the basis vector indication information is used to indicate the TD basis vector selected by the terminal, in which for different SD-FD basis vector pairs and FD in each polarization direction, the terminal selects the same TD basis vector.

In an embodiment of the present disclosure, the basis vector indication information is used to indicate the TD basis vector selected by the terminal, in which for different pair of SD-FD basis vector pairs in each different polarization direction, the terminal selects different TD basis vectors.

$O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of one or more TD basis vectors selected by the terminal.

In an embodiment of the present disclosure, for different SD basis vectors and different FD basis vectors, the terminal selects the same or different TD basis vectors, or the terminal selects the same or different DD basis vectors.

For different SD-FD basis vector pairs in each polarization direction, the terminal selects the same or different DD basis vectors, or for different SD-FD basis vector pairs in each polarization direction, the terminal selects the same or different TD basis vectors, or for the same SD-FD basis vector pairs in two polarization directions, the terminal selects the same DD basis vector or the same TD basis vector.

Based on this, the terminal sends the basis vector indication information of $N' \times \left( \left\lceil log_2^{C_{N_4}^S} \right\rceil + \left\lceil log_2^{O_3} \right\rceil \right)$ bits to the network device, in which the basis vector indication information is used to indicate the DD basis vector or the TD basis vector selected by the terminal.

Alternatively, the terminal sends the basis vector indication information of $N' \times \left( N_4 + \left\lceil log_2^{O_3} \right\rceil \right)$ bits to the network device, in which the basis vector indication information is used to indicate the DD basis vector or the TD basis vector selected by the terminal.

It should be noted that in the embodiments of the present disclosure, S71 may be implemented alone or in combination with any other step in the embodiments of the present disclosure, for example, in combination with S21 and/or S31 and/or S41 and/or S51 and/or S61 in the embodiments of the present disclosure, and the embodiments of the present disclosure are not limited to this.

FIG. 8 is a flowchart of another method for reporting the selection indication of the basis vectors provided in an embodiment of the present disclosure.

As shown in FIG. 8, the method is executed by the terminal, and the method may include but is not limited to the following steps.

S81: the basis vector indication information of 2 $N' \times \left( \left\lceil log_2^{C_{N_4}^S} \right\rceil + \left\lceil log_2^{O_3} \right\rceil \right)$ bits or $2 N' \times \left( N_4 + \left\lceil log_2^{O_3} \right\rceil \right)$ bits for calculating the precoding is sent to the network device, in which the basis vector indication information is used to indicate the DD basis vector or TD basis vector selected by the terminal.

> For different SD basis vectors and different FD basis vectors, the terminal selects the same DD basis vector; or
> for different SD basis vectors and different FD basis vectors, the terminal selects different DD basis vectors; or
> for different SD basis vectors and different FD basis vectors, the terminal selects the same TD basis vector; or
> for different SD basis vectors and different FD basis vectors, the terminal selects different TD basis vectors.

In an embodiment of the present disclosure, the basis vector indication information is used to indicate the DD basis vector selected by the terminal, for different SD basis vectors and different FD basis vectors, the terminal selects the same DD basis vector.

In an embodiment of the present disclosure, the basis vector indication information is used to indicate the DD basis vector selected by the terminal, for different SD basis vectors and different FD basis vectors, the terminal selects different DD basis vectors.

In an embodiment of the present disclosure, the basis vector indication information is used to indicate the TD basis vector selected by the terminal, for different SD basis vectors and different FD basis vectors, the terminal selects the same TD basis vector.

In an embodiment of the present disclosure, the basis vector indication information is used to indicate the TD basis vector selected by the terminal, for different SD basis vectors and different FD basis vectors, the terminal selects different TD basis vectors.

In some embodiments, for different SD-FD basis vector pairs in each polarization direction, the terminal selects different DD basis vectors; or

> for different SD-FD basis vector pairs in each polarization direction, the terminal selects different TD basis vectors; or
> for different SD-FD basis vector pairs in two polarization directions, the terminal selects the same DD basis vector; or
> for different SD-FD basis vector pairs in two polarization directions, the terminal selects different DD basis vectors; or
> for different SD-FD basis vector pairs in two polarization directions, the terminal selects the same TD basis vector; or
> for different SD-FD basis vector pairs in two polarization directions, the terminal selects different TD basis vectors.

In an embodiment of the present disclosure, the basis vector indication information is used to indicate the DD basis vector selected by the terminal, for different SD-FD basis vector pairs in each polarization direction, the terminal selects different DD basis vectors.

In an embodiment of the present disclosure, the basis vector indication information is used to indicate the TD basis vector selected by the terminal, for different SD-FD basis vector pairs in each polarization direction, the terminal selects different TD basis vectors.

In an embodiment of the present disclosure, the basis vector indication information is used to indicate the DD basis vector selected by the terminal, for different SD-FD basis vector pairs in two polarization directions, the terminal selects the same DD basis vector.

In an embodiment of the present disclosure, the basis vector indication information is used to indicate the DD basis vector selected by the terminal, for different SD-FD basis vector pairs in two polarization directions, the terminal selects different DD basis vectors.

In an embodiment of the present disclosure, the basis vector indication information is used to indicate the TD basis vector selected by the terminal, or different SD-FD basis vector pairs in two polarization directions, the terminal selects the same TD basis vector.

In an embodiment of the present disclosure, the basis vector indication information is used to indicate the TD basis vector selected by the terminal, for different SD-FD basis vector pairs in two polarization directions, the terminal selects different TD basis vectors.

$O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of the one or more TD basis vectors selected by the terminal.

In an embodiment of the present disclosure, for different SD basis vectors and different FD basis vectors, the terminal selects the same or different TD basis vectors, or the terminal selects the same or different DD basis vectors.

For different SD-FD basis vector pairs in each polarization direction, the terminal selects different DD basis vectors or different TD basis vectors, or for different SD-FD basis vector pairs in two polarization directions, the terminal selects the same or different DD basis vectors, or for different SD-FD basis vector pairs in two polarization directions, the terminal selects the same or different TD basis vectors.

Based on this, the terminal sends the basis vector indication information of $2\text{N'} \times \left( \left\lceil log_2^{C_{N_4}^S} \right\rceil + \left\lceil log_2^{O_3} \right\rceil \right)$ bits for calculating the precoding to the network device, in which the basis vector indication information is used to indicate the DD basis vector or TD basis vector selected by the terminal.

Alternatively, the terminal sends the basis vector indication information of $2\text{N'} \times \left( N_4 + \left\lceil log_2^{O_3} \right\rceil \right)$ bits for calculating the precoding to the network device, in which the basis vector indication information is used to indicate the DD basis vector or the TD basis vector selected by the terminal.

It should be noted that in the embodiments of the present disclosure, S81 may be implemented alone or in combination with any other step in the embodiments of the present disclosure, for example, in combination with S21 and/or S31 and/or S41 and/or S51 and/or S61 and/or S71 in the embodiments of the present disclosure, and the embodiments of the present disclosure are not limited to this.

FIG. 9 is a flowchart of another method for reporting the selection indication of the basis vectors provided in an embodiment of the present disclosure.

As shown in FIG. 9, the method is executed by the terminal, and the method may include but is not limited to the following steps.

S91: the basis vector indication information of $\left\lceil log_2^{C_{N_3 N_4}^N} \right\rceil + \left\lceil log_2^{O_3} \right\rceil + \left\lceil log_2^{O_4} \right\rceil$ bits for calculating the precoding is sent to the network device, in which the basis vector indication information is used to indicate a DD-FD basis vector pair or a TD-FD basis vector pair selected by the terminal; or the base vector indication information of

$\left\lceil log_2^{C_{N_3(N_4-1)}^N} \right\rceil + \left\lceil log_2^{O_3} \right\rceil + \left\lceil log_2^{O_4} \right\rceil$ bits for calculating the precoding is sent to the network device, in which the base vector indication information is used to indicate the DD-FD base vector pair or the TD-FD base vector pair selected by the terminal; or the base vector indication information of $\left\lceil log_2^{C_{(N_3-1)N_4}^N} \right\rceil + \left\lceil log_2^{O_3} \right\rceil + \left\lceil log_2^{O_4} \right\rceil$ bits for calculating the precoding is sent to the network device, in which the base vector indication information is used to indicate the DD-FD base vector pair or the TD-FD base vector pair selected by the terminal; or the base vector indication information of $\left\lceil log_2^{C_{(N_3-1)(N_4-1)}^{N-1}} \right\rceil + \left\lceil log_2^{O_3} \right\rceil + \left\lceil log_2^{O_4} \right\rceil$ bits for calculating the precoding is sent to the network device, in which the basis vector indication information is used to indicate the DD-FD basis vector pair or the TD-FD basis vector pair selected by the terminal.

For the one or more SD basis vectors, the terminal selects the same DD-FD basis vector pair; or
for the one or more SD basis vectors, the terminal selects the same TD-FD basis vector pair.

In an embodiment of the present disclosure, the basis vector indication information is used to indicate the DD-FD basis vector pair selected by the terminal, in which for the one or more SD basis vectors, the terminal selects the same DD-FD basis vector pair.

In an embodiment of the present disclosure, the basis vector indication information is used to indicate the TD-FD basis vector pair selected by the terminal, in which for the one or more SD basis vectors, the terminal selects the same TD-FD basis vector pair.

Among them, $N_3$ is a number of frequency domain PMI subbands, N is the number of the one or more DD-FD basis vector pairs or the number of the one or more TD-FD basis vector pairs, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, the basis vector indication information is used to indicate the DD-FD basis vector pair selected by the terminal, for the one or more SD basis vectors, the terminal selects the same DD-FD basis vector pair, or for the one or more SD basis vectors, the terminal selects the same TD-FD basis vector pair.

Based on this, the terminal sends the basis vector indication information of

$$\left\lceil log_2^{C_{N_3 N_4}^N} \right\rceil + \left\lceil \log_2^{O_3} \right\rceil + \left\lceil \log_2^{O_4} \right\rceil$$

bits for calculating the precoding to the network device, in which the basis vector indication information is used to indicate the DD-FD basis vector pair or the TD-FD basis vector pair selected by the terminal.

Alternatively, the terminal sends the basis vector indication information of

$$\left\lceil log_2^{C_{N_3(N_4-1)}^N} \right\rceil + \left\lceil \log_2^{O_3} \right\rceil + \left\lceil \log_2^{O_4} \right\rceil$$

bits for calculating the precoding to the network device, in which the basis vector indication information is used to indicate the DD-FD basis vector pair or the TD-FD basis vector pair selected by the terminal.

Alternatively, the terminal sends the basis vector indication information of

$$\left\lceil log_2^{C_{(N_3-1)N_4}^N} \right\rceil + \left\lceil \log_2^{O_3} \right\rceil + \left\lceil \log_2^{O_4} \right\rceil$$

bits for calculating the precoding to the network device, in which the basis vector indication information is used to indicate the DD-FD basis vector pair or the TD-FD basis vector pair selected by the terminal.

Alternatively, the terminal sends the basis vector indication information of

$$\left\lceil log_2^{C_{(N_3-1)(N_4-1)}^{N-1}} \right\rceil + \left\lceil \log_2^{O_3} \right\rceil + \left\lceil \log_2^{O_4} \right\rceil$$

bits for calculating the precoding to the network device, in which the basis vector indication information is used to indicate the DD-FD basis vector pair or the TD-FD basis vector pair selected by the terminal.

It should be noted that in the embodiments of the present disclosure, S91 may be implemented alone or in combination with any other step in the embodiments of the present disclosure, for example, in combination with S21 and/or S31 and/or S41 and/or S51 and/or S61 and/or S71 and/or S81 in the embodiments of the present disclosure, and the embodiments of the present disclosure are not limited to this.

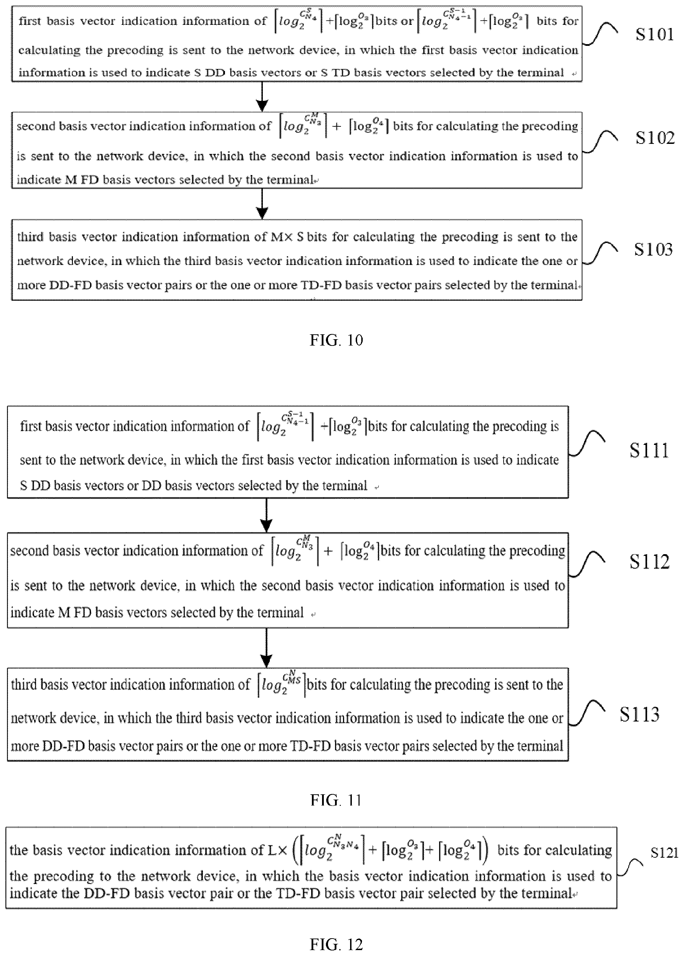

FIG. 10 is a flowchart of another method for reporting the selection indication of the basis vectors provided in an embodiment of the present disclosure.

As shown in FIG. 10, the method is executed by the terminal, and the method may include but is not limited to the following steps.

S101: first basis vector indication information of $\left\lceil log_2^{C_{N_4}^S} \right\rceil + \left\lceil \log_2^{O_3} \right\rceil$ bits or $\left\lceil log_2^{C_{N_4-1}^{S-1}} \right\rceil + \left\lceil \log_2^{O_3} \right\rceil$ bits for calculating the precoding is sent to the network device, in which the first basis vector indication information is used to indicate S DD basis vectors or S TD basis vectors selected by the terminal and S is a positive integer.

S102: second basis vector indication information of $\left\lceil log_2^{C_{N_3}^M} \right\rceil + \left\lceil log_2^{O_4} \right\rceil$ bits for calculating the precoding is sent to the network device, in which the second basis vector indication information is used to indicate M FD basis vectors selected by the terminal and M is a positive integer.

S103: third basis vector indication information of M× S bits for calculating the precoding is sent to the network device, in which the third basis vector indication information is used to indicate the one or more DD-FD basis vector pairs or the one or more TD-FD basis vector pairs selected by the terminal.

In some embodiments, for the one or more SD basis vectors, the terminal selects the same DD-FD basis vector pair; or

for the one or more SD basis vectors, the terminal selects the same TD-FD basis vector pair.

In an embodiment of the present disclosure, the basis vector indication information is used to indicate the DD-FD basis vector pair selected by the terminal, in which for the one or more SD basis vectors, the terminal selects the same DD-FD basis vector pair.

In an embodiment of the present disclosure, the basis vector indication information is used to indicate the TD-FD basis vector pair selected by the terminal, in which for the one or more SD basis vectors, the terminal selects the same TD-FD basis vector pair.

Among them, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, the basis vector indication information is used to indicate the basis vector pair selected by the terminal, the basis vector pair includes the one or more DD-FD basis vector pairs, in which, for the one or more SD basis vectors, the terminal selects the same DD-FD basis vector pair, or for the one or more SD basis vectors, the terminal selects the same TD-FD basis vector pair.

Based on this, the terminal sends the first basis vector indication information of $\left\lceil log_2^{C_{N_4}^S} \right\rceil + \left\lceil log_2^{O_3} \right\rceil$ bits or

$\left\lceil log_2^{C_{N_4-1}^{S-1}} \right\rceil + \left\lceil log_2^{O_3} \right\rceil$ bits for calculating of the precoding to the network device, in which the first basis vector indication information is used to indicate S DD basis vectors or S TD basis vectors selected by the terminal, and S is a positive integer.

Afterwards, the terminal sends the second basis vector indication information of $\left\lceil log_2^{C_{N_3}^M} \right\rceil + \left\lceil log_2^{O_4} \right\rceil$ bits for calculating of the precoding to the network device, in which the second basis vector indication information is used to indicate the M FD basis vectors selected by the terminal, and M is a positive integer.

Afterwards, the terminal sends the third basis vector indication information of M×S bits for calculating of the precoding to the network device, in which the third basis vector indication information is used to indicate the DD-FD basis vector pair or the TD-FD basis vector pair selected by the terminal.

It should be noted that in the embodiments of the present disclosure, S101 to S103 may be implemented separately or in combination with any other steps in the embodiments of the present disclosure, for example, in combination with S21 and/or S31 and/or S41 and/or S51 and/or S61 and/or S71 and/or S81 and/or S91 in the embodiments of the present disclosure, and the embodiments of the present disclosure are not limited to this.

FIG. 11 is a flowchart of another method for reporting the selection indication of the basis vectors provided in an embodiment of the present disclosure.

As shown in FIG. 11, the method is executed by the terminal, and the method may include but is not limited to the following steps.

S111: first basis vector indication information of $\left\lceil log_2^{C_{N_4-1}^{S-1}} \right\rceil + \left\lceil log_2^{O_3} \right\rceil$ bits for calculating the precoding is sent to the network device, in which the first basis vector indication information is used to indicate S DD basis vectors or DD basis vectors selected by the terminal and S is a positive integer.

S112: second basis vector indication information of $\left\lceil log_2^{C_{N_3}^M} \right\rceil + \left\lceil log_2^{O_4} \right\rceil$ bits for calculating the precoding is sent to the network device, in which the second basis vector indication information is used to indicate M FD basis vectors selected by the terminal and M is a positive integer.

S113: third basis vector indication information of $\left\lceil log_2^{C_{MS}^N} \right\rceil$ bits for calculating the precoding is sent to the network device, in which the third basis vector indication information is used to indicate the one or more DD-FD basis vector pairs or the one or more TD-FD basis vector pairs selected by the terminal.

In some embodiments, for the one or more SD basis vectors, the terminal selects the same DD-FD basis vector pair; or

for the one or more SD basis vectors, the terminal selects the same TD-FD basis vector pair.

In an embodiment of the present disclosure, the basis vector indication information is used to indicate the DD-FD basis vector pair selected by the terminal, in which for the one or more SD basis vectors, the terminal selects the same DD-FD basis vector pair.

In an embodiment of the present disclosure, the basis vector indication information is used to indicate the TD-FD basis vector pair selected by the terminal, in which for the one or more SD basis vectors, the terminal selects the same TD-FD basis vector pair.

$N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, $O_4$ is an oversampling factor of the one or more FD basis vectors, and N is the number of the one or more the DD-FD basis vector pairs or the number of the one or more the TD-FD basis vector pairs.

In an embodiment of the present disclosure, the basis vector indication information is used to indicate the basis vector pair selected by the terminal, the basis vector pair includes the one or more DD-FD basis vector pairs, in which, for the one or more SD basis vectors, the terminal selects the same DD-FD basis vector pair, or for the one or more SD basis vectors, the terminal selects the same TD-FD basis vector pair.

Based on this, the terminal sends the first basis vector indication information of $\left\lceil log_2^{C_{N_4-1}^{S-1}} \right\rceil + \left\lceil log_2^{O_3} \right\rceil$ bits for calculating the precoding to the network device, in which the first basis vector indication information is used to indicate S DD basis vectors or DD basis vectors selected by the terminal, and S is a positive integer.

Afterwards, the terminal sends the second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate the M FD basis vectors selected by the terminal, and M is a positive integer.

Afterwards, the terminal sends the third basis vector indication information of $\left\lceil log_2^{C_{MS}^N} \right\rceil$ bits for calculating the precoding to the network device, in which the third basis vector indication information is used to indicate the DD-FD basis vector pair or the TD-FD basis vector pair selected by the terminal.

It should be noted that in the embodiments of the present disclosure, S111 to S113 may be implemented separately or in combination with any other steps in the embodiments of the present disclosure, for example, in combination with S21 and/or S31 and/or S41 and/or S51 and/or S61 and/or S71 and/or S81 and/or S91 and/or S101 to S103 in the embodiments of the present disclosure, and the embodiments of the present disclosure are not limited to this.

FIG. 12 is a flowchart of another method for reporting the selection indication of the basis vectors provided in an embodiment of the present disclosure.

As shown in FIG. 12, the method is executed by the terminal, and the method may include but is not limited to the following steps.

S121: the basis vector indication information of $L \times \left( \left\lceil log_2^{C_{N_3N_4}^N} \right\rceil + \left\lceil log_2^{O_3} \right\rceil + \left\lceil log_2^{O_4} \right\rceil \right)$ bits for calculating the precoding to the network device, in which the basis vector indication information is used to indicate the DD-FD basis vector pair or the TD-FD basis vector pair selected by the terminal.

For the same SD basis vector, the terminal selects the same DD-FD basis vector pair; or
for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or

for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

In an embodiment of the present disclosure, the basis vector indication information is used to indicate the DD-FD basis vector pair selected by the terminal, in which for the same SD basis vector, the terminal selects the same DD-FD basis vector pair.

In an embodiment of the present disclosure, the basis vector indication information is used to indicate the DD-FD basis vector pair selected by the terminal, in which for the same SD basis vector, the terminal selects different DD-FD basis vector pairs.

In an embodiment of the present disclosure, the basis vector indication information is used to indicate the DD-FD basis vector pair selected by the terminal, in which for the one or more SD basis vectors, the terminal selects the same DD-FD basis vector pair.

In an embodiment of the present disclosure, the basis vector indication information is used to indicate the DD-FD basis vector pair selected by the terminal, in which for the one or more SD basis vectors, the terminal selects different DD-FD basis vector pairs.

In an embodiment of the present disclosure, the basis vector indication information is used to indicate the TD-FD basis vector pair selected by the terminal, in which for the one or more SD basis vectors, the terminal selects the same TD-FD basis vector pair.

In an embodiment of the present disclosure, the basis vector indication information is used to indicate the TD-FD basis vector pair selected by the terminal, in which for the one or more SD basis vector, the terminal selects different TD-FD basis vector pairs.

In an embodiment of the present disclosure, the basis vector indication information is used to indicate the TD-FD basis vector pair selected by the terminal, in which for the one or more SD basis vectors, the terminal selects the same TD-FD basis vector pair.

In an embodiment of the present disclosure, the basis vector indication information is used to indicate the TD-FD basis vector pair selected by the terminal, in which for the one or more SD basis vectors, the terminal selects different TD-FD basis vector pairs.

In some embodiments, for different SD basis vectors in each polarization direction, the terminal selects the same DD-FD basis vector pair; or

for different SD basis vectors in each polarization direction, the terminal selects the same TD-FD basis vector pair; or
for different SD basis vectors in each polarization direction, the terminal selects different DD-FD basis vector pairs; or
for different SD basis vectors in each polarization direction, the terminal selects different TD-FD basis vector pairs; or
for different SD basis vectors in each polarization direction, and same SD basis vectors in two polarization directions, the terminal selects the same DD-FD basis vector pair; or
for different SD basis vectors in each polarization direction, and same SD basis vectors in two polarization directions, the terminal selects the same TD-FD basis vector pair.

In an embodiment of the present disclosure, the basis vector indication information is used to indicate the DD-FD basis vector pair selected by a terminal, in which for different SD basis vectors in each polarization direction, the terminal selects the same DD-FD basis vector pair.

In an embodiment of the present disclosure, the basis vector indication information is used to indicate the TD-FD basis vector pair selected by the terminal, in which for different SD basis vectors in each polarization direction, the terminal selects the same TD-FD basis vector pair.

In an embodiment of the present disclosure, the basis vector indication information is used to indicate the DD-FD basis vector pair selected by the terminal, in which for different SD basis vectors in each polarization direction, the terminal selects different DD-FD basis vector pairs.

In an embodiment of the present disclosure, the basis vector indication information is used to indicate the TD-FD basis vector pair selected by the terminal, in which for different SD basis vectors in each polarization direction, the terminal selects different TD-FD basis vector pairs.

In an embodiment of the present disclosure, the basis vector indication information is used to indicate the DD-FD basis vector pair selected by the terminal, in which for different SD basis vectors in each polarization direction and the same SD basis vectors in two polarization directions, the terminal selects the same DD-FD basis vector pair.

In an embodiment of the present disclosure, basis vector indication information is used to indicate the TD-FD basis vector pair selected by the terminal, in which for different SD basis vectors in each polarization direction and the same SD basis vectors in two polarization directions, the terminal selects the same TD-FD basis vector pair.

Among them, L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more the DD-FD basis vector pairs or the number of one or more the TD-FD basis vector pairs, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different pairs of DD-FD basis vector pairs, or the terminal selects the same or different TD-FD basis vector pairs.

In an embodiment of the present disclosure, for different SD basis vectors in each polarization direction, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects the same DD-FD basis vector pair, or the terminal selects the same TD-FD basis vector pair.

Based on this, the terminal sends the basis vector indication information of

$$L \times \left( \left\lceil log_2^{C_{N_3 N_4}^{N}} \right\rceil + \left\lceil log_2^{O_3} \right\rceil + \left\lceil log_2^{O_4} \right\rceil \right)$$

bits for calculating the precoding to the network device, in which the basis vector indication information is used to indicate the DD-FD basis vector pair or the TD-FD basis vector pair selected by the terminal.

Exemplarily, for the same or different SD basis vectors, the terminal selects the same or different DD-FD basis vector pairs, or the terminal selects the same or different TD-FD basis vector pairs.

Among them, the number of the lengths of the DD basis vector or of the length of the TD basis vector is $N_4$=4, the number of DD basis vectors or the number of TD basis vectors selected by the terminal is S=2, the number of SD basis vectors selected by the terminal is L=2, the number of FD basis vectors selected by the terminal is M=4, the number of DD-FD basis vector pairs or the number of TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical directions $O_1$ and $O_2$ are both 4, the oversampling factor of the DD basis vector or the TD basis vector $O_3$ is 1, the oversampling factor of the FD basis vector $O_4$ is 1, that is, the oversampling is not performed, the number of antenna ports in the horizontal direction in a single polarization direction $N_1$ = 2, and the number of antenna ports in the vertical direction in a single polarization direction $N_2$ = 4.

The following description is based on that the terminal reports the basis vector indication information to the network device, in which the basis vector indication information indicates the DD basis vector or the TD basis vector selected by the terminal, the basis vector indication information is used to indicate the precoding of a certain data transmission layer, the DD basis vector or the TD basis vector selected by the terminal, or the DD-FD basis vector pair, or the TD-FD basis vector pair.

If the same SD basis vectors in two polarization directions correspond to the same or different DD-FD basis vector pairs, or the same SD basis vectors in two polarization directions correspond to the same or different TD-FD basis vector pairs, the terminal sends the basis vector indication information of

$$L \times \left( \left\lceil log_2^{C_{N_3 N_4}^{N}} \right\rceil + \left\lceil log_2^{O_3} \right\rceil + \left\lceil log_2^{O_4} \right\rceil \right) = 32$$

bits for calculating the precoding to the network device to indicate the DD-FD basis vector pairs corresponding to at least two SD basis vectors respectively, or to indicate the TD-FD basis vector pairs corresponding to at least two SD basis vectors respectively.

It should be noted that, in the embodiments of the present disclosure, S121 may be implemented alone or in combination with any other step in the embodiments of the present disclosure, for example, in combination with S21 and/or S31 and/or S41 and/or S51 and/or S61 and/or S71 and/or S81 and/or S91 and/or S101 to S103 and/or S111 to S113 in the embodiments of the present disclosure, and the embodiments of the present disclosure are not limited to this.

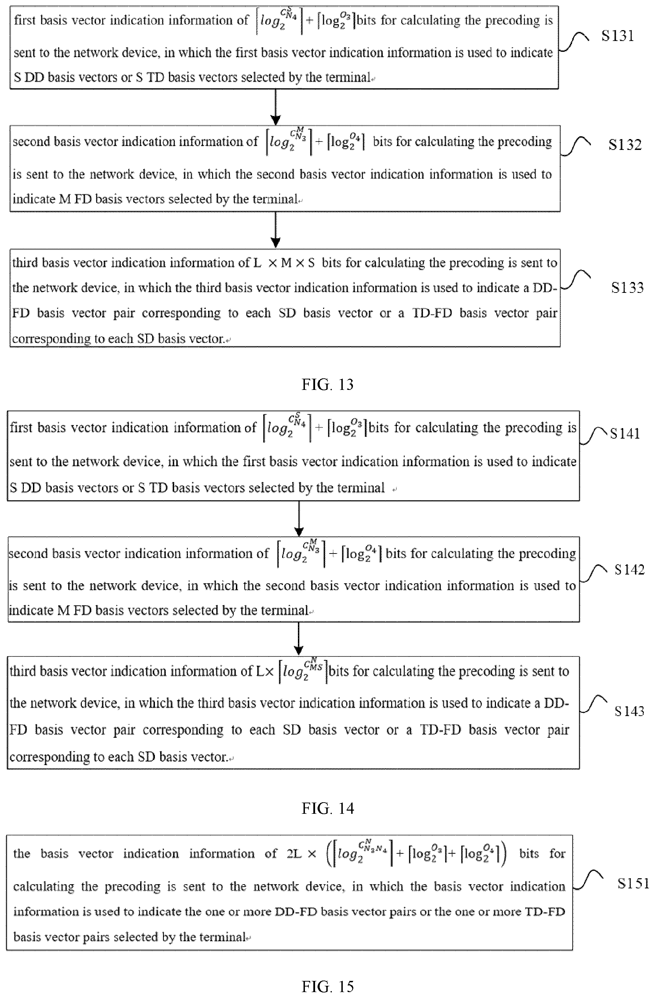

FIG. 13 is a flowchart of another method for reporting the selection indication of the basis vector provided in an embodiment of the present disclosure.

As shown in FIG. 13, the method is executed by the terminal, and the method may include but is not limited to the following steps.

S131: first basis vector indication information of $\left\lceil log_2^{C_{N_4}^{S}} \right\rceil + \left\lceil log_2^{O_3} \right\rceil$ bits for calculating the precoding is sent to the network device, in which the first basis vector indication information is used to indicate S DD basis vectors or S TD basis vectors selected by the terminal and S is a positive integer.

S132: second basis vector indication information of $\left\lceil log_2^{C_{N_3}^M} \right\rceil + \left\lceil log_2^{O_4} \right\rceil$ bits for calculating the precoding is sent to the network device, in which the second basis vector indication information is used to indicate M FD basis vectors selected by the terminal and M is a positive integer.

S133: third basis vector indication information of L $\times$ M $\times$ S bits for calculating the precoding is sent to the network device, in which the third basis vector indication information is used to indicate a DD-FD basis vector pair corresponding to each SD basis vector or a TD-FD basis vector pair corresponding to each SD basis vector.

For the same SD basis vector, the terminal selects the same DD-FD basis vector pair; or
for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or
for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

In an embodiment of the present disclosure, the basis vector indication information is used to indicate the DD-FD basis vector pair selected by the terminal, in which for the same SD basis vector, the terminal selects the same DD-FD basis vector pair.

In an embodiment of the present disclosure, the basis vector indication information is used to indicate the DD-FD basis vector pair selected by the terminal, in which for the same SD basis vector, the terminal selects different DD-FD basis vector pairs.

In an embodiment of the present disclosure, the basis vector indication information is used to indicate the DD-FD basis vector pair selected by the terminal, in which for different SD basis vectors, the terminal selects the same DD-FD basis vector pair.

In an embodiment of the present disclosure, the basis vector indication information is used to indicate the DD-FD basis vector pair selected by the terminal, in which for different SD basis vectors, the terminal selects different DD-FD basis vector pairs.

In an embodiment of the present disclosure, the basis vector indication information is used to indicate the TD-FD basis vector pair selected by the terminal, in which for the same SD basis vector, the terminal selects the same TD-FD basis vector pair.

In an embodiment of the present disclosure, the basis vector indication information is used to indicate the TD-FD basis vector pair selected by the terminal, in which for the same SD basis vector, the terminal selects different TD-FD basis vector pairs.

In an embodiment of the present disclosure, the basis vector indication information is used to indicate the TD-FD basis vector pair selected by the terminal, in which for different SD basis vectors, the terminal selects the same TD-FD basis vector pair.

In an embodiment of the present disclosure, the basis vector indication information is used to indicate the TD-FD basis vector pair selected by the terminal, in which for different SD basis vectors, the terminal selects different TD-FD basis vector pairs.

For different SD basis vectors in each polarization direction, the terminal selects the same DD-FD basis vector pair; or
for different SD basis vectors in each polarization direction, the terminal selects the same TD-FD basis vector pair; or
for different SD basis vectors in each polarization direction, the terminal selects different DD-FD basis vector pairs; or
for different SD basis vectors in each polarization direction, the terminal selects different TD-FD basis vector pairs; or
for different SD basis vectors in each polarization direction, the same SD basis vectors in two polarization directions, and the terminal selects the same DD-FD basis vector pair; or
for different SD basis vectors in each polarization direction, the same SD basis vectors in two polarization directions, and the terminal selects the same TD-FD basis vector pair.

In an embodiment of the present disclosure, the basis vector indication information is used to indicate the DD-FD basis vector pair selected by a terminal, in which for different SD basis vectors in each polarization direction, the terminal selects the same DD-FD basis vector pair.

In an embodiment of the present disclosure, the basis vector indication information is used to indicate the TD-FD basis vector pair selected by the terminal, in which for different SD basis vectors in each polarization direction, the terminal selects the same TD-FD basis vector pair.

In an embodiment of the present disclosure, the basis vector indication information is used to indicate the DD-FD basis vector pair selected by the terminal, in which for different SD basis vectors in each polarization direction, the terminal selects different DD-FD basis vector pairs.

in an embodiment of the present disclosure, the basis vector indication information is used to indicate the TD-FD basis vector pair selected by the terminal, in which for different SD basis vectors in each polarization direction, the terminal selects different TD-FD basis vector pairs.

In an embodiment of the present disclosure, the basis vector indication information is used to indicate the DD-FD basis vector pair selected by the terminal, in which for different SD basis vectors in each polarization direction and the same SD basis vectors in two polarization directions, the terminal selects the same DD-FD basis vector pair.

In an embodiment of the present disclosure, basis vector indication information is used to indicate the TD-FD basis vector pair selected by the terminal, in which for different SD basis vectors in each polarization direction, and the same SD basis vectors in two polarization directions, the terminal selects the same TD-FD basis vector pair.

L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects the same DD-FD basis vector pair, or the terminal selects the same TD-FD basis vector pair.

Based on this, the terminal sends the first basis vector indication information of $\left\lceil log_2^{C_{N_4}^S} \right\rceil + \left\lceil \log_2^{O_3} \right\rceil$ bits for calculating the precoding to the network device, in which the first basis vector indication information is used to indicate the S DD basis vectors or S TD basis vectors selected by the terminal, and S is a positive integer.

Afterwards, the terminal sends the second basis vector indication information of $\left\lceil log_2^{C_{N_3}^M} \right\rceil + \left\lceil \log_2^{O_4} \right\rceil$ bits for calculating the precoding to the network device, in which the second basis vector indication information is used to indicate the M FD basis vectors selected by the terminal, and M is a positive integer.

Afterwards, the terminal sends of third basis vector indication information of $L \times M \times S$ bits for calculating the precoding to the network device, in which the third basis vector indication information is used to indicate the DD-FD basis vector pair corresponding to each SD basis vector or the TD-FD basis vector pair corresponding to each SD basis vector.

Exemplarily, for the same or different SD basis vectors, the terminal selects the same or different DD-FD basis vector pairs, or the terminal selects the same or different pairs TD-FD basis vector pairs.

Among them, the number of the lengths of the DD basis vector or of the length of the TD basis vector is $N_4$=4, the number of DD basis vectors or the number of TD basis vectors selected by the terminal is S=2, the number of SD basis vectors selected by the terminal is L=2, the number of FD basis vectors selected by the terminal is M=4, the number of the DD-FD basis vector pairs or the number of the TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical directions $O_1$ and $O_2$ are both 4, the oversampling factor of the DD basis vector or the TD basis vector $O_3$ is 1, the oversampling factor of the FD basis vector $O_4$ is 1, that is, the oversampling is not performed, the number of antenna ports in the horizontal direction in a single polarization direction $N_1$ = 2, and the number of antenna ports in the vertical direction in a single polarization direction $N_2$ = 4.

The following description is based on that the terminal reports the basis vector indication information to the network device, in which the basis vector indication information indicates the DD basis vector or the TD basis vector selected by the terminal, the basis vector indication information is used to indicate the precoding of a certain data transmission layer, the DD basis vector or the TD basis vector selected by the terminal, or the DD-FD basis vector pair, or the TD-FD basis vector pair.

If the same SD basis vectors in two polarization directions correspond to the same or different DD-FD basis vector pairs, or the same SD basis vectors in two polarization directions correspond to the same or different TD-FD basis vector pairs, the terminal first sends the first basis vector indication information of $\left\lceil \log_2^{C_{N_4}^S} \right\rceil + \left\lceil \log_2^{O_3} \right\rceil = 3$ bits to the network device, to indicate S=2 DD basis vectors or TD basis vectors selected by the terminal, and afterwards, sends the second basis vector indication information of $\left\lceil \log_2^{C_{N_3}^M} \right\rceil + \left\lceil \log_2^{O_4} \right\rceil = 9$ bits to the network device, to indicate the M FD basis vectors selected by the terminal, and afterwards, the terminal sends the third basis vector indication information of L × M × S = 16 bits to the network device, to indicate the DD-FD basis vector pair corresponding to each SD basis vector, or indicates the TD-FD basis vector pair corresponding to each SD basis vector.

It should be noted that, in the embodiments of the present disclosure, S131 to S133 may be implemented separately or in combination with any other steps in the embodiments of the present disclosure, for example, in combination with S21 and/or S31 and/or S41 and/or S51 and/or S61 and/or S71 and/or S81 and/or S91 and/or S101 to S103 and /or S111 to S113 and/or S121 in the embodiments of the present disclosure, and the embodiments of the present disclosure are not limited to this.

FIG. 14 is a flowchart of another method for reporting the selection indication of the basis vector provided in an embodiment of the present disclosure.

As shown in FIG. 14, the method is executed by the terminal, and the method may include but is not limited to the following steps.

S141: first basis vector indication information of $\left\lceil log_2^{C_{N_4}^S} \right\rceil + \left\lceil \log_2^{O_3} \right\rceil$ bits for calculating the precoding is sent to the network device, in which the first basis vector indication information is used to indicate S DD basis vectors or S TD basis vectors selected by the terminal and S is a positive integer.

S142: second basis vector indication information of $\left\lceil log_2^{C_{N_3}^M} \right\rceil + \left\lceil \log_2^{O_4} \right\rceil$ bits for calculating the precoding is sent to the network device, in which the second basis vector indication information is used to indicate M FD basis vectors selected by the terminal and M is a positive integer.

S143: third basis vector indication information of $L \times \left\lceil log_2^{C_{MS}^N} \right\rceil$ bits for calculating the precoding is sent to the network device, in which the third basis vector indication information is used to indicate a DD-FD basis vector pair corresponding to each SD basis vector or a TD-FD basis vector pair corresponding to each SD basis vector.

For the same SD basis vector, the terminal selects the same DD-FD basis vector pair; or
for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or
for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

In an embodiment of the present disclosure, the basis vector indication information is used to indicate the DD-FD basis vector pair selected by the terminal, in which for the same SD basis vector, the terminal selects the same DD-FD basis vector pair.

In an embodiment of the present disclosure, the basis vector indication information is used to indicate the DD-FD basis vector pair selected by the terminal, in which for the same SD basis vector, the terminal selects different DD-FD basis vector pairs.

In an embodiment of the present disclosure, the basis vector indication information is used to indicate the DD-FD basis vector pair selected by the terminal, in which for different SD basis vectors, the terminal selects the same DD-FD basis vector pair.

In an embodiment of the present disclosure, the basis vector indication information is used to indicate the DD-FD basis vector pair selected by the terminal, in which for different SD basis vectors, the terminal selects different DD-FD basis vector pairs.

In an embodiment of the present disclosure, the basis vector indication information is used to indicate the TD-FD basis vector pair selected by the terminal, in which for the same SD basis vector, the terminal selects the same TD-FD basis vector pair.

In an embodiment of the present disclosure, the basis vector indication information is used to indicate the TD-FD basis vector pair selected by the terminal, in which for the same SD basis vector, the terminal selects different TD-FD basis vector pairs.

In an embodiment of the present disclosure, the basis vector indication information is used to indicate the TD-FD basis vector pair selected by the terminal, in which for different SD basis vectors, the terminal selects the same TD-FD basis vector pair.

In an embodiment of the present disclosure, the basis vector indication information is used to indicate the TD-FD basis vector pair selected by the terminal, in which for different SD basis vectors, the terminal selects different TD-FD basis vector pairs.

For different SD basis vectors in each polarization direction, the terminal selects the same DD-FD basis vector pair; or for different SD basis vectors in each polarization direction, the terminal selects the same TD-FD basis vector pair; or for different SD basis vectors in each polarization direction, the terminal selects different DD-FD basis vector pairs; or for different SD basis vectors in each polarization direction, the terminal selects different TD-FD basis vector pairs; or for different SD basis vectors in each polarization direction, the same SD basis vectors in two polarization directions, the terminal selects the same DD-FD basis vector pair; or

for different SD basis vectors in each polarization direction, the same SD basis vectors in two polarization directions, the terminal selects the same TD-FD basis vector pair.

In an embodiment of the present disclosure, the basis vector indication information is used to indicate the DD-FD basis vector pair selected by the terminal, in which for different SD basis vectors in each polarization direction, the terminal selects the same DD-FD basis vector pair.

In an embodiment of the present disclosure, the basis vector indication information is used to indicate the TD-FD basis vector pair selected by the terminal, in which for different SD basis vectors in each polarization direction, the terminal selects the same TD-FD basis vector pair.

In an embodiment of the present disclosure, the basis vector indication information is used to indicate the DD-FD basis vector pair selected by the terminal, in which for different SD basis vectors in each polarization direction, the terminal selects different DD-FD basis vector pairs.

In an embodiment of the present disclosure, the basis vector indication information is used to indicate the TD-FD basis vector pair selected by the terminal, in which for different SD basis vectors in each polarization direction, the terminal selects different TD-FD basis vector pairs.

In an embodiment of the present disclosure, the basis vector indication information is used to indicate the DD-FD basis vector pair selected by the terminal, in which for different SD basis vectors in each polarization direction and the same SD basis vectors in two polarization directions, the terminal selects the same DD-FD basis vector pair.

In an embodiment of the present disclosure, basis vector indication information is used to indicate the TD-FD basis vector pair selected by the terminal, in which for different SD basis vectors in each polarization direction, and the same SD basis vectors in two polarization directions, the terminal selects the same TD-FD basis vector pair.

Among them, L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of one or more DD-FD basis vector pairs or the number of one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects the same DD-FD basis vector pair, or the terminal selects the same TD-FD basis vector pair.

Based on this, the terminal sends the first basis vector indication information of $\left\lceil log_2^{C_{N_4}^S} \right\rceil + \left\lceil log_2^{O_3} \right\rceil$ bits for calculating the precoding to the network device, in which the first basis vector indication information is used to indicate the S DD basis vectors or S TD basis vectors selected by the terminal, and S is a positive integer.

Afterwards, the terminal sends the second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate the M FD basis vectors selected by the terminal, and M is a positive integer.

Afterwards, the terminal sends the third basis vector indication information of $\mathrm{L} \times \left\lceil log_2^{C_{MS}^N} \right\rceil$ bits for calculating the precoding to the network device, in which the third basis vector indication information is used to indicate the DD-FD basis vector pair corresponding to each SD basis vector or the TD-FD basis vector pair corresponding to each SD basis vector.

Exemplarily, for the same or different SD basis vectors, the terminal selects the same or different DD-FD basis vector pairs, or the terminal selects the same or different TD-FD basis vector pairs.

Among them, the number of the lengths of the DD basis vector or of the length of the TD basis vector is $N_4$=4, the number of DD basis vectors or the number of TD basis vectors selected by the terminal is S=2, the number of SD basis vectors selected by the terminal is L=2, the number of FD basis vectors selected by the terminal is M=4, the number of DD-FD basis vector pairs or the number of TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical direction $O_1$ and $O_2$ is 4, the oversampling factor of the DD basis vector or of the TD basis vector $O_3$ is 1, the oversampling factor of the FD basis vector $O_4$ is 1, that is, the oversampling is not performed. The number of antenna ports in the horizontal direction in a single polarization direction $N_1$ = 2, and the number of antenna ports in the vertical direction in a single polarization direction $N_2$ = 4.

The following description is based on that the terminal reports the basis vector indication information to the network device, in which the basis vector indication information indicates the DD basis vector or the TD basis vector selected by the terminal, the basis vector indication information is used to indicate the precoding of a certain data transmission layer, the DD basis vector or the TD basis vector selected by the terminal, or a DD-FD basis vector pair, or a TD-FD basis vector pair.

If the same SD basis vectors in two polarization directions correspond to the same or different DD-FD basis vector pairs, or the same SD basis vectors in two polarization directions correspond to the same or different TD-FD basis vector pairs, the terminal first sends the first basis vector indication information of $\left\lceil log_2^{C_{N_4}^S} \right\rceil + \left\lceil log_2^{O_3} \right\rceil = 3$ bits to the network device, to inidcate S=2 DD basis vectors or TD basis vectors selected by the terminal, and afterwards, the terminal sends the second basis vector indication information of $\left\lceil log_2^{C_{N_3}^M} \right\rceil + \left\lceil log_2^{O_4} \right\rceil = 9$ bits to the network device to indicate M FD basis vectors selected by the terminal, and then the terminal sends the third basis vector indication information of $\mathrm{L} \times \left\lceil log_2^{C_{MS}^N} \right\rceil$ bits to the network device, to indicate the DD-FD basis vector pair corresponding to each SD basis vector, or indicates the TD-FD basis vector pair corresponding to each SD basis vector.

It should be noted that, in the embodiments of the present disclosure, S141 to S143 may be implemented separately or in combination with any other steps in the embodiments of the present disclosure, for example, they may be implemented in combination with S21 and/or S31 and/or S41 and/or S51 and/or S61 and / or S71 and/or S81 and/or S91 and/or S101 to S103 and/or S111 to S113 and/or S121 and/or S131 to S133 in the embodiments of the present disclosure, and the embodiments of the present disclosure are not limited to this.

FIG. 15 is a flowchart of another method for reporting the selection indication of the basis vector provided in an embodiment of the present disclosure.

As shown in FIG. 15, the method is executed by a terminal, and the method may include but is not limited to the following steps.

S151: the basis vector indication information of $2\mathrm{L} \times \left( \left\lceil log_2^{C_{N_3 N_4}^N} \right\rceil + \left\lceil log_2^{O_3} \right\rceil + \left\lceil log_2^{O_4} \right\rceil \right)$ bits for calculating the precoding is sent to the network device, in which the basis vector indication information is used to indicate the one or more DD-FD basis vector pairs or the one or more TD-FD basis vector pairs selected by the terminal.

For the same SD basis vector, the terminal selects the same DD-FD basis vector pair; or
for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or
for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

In an embodiment of the present disclosure, the basis vector indication information is used to indicate the DD-FD basis vector pair selected by the terminal, in which for the same SD basis vector, the terminal selects the same DD-FD basis vector pair.

In an embodiment of the present disclosure, the basis vector indication information is used to indicate the DD-FD basis vector pair selected by the terminal, in which for the same SD basis vector, the terminal selects different DD-FD basis vector pairs.

In an embodiment of the present disclosure, the basis vector indication information is used to indicate the DD-FD basis vector pair selected by the terminal, in which for different SD basis vectors, the terminal selects the same DD-FD basis vector pair.

In an embodiment of the present disclosure, the basis vector indication information is used to indicate the DD-FD basis vector pair selected by the terminal, in which for different SD basis vectors, the terminal selects different DD-FD basis vector pairs.

In an embodiment of the present disclosure, the basis vector indication information is used to indicate the TD-FD basis vector pair selected by the terminal, in which for the same SD basis vector, the terminal selects the same TD-FD basis vector pair.

In an embodiment of the present disclosure, the basis vector indication information is used to indicate the TD-FD basis vector pair selected by the terminal, in which for the same SD basis vector, the terminal selects different TD-FD basis vector pairs.

In an embodiment of the present disclosure, the basis vector indication information is used to indicate the TD-FD basis vector pair selected by the terminal, in which for different SD basis vectors, the terminal selects the same TD-FD basis vector pair.

In an embodiment of the present disclosure, the basis vector indication information is used to indicate the TD-FD basis vector pair selected by the terminal, in which for different SD basis vectors, the terminal selects different TD-FD basis vector pairs.

For different SD basis vectors in each polarization direction, the same SD basis vectors in two polarization directions, the terminal selects different DD-FD basis vector pairs; or

for different SD basis vectors in each polarization direction, the same SD basis vectors in two polarization directions, the terminal selects different TD-FD basis vector pairs; or

for different SD basis vectors in each polarization direction, different SD basis vectors in two polarization directions, and the terminal selects the same DD-FD basis vector pair; or

for different SD basis vectors in each polarization direction, different SD basis vectors in two polarization directions, the terminal selects the same TD-FD basis vector pair; or

for different SD basis vectors in each polarization direction, different SD basis vectors in two polarization directions, the terminal selects different DD-FD basis vector pairs; or

for different SD basis vectors in each polarization direction, different SD basis vectors in two polarization directions, the terminal selects different TD-FD basis vector pairs.

In an embodiment of the present disclosure, the basis vector indication information is used to indicate the DD-FD basis vector pair selected by the terminal, in which for different SD basis vectors in each polarization direction, and the same SD basis vectors in two polarization directions, the terminal selects different DD-FD basis vector pairs.

In an embodiment of the present disclosure, the basis vector indication information is used to indicate the TD-FD basis vector pair selected by the terminal, in which for different SD basis vectors in each polarization direction, and the same SD basis vectors in two polarization directions, the terminal selects different TD-FD basis vector pairs.

In an embodiment of the present disclosure, the basis vector indication information is used to indicate the DD-FD basis vector pair selected by the terminal, in which for different SD basis vectors in each polarization direction and different SD basis vectors in two polarization directions, the terminal selects the same DD-FD basis vector pair.

In an embodiment of the present disclosure, the basis vector indication information is used to indicate the TD-FD basis vector pair selected by the terminal, in which for different SD basis vectors in each polarization direction and different SD basis vectors in two polarization directions, the terminal selects the same TD-FD basis vector pair.

In an embodiment of the present disclosure, basis vector indication information is used to indicate the DD-FD basis vector pair selected by the terminal, in which for different SD basis vectors in each polarization direction and different SD basis vectors in two polarization directions and the terminal selects different DD-FD basis vector pairs.

In an embodiment of the present disclosure, the basis vector indication information is used to indicate the DD-FD basis vector pair selected by the terminal, in which for different SD basis vectors in each polarization direction and different SD basis vectors in two polarization directions, the terminal selects different TD-FD basis vector pairs.

Among them, L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more DD-FD basis vector pairs or the number of the one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects different DD-FD basis vector pairs, or the terminal selects different TD-FD basis vector pairs.

In an embodiment of the present disclosure, for different SD basis vectors in each polarization direction and different SD basis vectors in two polarization directions, the terminal selects the same or different DD-FD basis vector pairs, or the terminal selects the same or different TD-FD basis vector pairs.

Based on this, the terminal sends the basis vector indication information of $2L$ $\times \left( \left\lceil log_2^{C_{N_3 N_4}^{N}} \right\rceil + \left\lceil log_2^{O_3} \right\rceil + \left\lceil log_2^{O_4} \right\rceil \right)$ bits to the network device, in which the basis vector indication information is used to indicate the DD-FD basis vector pair or the TD-FD basis vector pair selected by the terminal.

It should be noted that, in the embodiments of the present disclosure, S151 may be implemented alone or in combination with any other step in the embodiments of the present disclosure, for example, in combination with S21 and/or S31 and/or S41 and/or S51 and/or S61 and/or S71 and/or S81 and/or S91 and/or S101 to S103 and/or S111 to S113 and /or S121 and/ or S131 to S133 and/or S141 to S143 in the embodiments of the present disclosure, and the embodiments of the present disclosure are not limited to this.

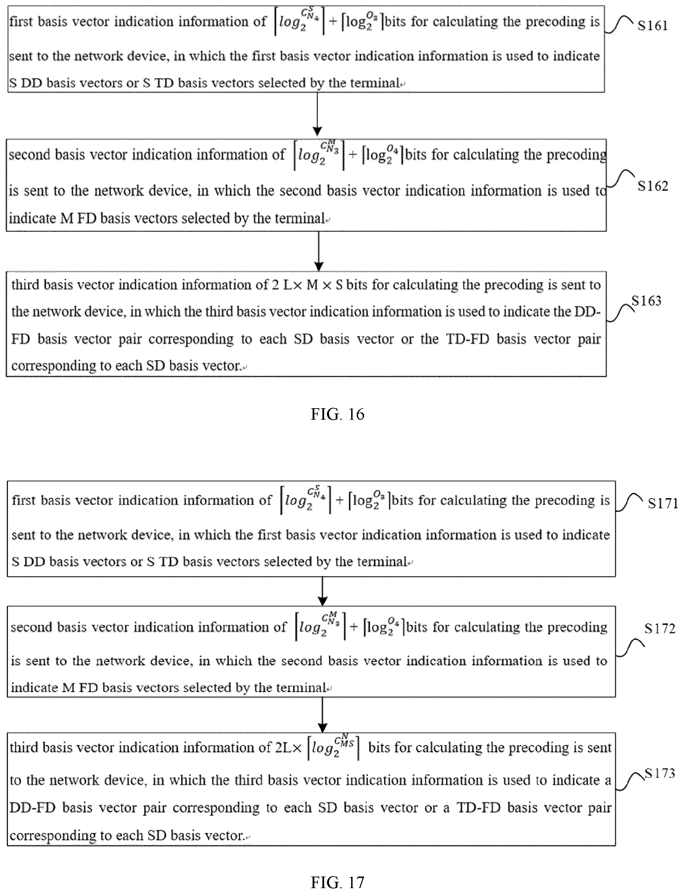

FIG. 16 is a flowchart of another method for reporting the selection indication of the basis vector provided in an embodiment of the present disclosure.

As shown in FIG. 16, the method is executed by a terminal, and the method may include but is not limited to the following steps.

S161: first basis vector indication information of $\left\lceil log_2^{C_{N_4}^{S}} \right\rceil + \left\lceil log_2^{O_3} \right\rceil$ bits for calculating the precoding is sent to the network device, in which the first basis vector indication information is used to indicate S DD basis vectors or S TD basis vectors selected by the terminal and S is a positive integer.

S162: second basis vector indication information of $\left\lceil log_2^{C_{N_3}^{M}} \right\rceil + \left\lceil log_2^{O_4} \right\rceil$ bits for calculating the precoding is sent to the network device, in which the second basis vector indication information is used to indicate M FD basis vectors selected by the terminal and M is a positive integer.

S163: third basis vector indication information of $2L \times M \times S$ bits for calculating the precoding is sent to the network device, in which the third basis vector indication information is used to indicate the DD-FD basis vector pair corresponding to each SD basis vector or the TD-FD basis vector pair corresponding to each SD basis vector.

For the same SD basis vector, the terminal selects the same DD-FD basis vector pair; or
for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or
for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

In an embodiment of the present disclosure, the basis vector indication information is used to indicate the DD-FD basis vector pair selected by the terminal, in which for the same SD basis vector, the terminal selects the same DD-FD basis vector pair.

In an embodiment of the present disclosure, the basis vector indication information is used to indicate the DD-FD basis vector pair selected by the terminal, in which for the same SD basis vector, the terminal selects different DD-FD basis vector pairs.

In an embodiment of the present disclosure, the basis vector indication information is used to indicate the DD-FD basis vector pair selected by the terminal, in which for different SD basis vectors, the terminal selects the same DD-FD basis vector pair.

In an embodiment of the present disclosure, the basis vector indication information is used to indicate the DD-FD basis vector pair selected by the terminal, in which for different SD basis vectors, the terminal selects different DD-FD basis vector pairs.

In an embodiment of the present disclosure, the basis vector indication information is used to indicate the TD-FD basis vector pair selected by the terminal, in which for the same SD basis vector, the terminal selects the same TD-FD basis vector pair.

In an embodiment of the present disclosure, the basis vector indication information is used to indicate the TD-FD basis vector pair selected by the terminal, in which for the same SD basis vector, the terminal selects different TD-FD basis vector pairs.

In an embodiment of the present disclosure, the basis vector indication information is used to indicate the TD-FD basis vector pair selected by the terminal, in which for different SD basis vectors, the terminal selects the same TD-FD basis vector pair.

In an embodiment of the present disclosure, the basis vector indication information is used to indicate the TD-FD basis vector pair selected by the terminal, in which for different SD basis vectors, the terminal selects different TD-FD basis vector pairs.

For different SD basis vectors in each polarization direction, the same SD basis vectors in two polarization directions, the terminal selects different DD-FD basis vector pairs; or

for different SD basis vectors in each polarization direction, the same SD basis vectors in two polarization directions, the terminal selects different TD-FD basis vector pairs; or

for different SD basis vectors in each polarization direction, different SD basis vectors in two polarization directions, the terminal selects the same DD-FD basis vector pair; or

for different SD basis vectors in each polarization direction, different SD basis vectors in two polarization directions, the terminal selects the same TD-FD basis vector pair; or

for different SD basis vectors in each polarization direction, different SD basis vectors in two polarization directions, the terminal selects different DD-FD basis vector pairs; or

for different SD basis vectors in each polarization direction, different SD basis vectors in two polarization directions, the terminal selects different TD-FD basis vector pairs.

In an embodiment of the present disclosure, the basis vector indication information is used to indicate the DD-FD basis vector pair selected by the terminal, in which for different SD basis vectors in each polarization direction, the same SD basis vectors in two polarization directions, the terminal selects different DD-FD basis vector pairs.

In an embodiment of the present disclosure, the basis vector indication information is used to indicate the TD-FD basis vector pair selected by the terminal, in which for different SD basis vectors in each polarization direction, and the same SD basis vectors in two polarization directions, the terminal selects different TD-FD basis vector pairs.

In an embodiment of the present disclosure, the basis vector indication information is used to indicate the DD-FD basis vector pair selected by the terminal, in which for different SD basis vectors in each polarization direction and different SD basis vectors in two polarization directions, the terminal selects the same DD-FD basis vector pair.

In an embodiment of the present disclosure, the basis vector indication information is used to indicate the TD-FD basis vector pair selected by the terminal, in which for different SD basis vectors in each polarization direction and different SD basis vectors in two polarization directions, the terminal selects the same TD-FD basis vector pair.

In an embodiment of the present disclosure, the basis vector indication information is used to indicate the DD-FD basis vector pair selected by the terminal, in which for different SD basis vectors in each polarization direction and different SD basis vectors in two polarization directions, the terminal selects different DD-FD basis vector pairs.

In an embodiment of the present disclosure, the basis vector indication information is used to indicate the DD-FD basis vector pair selected by the terminal, in which for different SD basis vectors in each polarization direction and different SD basis vectors in two polarization directions, the terminal selects different TD-FD basis vector pairs.

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects different DD-FD basis vector pairs, or the terminal selects different TD-FD basis vector pairs.

In an embodiment of the present disclosure, for different SD basis vectors in each polarization direction and different SD basis vectors in two polarization directions, the terminal selects the same or different DD-FD basis vector pairs, or the terminal selects the same or different TD-FD basis vector pairs.

Based on this, the terminal sends the first basis vector indication information of $\left\lceil log_2^{C_{N_4}^{S}} \right\rceil + \left\lceil \log_2^{O_3} \right\rceil$ bits for calculating the precoding to the network device, in which the first basis vector indication information is used to indicate the S DD basis vectors or S TD basis vectors selected by the terminal, and S is a positive integer.

Afterwards, the terminal sends the second basis vector indication information of $\left\lceil log_2^{C_{N_3}^{M}} \right\rceil + \left\lceil \log_2^{O_4} \right\rceil$ bits for calculating the precoding to the network device, in which the second basis vector indication information is used to indicate the M FD basis vectors selected by the terminal, and M is a positive integer.

Afterwards, the terminal sends third basis vector indication information of $2L \times M \times S$ bits for calculating the precoding to the network device, in which the third basis vector indication information is used to indicate the DD-FD basis vector pair corresponding to each SD basis vector or the TD-FD basis vector pair corresponding to each SD basis vector.

It should be noted that, in the embodiments of the present disclosure, S161 to S 163 may be implemented separately or in combination with any other steps in the embodiments of the present disclosure, for example, they may be implemented in combination with S21 and/or S31 and/or S41 and/or S51 and/or S61 and/or S71 and/or S81 and/or S91 and/or S101 to S103 and/or S111 to S113 and/or S121 and/or S131 to S133 and/or S141 to S143 and/or S151 in the embodiments of the present disclosure, and the embodiments of the present disclosure are not limited to this.

FIG. 17 is a flowchart of another method for reporting the selection indication of the basis vector provided in an embodiment of the present disclosure.

As shown in FIG. 17, the method is executed by the terminal, and the method may include but is not limited to the following steps.

S171: first basis vector indication information of $\left\lceil log_2^{C_{N_4}^{S}} \right\rceil + \left\lceil \log_2^{O_3} \right\rceil$ bits for calculating the precoding is sent to the network device, in which the first basis vector indication information is used to indicate S DD basis vectors or S TD basis vectors selected by the terminal and S is a positive integer.

S172: second basis vector indication information of $\left\lceil log_2^{C_{N_3}^{M}} \right\rceil + \left\lceil \log_2^{O_4} \right\rceil$ bits for calculating the precoding is sent to the network device, in which the second basis vector indication information is used to indicate M FD basis vectors selected by the terminal and M is a positive integer.

S173: third basis vector indication information of $2L \times \left\lceil log_2^{C_{MS}^{N}} \right\rceil$ bits for calculating the precoding is sent to the network device, in which the third basis vector indication information is used to indicate a DD-FD basis vector pair corresponding to each SD basis vector or a TD-FD basis vector pair corresponding to each SD basis vector.

For the same SD basis vector, the terminal selects the same DD-FD basis vector pair; or
for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or
for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

In an embodiment of the present disclosure, the basis vector indication information is used to indicate the DD-FD basis vector pair selected by the terminal, in which for the same SD basis vector, the terminal selects the same DD-FD basis vector pair.

In an embodiment of the present disclosure, the basis vector indication information is used to indicate the DD-FD basis vector pair selected by the terminal, in which for the same SD basis vector, the terminal selects different DD-FD basis vector pairs.

In an embodiment of the present disclosure, the basis vector indication information is used to indicate the DD-FD basis vector pair selected by the terminal, in which for different SD basis vectors, the terminal selects the same DD-FD basis vector pair.

In an embodiment of the present disclosure, the basis vector indication information is used to indicate the DD-FD basis vector pair selected by the terminal, in which for different SD basis vectors, the terminal selects different DD-FD basis vector pairs.

In an embodiment of the present disclosure, the basis vector indication information is used to indicate the TD-FD basis vector pair selected by the terminal, in which for the same SD basis vector, the terminal selects the same TD-FD basis vector pair.

In an embodiment of the present disclosure, the basis vector indication information is used to indicate the TD-FD basis vector pair selected by the terminal, in which for the same SD basis vector, the terminal selects different TD-FD basis vector pairs.

In an embodiment of the present disclosure, the basis vector indication information is used to indicate the TD-FD basis vector pair selected by the terminal, in which for different SD basis vectors, the terminal selects the same TD-FD basis vector pair.

In an embodiment of the present disclosure, the basis vector indication information is used to indicate the TD-FD basis vector pair selected by the terminal, in which for different SD basis vectors, the terminal selects different TD-FD basis vector pairs.

For different SD basis vectors in each polarization direction, the same SD basis vectors in two polarization directions, and the terminal selects different DD-FD basis vector pairs; or

for different SD basis vectors in each polarization direction, the same SD basis vectors in two polarization directions, the terminal selects different TD-FD basis vector pairs; or

for different SD basis vectors in each polarization direction, different SD basis vectors in two polarization directions, the terminal selects the same DD-FD basis vector pair; or

for different SD basis vectors in each polarization direction, different SD basis vectors in two polarization directions, the terminal selects the same TD-FD basis vector pair; or

for different SD basis vectors in each polarization direction, different SD basis vectors in two polarization directions, the terminal selects different DD-FD basis vector pairs; or

for different SD basis vectors in each polarization direction, different SD basis vectors in two polarization directions, the terminal selects different TD-FD basis vector pairs.

In an embodiment of the present disclosure, the basis vector indication information is used to indicate the DD-FD basis vector pair selected by the terminal, in which for different SD basis vectors in each polarization direction, and the same SD basis vectors in two polarization directions, the terminal selects different DD-FD basis vector pairs.

In an embodiment of the present disclosure, the basis vector indication information is used to indicate the TD-FD basis vector pair selected by the terminal, in which for different SD basis vectors in each polarization direction, and the same SD basis vectors in two polarization directions, the terminal selects different TD-FD basis vector pairs.

In an embodiment of the present disclosure, the basis vector indication information is used to indicate the DD-FD basis vector pair selected by the terminal, in which for different SD basis vectors in each polarization direction and different SD basis vectors in two polarization directions, the terminal selects the same DD-FD basis vector pair.

In an embodiment of the present disclosure, the basis vector indication information is used to indicate the TD-FD basis vector pair selected by the terminal, in which for different SD basis vectors in each polarization direction and different SD basis vectors in two polarization directions, the terminal selects the same TD-FD basis vector pair.

In an embodiment of the present disclosure, the basis vector indication information is used to indicate the DD-FD basis vector pair selected by the terminal, in which for different SD basis vectors in each polarization direction and different SD basis vectors in two polarization directions, the terminal selects different DD-FD basis vector pairs.

In an embodiment of the present disclosure, the basis vector indication information is used to indicate the DD-FD basis vector pair selected by the terminal, in which for different SD basis vectors in each polarization direction and different SD basis vectors in two polarization directions, the terminal selects different TD-FD basis vector pairs.

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects different DD-FD basis vector pairs, or the terminal selects different TD-FD basis vector pairs.

In an embodiment of the present disclosure, for different SD basis vectors in each polarization direction and different SD basis vectors in two polarization directions, the terminal selects the same or different DD-FD basis vector pairs, or the terminal selects the same or different TD-FD basis vector pairs.

Based on this, the terminal sends the first basis vector indication information of $\left\lceil log_2^{C_{N_4}^S}\right\rceil + \left\lceil log_2^{O_3}\right\rceil$ bits for calculating the precoding to the network device, in which the first basis vector indication information is used to indicate the S DD basis vectors or S TD basis vectors selected by the terminal, and S is a positive integer.

Afterwards, the terminal sends the second basis vector indication information of $\left\lceil log_2^{C_{N_3}^M}\right\rceil + \left\lceil log_2^{O_4}\right\rceil$ bits for calculating the precoding to the network device, in which the second basis vector indication information is used to indicate the M FD basis vectors selected by the terminal, and M is a positive integer.

Afterwards, the terminal sends third basis vector indication information of $2\mathrm{L}\times\left\lceil log_2^{C_{MS}^N}\right\rceil$ bits for calculating the precoding to the network device, in which the third basis vector indication information is used to indicate the DD-FD basis vector pair corresponding to each SD basis vector or the TD-FD basis vector pair corresponding to each SD basis vector.

It should be noted that, in the embodiments of the present disclosure, S171 to S173 may be implemented separately or in combination with any other steps in the embodiments of the present disclosure, for example, they may be implemented in combination with S21 and/or S31 and/or S41 and/or S51 and/or S61 and/or S71 and/or S81 and/or S91 and/or S101 to S103 and/or S111 to S113 and/or S121 and/ or S131 to S133 and/ or S141 to S143 and / or S151 and/or S161 to S163 in the embodiments of the present disclosure, and the embodiments of the present disclosure are not limited to this.

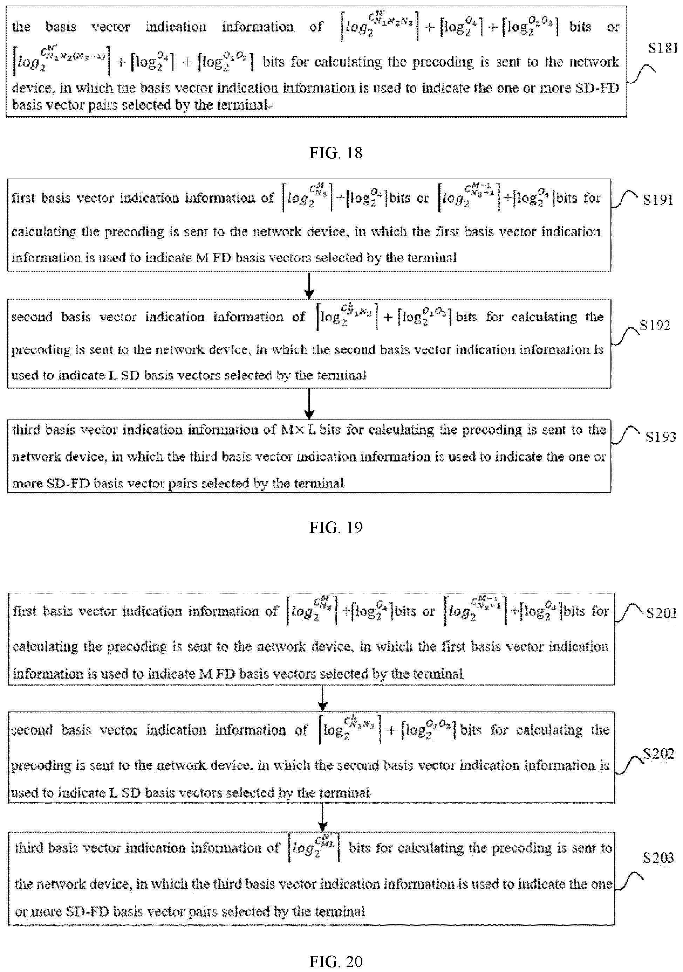

FIG. 18 is a flowchart of another method for reporting the selection indication of the basis vector provided in an embodiment of the present disclosure.

As shown in FIG. 18, the method is executed by the terminal, and the method may include but is not limited to the following step.

S181: the basis vector indication information of $\left\lceil log_2^{C_{N_1 N_2 N_3}^{\mathrm{N}'}}\right\rceil + \left\lceil log_2^{O_4}\right\rceil + \left\lceil log_2^{O_1 O_2}\right\rceil$ bits or

$\left\lceil log_2^{C_{N_1 N_2 (N_3-1)}^{\mathrm{N}'}}\right\rceil + \left\lceil log_2^{O_4}\right\rceil + \left\lceil log_2^{O_1 O_2}\right\rceil$ bits for calculating the precoding is sent to the network device, in which the basis vector indication information is used to indicate the one or more SD-FD basis vector pairs selected by the terminal.

$N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

In an embodiment of the present disclosure, the basis vector indication information is used to indicate the basis vector pair selected by the terminal, and the basis vector pair includes the one or more SD-FD basis vector pairs.

Based on this, the terminal sends the basis vector indication information of $\left\lceil log_2^{C_{N_1 N_2 (N_3-1)}^{\mathrm{N}'}}\right\rceil + \left\lceil log_2^{O_4}\right\rceil + \left\lceil log_2^{O_1 O_2}\right\rceil$ or $\left\lceil log_2^{C_{N_1 N_2 N_3}^{\mathrm{N}'}}\right\rceil + \left\lceil log_2^{O_4}\right\rceil + \left\lceil log_2^{O_1 O_2}\right\rceil$ bits for calculating the precoding to the network device, in which the basis vector indication information is used to indicate the SD-FD basis vector pair selected by the terminal.

It should be noted that, in the embodiments of the present disclosure, S181 may be implemented alone or in combination with any other step in the embodiments of the present disclosure, for example, in combination with S21 and/or S31 and/or S41 and/or S51 and/or S61 and/or S71 and/or S81 and/or S91 and/or S 101 to S103 and/or S 111 to S113 and/or S 121 and/ or S 131 to S133 and/or S 141 to S143 and/or S151 and/or S 161 to S163 and/or S 171 to S173 in the embodiments of the present disclosure, and the embodiments of the present disclosure are not limited to this.

FIG. 19 is a flowchart of another method for reporting the selection indication of the basis vector provided in an embodiment of the present disclosure.

As shown in FIG. 19, the method is executed by the terminal, and the method may include but is not limited to the following steps.

S191: first basis vector indication information of $\left\lceil log_2^{C_{N_3}^M} \right\rceil + \lceil log_2^{O_4} \rceil$ bits or $\left\lceil log_2^{C_{N_3-1}^{M-1}} \right\rceil + \lceil log_2^{O_4} \rceil$ bits for calculating the precoding is sent to the network device, in which the first basis vector indication information is used to indicate M FD basis vectors selected by the terminal and M is a positive integer.

S192: second basis vector indication information of $\left\lceil log_2^{C_{N_1 N_2}^L} \right\rceil + \lceil log_2^{O_1 O_2} \rceil$ bits for calculating the precoding is sent to the network device, in which the second basis vector indication information is used to indicate L SD basis vectors selected by the terminal and L is a positive integer.

S193: third basis vector indication information of M× L bits for calculating the precoding is sent to the network device, in which the third basis vector indication information is used to indicate the one or more SD-FD basis vector pairs selected by the terminal.

L is a number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

In an embodiment of the present disclosure, the basis vector indication information is used to indicate the basis vector pair selected by the terminal, and the basis vector pair includes the one or more SD-FD basis vector pairs.

Based on this, the terminal sends first basis vector indication information of $\left\lceil log_2^{C_{N_3}^M} \right\rceil + \lceil log_2^{O_4} \rceil$ or $\left\lceil log_2^{C_{N_3-1}^{M-1}} \right\rceil + \lceil log_2^{O_4} \rceil$ bits for calculating the precoding to the network device, in which the first basis vector indication information is used to indicate M FD basis vectors selected by the terminal, and M is a positive integer.

Afterwards, the terminal sends the second basis vector indication information of $\left\lceil log_2^{C_{N_1 N_2}^L} \right\rceil + \lceil log_2^{O_1 O_2} \rceil$ bits for calculating the precoding to the network device, in which the second basis vector indication information is used to indicate L SD basis vectors selected by the terminal, and L is a positive integer.

Afterwards, the terminal sends third basis vector indication information of M× L bits for calculating the precoding to the network device, in which the third basis vector indication information is used to indicate the SD-FD basis vector pair selected by the terminal.

It should be noted that, in the embodiments of the present disclosure, S191 to S193 may be implemented separately or in combination with any other steps in the embodiments of the present disclosure, for example, they may be implemented in combination with S21 and/or S31 and/or S41 and/or S51 and/or S61 and/or S71 and/or S81 and/or S91 and/or S101 to S103 and/or S111 to S113 and/or S121 and/or S131 to S133 and/or S141 to S143 and/or S151 and/or S161 to S163 and /or S171 to S173 and/or S181 in the embodiments of the present disclosure, and the embodiments of the present disclosure are not limited to this.

FIG. 20 is a flowchart of another method for reporting the selection indication of the basis vector provided in an embodiment of the present disclosure.

As shown in FIG. 20, the method is executed by the terminal, and the method may include but is not limited to the following steps.

S201: first basis vector indication information of $\left\lceil log_2^{C_{N_3}^M} \right\rceil + \lceil log_2^{O_4} \rceil$ bits or $\left\lceil log_2^{C_{N_3-1}^{M-1}} \right\rceil + \lceil log_2^{O_4} \rceil$ bits for calculating the precoding is sent to the network device, in which the first basis vector indication information is used to indicate M FD basis vectors selected by the terminal and M is a positive integer.

S202: second basis vector indication information of $\left\lceil log_2^{C_{N_1 N_2}^L} \right\rceil + \lceil log_2^{O_1 O_2} \rceil$ bits for calculating the precoding is sent to the network device, in which the second basis vector indication information is used to indicate L SD basis vectors selected by the terminal and L is a positive integer.

S203: third basis vector indication information of $\left\lceil log_2^{C_{ML}^{N'}} \right\rceil$ bits for calculating the precoding is sent to the network device, in which the third basis vector indication information is used to indicate the one or more SD-FD basis vector pairs selected by the terminal.

L is the number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, N' is the number of the one or more SD-FD basis vector pairs in each polarization direction, $O_1$ is an oversampling factor of the one or more SD basis vectors in the horizontal direction, $O_2$ is an oversampling factor of the one or more SD basis vectors in the vertical direction, $O_4$ is an oversampling factor of the one or more FD basis vectors.

In an embodiment of the present disclosure, the basis vector indication information is used to indicate the basis vector pair selected by the terminal, and the basis vector pair includes the one or more SD-FD basis vector pairs.

Based on this, the terminal sends the first basis vector indication information of $\left\lceil log_2^{C_{N_3}^M} \right\rceil + \left\lceil log_2^{O_4} \right\rceil$ or $\left\lceil log_2^{C_{N_3-1}^{M-1}} \right\rceil + \left\lceil log_2^{O_4} \right\rceil$ bits for calculating the precoding to the network device, in which the first basis vector indication information is used to indicate M FD basis vectors selected by the terminal, and M is a positive integer.

Afterwards, the terminal sends the second basis vector indication information of $\left\lceil log_2^{C_{N_1 N_2}^L} \right\rceil + \left\lceil log_2^{O_1 O_2} \right\rceil$ bits for calculating the precoding to the network device, in which the second basis vector indication information is used to indicate L SD basis vectors selected by the terminal, and L is a positive integer.

Afterwards, the terminal sends the third basis vector indication information of $\left\lceil log_2^{C_{ML}^{N'}} \right\rceil$ bits for calculating the precoding to the network device, in which the third basis vector indication information is used to indicate the SD-FD basis vector pair selected by the terminal.

It should be noted that, in the embodiments of the present disclosure, S201 to S203 may be implemented separately or in combination with any other steps in the embodiments of the present disclosure, for example, they may be implemented in combination with S21 and/or S31 and/or S41 and/or S51 and/or S61 and/or S71 and/or S81 and/or S91 and/or S101 to S103 and/or S111 to S113 and/or S121 and/or S131 to S133 and/or S141 to S143 and/or S151 and/or S161 to S163 and/or S171 to S173 and/or S181 and/or S191 to S193 in the embodiments of the present disclosure, and the embodiments of the present disclosure are not limited to this.

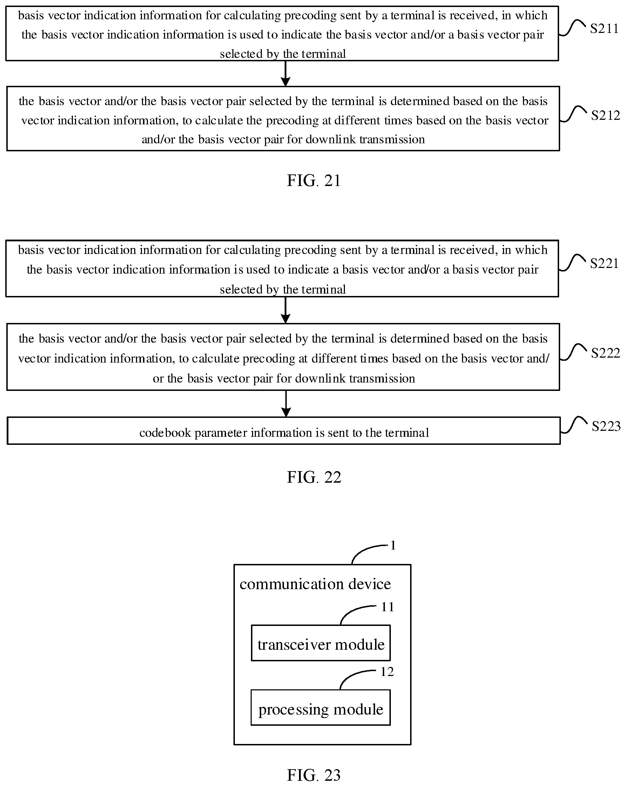

FIG. 21 is a flowchart of a method for reporting the selection indication of the basis vector provided in an embodiment of the present disclosure.

As shown in FIG. 21, the method is executed by the network device, and the method may include but is not limited to the following steps.

S211: basis vector indication information for calculating precoding sent by a terminal is received, in which the basis vector indication information is used to indicate the basis vector and/or a basis vector pair selected by the terminal.

S212: the basis vector and/or the basis vector pair selected by the terminal is determined based on the basis vector indication information, to calculate the precoding at different times based on the basis vector and/or the basis vector pair for downlink transmission.

The basis vector and/or basis vector pairs include at least one of:

one or more time domain (TD) basis vectors;
one or more doppler domain (DD) basis vectors;
one or more spatial domain (SD)-frequency domain (FD) basis vector pairs;
one or more TD-FD basis vector pairs; or
one or more DD-FD basis vector pairs.

In an embodiment of the present disclosure, for terminals moving at medium and high speeds, due to the rapid change of the channel in the time domain, Channel Status Information (CSI) is still fed back based on the traditional Type II codebook. The fed-back CSI no longer matches the current channel information, resulting in a degradation of system performance. To solve this problem, the time domain TD basis vector or Doppler domain (DD) basis vector is introduced on the basis of the Rel-16/17 Type II codebook, which may realize the precoding prediction at the future moment, so that the predicted precoding matches the channel at the corresponding moment in the future.

The codebook structure corresponding to the enhanced CSI feedback based on the Rel-16/17 Type II codebook may be written as ( $W_f^* \otimes W_1) W_2 W_t^{\mathrm{H}}$ or $W_1 \tilde{W}_2 (W_f \otimes W_d)^{\mathrm{H}}$. In these two codebook structures, $W_1$, $W_2$ and $W_f$ respectively represent one or more SD basis vectors combination, the combination coefficient matrix and one or more FD basis vectors combination, and $W_d$ and $W_t$ respectively represent the one or more DD basis vectors combination and the one or more TD basis vectors combination. The DD basis vector and the TD basis vector may be represented by oversampled or non-oversampled DFT or DCT basis vectors, or a Slepian sequence. In order to determine the $W_d$ and $W_t$ in the codebook, the terminal needs to report the selected DD/TD basis vector indication to the network device.

In an embodiment of the present disclosure, the terminal sends basis vector indication information for calculating the precoding to the network device, in which the basis vector indication information is used to indicate a basis vector and/or a basis vector pair selected by the terminal, and the precoding is calculated based on $\left(W_f^* \otimes W_1\right) W_2 W_t^{\mathrm{H}}$ or $W_1 \tilde{W}_2 (W_f \otimes W_d)^H$.

It may be understood that the precoding is calculated based on $\left(W_f^* \otimes W_1\right) W_2 W_t^{\mathrm{H}}$ or $W_1 \tilde{W}_2 (W_f \otimes W_d)^H$, the precoding calculation based on $\left(W_f^* \otimes W_1\right) W_2 W_t^{\mathrm{H}}$ or $W_1 \tilde{W}_2 (W_f \otimes W_d)^H$ requires the terminal to report the selected TD basis vector or DD basis vector.

In an embodiment of the present disclosure, the basis vector indication information indicates the basis vector and/or the basis vector pair selected by the terminal, which includes at least one of:

one or more time domain (TD) basis vectors;
one or more doppler domain (DD) basis vectors;
one or more spatial domain (SD)-frequency domain (FD) basis vector pairs;
one or more TD-FD basis vector pairs; or
one or more DD-FD basis vector pairs.

In an embodiment of the present disclosure, the basis vector indication information indicates the TD basis vector selected by the terminal.

In an embodiment of the present disclosure, the basis vector indication information indicates the DD basis vector selected by the terminal.

In an embodiment of the present disclosure, the basis vector indication information indicates the SD-FD basis vector pair selected by the terminal.

In an embodiment of the present disclosure, the basis vector indication information indicates the TD-FD basis vector pair selected by the terminal.

In an embodiment of the present disclosure, the basis vector indication information indicates the DD-FD basis vector pair selected by the terminal.

In an embodiment of the present disclosure, the basis vector indication information indicates the basis vectors and/or the basis vector pairs selected by the terminal, and the basis vectors and/or the basis vector pairs include one or more of TD basis vectors, DD basis vectors, SD-FD basis vector pairs, TD-FD basis vector pairs, and DD-FD basis vector pairs. After the network device receives the basis vector indication information sent by the terminal, it may determine the basis vectors and/or the basis vector pairs selected by the terminal, so that it may calculate precoding based on $\left(W_f^* \otimes W_1\right) W_2 W_t^{\mathrm{H}}$ or $W_1 \tilde{W}_2 (W_f \otimes W_d)^H$, and predict the precoding at a future moment, so that the predicted precoding matches the channel at a corresponding moment in the future, so as to improve system performance and reduce the basis vector indication overhead.

By implementing the embodiments of the present disclosure, the network device receives the basis vector indication information for calculating the precoding sent by the terminal, in which the basis vector indication information is used to indicate the basis vector and/or basis vector pair selected by the terminal; the basis vector and/or basis vector pair selected by the terminal is determined based on the basis vector indication information, so as to calculate the precoding at different times according to the basis vector and/or basis vector pair for downlink transmission, and the precoding is calculated according to $\left(W_f^* \otimes W_1\right) W_2 W_t^{\mathrm{H}}$ or, $W_1 \tilde{W}_2 (W_f \otimes W_d)^H$ and the basis vector and/or basis vector pair includes one or more of the TD basis vectors, the DD basis vectors, the SD-FD basis vector pairs, the TD-FD basis vector pairs, and the DD-FD basis vector pairs. Thus, the terminal is supported to select, indicate and report other basis vectors and/or basis vector pairs other than the SD basis vector and the FD basis vector, so that the predicted precoding matches the channel at a corresponding moment in the future, so as to improve system performance and reduce the basis vector indication overhead.

In some embodiments, $W_1$ is an SD basis vector or a port selection matrix.

In an embodiment of the present disclosure, the precoding is calculated based on $\left(W_f^* \otimes W_1\right) W_2 W_t^{\mathrm{H}}$ or $W_1 \tilde{W}_2 (W_f \otimes W_d)^H$, $W_1$ is the SD basis vector or the port selection matrix, that is, it may be a port selection matrix $W_1$ in the version 16 (Rel-16) or version 17 (Rel-17) type 2 (Type II) port selection codebook.

In some embodiments, receiving, by the network device, the basis vector indication information for calculating the precoding sent by the terminal, includes:

receiving the basis vector indication information for calculating the precoding of any data transmission layer sent by the terminal.

In an embodiment of the present disclosure, the terminal sends the basis vector indication information for calculating the precoding to the network device. The basis vector indication information is used to indicate the basis vector and/or the basis vector pair selected by the terminal, and may be the basis vector and/or the basis vector pair selected by the terminal for calculating the precoding of a certain data transmission layer.

In some embodiments, when a rank of data transmission is greater than 1, each data transmission layer uses the same or different basis vectors, and/or each data transmission layer uses the same or different basis vector pairs.

In an embodiment of the present disclosure, when the rank of data transmission is greater than 1, each data transmission layer may use the same or different basis vectors, and/or each data transmission layer may use the same or different basis vector pairs.

In some embodiments, if different data transmission layers use different basis vectors and/or basis vector pairs, each data transmission layer independently indicates the basis vectors and/or the basis vector pairs used.

In the embodiments of the present disclosure, if different data transmission layers adopt different basis vectors and/or basis vector pairs, each data transmission layer independently indicates the basis vectors and/or basis vector pairs used, that is, the terminal may send the basis vectors and/or the basis vector pairs selected by the terminals for each data transmission layer to the network device, and the basis vectors and/or basis vector pairs selected by the terminal for each data transmission layer are respectively indicated through independent basis vector indication information.

In some embodiments, sending, by the network device, codebook parameter information to the terminal, in which the codebook parameter information includes at least one of:

lengths of one or more SD basis vectors;
lengths of one or more FD basis vectors;
lengths of the one or more TD basis vectors;
lengths of the one or more DD basis vectors;
a number of one or more SD basis vectors;
a number of one or more FD basis vectors;
a number of one or more TD basis vectors;
a number of one or more DD basis vectors;
a number of one or more SD-FD basis vector pairs;
a number of one or more TD-FD basis vector pairs; or
a number of one or more DD-FD basis vector pairs.

In an embodiment of the present disclosure, the terminal receives codebook parameter information sent by the network device to select basis vectors and/or basis vector pairs according to the codebook parameter information.

The terminal receives the codebook parameter information sent by the network device, and the codebook parameter information includes the number of the lengths of the SD basis vector.

The terminal receives the codebook parameter information sent by the network device, and the codebook parameter information includes the number of the lengths of the FD basis vector.

The terminal receives the codebook parameter information sent by the network device, and the codebook parameter information includes the number of the lengths of the TD basis vector.

The terminal receives the codebook parameter information sent by the network device, and the codebook parameter information includes the number of the lengths of the DD basis vector.

The terminal receives the codebook parameter information sent by the network device, and the codebook parameter information includes the number of SD basis vectors.

The terminal receives the codebook parameter information sent by the network device, and the codebook parameter information includes the number of FD basis vectors.

The terminal receives the codebook parameter information sent by the network device, and the codebook parameter information includes the number of TD basis vectors.

The terminal receives the codebook parameter information sent by the network device, and the codebook parameter information includes the number of DD basis vectors.

The terminal receives the codebook parameter information sent by the network device, and the codebook parameter information includes the number of SD-FD basis vector pairs.

The terminal receives the codebook parameter information sent by the network device, and the codebook parameter information includes the number of TD-FD basis vector pairs.

The terminal receives the codebook parameter information sent by the network device, and the codebook parameter information includes the number of DD-FD basis vector pairs.

It should be noted that the above embodiments are not exhaustive but are only illustrations of some embodiments, and the above embodiments may be implemented individually or in combination. The above embodiments are only for illustration and are not intended to be specific limitations on the scope of protection of the embodiments of the present disclosure.

In some embodiments, the basis vector includes the one or more DD basis vectors or the one or more TD basis vectors,

for the one or more SD basis vectors, the terminal selects the same DD basis vector; or
for the one or more FD basis vectors, the terminal selects the same DD basis vector; or
for the one or more SD basis vectors and the one or more FD basis vectors, the terminal selects the same DD basis vector; or
for the one or more SD basis vectors, the terminal selects the same TD basis vector; or
for the one or more FD basis vectors, the terminal selects the same TD basis vector; or
for the one or more SD basis vectors and the one or more FD basis vectors, the terminal selects the same TD basis vector.

In an embodiment of the present disclosure, the basis vector indication information is used to indicate the basis vector selected by the terminal, and the basis vector includes the one or more DD basis vectors, in which for the one or more SD basis vectors, the terminal selects the same DD basis vector.

In an embodiment of the present disclosure, the basis vector indication information is used to indicate the basis vector selected by the terminal, and the basis vector includes the one or more DD basis vectors, in which for the one or more FD basis vectors, the terminal selects the same DD basis vector.

In an embodiment of the present disclosure, the basis vector indication information is used to indicate the basis vector selected by the terminal, and the basis vector includes the one or more DD basis vectors, in which for the one or more SD basis vectors and the one or more FD basis vectors, the terminal selects the same DD basis vector.

In an embodiment of the present disclosure, the basis vector indication information is used to indicate the basis vector selected by the terminal, and the basis vector includes the one or more TD basis vectors, in which for the one or more SD basis vectors, the terminal selects the same TD basis vector.

In an embodiment of the present disclosure, the basis vector indication information is used to indicate the basis vector selected by the terminal, and the basis vector includes the one or more TD basis vectors, in which for the one or more FD basis vectors, the terminal selects the same TD basis vector.

In an embodiment of the present disclosure, the basis vector indication information is used to indicate the basis vector selected by the terminal, and the basis vector includes the one or more TD basis vectors, in which for the one or more SD basis vectors and the one or more FD basis vectors, the terminal selects the same TD basis vector.

In some embodiments, receiving, by the network device, the basis vector indication information for calculating the precoding sent by the terminal, includes:

receiving the basis vector indication information of $X + \left\lceil \log_2^{O_3} \right\rceil$ bits for calculating the precoding sent by the terminal,
in which the basis vector indication information is used to indicate the one or more DD basis vectors or the one or more TD basis vectors selected by the terminal, $O_3 \geq 1$, $O_3$ is a sampling factor of the one or more DD basis vectors or a sampling factor of the one or more TD basis vectors; in a case that X is indicated by a combination coefficient,

$$X = \left\lceil \log_2^{C_{N_4}^{S}} \right\rceil \text{ or } X = \left\lceil \log_2^{C_{N_4-1}^{S-1}} \right\rceil$$, in a case that X is indicated by a bitmap, $X = N_4$ or $X = N_4 - 1$, in which $N_4$ is a number of the lengths of the one or more DD basis vectors or of the lengths of the one or more TD basis vectors, S is a number of the one or more DD basis vectors or of the one or more TD basis vectors selected by the terminal, $C_{N_4}^{S}$ indicates a combination number calculation by selecting S from $N_4$, $C_{N_4-1}^{S-1}$ indicates a combination number calculation by selecting S-1 from $N_4 - 1$, and $\lceil x \rceil$ indicates rounding up of x.

In an embodiment of the present disclosure, for the one or more SD basis vectors and/or the one or more FD basis vectors, the terminal selects the same DD basis vector or TD basis vector, and the terminal sends the basis vector indication information of $X + \left\lceil \log_2^{O_3} \right\rceil$ bits to the network device; the basis vector indication information is used to indicate the DD basis vector or TD basis vector selected by the terminal.

In a case that X is indicated by a combination coefficient, $X = \left\lceil \log_2^{C_{N_4}^{S}} \right\rceil$, in a case that X is indicated by a bitmap, $X = N_4$.

The first DD basis vector or the first TD basis vector is always selected through a phase offset, then in a case that X is indicated by a combination coefficient, $X = \left\lceil \log_2^{C_{N_4-1}^{S-1}} \right\rceil$, in a case that X is indicated by a bitmap, $X = N_4 - 1$.

Exemplarily, for the one or more SD basis vectors and/or the one or more FD basis vectors, the terminal selects the same DD basis vector or TD basis vector.

A number of the lengths of the DD basis vectors or of the lengths of the TD basis vectors is $N_4 = 4$, the number of DD basis vectors or the number of TD basis vectors selected by the terminal is $S = 2$, the number of SD basis vectors selected by the terminal is $L = 2$, the number of FD basis vectors selected by the terminal is $M = 4$, the number of DD-FD basis vector pairs or the number of TD-FD basis vector pairs is $N = 4$, the number of SD-FD basis vector pairs in each polarization direction is $N' = 8$, the number of frequency domain PMI subbands $N_3 = 12$, the oversampling factors of the SD basis vectors in the horizontal direction and the vertical direction $O_1$ and $O_2$ are both 4, the oversampling factor of the DD basis vector or the TD basis vector $O_3$ is 1, the oversampling factor of the FD basis vector $O_4$ is 1, that is oversampling is not implemented. The number of antenna ports in the horizontal direction in a single polarization direction $N_1 = 2$, and the number of antenna ports in the vertical direction in a single polarization direction $N_2 = 4$.

The following description is based on that the terminal reports the basis vector indication information to the network device, the basis vector indication information indicates the DD basis vector or the TD basis vector selected by the terminal, the basis vector indication information is used to indicate the precoding of a certain data transmission layer, the DD basis vector or the TD basis vector selected by the terminal, or the DD-FD basis vector pair, or the TD-FD basis vector pair.

The one or more SD basis vectors and the one or more FD basis vectors correspond to the same DD basis vector or TD basis vector. The terminal only needs to send the basis vector indication information of $\left\lceil \log_2^{C_{N_4}^{S}} \right\rceil + \left\lceil \log_2^{O_3} \right\rceil = 3$ bits to the network device to indicate the selected DD basis vector or TD basis vector.

Optionally, the terminal always select the first DD basis vector or TD basis vector by the phase offset, and the terminal sends the basis vector indication information of $\left\lceil \log_2^{C_{N_4-1}^{S-1}} \right\rceil + \left\lceil \log_2^{O_3} \right\rceil = 2\text{bits}$ to the network device to indicate the selected DD basis vector or TD basis vector.

In some embodiments, the basis vectors include the one or more DD basis vectors or the one or more TD basis vectors,

for different SD basis vectors, the terminal selects the same DD basis vector; or
for different SD basis vectors, the terminal selects different DD basis vectors; or
for different FD basis vectors, the terminal selects the same DD basis vector; or
for different FD basis vectors, the terminal selects different DD basis vectors; or
for different SD basis vectors, the terminal selects the same TD basis vector; or
for different SD basis vectors, the terminal selects different TD basis vectors; or
for different FD basis vectors, the terminal selects the same TD basis vector; or
for different FD basis vectors, the terminal selects different TD basis vectors.

In an embodiment of the present disclosure, the basis vector indication information is used to indicate the basis vector selected by the terminal, and the basis vector includes the one or more DD basis vectors, in which for different SD basis vectors, the terminal selects the same DD basis vector.

In an embodiment of the present disclosure, the basis vector indication information is used to indicate the basis vector selected by the terminal, and the basis vector includes the one or more DD basis vectors, in which for different SD basis vectors, the terminal selects different DD basis vectors.

In an embodiment of the present disclosure, the basis vector indication information is used to indicate the basis vector selected by the terminal, and the basis vector includes the one or more DD basis vectors, in which for different FD basis vectors, the terminal selects the same DD basis vector.

In an embodiment of the present disclosure, the basis vector indication information is used to indicate the basis vector selected by the terminal, and the basis vector includes the one or more DD basis vectors, in which for different FD basis vectors, the terminal selects different DD basis vectors.

In an embodiment of the present disclosure, the basis vector indication information is used to indicate the basis vector selected by the terminal, and the basis vector includes the one or more TD basis vectors, in which for different SD basis vectors, the terminal selects the same TD basis vector.

In an embodiment of the present disclosure, the basis vector indication information is used to indicate the basis vector selected by the terminal, and the basis vector includes the one or more TD basis vectors, in which for different SD basis vectors, the terminal selects different TD basis vectors.

In an embodiment of the present disclosure, the basis vector indication information is used to indicate the basis vector selected by the terminal, and the basis vector includes the one or more TD basis vector, in which for different FD basis vectors, the terminal selects the same TD basis vector.

In an embodiment of the present disclosure, the basis vector indication information is used to indicate the basis vector selected by the terminal, and the basis vector includes the one or more TD basis vectors, in which for different FD basis vectors, the terminal selects different TD basis vectors.

In some embodiments, for the same SD basis vectors in two polarization directions, the terminal selects the same DD basis vector; or for the same SD basis vectors in two polarization directions, the terminal selects the same TD basis vector.

In an embodiment of the present disclosure, the basis vector indication information is used to indicate the basis vector selected by the terminal, and the basis vector includes the one or more DD basis vectors, in which for the same SD basis vectors in two polarization directions, the terminal selects the same DD basis vector.

In an embodiment of the present disclosure, the basis vector indication information is used to indicate the basis vector selected by the terminal, and the basis vector includes the one or more TD basis vectors, in which for the same SD basis vectors in two polarization directions, the terminal selects the same TD basis vector.

In some embodiments, receiving, by the network device, the basis vector indication information for calculating the precoding sent by the terminal, includes:

receiving the basis vector indication information of $L \times \left( \left\lceil log_2^{C_{N_4}^S} \right\rceil + \left\lceil log_2^{O_3} \right\rceil \right)$ bits or $L \times \left( N_4 + \left\lceil log_2^{O_3} \right\rceil \right)$

bits for calculating the precoding sent by the terminal,

in which the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the one or more DD basis vectors or of the lengths of the one or more TD basis vectors, and S is a number of the one or more DD basis vectors or of the one or more TD basis vectors selected by the terminal.

In the embodiments of the present disclosure, for different SD basis vectors or different FD basis vectors, the terminal selects the same DD basis vector, or, for different SD basis vectors or different FD basis vectors, the terminal selects the same TD basis vector, or, for different SD basis vectors or different FD basis vectors, the terminal selects different DD basis vectors, or, for different SD basis vectors or different FD basis vectors, the terminal selects different TD basis vectors.

In an embodiment of the present disclosure, for the same SD basis vectors in two polarization directions, the terminal selects the same DD basis vector; or for the same SD basis vectors in two polarization directions, the terminal selects the same TD basis vector.

Based on this, the terminal sends the basis vector indication information of $L \times \left( \left\lceil log_2^{C_{N_4}^S} \right\rceil + \left\lceil log_2^{O_3} \right\rceil \right)$ bits to the network device, in which the basis vector indication information is used to indicate the DD basis vector or TD basis vector selected by the terminal.

Alternatively, the terminal sends the basis vector indication information of $L \times \left( N_4 + \left\lceil log_2^{O_3} \right\rceil \right)$ bits to the network device, in which the basis vector indication information is used to indicate the DD basis vector or TD basis vector selected by the terminal.

In some embodiments, for different SD basis vectors in each polarization direction, the terminal selects different DD basis vectors; or

for different SD basis vectors in each polarization direction, the terminal selects different TD basis vectors; or
for different SD basis vectors in each polarization direction, the terminal selects the same DD basis vector; or
for different SD basis vectors in each polarization direction, the terminal selects the same TD basis vector; or
for different SD basis vectors in two polarization directions, the terminal selects the same DD basis vector; or
for different SD basis vectors in two polarization directions, the terminal selects different DD basis vectors; or
for different SD basis vectors in two polarization directions, the terminal selects the same TD basis vector; or
for different SD basis vectors in two polarization directions, the terminal selects different TD basis vectors.

In an embodiment of the present disclosure, the basis vector indication information is used to indicate the basis vector selected by the terminal, and the basis vector includes the one or more DD basis vectors, for different SD basis vectors in each polarization direction, the terminal selects different DD basis vectors.

In an embodiment of the present disclosure, the basis vector indication information is used to indicate the basis vector selected by the terminal, and the basis vector includes the one or more TD basis vectors, in which for different SD basis vectors in each polarization direction, the terminal selects different TD basis vectors.

In an embodiment of the present disclosure, the basis vector indication information is used to indicate the basis vector selected by the terminal, and the basis vector includes the one or more DD basis vectors, in which for different SD basis vectors in each polarization direction, the terminal selects the same DD basis vector.

In an embodiment of the present disclosure, the basis vector indication information is used to indicate the basis vector selected by the terminal, and the basis vector includes the one or more TD basis vectors, in which for different SD basis vectors in each polarization direction, the terminal selects the same TD basis vector.

In an embodiment of the present disclosure, the basis vector indication information is used to indicate the basis vector selected by the terminal, and the basis vector includes the one or more DD basis vectors, in which for different SD basis vectors in two polarization directions, the terminal selects the same DD basis vector.

In an embodiment of the present disclosure, the basis vector indication information is used to indicate the basis vector selected by the terminal, and the basis vector includes the one or more DD basis vectors, in which for different SD basis vectors in two polarization directions, the terminal selects different DD basis vectors.

In an embodiment of the present disclosure, the basis vector indication information is used to indicate the basis vector selected by the terminal, and the basis vector includes the one or more TD basis vectors, in which for different SD basis vectors in two polarization directions, the terminal selects the same TD basis vector.

In an embodiment of the present disclosure, the basis vector indication information is used to indicate the basis vector selected by the terminal, and the basis vector includes the one or more TD basis vectors, in which for different SD basis vectors in two polarization directions, the terminal selects different TD basis vectors.

In some embodiments, receiving, by the network device, the basis vector indication information sent by the terminal for calculating the precoding, including:

receiving the basis vector indication information of $2\mathrm{L} \times \left( \left\lceil log_2^{C_{N_4}^S} \right\rceil + \left\lceil \log_2^{O_3} \right\rceil \right)$ bits or $2\mathrm{L} \times \left( \mathrm{N}_4 + \left\lceil \log_2^{O_3} \right\rceil \right)$ bits for calculating the precoding sent by the terminal,

in which the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the DD basis vectors or of the TD basis vectors, and S is a number of the one or more DD basis vectors or of the one or more TD basis vectors selected by the terminal.

In an embodiment of the present disclosure, for different SD basis vectors in each polarization direction, the terminal selects the same or different DD basis vectors; or for different SD basis vectors in each polarization direction, the terminal selects the same or different TD basis vectors.

In an embodiment of the present disclosure, for different SD basis vectors in two polarization directions, the terminal selects the same or different DD basis vectors; or for different SD basis vectors in two polarization directions, the terminal selects the same or different TD basis vectors.

Based on this, the terminal sends the basis vector indication information of $2\mathrm{L} \times \left( \left\lceil log_2^{C_{N_4}^S} \right\rceil + \left\lceil \log_2^{O_3} \right\rceil \right)$ bits to the network device, in which the basis vector indication information is used to indicate the DD basis vector or TD basis vector selected by the terminal.

Alternatively, the terminal sends the basis vector indication information of 2L $\times \left(N_4 + \left\lceil \log_2^{O_3} \right\rceil\right)$ bits to the network device, in which the basis vector indication information is used to indicate the DD basis vector or TD basis vector selected by the terminal.

In some embodiments, the basis vectors include the one or more DD basis vectors or the one or more TD basis vectors,

for different SD basis vectors and different FD basis vectors, the terminal selects the same DD basis vector; or
for different SD basis vectors and different FD basis vectors, the terminal selects different DD basis vectors; or
for different SD basis vectors and different FD basis vectors, the terminal selects the same TD basis vector; or
for different SD basis vectors and different FD basis vectors, the terminal selects different TD basis vectors.

In an embodiment of the present disclosure, the basis vector indication information is used to indicate the basis vector selected by the terminal, and the basis vector includes the one or more DD basis vectors, in which for different SD basis vectors and different FD basis vectors, the terminal selects the same DD basis vector.

In an embodiment of the present disclosure, the basis vector indication information is used to indicate the basis vector selected by the terminal, and the basis vector includes the one or more DD basis vectors, in which for different SD basis vectors and different FD basis vectors, the terminal selects different DD basis vectors.

In an embodiment of the present disclosure, the basis vector indication information is used to indicate the basis vector selected by the terminal, and the basis vector includes the one or more TD basis vectors, in which for different SD basis vectors and different FD basis vectors, the terminal selects the same TD basis vector.

In an embodiment of the present disclosure, the basis vector indication information is used to indicate the basis vector selected by the terminal, and the basis vector includes the one or more TD basis vectors, in which for different SD basis vectors and different FD basis vectors, the terminal selects different TD basis vectors.

In some embodiments, for same SD-FD basis vector pairs in two polarization directions, the terminal selects the same DD basis vector; or

for same SD-FD basis vector pairs in two polarization directions, the terminal selects the same TD basis vector; or
for different SD-FD basis vector pairs in each polarization direction, the terminal selects the same DD basis vector; or
for different SD-FD basis vector pairs in each polarization direction, the terminal selects different DD basis vectors; or
for different SD-FD basis vector pairs in each polarization direction, the terminal selects the same TD basis vector; or
for different SD-FD basis vector pairs in each polarization direction, the terminal selects different TD basis vectors.

In an embodiment of the present disclosure, the basis vector indication information is used to indicate the basis vector selected by the terminal, and the basis vector includes the one or more DD basis vectors, in which for the same SD-FD basis vector pairs in two polarization directions, the terminal selects the same DD basis vector.

In an embodiment of the present disclosure, the basis vector indication information is used to indicate the basis vector selected by the terminal, and the basis vector includes the one or more TD basis vectors, in which for the same SD-FD basis vector pairs in two polarization directions, the terminal selects the same TD basis vector.

In an embodiment of the present disclosure, the basis vector indication information is used to indicate the basis vector selected by the terminal, and the basis vector includes the one or more DD basis vectors, in which for different SD-FD basis vector pairs in each different polarization direction, the terminal selects the same DD basis vector.

In an embodiment of the present disclosure, the basis vector indication information is used to indicate the basis vector selected by the terminal, and the basis vector includes the one or more DD basis vectors, in which for different SD-FD basis vector pairs in each different polarization direction, the terminal selects different DD basis vectors.

In an embodiment of the present disclosure, the basis vector indication information is used to indicate the basis vector selected by the terminal, and the basis vector includes the one or more TD basis vectors, in which for different SD-FD basis vector pairs and FD in each polarization direction, the terminal selects the same TD basis vector.

In an embodiment of the present disclosure, the basis vector indication information is used to indicate the basis vector selected by the terminal, and the basis vector includes the one or more TD basis vectors, in which different pair of SD-FD basis vector pairs in each different polarization direction, and the terminal selects different TD basis vectors.

In some embodiments, receiving, by the network device, the basis vector indication information for calculating precoding sent by the terminal, includes:

receiving the basis vector indication information of $N' \times \left( \left\lceil \log_2^{C_{N_4}^S} \right\rceil + \left\lceil \log_2^{O_3} \right\rceil \right)$ bits or

$$N' \times \left( N_4 + \left\lceil \log_2^{O_3} \right\rceil \right)$$ bits for calculating the precoding sent by the terminal,

in which the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of one or more TD basis vectors selected by the terminal.

In an embodiment of the present disclosure, for different SD basis vectors and different FD basis vectors, the terminal selects the same or different TD basis vectors, or the terminal selects the same or different DD basis vectors.

For different SD-FD basis vector pairs in each polarization direction, the terminal selects the same or different DD basis vectors, or for different SD-FD basis vector pairs in each polarization direction, the terminal selects the same or different TD basis vectors, or for the same SD-FD basis vector pairs in two polarization directions, the terminal selects the same DD basis vector or the same TD basis vector.

Based on this, the terminal sends the basis vector indication information of $$N' \times \left( \left\lceil \log_2^{C_{N_4}^S} \right\rceil + \left\lceil \log_2^{O_3} \right\rceil \right)$$ bits to the network device, in which the basis vector indication information is used to indicate the DD basis vector or the TD basis vector selected by the terminal.

Alternatively, the terminal sends the basis vector indication information of $$N' \times \left( N_4 + \left\lceil \log_2^{O_3} \right\rceil \right)$$ bits to the network device, in which the basis vector indication information is used to indicate the DD basis vector or the TD basis vector selected by the terminal.

In some embodiments, for different SD-FD basis vector pairs in each polarization direction, the terminal selects different DD basis vectors; or

for different SD-FD basis vector pairs in each polarization direction, the terminal selects different TD basis vectors; or
for different SD-FD basis vector pairs in two polarization directions, the terminal selects the same DD basis vector; or
for different SD-FD basis vector pairs in two polarization directions, the terminal selects different DD basis vectors; or
for different SD-FD basis vector pairs in two polarization directions, the terminal selects the same TD basis vector; or
for different SD-FD basis vector pairs in two polarization directions, the terminal selects different TD basis vectors.

In an embodiment of the present disclosure, the basis vector indication information is used to indicate the basis vector selected by the terminal, and the basis vector includes the one or more DD basis vectors, in which for different SD-FD basis vector pairs in each polarization direction, the terminal selects different DD basis vectors.

In an embodiment of the present disclosure, the basis vector indication information is used to indicate the basis vector selected by the terminal, and the basis vector includes the one or more TD basis vectors, in which for different SD-FD basis vector pairs in each polarization direction, the terminal selects different TD basis vectors.

In an embodiment of the present disclosure, the basis vector indication information is used to indicate the basis vector selected by the terminal, and the basis vector includes the one or more DD basis vectors, in which for different SD-FD basis vector pairs in two polarization directions, the terminal selects the same DD basis vector.

In an embodiment of the present disclosure, the basis vector indication information is used to indicate the basis vector selected by the terminal, and the basis vector includes the one or more DD basis vectors, in which for different SD-FD basis vector pairs in two polarization directions, the terminal selects different DD basis vectors.

In an embodiment of the present disclosure, the basis vector indication information is used to indicate the basis vector selected by the terminal, and the basis vector includes the one or more TD basis vector, in which for different SD-FD basis vector pairs in two polarization directions, the terminal selects the same TD basis vector.

In an embodiment of the present disclosure, the basis vector indication information is used to indicate the basis vector selected by the terminal, and the basis vector includes the one or more TD basis vectors, in which for different SD-FD basis vector pairs in two polarization directions, the terminal selects different TD basis vectors.

In some embodiments, receiving, by the network device, the basis vector indication information for calculating the precoding sent by the terminal, includes:

receiving the basis vector indication information of $$2N' \times \left( \left\lceil \log_2^{C_{N_4}^S} \right\rceil + \left\lceil \log_2^{O_3} \right\rceil \right)$$ bits or

$$2N' \times \left(N_4 + \lceil \log_2^{O_3} \rceil \right)$$ bits for calculating the precoding sent by the terminal,

in which the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of the one or more TD basis vectors selected by the terminal.

In an embodiment of the present disclosure, for different SD basis vectors and different FD basis vectors, the terminal selects the same or different TD basis vectors, or the terminal selects the same or different DD basis vectors.

For different SD-FD basis vector pairs in each polarization direction, the terminal selects different DD basis vectors or different TD basis vectors, or for different SD-FD basis vector pairs in two polarization directions, the terminal selects the same or different DD basis vectors, or for different SD-FD basis vector pairs in two polarization directions, the terminal selects the same or different TD basis vectors.

Based on this, the terminal sends the basis vector indication information of $$2N' \times \left( \lceil \log_2^{C_{N_4}^{S}} \rceil + \lceil \log_2^{O_3} \rceil \right)$$ bits for calculating the precoding to the network device, in which the basis vector indication information is used to indicate the DD basis vector or TD basis vector selected by the terminal.

Alternatively, the terminal sends the basis vector indication information of $$2N' \times \left(N_4 + \lceil \log_2^{O_3} \rceil \right)$$ bits for calculating the precoding to the network device, in which the basis vector indication information is used to indicate the DD basis vector or the TD basis vector selected by the terminal.

In some embodiments, the basis vector pair includes the one or more DD-FD basis vector pairs or one or more TD-FD basis vector pairs,

for the one or more SD basis vectors, the terminal selects the same DD-FD basis vector pair; or
for the one or more SD basis vectors, the terminal selects the same TD-FD basis vector pair.

In an embodiment of the present disclosure, the basis vector indication information is used to indicate the basis vector pair selected by the terminal, the basis vector pair includes the one or more DD-FD basis vector pairs, in which for the one or more SD basis vectors, the terminal selects the same DD-FD basis vector pair.

In an embodiment of the present disclosure, the basis vector indication information is used to indicate the basis vector pair selected by the terminal, the basis vector pair includes the one or more TD-FD basis vector pairs, in which for the one or more SD basis vectors, the terminal selects the same TD-FD basis vector pair.

In some embodiments, receiving, by the network device, the basis vector indication information for calculating the precoding sent by the terminal, includes at least one of:

receiving the basis vector indication information of $$\lceil \log_2^{C_{N_3 N_4}^{N}} \rceil + \lceil \log_2^{O_3} \rceil + \lceil \log_2^{O_4} \rceil$$ bits for calculating the precoding sent by the terminal, in which the basis vector indication information is used to indicate the one or more DD-FD basis vector pairs or the one or more TD-FD basis vector pairs selected by the terminal;

receiving the basis vector indication information of $$\lceil \log_2^{C_{N_3(N_4-1)}^{N}} \rceil + \lceil \log_2^{O_3} \rceil + \lceil \log_2^{O_4} \rceil$$ bits for calculating the precoding sent by the terminal, in which the basis vector indication information is used to indicate the one or more DD-FD basis vector pairs or the one or more TD-FD basis vector pairs selected by the terminal;

receiving the basis vector indication information of $$\lceil \log_2^{C_{(N_3-1)N_4}^{N}} \rceil + \lceil \log_2^{O_3} \rceil + \lceil \log_2^{O_4} \rceil$$ bits for calculating the precoding sent by the terminal, in which the basis vector indication information is used to indicate the one or more DD-FD basis vector pairs or the one or more TD-FD basis vector pairs selected by the terminal; or

receiving the basis vector indication information of $$\lceil \log_2^{C_{(N_3-1)(N_4-1)}^{N-1}} \rceil + \lceil \log_2^{O_3} \rceil + \lceil \log_2^{O_4} \rceil$$ bits for

calculating the precoding sent by the terminal, in which the basis vector indication information is used to indicate the one or more DD-FD basis vector pairs or the one or more TD-FD basis vector pairs selected by the terminal, in which, $N_3$ is a number of frequency domain PMI subbands, N is the number of the one or more DD-FD basis vector pairs or the number of the one or more TD-FD basis vector pairs, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, the basis vector indication information is used to indicate the basis vector pair selected by a terminal, the basis vector pair includes the one or more DD-FD basis vector pairs, in which, for the one or more SD basis vectors, the terminal selects the same DD-FD basis vector pair, or for the one or more SD basis vectors, the terminal selects the same TD-FD basis vector pair.

Based on this, the basis vector indication information of $\left\lceil log_2^{C_{N_3 N_4}^N} \right\rceil + \left\lceil log_2^{O_3} \right\rceil + \left\lceil log_2^{O_4} \right\rceil$ bits for calculating the precoding sent by the terminal is received, in which the basis vector indication information is used to indicate the DD-FD basis vector pair or the TD-FD basis vector pair selected by the terminal.

Alternatively, the basis vector indication information of $\left\lceil log_2^{C_{N_3(N_4-1)}^N} \right\rceil + \left\lceil log_2^{O_3} \right\rceil + \left\lceil log_2^{O_4} \right\rceil$ bits for calculating the precoding sent by the terminal is received, in which the basis vector indication information is used to indicate the DD-FD basis vector pair or the TD-FD basis vector pair selected by the terminal.

Alternatively, the basis vector indication information of $\left\lceil log_2^{C_{(N_3-1)N_4}^N} \right\rceil + \left\lceil log_2^{O_3} \right\rceil + \left\lceil log_2^{O_4} \right\rceil$ bits for calculating the precoding sent by the terminal is received, in which the basis vector indication information is used to indicate the DD-FD basis vector pair or the TD-FD basis vector pair selected by the terminal.

Alternatively, the basis vector indication information of $\left\lceil log_2^{C_{(N_3-1)(N_4-1)}^{N-1}} \right\rceil + \left\lceil log_2^{O_3} \right\rceil + \left\lceil log_2^{O_4} \right\rceil$ bits for calculating the precoding sent by the terminal is received, in which the basis vector indication information is used to indicate the DD-FD basis vector pair or the TD-FD basis vector pair selected by the terminal.

In some embodiments, receiving, by the network device, the basis vector indication information for calculating the precoding sent by the terminal, includes:

receiving first basis vector indication information of $\left\lceil log_2^{C_{N_4}^S} \right\rceil + \left\lceil log_2^{O_3} \right\rceil$ bits or $\left\lceil log_2^{C_{N_4-1}^{S-1}} \right\rceil + \left\lceil log_2^{O_3} \right\rceil$ bits for calculating the precoding sent by the terminal, in which the first basis vector indication information is used to indicate S DD basis vectors or S TD basis vectors selected by the terminal and S is a positive integer;

receiving second basis vector indication information of $\left\lceil log_2^{C_{N_3}^M} \right\rceil + \left\lceil log_2^{O_4} \right\rceil$ bits for calculating precoding sent by the terminal, in which the second basis vector indication information is used to indicate M FD basis vectors selected by the terminal and M is a positive integer;

receiving third basis vector indication information of M × S bits for calculating the precoding sent by the terminal, in which the third basis vector indication information is used to indicate the one or more DD-FD basis vector pairs or the one or more TD-FD basis vector pairs selected by the terminal,

in which, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, the basis vector indication information is used to indicate the basis vector pair selected by the terminal, the basis vector pair includes the one or more DD-FD basis vector pairs, in which, for the one or more SD basis vectors, the terminal selects the same DD-FD basis vector pair, or for the one or more SD basis vectors, the terminal selects the same TD-FD basis vector pair.

Based on this, the network device receives the first basis vector indication information of $\left\lceil log_2^{C_{N_4}^S} \right\rceil + \left\lceil log_2^{O_3} \right\rceil$ bits or $\left\lceil \log_2^{C_{N_4-1}^{S-1}} \right\rceil + \left\lceil \log_2^{O_3} \right\rceil$ bits for calculating of the precoding sent by the terminal, in which the first basis vector indication information is used to indicate S DD basis vectors or S TD basis vectors selected by the terminal, and S is a positive integer.

Afterwards, the network device receives the second basis vector indication information of $\left\lceil log_2^{C_{N_3}^M} \right\rceil + \left\lceil \log_2^{O_4} \right\rceil$ bits for calculating of the precoding sent by the terminal, in which the second basis vector indication information is used to indicate the M FD basis vectors selected by the terminal, and M is a positive integer.

Afterwards, the network device receives the third basis vector indication information of M×S bits for calculating of the precoding sent by the terminal, in which the third basis vector indication information is used to indicate the DD-FD basis vector pair or the TD-FD basis vector pair selected by the terminal.

In some embodiments, receiving, by the network device, the basis vector indication information for calculating the precoding sent by the terminal, includes:

receiving first basis vector indication information of $\left\lceil log_2^{C_{N_4-1}^{S-1}} \right\rceil + \left\lceil \log_2^{O_3} \right\rceil$ bits for calculating the precoding sent by the terminal, in which the first basis vector indication information is used to indicate S DD basis vectors or DD basis vectors selected by the terminal and S is a positive integer;

receiving second basis vector indication information of $\left\lceil log_2^{C_{N_3}^M} \right\rceil + \left\lceil \log_2^{O_4} \right\rceil$ bits for calculating the precoding sent by the terminal, in which the second basis vector indication information is used to indicate M FD basis vectors selected by the terminal and M is a positive integer;

receiving third basis vector indication information of $\left\lceil log_2^{C_{MS}^N} \right\rceil$ bits for calculating the precoding sent by the terminal, in which the third basis vector indication information is used to indicate the one or more DD-FD basis vector pairs or the one or more TD-FD basis vector pairs selected by the terminal,

in which, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, $O_4$ is an oversampling factor of the one or more FD basis vectors, and N is the number of the one or more the DD-FD basis vector pairs or the number of the one or more the TD-FD basis vector pairs.

In an embodiment of the present disclosure, the basis vector indication information is used to indicate the basis vector pair selected by the terminal, the basis vector pair includes the one or more DD-FD basis vector pairs, in which, for the one or more SD basis vectors, the terminal selects the same DD-FD basis vector pair, or for the one or more SD basis vectors, the terminal selects the same TD-FD basis vector pair.

Based on this, the network device receives the first basis vector indication information of $\left\lceil log_2^{C_{N_4-1}^{S-1}} \right\rceil + \left\lceil \log_2^{O_3} \right\rceil$ bits for calculating the precoding sent by the terminal, in which the first basis vector indication information is used to indicate S DD basis vectors or DD basis vectors selected by the terminal, and S is a positive integer.

Afterwards, the network device receives the second basis vector indication information of $\left\lceil log_2^{C_{N_3}^M} \right\rceil + \left\lceil \log_2^{O_4} \right\rceil$ bits for calculating the precoding sent by the terminal, in which the second basis vector indication information is used to indicate the M FD basis vectors selected by the terminal, and M is a positive integer.

Afterwards, the network device receives the third basis vector indication information of $\left\lceil log_2^{C_{MS}^N} \right\rceil$ bits for calculating the precoding sent by the terminal, in which the third basis vector indication information is used to indicate the DD-FD basis vector pair or the TD-FD basis vector pair selected by the terminal.

In some embodiments, the basis vector pair includes the one or more DD-FD basis vector pairs or the one or more TD-FD basis vector pairs,

for the same SD basis vector, the terminal selects the same DD-FD basis vector pair; or
for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or
for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

In an embodiment of the present disclosure, the basis vector indication information is used to indicate the basis vector pair selected by the terminal, the basis vector pair includes the one or more DD-FD basis vector pairs, in which for the same SD basis vector, the terminal selects the same DD-FD basis vector pair.

In an embodiment of the present disclosure, the basis vector indication information is used to indicate the basis vector pair selected by the terminal, the basis vector pair includes the one or more DD-FD basis vector pairs, in which for the same SD basis vector, the terminal selects different DD-FD basis vector pairs.

In an embodiment of the present disclosure, the basis vector indication information is used to indicate the basis vector pair selected by the terminal, the basis vector pair includes the one or more DD-FD basis vector pairs, in which for different SD basis vectors, the terminal selects the same DD-FD basis vector pair.

In an embodiment of the present disclosure, the basis vector indication information is used to indicate the basis vector pair selected by the terminal, the basis vector pair includes the one or more DD-FD basis vector pairs, in which for different SD basis vectors, the terminal selects different DD-FD basis vector pairs.

In an embodiment of the present disclosure, the basis vector indication information is used to indicate the basis vector pair selected by the terminal, the basis vector pair includes the one or more TD-FD basis vector pairs, in which for the SD basis vector, the terminal selects the same TD-FD basis vector pair.

In an embodiment of the present disclosure, the basis vector indication information is used to indicate the basis vector pair selected by the terminal, the basis vector pair includes the one or more TD-FD basis vector pairs, in which for the same SD basis vector, the terminal selects different TD-FD basis vector pairs.

In an embodiment of the present disclosure, the basis vector indication information is used to indicate the basis vector pair selected by the terminal, the basis vector pair includes the one or more TD-FD basis vector pairs, in which for different SD basis vectors, the terminal selects the same TD-FD basis vector pair.

In an embodiment of the present disclosure, the basis vector indication information is used to indicate the basis vector pair selected by the terminal, the basis vector pair includes the one or more TD-FD basis vector pairs, in which for different SD basis vectors, the terminal selects different TD-FD basis vector pairs.

In some embodiments, for different SD basis vectors in each polarization direction, the terminal selects the same DD-FD basis vector pair; or

for different SD basis vectors in each polarization direction, the terminal selects the same TD-FD basis vector pair; or
for different SD basis vectors in each polarization direction, the terminal selects different DD-FD basis vector pairs; or
for different SD basis vectors in each polarization direction, the terminal selects different TD-FD basis vector pairs; or
for different SD basis vectors in each polarization direction, and same SD basis vectors in two polarization directions, the terminal selects the same DD-FD basis vector pair; or
for different SD basis vectors in each polarization direction, and same SD basis vectors in two polarization directions, the terminal selects the same TD-FD basis vector pair.

In an embodiment of the present disclosure, the basis vector indication information is used to indicate the basis vector pair selected by the terminal, the basis vector pair includes the one or more DD-FD basis vector pairs, in which for different SD basis vectors in each polarization direction, the terminal selects the same DD-FD basis vector pair.

In an embodiment of the present disclosure, the basis vector indication information is used to indicate the basis vector pair selected by the terminal, the basis vector pair includes the one or more TD-FD basis vector pairs, in which for different SD basis vectors in each polarization direction, the terminal selects the same TD-FD basis vector pair.

In an embodiment of the present disclosure, the basis vector indication information is used to indicate the basis vector pair selected by the terminal, the basis vector pair includes the one or more DD-FD basis vector pairs, in which for different SD basis vectors in each polarization direction, the terminal selects different DD-FD basis vector pairs.

In an embodiment of the present disclosure, the basis vector indication information is used to indicate the basis vector pair selected by the terminal, the basis vector pair includes the one or more TD-FD basis vector pairs, in which for different SD basis vectors in each polarization direction, the terminal selects different TD-FD basis vector pairs.

In an embodiment of the present disclosure, the basis vector indication information is used to indicate the basis vector pair selected by the terminal, the basis vector pair includes the one or more DD-FD basis vector pairs, in which for different SD basis vectors in each polarization direction, and same SD basis vectors in two polarization directions, the terminal selects the same DD-FD basis vector pair.

In an embodiment of the present disclosure, basis vector indication information is used to indicate the basis vector pair selected by the terminal, the basis vector pair includes the one or more TD-FD basis vector pairs, in which for different SD basis vectors in each polarization direction and the same SD basis vectors in two polarization directions, the terminal selects the same TD-FD basis vector pair.

In some embodiments, receiving, the network device, the basis vector indication information for calculating the precoding sent by the terminal, includes:

receiving the basis vector indication information of $L \times \left( \left\lceil log_2^{C_{N_3 N_4}^N} \right\rceil + \left\lceil \log_2^{O_3} \right\rceil + \left\lceil \log_2^{O_4} \right\rceil \right)$ bits for calculating the precoding sent by the terminal,

in which the basis vector indication information is used to indicate the one or more DD-FD basis vector pairs or the one or more TD-FD basis vector pairs selected by the terminal, L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more the DD-FD basis vector pairs or the number of one or more the TD-FD basis vector pairs, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different pairs of DD-FD basis vector pairs, or the terminal selects the same or different TD-FD basis vector pairs.

In an embodiment of the present disclosure, for different SD basis vectors in each polarization direction, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects the same DD-FD basis vector pair, or the terminal selects the same TD-FD basis vector pair.

Based on this, the network device receives the basis vector indication information of $L \times \left( \left\lceil log_2^{C_{N_3 N_4}^N} \right\rceil + \left\lceil \log_2^{O_3} \right\rceil + \left\lceil \log_2^{O_4} \right\rceil \right)$ bits for calculating the precoding sent by the terminal, in which the basis vector indication information is used to indicate the DD-FD basis vector pair or the TD-FD basis vector pair selected by the terminal.

Exemplarily, for the same or different SD basis vectors, the terminal selects the same or different DD-FD basis vector pairs, or the terminal selects the same or different TD-FD basis vector pairs.

Among them, the number of the lengths of the DD basis vector or of the length of the TD basis vector is $N_4$=4, the number of DD basis vectors or the number of TD basis vectors selected by the terminal is S=2, the number of SD basis vectors selected by the terminal is L=2, the number of FD basis vectors selected by the terminal is M=4, the number of the DD-FD basis vector pairs or the number of the TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical directions $O_1$ and $O_2$ are both 4, the oversampling factor of the DD basis vector or the TD basis vector $O_3$ is 1, the oversampling factor of the FD basis vector $O_4$ is 1, that is, the oversampling is not performed, the number of antenna ports in the horizontal direction in a single polarization direction $N_1$ = 2, and the number of antenna ports in the vertical direction in a single polarization direction $N_2$ = 4.

The following description is based on that the terminal reports the basis vector indication information to the network device, in which the basis vector indication information indicates the DD basis vector or the TD basis vector selected by the terminal, the basis vector indication information is used to indicate the precoding of a certain data transmission layer, the DD basis vector or the TD basis vector, or the DD-FD basis vector pair, or the TD-FD basis vector pair selected by the terminal.

If the same SD basis vectors in two polarization directions correspond to the same or different DD-FD basis vector pairs, or the same SD basis vectors in two polarization directions correspond to the same or different TD-FD basis vector pairs, the terminal sends the basis vector indication information of $L \times \left( \left\lceil \log_2^{C_{N_3 N_4}^N} \right\rceil + \left\lceil \log_2^{O_3} \right\rceil + \left\lceil \log_2^{O_4} \right\rceil \right) = 32$ bits for calculating the precoding to the network device to indicate the DD-FD basis vector pairs corresponding to at least two SD basis vectors respectively, or to indicate the TD-FD basis vector pairs corresponding to at least two SD basis vectors respectively.

In some embodiments, receiving, by the network device, the basis vector indication information for calculating the precoding sent by the terminal, includes:

receiving first basis vector indication information of $\left\lceil \log_2^{C_{N_4}^S} \right\rceil + \left\lceil \log_2^{O_3} \right\rceil$ for calculating the precoding sent by the terminal, in which the first basis vector indication information is used to indicate S DD basis vectors or S TD basis vectors selected by the terminal and S is a positive integer;

receiving second basis vector indication information of $\left\lceil \log_2^{C_{N_3}^M} \right\rceil + \left\lceil \log_2^{O_4} \right\rceil$ bits for calculating the precoding sent by the terminal, in which the second basis vector indication information is used to indicate M FD basis vectors selected by the terminal and M is a positive integer;

receiving third basis vector indication information of $L \times M \times S$ bits for calculating the precoding sent by the terminal, in which the third basis vector indication information is used to indicate a DD-FD basis vector pair corresponding to each SD basis vector or a TD-FD basis vector pair corresponding to each SD basis vector,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different pairs of DD-FD basis vector pairs, or the terminal selects the same or different TD-FD basis vector pairs.

In an embodiment of the present disclosure, for different SD basis vectors in each polarization direction, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects the same DD-FD basis vector pair, or the terminal selects the same TD-FD basis vector pair.

Based on this, the network device receives the first basis vector indication information of $\left\lceil \log_2^{C_{N_4}^S} \right\rceil + \left\lceil \log_2^{O_3} \right\rceil$ bits for calculating the precoding sent by the terminal, in which the first basis vector indication information is used to indicate the S DD basis vectors or S TD basis vectors selected by the terminal, and S is a positive integer.

Afterwards, the network device receives the second basis vector indication information of $\left\lceil \log_2^{C_{N_3}^M} \right\rceil + \left\lceil \log_2^{O_4} \right\rceil$ bits for calculating the precoding sent by the terminal, in which the second basis vector indication information is used to indicate the M FD basis vectors selected by the terminal, and M is a positive integer.

Afterwards, the network device receives of third basis vector indication information of $L \times M \times S$ bits for calculating the precoding sent by the terminal, in which the third basis vector indication information is used to indicate the DD-FD basis vector pair corresponding to each SD basis vector or the TD-FD basis vector pair corresponding to each SD basis vector.

Exemplarily, for the same or different SD basis vectors, the terminal selects the same or different DD-FD basis vector pairs, or the terminal selects the same or different pairs TD-FD basis vector pairs.

Among them, the number of the lengths of the DD basis vector or of the length of the TD basis vector is $N_4$=4, the number of DD basis vectors or the number of TD basis vectors selected by the terminal is S=2, the number of SD basis vectors selected by the terminal is L=2, the number of FD basis vectors selected by the terminal is M=4, the number of the DD-FD basis vector pairs or the number of the TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical directions $O_1$ *and* $O_2$ are both 4, the oversampling factor of the DD basis vector or the TD basis vector $O_3$ is 1, the oversampling factor of the FD basis vector $O_4$ is 1, that is, the oversampling is not performed, the number of antenna ports in the horizontal direction in a single polarization direction $N_1 = 2$, and the number of antenna ports in the vertical direction in a single polarization direction $N_2 = 4$.

The following description is based on that the terminal reports the basis vector indication information to the network device, in which the basis vector indication information indicates the DD basis vector or the TD basis vector selected by the terminal, the basis vector indication information is used to indicate the precoding of a certain data transmission layer, the DD basis vector or the TD basis vector, or the DD-FD basis vector pair, or the TD-FD basis vector pair selected by the terminal.

If the same SD basis vectors in two polarization directions correspond to the same or different DD-FD basis vector pairs, or the same SD basis vectors in two polarization directions correspond to the same or different TD-FD basis vector pairs, the terminal first sends the first basis vector indication information of $\left\lceil \log_2^{C_{N_4}^S} \right\rceil + \left\lceil \log_2^{O_3} \right\rceil = 3$ bits to the network device, to indicate S=2 DD basis vectors or TD basis vectors selected by the terminal, and afterwards, sends the second basis vector indication information of $\left\lceil \log_2^{C_{N_3}^M} \right\rceil + \left\lceil \log_2^{O_4} \right\rceil = 9$ bits to the network device, to indicate the M FD basis vectors selected by the terminal, and afterwards, the terminal sends the third basis vector indication information of $L \times M \times S = 16$ bits to the network device, to indicate the DD-FD basis vector pair corresponding to each SD basis vector, or indicates the TD-FD basis vector pair corresponding to each SD basis vector.

In some embodiments, receiving, by the network device, the basis vector indication information device for calculating the precoding sent by the terminal, includes:

receiving first basis vector indication information of $\left\lceil log_2^{C_{N_4}^S} \right\rceil + \left\lceil \log_2^{O_3} \right\rceil$ bits for calculating the precoding sent by the terminal, in which the first basis vector indication information is used to indicate S DD basis vectors or S TD basis vectors selected by the terminal and S is a positive integer;

receiving second basis vector indication information of $\left\lceil log_2^{C_{N_3}^M} \right\rceil + \left\lceil \log_2^{O_4} \right\rceil$ bits for calculating the precoding sent by the terminal, in which the second basis vector indication information is used to indicate M FD basis vectors selected by the terminal and M is a positive integer;

receiving third basis vector indication information of $L \times \left\lceil log_2^{C_{MS}^N} \right\rceil$ bits for calculating the precoding sent by the terminal, in which the third basis vector indication information is used to indicate a DD-FD basis vector pair corresponding to each SD basis vector or a TD-FD basis vector pair corresponding to each SD basis vector,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of one or more DD-FD basis vector pairs or the number of one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects the same DD-FD basis vector pair, or the terminal selects the same TD-FD basis vector pair.

Based on this, the network device receives the first basis vector indication information of $\left\lceil log_2^{C_{N_4}^S} \right\rceil + \left\lceil \log_2^{O_3} \right\rceil$ bits for calculating the precoding sent by the terminal, in which the first basis vector indication information is used to indicate the S DD basis vectors or S TD basis vectors selected by the terminal, and S is a positive integer;

Afterwards, the network device receives the second basis vector indication information of $\left\lceil log_2^{C_{N_3}^M}\right\rceil + \left\lceil log_2^{O_4}\right\rceil$ bits for calculating the precoding sent by the terminal, in which the second basis vector indication information is used to indicate the M FD basis vectors selected by the terminal, and M is a positive integer;

Afterwards, the network device receives the third basis vector indication information of $L\times \left\lceil log_2^{C_{MS}^N}\right\rceil$ bits for calculating the precoding sent by the terminal, in which the third basis vector indication information is used to indicate the DD-FD basis vector pair corresponding to each SD basis vector or the TD-FD basis vector pair corresponding to each SD basis vector.

Exemplarily, for the same or different SD basis vectors, the terminal selects the same or different DD-FD basis vector pairs, or the terminal selects the same or different TD-FD basis vector pairs.

Among them, the number of the lengths of the DD basis vector or of the length of the TD basis vector is $N_4$=4, the number of DD basis vectors or the number of TD basis vectors selected by the terminal is S=2, the number of SD basis vectors selected by the terminal is L=2, the number of FD basis vectors selected by the terminal is M=4, the number of DD-FD basis vector pairs or the number of TD-FD basis vector pairs is N=4, the number of SD-FD basis vector pairs in each polarization direction is N'=8, the number of frequency domain PMI subbands $N_3$ = 12, the oversampling factors of the SD basis vectors in the horizontal direction and the vertical direction $O_1$ and $O_2$ is 4, the oversampling factor of the DD basis vector or of the TD basis vector $O_3$ is 1, the oversampling factor of the FD basis vector $O_4$ is 1, that is, the oversampling is not performed. The number of antenna ports in the horizontal direction in a single polarization direction $N_1$ = 2, and the number of antenna ports in the vertical direction in a single polarization direction $N_2$ = 4.

The following description is based on that the terminal reports the basis vector indication information to the network device, in which the basis vector indication information indicates the DD basis vector or the TD basis vector selected by the terminal, the basis vector indication information is used to indicate the precoding of a certain data transmission layer, the DD basis vector or the TD basis vector, or a DD-FD basis vector pair, or a TD-FD basis vector pair selected by the terminal.

If the same SD basis vectors in two polarization directions correspond to the same or different DD-FD basis vector pairs, or the same SD basis vectors in two polarization directions correspond to the same or different TD-FD basis vector pairs, the terminal first sends the first basis vector indication information of $\left\lceil log_2^{C_{N_4}^S}\right\rceil + \left\lceil log_2^{O_3}\right\rceil = 3$ bits to the network device, to inidcate S=2 DD basis vectors or TD basis vectors selected by the terminal, and afterwards, the terminal sends the second basis vector indication information of $\left\lceil log_2^{C_{N_3}^M}\right\rceil + \left\lceil log_2^{O_4}\right\rceil = 9$ bits to the network device to indicate M FD basis vectors selected by the terminal, and then the terminal sends the third basis vector indication information of $L\times \left\lceil log_2^{C_{MS}^N}\right\rceil$ bits to the network device, to indicate the DD-FD basis vector pair corresponding to each SD basis vector, or indicates the TD-FD basis vector pair corresponding to each SD basis vector.

In some embodiments, for different SD basis vectors in each polarization direction, and same SD basis vectors in two polarization directions, the terminal selects different DD-FD basis vector pairs; or

for different SD basis vectors in each polarization direction, and same SD basis vectors in two polarization directions, the terminal selects different TD-FD basis vector pairs; or
for different SD basis vectors in each polarization direction, and different SD basis vectors in two polarization directions, the terminal selects the same DD-FD basis vector pair; or
for different SD basis vectors in each polarization direction, and different SD basis vectors in two polarization directions, the terminal selects the same TD-FD basis vector pair; or
for different SD basis vectors in each polarization direction, and different SD basis vectors in two polarization directions, the terminal selects different DD-FD basis vector pairs; or
for different SD basis vectors in each polarization direction, and different SD basis vectors in two polarization directions, the terminal selects different TD-FD basis vector pairs.

In an embodiment of the present disclosure, the basis vector indication information is used to indicate the basis vector pair selected by the terminal, the basis vector pair includes the one or more DD-FD basis vector pair, for different SD basis vectors in each polarization direction and the same SD basis vectors in two polarization directions, the terminal selects different DD-FD basis vector pairs.

In an embodiment of the present disclosure, the basis vector indication information is used to indicate the basis vector pair selected by the terminal, the basis vector pair includes the one or more TD-FD basis vector pairs, for different SD basis vectors in each polarization direction and the same SD basis vectors in two polarization directions, the terminal selects different TD-FD basis vector pairs.

In an embodiment of the present disclosure, the basis vector indication information is used to indicate the basis vector pair selected by the terminal, the basis vector pair includes the one or more DD-FD basis vector pairs, in which for different SD basis vectors in each polarization direction and different SD basis vectors in two polarization directions, the terminal selects the same DD-FD basis vector pair.

In an embodiment of the present disclosure, the basis vector indication information is used to indicate the basis vector pair selected by the terminal, the basis vector pair includes the one or more TD-FD basis vector pair, in which for different SD basis vectors in each polarization direction and different SD basis vectors in two polarization directions, the terminal selects the same TD-FD basis vector pair.

In an embodiment of the present disclosure, the basis vector indication information is used to indicate the basis vector pair selected by the terminal, the basis vector pair includes the one or more DD-FD basis vector pair, in which for different SD basis vectors in each polarization direction and different SD basis vectors in two polarization directions, the terminal selects different DD-FD basis vector pairs.

In an embodiment of the present disclosure, the basis vector indication information is used to indicate the basis vector pair selected by the terminal, the basis vector pair includes the one or more DD-FD basis vector pair, in which for different SD basis vectors in each polarization direction and different SD basis vectors in two polarization directions, the terminal selects different TD-FD basis vector pairs.

In some embodiments, receiving, by the network device, the basis vector indication information for calculating the precoding sent by the terminal, includes:

receiving the basis vector indication information of $2\text{L}\times \left( \left\lceil log_2^{C_{N_3 N_4}^{N}} \right\rceil + \left\lceil log_2^{O_3} \right\rceil + \left\lceil log_2^{O_4} \right\rceil \right)$ bits for calculating the precoding sent by the terminal, in which the basis vector indication information is used to indicate the one or more DD-FD basis vector pairs or the one or more TD-FD basis vector pairs selected by the terminal,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more DD-FD basis vector pairs or the number of the one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects different DD-FD basis vector pairs, or the terminal selects different TD-FD basis vector pairs.

In an embodiment of the present disclosure, for different SD basis vectors in each polarization direction and different SD basis vectors in two polarization directions, the terminal selects the same or different DD-FD basis vector pairs, or the terminal selects the same or different TD-FD basis vector pairs.

Based on this, the network device receives the basis vector indication information of $2\text{L} \times \left( \left\lceil log_2^{C_{N_3 N_4}^{N}} \right\rceil + \left\lceil log_2^{O_3} \right\rceil + \left\lceil log_2^{O_4} \right\rceil \right)$ bits from the terminal, in which the basis vector indication information is used to indicate the one or more DD-FD basis vector pairs or the one or more TD-FD basis vector pairs selected by the terminal.

In some embodiments, receiving, by the network device, the basis vector indication information for calculating the precoding sent by the terminal, includes:

receiving first basis vector indication information of $\left\lceil log_2^{C_{N_4}^{S}} \right\rceil + \left\lceil log_2^{O_3} \right\rceil$ bits for calculating the precoding sent by the terminal, in which the first basis vector indication information is used to indicate S DD basis vectors or S TD basis vectors selected by the terminal and S is a positive integer;

receiving second basis vector indication information of $\left\lceil log_2^{C_{N_3}^M} \right\rceil + \left\lceil \log_2^{O_4} \right\rceil$ bits for calculating the precoding sent by the terminal, in which the second basis vector indication information is used to indicate M FD basis vectors selected by the terminal and M is a positive integer;

receiving third basis vector indication information of $2L \times M \times S$ bits for calculating the precoding sent by the terminal, in which the third basis vector indication information is used to indicate the DD-FD basis vector pair corresponding to each SD basis vector or the TD-FD basis vector pair corresponding to each SD basis vector,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects different DD-FD basis vector pairs, or the terminal selects different TD-FD basis vector pairs.

In an embodiment of the present disclosure, for different SD basis vectors in each polarization direction and different SD basis vectors in two polarization directions, the terminal selects the same or different DD-FD basis vector pairs, or the terminal selects the same or different TD-FD basis vector pairs.

Based on this, the network device receives the first basis vector indication information of $\left\lceil log_2^{C_{N_4}^S} \right\rceil + \left\lceil \log_2^{O_3} \right\rceil$ bits for calculating the precoding sent by the terminal, in which the first basis vector indication information is used to indicate the S DD basis vectors or S TD basis vectors selected by the terminal, and S is a positive integer.

Afterwards, the network device receives the second basis vector indication information of $\left\lceil log_2^{C_{N_3}^M} \right\rceil + \left\lceil \log_2^{O_4} \right\rceil$ bits for calculating the precoding sent by the terminal, in which the second basis vector indication information is used to indicate the M FD basis vectors selected by the terminal, and M is a positive integer.

Afterwards, the network device receives third basis vector indication information of $2L \times M \times S$ bits for calculating the precoding sent by the terminal, in which the third basis vector indication information is used to indicate the DD-FD basis vector pair corresponding to each SD basis vector or the TD-FD basis vector pair corresponding to each SD basis vector.

In some embodiments, receiving by the network device, the basis vector indication information for calculating the precoding sent by the terminal, includes:

receiving first basis vector indication information of $\left\lceil log_2^{C_{N_4}^S} \right\rceil + \left\lceil \log_2^{O_3} \right\rceil$ bits for calculating the precoding sent by the terminal, in which the first basis vector indication information is used to indicate S DD basis vectors or S TD basis vectors selected by the terminal and S is a positive integer;

receiving second basis vector indication information of $\left\lceil log_2^{C_{N_3}^M} \right\rceil + \left\lceil \log_2^{O_4} \right\rceil$ bits for calculating the precoding sent by the terminal, in which the second basis vector indication information is used to indicate M FD basis vectors selected by the terminal and M is a positive integer;

receiving third basis vector indication information of $2L \times \left\lceil log_2^{C_{MS}^N} \right\rceil$ bits for calculating the precoding sent by the terminal, in which the third basis vector indication information is used to indicate a DD-FD basis vector pair corresponding to each SD basis vector or a TD-FD basis vector pair corresponding to each SD basis vector;

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In an embodiment of the present disclosure, for the same or different SD basis vectors, the terminal selects the same or different DD-FD basis vector pairs, or the terminal selects the same or different TD-FD basis vector pairs.

In an embodiment of the present disclosure, for different SD basis vectors in each polarization direction and the same SD basis vectors in two polarization directions, the terminal selects different DD-FD basis vector pairs, or the terminal selects different TD-FD basis vector pairs.

In an embodiment of the present disclosure, for different SD basis vectors in each polarization direction and different SD basis vectors in two polarization directions, the terminal selects the same or different DD-FD basis vector pairs, or the terminal selects the same or different TD-FD basis vector pairs.

Based on this, the network device receives the first basis vector indication information of

$$\left\lceil log_2^{C_{N_4}^S} \right\rceil + \left\lceil \log_2^{O_3} \right\rceil$$

bits for calculating the precoding sent by the terminal, in which the first basis vector indication information is used to indicate the S DD basis vectors or S TD basis vectors selected by the terminal, and S is a positive integer.

Afterwards, the network device receives the second basis vector indication information of

$$\left\lceil log_2^{C_{N_3}^M} \right\rceil + \left\lceil \log_2^{O_4} \right\rceil$$

bits for calculating the precoding sent by the terminal, in which the second basis vector indication information is used to indicate the M FD basis vectors selected by the terminal, and M is a positive integer.

Afterwards, the network device receives third basis vector indication information of $2L \times \left\lceil log_2^{C_{MS}^N} \right\rceil$ bits for calculating the precoding sent by the terminal, in which the third basis vector indication information is used to indicate the DD-FD basis vector pair corresponding to each SD basis vector or the TD-FD basis vector pair corresponding to each SD basis vector.

In some embodiments, the basis vector pair includes the one or more SD-FD basis vector pairs, and receiving, by the network device, the basis vector indication information for calculating precoding sent by the terminal, includes:

receiving the basis vector indication information of $\left\lceil log_2^{C_{N_1 N_2 N_3}^{N'}} \right\rceil + \left\lceil \log_2^{O_4} \right\rceil + \left\lceil \log_2^{O_1 O_2} \right\rceil$ bits or

$\left\lceil log_2^{C_{N_1 N_2 (N_3-1)}^{N'}} \right\rceil + \left\lceil \log_2^{O_4} \right\rceil + \left\lceil \log_2^{O_1 O_2} \right\rceil$ bits for calculating the precoding sent by the terminal, in which the basis vector indication information is used to indicate the one or more SD-FD basis vector pairs selected by the terminal,

in which $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

In an embodiment of the present disclosure, the basis vector indication information is used to indicate the basis vector pair selected by the terminal, and the basis vector pair includes the one or more SD-FD basis vector pairs.

Based on this, the network device receives the basis vector indication information of

$\left\lceil log_2^{C_{N_1 N_2 N_3}^{N'}} \right\rceil + \left\lceil \log_2^{O_4} \right\rceil + \left\lceil \log_2^{O_1 O_2} \right\rceil$ bits or $\left\lceil log_2^{C_{N_1 N_2 (N_3-1)}^{N'}} \right\rceil + \left\lceil \log_2^{O_4} \right\rceil + \left\lceil \log_2^{O_1 O_2} \right\rceil$ bits, in which the basis vector indication information is used to indicate the one or more SD-FD basis vector pairs selected by the terminal.

In some embodiments, the basis vector pair includes the one or more SD-FD basis vector pairs, and receiving, by the network device, the basis vector indication information for calculating the precoding sent by the terminal, includes:

receiving first basis vector indication information of $\left\lceil log_2^{C_{N_3}^M} \right\rceil + \left\lceil \log_2^{O_4} \right\rceil$ bits or $\left\lceil log_2^{C_{N_3-1}^{M-1}} \right\rceil + \left\lceil \log_2^{O_4} \right\rceil$ bits for calculating the precoding sent by the terminal, in which the first basis vector indication information is used to indicate M FD basis vectors selected by the terminal and M is a positive integer;

receiving second basis vector indication information of $\left\lceil \log_2^{C_{N_1 N_2}^L} \right\rceil + \left\lceil \log_2^{O_1 O_2} \right\rceil$ bits for calculating the precoding sent by the terminal, in which the second basis vector indication information is used to indicate L SD basis vectors selected by the terminal and L is a positive integer;

receiving third basis vector indication information of M× L bits for calculating the precoding sent by the terminal, in which the third basis vector indication information is used to indicate the one or more SD-FD basis vector pairs selected by the terminal,

in which L is a number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

In an embodiment of the present disclosure, the basis vector indication information is used to indicate the basis vector pair selected by the terminal, and the basis vector pair includes the one or more SD-FD basis vector pairs.

Based on this, the network device receives first basis vector indication information of $\left\lceil \log_2^{C_{N_3}^M} \right\rceil + \left\lceil \log_2^{O_4} \right\rceil$ bits or $\left\lceil \log_2^{C_{N_3-1}^{M-1}} \right\rceil + \left\lceil \log_2^{O_4} \right\rceil$ bits for calculating the precoding sent by the terminal device, in which the first basis vector indication information is used to indicate M FD basis vectors selected by the terminal, and M is a positive integer.

Afterwards, the network device receives the second basis vector indication information of $\left\lceil \log_2^{C_{N_1 N_2}^L} \right\rceil + \left\lceil \log_2^{O_1 O_2} \right\rceil$ bits for calculating the precoding sent by the terminal, in which the second basis vector indication information is used to indicate L SD basis vectors selected by the terminal, and L is a positive integer.

Afterwards, the network device receives third basis vector indication information of M× L bits for calculating the precoding sent by the terminal, in which the third basis vector indication information is used to indicate the one or more SD-FD basis vector pair selected by the terminal.

In some embodiments, the basis vector pair includes the one or more SD-FD basis vector pairs, and receiving, by the network device, the basis vector indication information for calculating the precoding sent by the terminal, includes:

receiving first basis vector indication information of $\left\lceil \log_2^{C_{N_3}^M} \right\rceil + \left\lceil \log_2^{O_4} \right\rceil$ bits or $\left\lceil \log_2^{C_{N_3-1}^{M-1}} \right\rceil + \left\lceil \log_2^{O_4} \right\rceil$ bits for calculating the precoding sent by the terminal, in which the first basis vector indication information is used to indicate M FD basis vectors selected by the terminal and M is a positive integer;

receiving second basis vector indication information of $\left\lceil \log_2^{C_{N_1 N_2}^L} \right\rceil + \left\lceil \log_2^{O_1 O_2} \right\rceil$ bits for calculating the precoding sent by the terminal, in which the second basis vector indication information is used to indicate L SD basis vectors selected by the terminal and L is a positive integer;

receiving third basis vector indication information of $\left\lceil \log_2^{C_{ML}^{N'}} \right\rceil$ bits for calculating the precoding sent by the terminal, in which the third basis vector indication information is used to indicate the one or more SD-FD basis vector pairs selected by the terminal,

in which L is the number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, N' is the number of the one or more SD-FD basis vector pairs in each polarization direction, $O_1$ is an oversampling factor of the one or more SD basis vectors in the horizontal direction, $O_2$ is an oversampling factor of the one or more SD basis vectors in the vertical direction, $O_4$ is an oversampling factor of the one or more FD basis vectors.

In an embodiment of the present disclosure, the basis vector indication information is used to indicate the basis vector pair selected by the terminal, and the basis vector pair includes the one or more SD-FD basis vector pairs.

Based on this, the network device receives the first basis vector indication information of $\left\lceil log_2^{C_{N_3}^M} \right\rceil + \left\lceil log_2^{O_4} \right\rceil$ bits *or* $\left\lceil log_2^{C_{N_3-1}^{M-1}} \right\rceil + \left\lceil log_2^{O_4} \right\rceil$ bits for calculating the precoding sent by the terminal, in which the first basis vector indication information is used to indicate M FD basis vectors selected by the terminal, and M is a positive integer.

Afterwards, the network device receives the second basis vector indication information of $\left\lceil log_2^{C_{N_1N_2}^L} \right\rceil + \left\lceil log_2^{O_1O_2} \right\rceil$ bits for calculating the precoding sent by the terminal, in which the second basis vector indication information is used to indicate L SD basis vectors selected by the terminal, and L is a positive integer;

Afterwards, the network device receives the third basis vector indication information of $\left\lceil log_2^{C_{ML}^{N'}} \right\rceil$ bits for calculating the precoding sent by the terminal, in which the third basis vector indication information is used to indicate the SD-FD basis vector pair selected by the terminal.

FIG. 22 is a flowchart of another method for reporting the selection indication of the basis vector provided in an embodiment of the present disclosure.

As shown in FIG. 22, the method is executed by a network device, and the method may include but is not limited to the following steps.

S221: basis vector indication information for calculating precoding sent by a terminal is received, in which the basis vector indication information is used to indicate a basis vector and/or a basis vector pair selected by the terminal.

S222: the basis vector and/or the basis vector pair selected by the terminal is determined based on the basis vector indication information, to calculate precoding at different times based on the basis vector and/or the basis vector pair for downlink transmission, in which the precoding is calculated based on $\left(W_f^* \otimes W_1\right) W_2 W_t^{\mathrm{H}}$ or $W_1 \tilde{W}_2 (W_f \otimes W_d)^H$.

Among them, the relevant descriptions of S221 and S222 may be found in the relevant descriptions in the above embodiments, and will not be repeated here.

S223: codebook parameter information is sent to the terminal.

In an embodiment of the present disclosure, the terminal may receive codebook parameter information sent by a network device, and then select basis vectors and/or basis vector pairs according to the codebook parameter information, and then send the basis vector indication information for calculating the precoding to the network device, and S223 may be executed before S221.

The codebook parameter information includes at least one of:

lengths of one or more SD basis vectors;
lengths of one or more FD basis vectors;
lengths of the one or more TD basis vectors;
lengths of the one or more DD basis vectors;
a number of one or more SD basis vectors;
a number of one or more FD basis vectors;
a number of one or more TD basis vectors;
a number of one or more DD basis vectors;
a number of one or more SD-FD basis vector pairs;
a number of one or more TD-FD basis vector pairs; or
a number of one or more DD-FD basis vector pairs.

In an embodiment of the present disclosure, the terminal receives the codebook parameter information sent by the network device to select the basis vector and/or the basis vector pair according to the codebook parameter information.

The terminal receives the codebook parameter information sent by the network device, and the codebook parameter information includes the lengths of the SD basis vectors.

The terminal receives the codebook parameter information sent by the network device, and the codebook parameter information includes the lengths of the FD basis vectors.

The terminal receives the codebook parameter information sent by the network device, and the codebook parameter information includes the lengths of the TD basis vectors.

The terminal receives the codebook parameter information sent by the network device, and the codebook parameter information includes the lengths of the DD basis vectors.

The terminal receives the codebook parameter information sent by the network device, and the codebook parameter information includes the number of SD basis vectors.

The terminal receives the codebook parameter information sent by the network device, and the codebook parameter information includes the number of FD basis vectors.

The terminal receives the codebook parameter information sent by the network device, and the codebook parameter information includes the number of TD basis vectors.

The terminal receives the codebook parameter information sent by the network device, and the codebook parameter information includes the number of DD basis vectors.

The terminal receives the codebook parameter information sent by the network device, and the codebook parameter information includes the number of SD-FD basis vector pairs.

The terminal receives the codebook parameter information sent by the network device, and the codebook parameter information includes the number of TD-FD basis vector pairs.

The terminal receives the codebook parameter information sent by the network device, and the codebook parameter information includes the number of DD-FD basis vector pairs.

It should be noted that the above embodiments are not exhaustive but are only illustrations of some embodiments, and the above embodiments may be implemented individually or in combination. The above embodiments are only for illustration and are not intended to be specific limitations on the protection scope of the embodiments of the present disclosure.

It should be noted that, in the embodiments of the present disclosure, S221 to S223 may be implemented separately or in combination with any other steps in the embodiments of the present disclosure, for example, in combination with S211 and S212 in the embodiments of the present disclosure, and the embodiments of the present disclosure are not limited to this.

In the above embodiments provided by the present disclosure, the methods provided by the embodiments of the present disclosure are introduced from the perspectives of the terminal and the network device, respectively. In order to implement the functions in the methods provided by the above embodiments of the present disclosure, the terminal and the network device may include a hardware structure and a software module, and implement the above functions in the form of a hardware structure, a software module, or a hardware structure plus a software module. One of the above functions may be executed in the form of a hardware structure, a software module, or a hardware structure plus a software module.

FIG. 23 is a schematic diagram of the structure of a communication device 1 provided in an embodiment of the present disclosure. The communication device 1 shown in FIG. 23 may include a transceiver module 11 and a processing module. The transceiver module may include a sending module and/or a receiving module, the sending module is used to implement a sending function, the receiving module is used to implement a receiving function, and the transceiver module may implement a sending function and/or a receiving function.

The communication device 1 may be a terminal, a device in a terminal, or a device that may be used in conjunction with a terminal. Alternatively, the communication device 1 may be a network device, a device in a network device, or a device that may be used in conjunction with a network device.

The communication device 1 is a terminal.

The device includes: a transceiver module 11.

The transceiver module 11 is configured to send basis vector indication information for calculating precoding to a network device, in which the basis vector indication information is used to indicate the basis vector and/or a basis vector pair selected by the terminal.

The basis vector and/or the basis vector pair includes at least one of:

one or more time domain (TD) basis vectors;
one or more doppler domain (DD) basis vectors;
one or more spatial domain (SD)-frequency domain (FD) basis vector pairs;
one or more TD-FD basis vector pairs; or
one or more DD-FD basis vector pairs.

In some embodiments, in which before sending the basis vector indication information for calculating the precoding to the network device, the transceiver module 11 is further configured to receive codebook parameter information sent by the network device, in which the codebook parameter information includes at least one of:

lengths of one or more SD basis vectors;
lengths of one or more FD basis vectors;
lengths of the one or more TD basis vectors;
lengths of the one or more DD basis vectors;
a number of one or more SD basis vectors;

a number of one or more FD basis vectors;
a number of one or more TD basis vectors;
a number of one or more DD basis vectors;
a number of one or more SD-FD basis vector pairs;
a number of one or more TD-FD basis vector pairs; or
a number of one or more DD-FD basis vector pairs.

In some embodiments, the basis vector includes the one or more DD basis vectors or the one or more TD basis vectors,

for the one or more SD basis vectors, the terminal selects the same DD basis vector; or
for the one or more FD basis vectors, the terminal selects the same DD basis vector; or
for the one or more SD basis vectors and the one or more FD basis vectors, the terminal selects the same DD basis vector; or
for the one or more SD basis vectors, the terminal selects the same TD basis vector; or
for the one or more FD basis vectors, the terminal selects the same TD basis vector; or
for the one or more SD basis vectors and all FD basis vectors, the terminal selects the same TD basis vector.

In some embodiments, the transceiver module 11 is further configured to send the basis vector indication information of $X + \left\lceil \log_2^{O_3} \right\rceil$ bits for calculating the precoding to the network device,

in which the basis vector indication information is used to indicate the one or more DD basis vectors or the one or more TD basis vectors selected by the terminal, $O_3 \geq 1$, $O_3$ is a sampling factor of the one or more DD basis vectors or a sampling factor of the one or more TD basis vectors; in a case that X is indicated by a combination coefficient, $X = \left\lceil \log_2^{C_{N_4}^{S}} \right\rceil$ or

$X = \left\lceil \log_2^{C_{N_4-1}^{S-1}} \right\rceil$, in a case that X is indicated by a bitmap, $X = N_4$ or $X = N_4-1$, in which $N_4$ is a number of the lengths of the one or more DD basis vectors or of the lengths of the one or more TD basis vectors, S is a number of the one or more DD basis vectors or of the one or more TD basis vectors selected by the terminal, $C_{N_4}^{S}$ indicates a combination number calculation by selecting S from $N_4$, $C_{N_4-1}^{S-1}$ indicates a combination number calculation by selecting S-1 from $N_4 - 1$, and

$\lceil x \rceil$ indicates rounding up of x.

In some embodiments, the basis vector includes the one or more DD basis vectors or the one or more TD basis vectors,

for different SD basis vectors, the terminal selects the same DD basis vector; or
for different SD basis vectors, the terminal selects different DD basis vectors; or
for different FD basis vectors, the terminal selects the same DD basis vector; or
for different FD basis vectors, the terminal selects different DD basis vectors; or
for different SD basis vectors, the terminal selects the same TD basis vector; or
for different SD basis vectors, the terminal selects different TD basis vectors; or
for different FD basis vectors, the terminal selects the same TD basis vector; or
for different FD basis vectors, the terminal selects different TD basis vectors.

In some embodiments, for same SD basis vectors in two polarization directions, the terminal selects the same DD basis vector; or
for same SD basis vectors in two polarization directions, the terminal selects the same TD basis vector.

In some embodiments, the transceiver module is further configured to send the basis vector indication information of $L \times \left( \left\lceil \log_2^{C_{N_4}^{S}} \right\rceil + \left\lceil \log_2^{O_3} \right\rceil \right)$ bits or $L \times \left( N_4 + \left\lceil \log_2^{O_3} \right\rceil \right)$ bits for calculating the precoding to the network device,

in which the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the one or more DD basis vectors or of the lengths of the one or more TD basis vectors, and S is a number of the one or more DD basis vectors or of the one or more TD basis vectors selected by the terminal.

In some embodiments, for different SD basis vectors in each polarization direction, the terminal selects different DD basis vectors; or

for different SD basis vectors in each polarization direction, the terminal selects different TD basis vectors; or
for different SD basis vectors in each polarization direction, the terminal selects the same DD basis vector; or
for different SD basis vectors in each polarization direction, the terminal selects the same TD basis vector; or
for different SD basis vectors in two polarization directions, the terminal selects the same DD basis vector; or
for different SD basis vectors in two polarization directions, the terminal selects different DD basis vectors; or
for different SD basis vectors in two polarization directions, the terminal selects the same TD basis vector; or
for different SD basis vectors in two polarization directions, the terminal selects different TD basis vectors.

In some embodiments, the transceiver module 11 is further configured to send the basis vector indication information of $2L \times \left( \left\lceil log_2^{C_{N_4}^{S}} \right\rceil + \left\lceil log_2^{O_3} \right\rceil \right)$ bits or $2L \times \left( N_4 + \left\lceil log_2^{O_3} \right\rceil \right)$ bits for calculating the precoding to the network device,

in which the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the DD basis vectors or of the TD basis vectors, and S is a number of the one or more DD basis vectors or of the one or more TD basis vectors selected by the terminal.

In some embodiments, the basis vector includes the one or more DD basis vectors or the one or more TD basis vectors,

for different SD basis vectors and different FD basis vectors, the terminal selects the same DD basis vector; or
for different SD basis vectors and different FD basis vectors, the terminal selects different DD basis vectors; or
for different SD basis vectors and different FD basis vectors, the terminal selects the same TD basis vector; or
for different SD basis vectors and different FD basis vectors, the terminal selects different TD basis vectors.
In some embodiments, for different SD-FD basis vector pairs in each polarization direction, the terminal selects the same DD basis vector; or
for different SD-FD basis vector pairs in each polarization direction, the terminal selects different DD basis vectors; or
for different SD-FD basis vector pairs in each polarization direction, the terminal selects the same TD basis vector; or
for different SD-FD basis vector pairs in each polarization direction, the terminal selects different TD basis vectors; or
for same SD-FD basis vector pairs in two polarization directions, the terminal selects the same DD basis vector; or
for same SD-FD basis vector pairs in two polarization directions, the terminal selects the same TD basis vector.

In some embodiments, the transceiver module 11 is further configured to send the basis vector indication information of $N' \times \left( \left\lceil log_2^{C_{N_4}^{S}} \right\rceil + \left\lceil log_2^{O_3} \right\rceil \right)$ bits or $N' \times \left( N_4 + \left\lceil log_2^{O_3} \right\rceil \right)$ bits for calculating the precoding to the network device,

in which the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of one or more TD basis vectors selected by the terminal.

In some embodiments, for different SD-FD basis vector pairs in each polarization direction, the terminal selects different DD basis vectors; or

for different SD-FD basis vector pairs in each polarization direction, the terminal selects different TD basis vectors; or
for different SD-FD basis vector pairs in two polarization directions, the terminal selects the same DD basis vector; or
for different SD-FD basis vector pairs in two polarization directions, the terminal selects different DD basis vectors; or
for different SD-FD basis vector pairs in two polarization directions, the terminal selects the same TD basis vector; or
for different SD-FD basis vector pairs in two polarization directions, the terminal selects different TD basis vectors.

In some embodiments, the transceiver module 11 is further configured to send the basis vector indication information of $2N' \times \left( \left\lceil log_2^{C_{N_4}^S} \right\rceil + \left\lceil log_2^{O_3} \right\rceil \right)$ bits or $2N' \times \left( N_4 + \left\lceil log_2^{O_3} \right\rceil \right)$ bits for calculating the precoding to the network device,

in which the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of the one or more TD basis vectors selected by the terminal.

In some embodiments, the basis vector pair includes the one or more DD-FD basis vector pairs or the one or more TD-FD basis vector pairs,

for the one or more SD basis vectors, the terminal selects the same DD-FD basis vector pair; or
for the one or more SD basis vectors, the terminal selects the same TD-FD basis vector pair.

In some embodiments, the transceiver module 11 is further configured to implement at least one of:

sending the basis vector indication information of $\left\lceil log_2^{C_{N_3 N_4}^N} \right\rceil + \left\lceil log_2^{O_3} \right\rceil + \left\lceil log_2^{O_4} \right\rceil$ bits for calculating the precoding to the network device, in which the basis vector indication information is used to indicate the one or more DD-FD basis vector pairs or the one or more TD-FD basis vector pairs selected by the terminal;

sending the basis vector indication information of $\left\lceil log_2^{C_{N_3(N_4-1)}^N} \right\rceil + \left\lceil log_2^{O_3} \right\rceil + \left\lceil log_2^{O_4} \right\rceil$ bits for calculating the precoding to the network device, in which the basis vector indication information is used to indicate the one or more DD-FD basis vector pairs or the one or more TD-FD basis vector pairs selected by the terminal;

sending the basis vector indication information of $\left\lceil log_2^{C_{(N_3-1)N_4}^N} \right\rceil + \left\lceil log_2^{O_3} \right\rceil + \left\lceil log_2^{O_4} \right\rceil$ bits for calculating the precoding to the network device, in which the basis vector indication information is used to indicate the one or more DD-FD basis vector pairs or the one or more TD-FD basis vector pairs selected by the terminal; or

sending the basis vector indication information of $\left\lceil log_2^{C_{(N_3-1)(N_4-1)}^{N-1}} \right\rceil + \left\lceil log_2^{O_3} \right\rceil + \left\lceil log_2^{O_4} \right\rceil$ bits for calculating the precoding to the network device, in which the basis vector indication information is used to indicate the one or more DD-FD basis vector pairs or the one or more TD-FD basis vector pairs selected by the terminal,

in which, $N_3$ is a number of frequency domain PMI subbands, N is the number of the one or more DD-FD basis vector pairs or the number of the one or more TD-FD basis vector pairs, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to send first basis vector indication information of $\left\lceil log_2^{C_{N_4}^S} \right\rceil + \left\lceil log_2^{O_3} \right\rceil$ bits or $\left\lceil log_2^{C_{N_4-1}^{S-1}} \right\rceil + \left\lceil log_2^{O_3} \right\rceil$ bits for calculating precoding to the network device, in which the first basis vector indication information is used to indicate S DD basis vectors or S TD basis vectors selected by the terminal and S is a positive integer;

send second basis vector indication information of $\left\lceil log_2^{C_{N_3}^M} \right\rceil + \left\lceil log_2^{O_4} \right\rceil$ bits for calculating precoding to the network device, in which the second basis vector indication information is used to indicate M FD basis vectors selected by the terminal and M is a positive integer;

send third basis vector indication information of M × S bits for calculating the precoding to the network device, in which the third basis vector indication information is used to indicate the one or more DD-FD basis vector pairs or the one or more TD-FD basis vector pairs selected by the terminal,

in which, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to send first basis vector indication information of $\left\lceil log_2^{C_{N_4-1}^{S-1}} \right\rceil + \left\lceil log_2^{O_3} \right\rceil$ bits for calculating the precoding to the network device, in which the first basis vector indication information is used to indicate S DD basis vectors or DD basis vectors selected by the terminal and S is a positive integer;

send second basis vector indication information of $\left\lceil log_2^{C_{N_3}^{M}} \right\rceil + \left\lceil log_2^{O_4} \right\rceil$ bits for calculating the precoding to the network device, in which the second basis vector indication information is used to indicate M FD basis vectors selected by the terminal and M is a positive integer;

send third basis vector indication information of $\left\lceil log_2^{C_{MS}^{N}} \right\rceil$ bits for calculating the precoding to the network device, in which the third basis vector indication information is used to indicate the one or more DD-FD basis vector pairs or the one or more TD-FD basis vector pairs selected by the terminal,

in which, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, $O_4$ is an oversampling factor of the one or more FD basis vectors, and N is the number of the one or more the DD-FD basis vector pairs or the number of the one or more the TD-FD basis vector pairs.

In some embodiments, for the same SD basis vector, the terminal selects the same DD-FD basis vector pair, or

for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or
for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

In some embodiments, for different SD basis vectors in each polarization direction, the terminal selects the same DD-FD basis vector pair; or

for different SD basis vectors in each polarization direction, the terminal selects the same TD-FD basis vector pair; or
for different SD basis vectors in each polarization direction, the terminal selects different DD-FD basis vector pairs; or
for different SD basis vectors in each polarization direction, the terminal selects different TD-FD basis vector pairs; or
for different SD basis vectors in each polarization direction, and same SD basis vectors in two polarization directions, the terminal selects the same DD-FD basis vector pair; or
for different SD basis vectors in each polarization direction, and same SD basis vectors in two polarization directions, the terminal selects the same TD-FD basis vector pair.

In some embodiments, the transceiver module 11 is further configured to send the basis vector indication information of $L \times \left( \left\lceil log_2^{C_{N_3N_4}^{N}} \right\rceil + \left\lceil log_2^{O_3} \right\rceil + \left\lceil log_2^{O_4} \right\rceil \right)$ bits for calculating the precoding to the network device, in which the basis vector indication information is used to indicate the one or more DD-FD basis vector pairs or the one or more TD-FD basis vector pairs selected by the terminal, L is the number of the one or more SD basis vectors selected by the

terminal, $N_3$ is a number of frequency domain PMI subbands, $N_4$ is a number of the lengths of the one or more DD basis vectors or of the lengths of the one or more TD basis vectors, N is the number of the one or more the DD-FD basis vector pairs or the number of one or more the TD-FD basis vector pairs, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to send first basis vector indication information of $\left\lceil log_2^{C_{N_4}^S} \right\rceil + \left\lceil log_2^{O_3} \right\rceil$ bits for calculating the precoding to the network device, in which the first basis vector indication information is used to indicate S DD basis vectors or S TD basis vectors selected by the terminal and S is a positive integer;

send second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate M FD basis vectors selected by the terminal and M is a positive integer;

send third basis vector indication information of L × M × S bits for calculating the precoding to the network device, in which the third basis vector indication information is used to indicate a DD-FD basis vector pair corresponding to each SD basis vector or a TD-FD basis vector pair corresponding to each SD basis vector,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to send first basis vector indication information of $\left\lceil log_2^{C_{N_4}^S} \right\rceil + \left\lceil log_2^{O_3} \right\rceil$ bits for calculating the precoding to the network device, in which the first basis vector indication information is used to indicate S DD basis vectors or S TD basis vectors selected by the terminal and S is a positive integer;

send second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate M FD basis vectors selected by the terminal and M is a positive integer;

send third basis vector indication information of $L \times \left\lceil log_2^{C_{MS}^N} \right\rceil$ bits for calculating the precoding to the network device, in which the third basis vector indication information is used to indicate a DD-FD basis vector pair corresponding to each SD basis vector or a TD-FD basis vector pair corresponding to each SD basis vector,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of one or more DD-FD basis vector pairs or the number of one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

In some embodiments, for different SD basis vectors in each polarization direction, and same SD basis vectors in two polarization directions, the terminal selects different DD-FD basis vector pairs; or

for different SD basis vectors in each polarization direction, and same SD basis vectors in two polarization directions, the terminal selects different TD-FD basis vector pairs; or
for different SD basis vectors in each polarization direction, and different SD basis vectors in two polarization directions, the terminal selects the same DD-FD basis vector pair; or
for different SD basis vectors in each polarization direction, and different SD basis vectors in two polarization directions, the terminal selects the same TD-FD basis vector pair; or
for different SD basis vectors in each polarization direction, and different SD basis vectors in two polarization directions, the terminal selects different DD-FD basis vector pairs; or

for different SD basis vectors in each polarization direction, and different SD basis vectors in two polarization directions, the terminal selects different TD-FD basis vector pairs.

In some embodiments, the transceiver module 11 is further configured to send the basis vector indication information of $2L \times \left( \left\lceil log_2^{C_{N_3 N_4}^N} \right\rceil + \left\lceil log_2^{O_3} \right\rceil + \left\lceil log_2^{O_4} \right\rceil \right)$ bits for calculating the precoding to the network device, in which the basis vector indication information is used to indicate the one or more DD-FD basis vector pairs or the one or more TD-FD basis vector pairs selected by the terminal,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more DD-FD basis vector pairs or the number of the one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to send first basis vector indication information of $\left\lceil log_2^{C_{N_4}^S} \right\rceil + \left\lceil log_2^{O_3} \right\rceil$ bits for calculating the precoding to the network device, in which the first basis vector indication information is used to indicate S DD basis vectors or S TD basis vectors selected by the terminal and S is a positive integer;

send second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate M FD basis vectors selected by the terminal and M is a positive integer;

send third basis vector indication information of $2L \times M \times S$ bits for calculating the precoding to the network device, in which the third basis vector indication information is used to indicate the DD-FD basis vector pair corresponding to each SD basis vector or the TD-FD basis vector pair corresponding to each SD basis vector,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to send first basis vector indication information of $\left\lceil log_2^{C_{N_4}^S} \right\rceil + \left\lceil log_2^{O_3} \right\rceil$ bits for calculating the precoding to the network device, in which the first basis vector indication information is used to indicate S DD basis vectors or S TD basis vectors selected by the terminal and S is a positive integer;

send second basis vector indication information of $\left\lceil log_2^{C_{N_3}^M} \right\rceil + \left\lceil log_2^{O_4} \right\rceil$ bits for calculating the precoding to the network device, in which the second basis vector indication information is used to indicate M FD basis vectors selected by the terminal and M is a positive integer;

send third basis vector indication information of $2L \times \left\lceil log_2^{C_{MS}^N} \right\rceil$ bits for calculating the precoding to the network device, in which the third basis vector indication information is used to indicate a DD-FD basis vector pair corresponding to each SD basis vector or a TD-FD basis vector pair corresponding to each SD basis vector;

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In some embodiments, the basis vector pair includes the one or more SD-FD basis vector pairs and the transceiver module 11 is further configured to send the basis vector indication information of

$$\left\lceil log_2^{C_{N_1N_2N_3}^{N'}} \right\rceil + \left\lceil log_2^{O_4} \right\rceil + \left\lceil log_2^{O_1O_2} \right\rceil \text{ bits or } \left\lceil log_2^{C_{N_1N_2(N_3-1)}^{N'}} \right\rceil + \left\lceil log_2^{O_4} \right\rceil + \left\lceil log_2^{O_1O_2} \right\rceil \text{ bits for calculat-}$$

ing the precoding to the network device, in which the basis vector indication information is used to indicate the one or more SD-FD basis vector pairs selected by the terminal,

in which $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

In some embodiments, the basis vector pair includes the one or more SD-FD basis vector pairs, and the transceiver module 11 is further configured to send first basis vector indication information of $\left\lceil log_2^{C_{N_3}^{M}} \right\rceil + \left\lceil log_2^{O_4} \right\rceil$ bits

or $\left\lceil log_2^{C_{N_3-1}^{M-1}} \right\rceil + \left\lceil log_2^{O_4} \right\rceil$ bits for calculating the precoding to the network device, in which the first basis vector indication information is used to indicate M FD basis vectors selected by the terminal and M is a positive integer;

send second basis vector indication information of $\left\lceil log_2^{C_{N_1N_2}^{L}} \right\rceil + \left\lceil log_2^{O_1O_2} \right\rceil$ bits for calculating the precoding to the network device, in which the second basis vector indication information is used to indicate L SD basis vectors selected by the terminal and L is a positive integer;

send third basis vector indication information of M×L bits for calculating the precoding to the network device, in which the third basis vector indication information is used to indicate the one or more SD-FD basis vector pairs selected by the terminal,

in which L is a number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

In some embodiments, the basis vector pair includes the one or more SD-FD basis vector pairs, and the transceiver module 11 is further configured to send first basis vector indication information of $\left\lceil log_2^{C_{N_3}^{M}} \right\rceil + \left\lceil log_2^{O_4} \right\rceil$ bits

or $\left\lceil log_2^{C_{N_3-1}^{M-1}} \right\rceil + \left\lceil log_2^{O_4} \right\rceil$ bits for calculating the precoding to the network device, in which the first basis vector indication information is used to indicate M FD basis vectors selected by the terminal and M is a positive integer;

send second basis vector indication information of $\left\lceil log_2^{C_{N_1N_2}^{L}} \right\rceil + \left\lceil log_2^{O_1O_2} \right\rceil$ bits for calculating the precoding to the network device, in which the second basis vector indication information is used to indicate L SD basis vectors selected by the terminal and L is a positive integer;

send third basis vector indication information of $\left\lceil log_2^{C_{ML}^{N'}} \right\rceil$ bits for calculating the precoding to the network device, in which the third basis vector indication information is used to indicate the one or more SD-FD basis vector pairs selected by the terminal,

in which L is the number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, N' is the number of the one or more SD-FD basis vector pairs in each polarization direction, $O_1$ is an oversampling factor of the one or more SD basis vectors in the horizontal direction, $O_2$ is an oversampling factor of the one or more SD basis vectors in the vertical direction, $O_4$ is an oversampling factor of the one or more FD basis vectors.

In some embodiments, the transceiver module 11 is further configured to send the basis vector indication information for calculating the precoding in any data transmission layer to the network device.

In some embodiments, in a case that a rank of data transmission is greater than 1, each data transmission layer uses same or different basis vectors, and/or each data transmission layer uses same or different basis vector pairs.

In some embodiments, in a case that different data transmission layers use different basis vectors and/or basis vector pairs, each data transmission layer independently indicates the basis vectors and/or basis vector pairs.

In some embodiments, $W_1$ is the SD basis vector or a port selection matrix.

The communication device is the network device.

The device includes a transceiver module 11 and a processing module 12.

The transceiver module 11 is configured to receive basis vector indication information for calculating precoding sent by a terminal, in which the basis vector indication information is used to indicate the basis vector and/or a basis vector pair selected by the terminal.

The processor module 12 is configured to determine the basis vector and/or the basis vector pair selected by the terminal based on the basis vector indication information, to calculate the precoding at different times based on the basis vector and/or the basis vector pair for downlink transmission.

The basis vector and/or the basis vector pair includes at least one of:

> one or more time domain (TD) basis vectors;
> one or more doppler domain (DD) basis vectors;
> one or more spatial domain (SD)-frequency domain (FD) basis vector pairs;
> one or more TD-FD basis vector pairs; or
> one or more DD-FD basis vector pairs.

In some embodiments, before receiving the basis vector indication information sent by the terminal for calculating the precoding, the transceiver module 11 is further configured to send codebook parameter information to the terminal, in which the codebook parameter information includes at least one of:

> lengths of one or more SD basis vectors;
> lengths of one or more FD basis vectors;
> lengths of the one or more TD basis vectors;
> lengths of the one or more DD basis vectors;
> a number of one or more SD basis vectors;
> a number of one or more FD basis vectors;
> a number of one or more TD basis vectors;
> a number of one or more DD basis vectors;
> a number of one or more SD-FD basis vector pairs;
> a number of one or more TD-FD basis vector pairs; or
> a number of one or more DD-FD basis vector pairs.

In some embodiments, the basis vector includes the one or more DD basis vectors or the one or more TD basis vectors,

> for the one or more SD basis vectors, the terminal selects the same DD basis vector; or
> for the one or more FD basis vectors, the terminal selects the same DD basis vector; or
> for the one or more SD basis vectors and the one or more FD basis vectors, the terminal selects the same DD basis vector; or
> for the one or more SD basis vectors, the terminal selects the same TD basis vector; or
> for the one or more FD basis vectors, the terminal selects the same TD basis vector; or
> for the one or more SD basis vectors and all FD basis vectors, the terminal selects the same TD basis vector.

In some embodiments, the transceiver module 11 is further configured to receive the basis vector indication information of $X + \left\lceil \log_2^{O_3} \right\rceil$ bits for calculating the precoding sent by the terminal,

in which the basis vector indication information is used to indicate the one or more DD basis vectors or the one or more TD basis vectors selected by the terminal, $O_3 \geq 1$, $O_3$ is a sampling factor of the one or more DD basis vectors or a sampling factor of the one or more TD basis vectors; in a case that X is indicated by a combination coefficient, $X = \left\lceil \log_2^{C_{N_4}^S} \right\rceil$ or

$$X= \left\lceil \log_2^{C_{N_4-1}^{S-1}} \right\rceil$$

, in a case that X is indicated by a bitmap, X= $N_4$ or X= $N_4$-1, in which $N_4$ is a number of the lengths of the one or more DD basis vectors or of the lengths of the one or more TD basis vectors, S is a number of the one or more DD basis vectors or of the one or more TD basis vectors selected by the terminal, $C_{N_4}^S$ indicates a combination number calculation by selecting S from $N_4$, $C_{N_4-1}^{S-1}$ indicates a combination number calculation by selecting S-1 from $N_4$ - 1, and $\lceil x \rceil$ indicates rounding up of x.

In some embodiments, the basis vector includes the one or more DD basis vectors or the one or more TD basis vectors,

for different SD basis vectors, the terminal selects the same DD basis vector; or
for different SD basis vectors, the terminal selects different DD basis vectors; or
for different FD basis vectors, the terminal selects the same DD basis vector; or
for different FD basis vectors, the terminal selects different DD basis vectors; or
for different SD basis vectors, the terminal selects the same TD basis vector; or
for different SD basis vectors, the terminal selects different TD basis vectors; or
for different FD basis vectors, the terminal selects the same TD basis vector; or
for different FD basis vectors, the terminal selects different TD basis vectors.

In some embodiments, for same SD basis vectors in two polarization directions, the terminal selects the same DD basis vector; or
for same SD basis vectors in two polarization directions, the terminal selects the same TD basis vector.

In some embodiments, the transceiver module 11 is further configured to receive the basis vector indication information of $L \times \left( \left\lceil log_2^{C_{N_4}^S} \right\rceil + \left\lceil \log_2^{O_3} \right\rceil \right)$ bits or $L \times \left( N_4 + \left\lceil \log_2^{O_3} \right\rceil \right)$ bits for calculating the precoding sent by the terminal,

in which the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the one or more DD basis vectors or of the lengths of the one or more TD basis vectors, and S is a number of the one or more DD basis vectors or of the one or more TD basis vectors selected by the terminal.

In some embodiments, for different SD basis vectors in each polarization direction, the terminal selects different DD basis vectors; or

for different SD basis vectors in each polarization direction, the terminal selects different TD basis vectors; or
for different SD basis vectors in each polarization direction, the terminal selects the same DD basis vector; or
for different SD basis vectors in each polarization direction, the terminal selects the same TD basis vector; or
for different SD basis vectors in two polarization directions, the terminal selects the same DD basis vector; or
for different SD basis vectors in two polarization directions, the terminal selects different DD basis vectors; or
for different SD basis vectors in two polarization directions, the terminal selects the same TD basis vector; or
for different SD basis vectors in two polarization directions, the terminal selects different TD basis vectors.

In some embodiments, the transceiver module 11 is further configured to receive the basis vector indication information of $2L \times \left( \left\lceil log_2^{C_{N_4}^S} \right\rceil + \left\lceil \log_2^{O_3} \right\rceil \right)$ bits or $2L \times \left( N_4 + \left\lceil \log_2^{O_3} \right\rceil \right)$ bits for calculating the precoding sent by the terminal,

in which the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the DD basis vectors or of the TD basis vectors, and S is a number of the one or more DD basis vectors or of the one or more TD basis vectors selected by the terminal.

In some embodiments, the basis vector includes the one or more DD basis vectors or the one or more TD basis vectors,

for different SD basis vectors and different FD basis vectors, the terminal selects the same DD basis vector; or
for different SD basis vectors and different FD basis vectors, the terminal selects different DD basis vectors; or
for different SD basis vectors and different FD basis vectors, the terminal selects the same TD basis vector; or
for different SD basis vectors and different FD basis vectors, the terminal selects different TD basis vectors.

In some embodiments, for different SD-FD basis vector pairs in each polarization direction, the terminal selects the same DD basis vector; or

for different SD-FD basis vector pairs in each polarization direction, the terminal selects different DD basis vectors; or
for different SD-FD basis vector pairs in each polarization direction, the terminal selects the same TD basis vector; or
for different SD-FD basis vector pairs in each polarization direction, the terminal selects different TD basis vectors; or
for same SD-FD basis vector pairs in two polarization directions, the terminal selects the same DD basis vector; or
for same SD-FD basis vector pairs in two polarization directions, the terminal selects the same TD basis vector.

In some embodiments, the transceiver module 11 is further configured to receive the basis vector indication information of $N' \times \left( \left\lceil log_2^{C_{N_4}^{S}} \right\rceil + \left\lceil log_2^{O_3} \right\rceil \right)$ bits or $N' \times \left( N_4 + \left\lceil log_2^{O_3} \right\rceil \right)$ bits for calculating the precoding sent by the terminal,

in which the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of one or more TD basis vectors selected by the terminal.

In some embodiments, for different SD-FD basis vector pairs in each polarization direction, the terminal selects different DD basis vectors; or

for different SD-FD basis vector pairs in each polarization direction, the terminal selects different TD basis vectors; or
for different SD-FD basis vector pairs in two polarization directions, the terminal selects the same DD basis vector; or
for different SD-FD basis vector pairs in two polarization directions, the terminal selects different DD basis vectors; or
for different SD-FD basis vector pairs in two polarization directions, the terminal selects the same TD basis vector; or
for different SD-FD basis vector pairs in two polarization directions, the terminal selects different TD basis vectors.

In some embodiments, the transceiver module 11 is further configured to receive the basis vector indication information of $2N' \times \left( \left\lceil log_2^{C_{N_4}^{S}} \right\rceil + \left\lceil log_2^{O_3} \right\rceil \right)$ bits or $2N' \times \left( N_4 + \left\lceil log_2^{O_3} \right\rceil \right)$ bits for calculating the precoding sent by the terminal,

in which the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of the one or more TD basis vectors selected by the terminal.

In some embodiments, the basis vector pair includes the one or more DD-FD basis vector pairs or the one or more TD-FD basis vector pairs,

for the one or more SD basis vectors, the terminal selects the same DD-FD basis vector pair; or
for the one or more SD basis vectors, the terminal selects the same TD-FD basis vector pair.

In some embodiments, the transceiver module 11 is further configured to implement at least one of:

receiving the basis vector indication information of $\left\lceil log_2^{C_{N_3 N_4}^{N}} \right\rceil + \left\lceil log_2^{O_3} \right\rceil + \left\lceil log_2^{O_4} \right\rceil$ bits for calculating the precoding sent by the terminal, in which the basis vector indication information is used to indicate the one or more DD-FD basis vector pairs or the one or more TD-FD basis vector pairs selected by the terminal;

receiving the basis vector indication information of $\left\lceil log_2^{C_{N_3(N_4-1)}^N} \right\rceil + \left\lceil log_2^{O_3} \right\rceil + \left\lceil log_2^{O_4} \right\rceil$ bits for calculating the precoding sent by the terminal, in which the basis vector indication information is used to indicate the one or more DD-FD basis vector pairs or the one or more TD-FD basis vector pairs selected by the terminal;

receiving the basis vector indication information of $\left\lceil log_2^{C_{(N_3-1)N_4}^N} \right\rceil + \left\lceil log_2^{O_3} \right\rceil + \left\lceil log_2^{O_4} \right\rceil$ bits for calculating the precoding sent by the terminal, in which the basis vector indication information is used to indicate the one or more DD-FD basis vector pairs or the one or more TD-FD basis vector pairs selected by the terminal; or

receiving the basis vector indication information of $\left\lceil log_2^{C_{(N_3-1)(N_4-1)}^{N-1}} \right\rceil + \left\lceil log_2^{O_3} \right\rceil + \left\lceil log_2^{O_4} \right\rceil$ bits for calculating the precoding sent by the terminal, in which the basis vector indication information is used to indicate the one or more DD-FD basis vector pairs or the one or more TD-FD basis vector pairs selected by the terminal, in which, $N_3$ is a number of frequency domain PMI subbands, N is the number of the one or more DD-FD basis vector pairs or the number of the one or more TD-FD basis vector pairs, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to receive first basis vector indication information of $\left\lceil log_2^{C_{N_4}^S} \right\rceil + \left\lceil log_2^{O_3} \right\rceil$ bits or $\left\lceil log_2^{C_{N_4-1}^{S-1}} \right\rceil + \left\lceil log_2^{O_3} \right\rceil$ bits for calculating precoding sent by the terminal, in which the first basis vector indication information is used to indicate S DD basis vectors or S TD basis vectors selected by the terminal and S is a positive integer;

receive second basis vector indication information of $\left\lceil log_2^{C_{N_3}^M} \right\rceil + \left\lceil log_2^{O_4} \right\rceil$ bits for calculating precoding sent by the terminal, in which the second basis vector indication information is used to indicate M FD basis vectors selected by the terminal and M is a positive integer;
receive third basis vector indication information of M $\times$ S bits for calculating the precoding sent by the terminal, in which the third basis vector indication information is used to indicate the one or more DD-FD basis vector pairs or the one or more TD-FD basis vector pairs selected by the terminal, in which, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to receive first basis vector indication information of $\left\lceil log_2^{C_{N_4-1}^{S-1}} \right\rceil + \left\lceil log_2^{O_3} \right\rceil$ bits for calculating the precoding sent by the terminal, in which the first basis vector indication information is used to indicate S DD basis vectors or DD basis vectors selected by the terminal and S is a positive integer;

receive second basis vector indication information of $\left\lceil log_2^{C_{N_3}^M} \right\rceil + \left\lceil log_2^{O_4} \right\rceil$ bits for calculating the precoding sent by the terminal, in which the second basis vector indication information is used to indicate M FD basis vectors selected by the terminal and M is a positive integer;

receive third basis vector indication information of $\left\lceil log_2^{C_{MS}^N} \right\rceil$ bits for calculating the precoding sent by the terminal, in which the third basis vector indication information is used to indicate the one or more DD-FD basis vector pairs or the one or more TD-FD basis vector pairs selected by the terminal, in which, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, $O_4$ is an oversampling factor of the one or more FD basis vectors, and N is the number of the one or more the DD-FD basis vector pairs or the number of the one or more the TD-FD basis vector pairs.

In some embodiments, the basis vector pair includes the one or more DD-FD basis vector pairs or the one or more TD-FD basis vector pairs,

for the same SD basis vector, the terminal selects the same DD-FD basis vector pair; or
for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or
for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

In some embodiments, for different SD basis vectors in each polarization direction, the terminal selects the same DD-FD basis vector pair; or

for different SD basis vectors in each polarization direction, the terminal selects the same TD-FD basis vector pair; or
for different SD basis vectors in each polarization direction, the terminal selects different DD-FD basis vector pairs; or
for different SD basis vectors in each polarization direction, the terminal selects different TD-FD basis vector pairs; or
for different SD basis vectors in each polarization direction, and same SD basis vectors in two polarization directions, the terminal selects the same DD-FD basis vector pair; or
for different SD basis vectors in each polarization direction, and same SD basis vectors in two polarization directions, the terminal selects the same TD-FD basis vector pair.

In some embodiments, the transceiver module 11 is further configured to receive the basis vector indication information of $L \times \left( \left\lceil log_2^{C_{N_3 N_4}^N} \right\rceil + \left\lceil log_2^{O_3} \right\rceil + \left\lceil log_2^{O_4} \right\rceil \right)$ bits for calculating the precoding sent by the terminal, in which the basis vector indication information is used to indicate the one or more DD-FD basis vector pairs or the one or more TD-FD basis vector pairs selected by the terminal, L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more the DD-FD basis vector pairs or the number of one or more the TD-FD basis vector pairs, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to receive first basis vector indication information of $\left\lceil log_2^{C_{N_4}^S} \right\rceil + \left\lceil log_2^{O_3} \right\rceil$ bits for calculating the precoding sent by the terminal, in which the first basis vector indication information is used to indicate S DD basis vectors or S TD basis vectors selected by the terminal and S is a positive integer;

receive second basis vector indication information of $\left\lceil log_2^{C_{N_3}^M} \right\rceil + \left\lceil log_2^{O_4} \right\rceil$ bits for calculating the precoding sent by the terminal, in which the second basis vector indication information is used to indicate M FD basis vectors selected by the terminal and M is a positive integer;
receive third basis vector indication information of $L \times M \times S$ bits for calculating the precoding sent by the terminal, in which the third basis vector indication information is used to indicate a DD-FD basis vector pair corresponding to each SD basis vector or a TD-FD basis vector pair corresponding to each SD basis vector,
in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to receive first basis vector indication information of $\left\lceil log_2^{C_{N_4}^S} \right\rceil + \left\lceil log_2^{O_3} \right\rceil$ bits for calculating the precoding sent by the terminal, in which the first basis vector indication information is used to indicate S DD basis vectors or S TD basis vectors selected by the terminal and S is a positive integer;

receive second basis vector indication information of $\left\lceil log_2^{C_{N_3}^M} \right\rceil + \left\lceil log_2^{O_4} \right\rceil$ bits for calculating the precoding sent by the terminal, in which the second basis vector indication information is used to indicate M FD basis vectors selected by the terminal and M is a positive integer;

receive third basis vector indication information of $L \times \left\lceil log_2^{C_{MS}^N} \right\rceil$ bits for calculating the precoding sent by the terminal, in which the third basis vector indication information is used to indicate a DD-FD basis vector pair corresponding to each SD basis vector or a TD-FD basis vector pair corresponding to each SD basis vector, in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of one or more DD-FD basis vector pairs or the number of one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

In some embodiments, for different SD basis vectors in each polarization direction, and same SD basis vectors in two polarization directions, the terminal selects different DD-FD basis vector pairs; or

for different SD basis vectors in each polarization direction, and same SD basis vectors in two polarization directions, the terminal selects different TD-FD basis vector pairs; or
for different SD basis vectors in each polarization direction, and different SD basis vectors in two polarization directions, the terminal selects the same DD-FD basis vector pair; or
for different SD basis vectors in each polarization direction, and different SD basis vectors in two polarization directions, the terminal selects the same TD-FD basis vector pair; or
for different SD basis vectors in each polarization direction, and different SD basis vectors in two polarization directions, the terminal selects different DD-FD basis vector pairs; or
for different SD basis vectors in each polarization direction, and different SD basis vectors in two polarization directions, the terminal selects different TD-FD basis vector pairs.

In some embodiments, the transceiver module 11 is further configured to receive the basis vector indication information of $2L \times \left( \left\lceil log_2^{C_{N_3 N_4}^N} \right\rceil + \left\lceil log_2^{O_3} \right\rceil + \left\lceil log_2^{O_4} \right\rceil \right)$ bits for calculating the precoding sent by the terminal, in which the basis vector indication information is used to indicate the one or more DD-FD basis vector pairs or the one or more TD-FD basis vector pairs selected by the terminal, in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more DD-FD basis vector pairs or the number of the one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to receive first basis vector indication information of $\left\lceil log_2^{C_{N_4}^S} \right\rceil + \left\lceil log_2^{O_3} \right\rceil$ bits for calculating the precoding sent by the terminal, in which the first basis vector indication information is used to indicate S DD basis vectors or S TD basis vectors selected by the terminal and S is a positive integer;

receive second basis vector indication information of $\left\lceil log_2^{C_{N_3}^M} \right\rceil + \left\lceil log_2^{O_4} \right\rceil$ bits for calculating the precoding sent by the terminal, in which the second basis vector indication information is used to indicate M FD basis vectors selected by the terminal and M is a positive integer;

receive third basis vector indication information of $2L \times M \times S$ bits for calculating the precoding sent by the terminal, in which the third basis vector indication information is used to indicate the DD-FD basis vector pair corresponding to each SD basis vector or the TD-FD basis vector pair corresponding to each SD basis vector,

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In some embodiments, the transceiver module 11 is further configured to receive first basis vector indication information of $\left\lceil log_2^{C_{N_4}^S} \right\rceil + \left\lceil log_2^{O_3} \right\rceil$ bits for calculating the precoding sent by the terminal, in which the first basis vector indication information is used to indicate S DD basis vectors or S TD basis vectors selected by the terminal and S is a positive integer;

receive second basis vector indication information of $\left\lceil log_2^{C_{N_3}^M} \right\rceil + \left\lceil log_2^{O_4} \right\rceil$ bits for calculating the precoding sent by the terminal, in which the second basis vector indication information is used to indicate M FD basis vectors selected by the terminal and M is a positive integer;

receive third basis vector indication information of $2L \times \left\lceil log_2^{C_{MS}^N} \right\rceil$ bits for calculating the precoding sent by the terminal, in which the third basis vector indication information is used to indicate a DD-FD basis vector pair corresponding to each SD basis vector or a TD-FD basis vector pair corresponding to each SD basis vector;

in which L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

In some embodiments, the basis vector pair includes the one or more SD-FD basis vector pairs, and the transceiver module 11 is further configured to receive the basis vector indication information of $\left\lceil log_2^{C_{N_1 N_2 N_3}^{N'}} \right\rceil + \left\lceil log_2^{O_4} \right\rceil + \left\lceil log_2^{O_1 O_2} \right\rceil$ bits or $\left\lceil log_2^{C_{N_1 N_2 (N_3-1)}^{N'}} \right\rceil + \left\lceil log_2^{O_4} \right\rceil + \left\lceil log_2^{O_1 O_2} \right\rceil$ bits for calculating the precoding sent by the terminal, in which the basis vector indication information is used to indicate the one or more SD-FD basis vector pairs selected by the terminal,

in which $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

In some embodiments, the basis vector pair includes the one or more SD-FD basis vector pairs, and the transceiver module 11 is further configured to receive first basis vector indication information of $\left\lceil log_2^{C_{N_3}^M} \right\rceil + \left\lceil log_2^{O_4} \right\rceil$ bits or $\left\lceil log_2^{C_{N_3-1}^{M-1}} \right\rceil + \left\lceil log_2^{O_4} \right\rceil$ bits for calculating the precoding sent by the terminal, in which the first basis vector indication information is used to indicate M FD basis vectors selected by the terminal and M is a positive integer;

receive second basis vector indication information of $\left\lceil log_2^{C_{N_1 N_2}^L} \right\rceil + \left\lceil log_2^{O_1 O_2} \right\rceil$ bits for calculating the precoding sent by the terminal, in which the second basis vector indication information is used to indicate L SD basis vectors selected by the terminal and L is a positive integer;

receive third basis vector indication information of $M \times L$ bits for calculating the precoding sent by the terminal, in which the third basis vector indication information is used to indicate the one or more SD-FD basis vector pairs selected by the terminal,

in which L is a number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

In some embodiments, the basis vector pair includes the one or more SD-FD basis vector pairs, and the transceiver module 11 is further configured to receive first basis vector indication information of $\left\lceil log_2^{C_{N_3}^M} \right\rceil + \left\lceil log_2^{O_4} \right\rceil$ bits or $\left\lceil log_2^{C_{N_3-1}^{M-1}} \right\rceil + \left\lceil log_2^{O_4} \right\rceil$ bits for calculating the precoding sent by the terminal, in which the first basis vector indication information is used to indicate M FD basis vectors selected by the terminal and M is a positive integer;

receive second basis vector indication information of $\left\lceil log_2^{C_{N_1 N_2}^L} \right\rceil + \left\lceil log_2^{O_1 O_2} \right\rceil$ bits for calculating the precoding sent by the terminal, in which the second basis vector indication information is used to indicate L SD basis vectors selected by the terminal and L is a positive integer;

receive third basis vector indication information of $\left\lceil log_2^{C_{ML}^{N'}} \right\rceil$ bits bits for calculating the precoding sent by the terminal, in which the third basis vector indication information is used to indicate the one or more SD-FD basis vector pairs selected by the terminal,

in which L is the number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, N' is the number of the one or more SD-FD basis vector pairs in each polarization direction, $O_1$ is an oversampling factor of the one or more SD basis vectors in the horizontal direction, $O_2$ is an oversampling factor of the one or more SD basis vectors in the vertical direction, $O_4$ is an oversampling factor of the one or more FD basis vectors.

In some embodiments, the transceiver module 11 is further configured to receive the basis vector indication information for calculating the precoding in any data transmission layer sent by the terminal.

In some embodiments, in a case that a rank of data transmission is greater than 1, each data transmission layer uses same or different basis vectors, and/or each data transmission layer uses same or different basis vector pairs.

In some embodiments, in a case that different data transmission layers use different basis vectors and/or basis vector pairs, each data transmission layer independently indicates the basis vectors and/or basis vector pairs.

In some embodiments, $W_1$ is the SD basis vector or a port selection matrix.

Regarding the communication device 1 in the above embodiment, the specific implementation in which each module performs operations has been described in detail in the embodiment of the method, and will not be elaborated here.

The communication device 1 provided in the above embodiments of the present disclosure achieves the same or similar beneficial effects as the method for reporting the selection indication of the basis vector provided in some of the above embodiments, which will not be described in detail here.

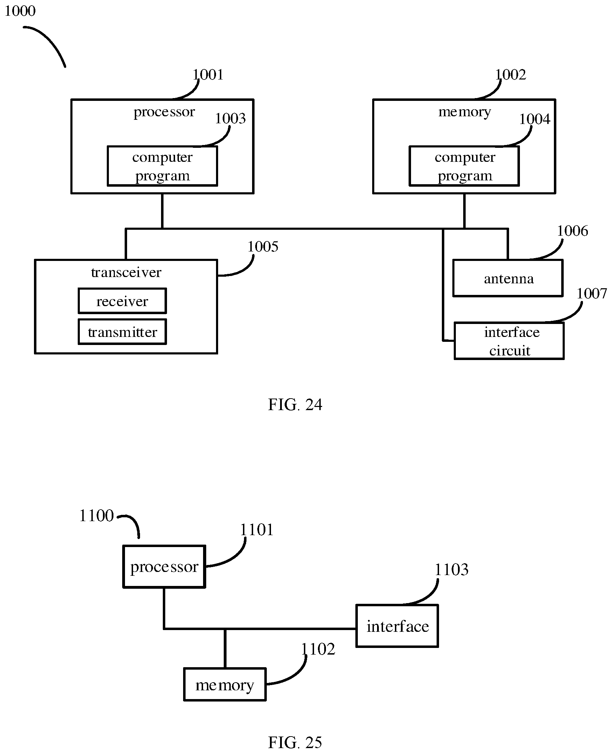

FIG. 24 is a schematic diagram of the structure of another communication device 1000 provided in an embodiment of the present disclosure. The communication device 1000 may be a network device, or a terminal, or a chip, a chip system, or a processor that supports the network device to implement the above method, or a chip, a chip system, or a processor that supports the terminal to implement the above method. The communication device 1000 may be used to implement the method described in the above method embodiment, and the details may refer to the description in the above method embodiment.

The communication device 1000 may include one or more processors 1001. The processor 1001 may be a general-purpose processor or a dedicated processor, etc. For example, it may be a baseband processor or a central processing unit. The baseband processor may be used to process the communication protocol and communication data, and the central processing unit may be used to control the communication device (such as a network device, a baseband chip, a terminal, a terminal chip, a DU or a CU, etc.), execute a computer program, and process the data of the computer program.

Optionally, the communication device 1000 may further include one or more memories 1002, on which a computer program 1004 may be stored, and the memory 1002 executes the computer program 1004 so that the communication device 1000 executes the method described in the above method embodiment. Optionally, data may also be stored in the memory 1002. The communication device 1000 and the memory 1002 may be provided separately or integrated together.

Optionally, the communication device 1000 may further include a transceiver 1005 and an antenna 1006. The transceiver 1005 may be referred to as a transceiver unit, a transceiver machine, or a transceiver circuit, etc., for implementing the transmitting and receiving function. The transceiver 1005 may include a receiver and a transmitter, the receiver may be referred to as a receiver machine or a receiving circuit, etc., for implementing a receiving function; the transmitter may be referred to as a transmitter machine or a transmitting circuit, etc., for implementing a transmitting function.

Optionally, the communication device 1000 may further include one or more interface circuits 1007. The interface circuit 1007 is used to receive code instructions and transmit the code instructions to the processor 1001. The processor 1001 executes the code instructions to enable the communication device 1000 to execute the method described in the above method embodiment.

The communication device 1000 is a terminal: the transceiver 1005 is used to execute S21 in FIG. 2; S31 and S32 in FIG. 3; S41 in FIG. 4; S51 in FIG. 5; S61 in FIG. 6; S71 in FIG. 7; S81 in FIG. 8; S91 in FIG. 9; S101 to S103 in FIG. 10; S111 to S113 in FIG. 11; S121 in FIG. 12; S131 to S133 in FIG. 13; S141 to S143 in FIG. 14; S151 in FIG. 15; S161 to S163 in FIG. 16; S171 to S173 in FIG. 17; S181 in FIG. 18; S191 to S193 in FIG. 19; S201 to S203 in FIG. 20.

The communication device 1000 is a network device: the transceiver 1005 is used to execute S211 in FIG. 21 and S221 and S 223 in FIG. 22; the processor 1001 is used to execute S212 in FIG. 21 and S 222 in FIG. 22.

In one implementation, the processor 1001 may include a transceiver for implementing receiving and sending functions. For example, the transceiver may be a transceiver circuit, an interface, or an interface circuit. The transceiver circuit, interface, or interface circuit for implementing the receiving and sending functions may be separate or integrated. The transceiver circuit, interface, or interface circuit may be used for reading and writing code/data, or the transceiver circuit, interface, or interface circuit may be used for transmitting or delivering signals.

In one implementation, the processor 1001 may store a computer program 1003, which runs on the processor 1001 and enables the communication device 1000 to perform the method described in the above method embodiment. The computer program 1003 may be fixed in the processor 1001, in which case the processor 1001 may be implemented by hardware.

In one implementation, the communication device 1000 may include a circuit that may implement the functions of sending, receiving or communicating in the aforementioned method embodiments. The processor and transceiver described in the present disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be manufactured using various IC process technologies, such as complementary metal oxide semiconductor (CMOS), N-type metal oxide semiconductor (nMetal-oxide-semiconductor, NMOS), P-type metal oxide semiconductor (positive channel metal oxide semiconductor, PMOS), bipolar junction transistor (BJT), bipolar CMOS (BiCMOS), silicon germanium (SiGe), gallium arsenide (GaAs), etc.

The communication device described in the above embodiments may be a terminal, but the scope of the communication device described in the present disclosure is not limited thereto, and the structure of the communication device may not be limited by FIG. 24. The communication device may be an independent device or may be part of a larger device. For example, the communication device may be one of:

(1) an independent integrated circuit IC, or chip, or chip system or subsystem;
(2) a collection of one or more ICs, optionally including a storage component for storing data or computer programs;
(3) ASIC, such as a modem;
(4) modules that may be embedded in other devices;
(5) receivers, terminals, intelligent terminals, cellular phones, wireless devices, handheld devices, mobile units, vehicle-mounted devices, network devices, cloud devices, artificial intelligence devices, etc.;
(6) others

For the case where the communication device may be a chip or a chip system, FIG. 25 is a structural diagram of a chip provided in an embodiment of the present disclosure.

The chip 1100 includes a processor 1101 and an interface 1103. The number of the processor 1101 may be one or more, and the number of the interface 1103 may be multiple.

The case where the chip is used to implement the functions of the network device in an embodiment of the present disclosure is explained as follows.

The interface 1103 is used to receive code instructions and transmit the code instructions to the processor.

The processor 1101 is used to execute the code instructions to implement the method for reporting the selection indication of the basis vector according to some embodiments.

The case where the chip is used to implement the functions of the terminal in an embodiment of the present disclosure is explained as follows.

The interface 1103 is used to receive code instructions and transmit the code instructions to the processor.

The processor 1101 is used to execute the code instructions to implement the method for reporting the selection indication of the basis vectors according to some embodiments.

Optionally, the chip 1100 further includes a memory 1102, and the memory 1102 is used to store necessary computer programs and data.

Those skilled in the art may also understand that the various illustrative logical blocks and steps listed in the embodiments of the present disclosure may be implemented by electronic hardware, computer software, or a combination of them. Whether such functions are implemented by hardware or software depends on the specific application and the design requirements of the entire system. Those skilled in the art may use various methods to implement the functions described for each specific application, but such implementation should not be understood as exceeding the protection scope of the embodiments of the present disclosure.

An embodiment of the present disclosure also provides a system for reporting the selection indication of the basis vector, which includes the communication device as a terminal and the communication device as a network device in the aforementioned embodiment in FIG. 10, or the system includes the communication device as a terminal and the communication device as a network device in the aforementioned embodiment in FIG. 11.

The present disclosure also provides a readable storage medium having instructions stored thereon, the instructions are executed by a computer to implement the functions of any of the above method embodiments.

The present disclosure also provides a computer program product, the computer program product is executed by a computer to implement the functions of any of the above method embodiments.

In the above embodiments, it may be implemented in whole or in part by software, hardware, firmware or any combination thereof. When implemented by software, it may be implemented in whole or in part in the form of a computer program product. The computer program product includes one or more computer programs. When the computer program is loaded and executed on a computer, the process or function described in an embodiment of the present disclosure is generated in whole or in part. The computer may be a general-purpose computer, a special-purpose computer, a computer network, or other programmable device. The computer program may be stored in a computer readable storage medium, or transmitted from one computer readable storage medium to another computer readable storage medium. For example, the computer program may be transmitted from a website site, computer, server or data center by wired (e.g., coaxial cable, optical fiber, digital subscriber line (DSL)) or wireless (e.g., infrared, wireless, microwave, etc.) mode to another website site, computer, server or data center. The computer readable storage medium may be any available medium that may be accessed by a computer or a data storage device such as a server or data center that includes one or more available medium. The available medium may be a magnetic medium (e.g., a floppy disk, a hard disk, a magnetic tape), an optical medium (e.g., a digital video disc (DVD)), or a semiconductor medium (e.g., a solid state disk (SSD)).

Those skilled in the art may understand that the various numerical numbers such as first and second involved in the present disclosure are only for the convenience of description and are not used to limit the scope of the embodiments of the present disclosure, and also indicate the order of precedence.

At least one in the present disclosure may also be described as one or more, and multiple may be two, three, four or more, which is not limited in the present disclosure. In the embodiments of the present disclosure, for a technical feature, the technical feature is distinguished by "first", "second", "third", "A", "B", "C" and "D", etc., and there is no order of precedence or size between the technical features described by the "first", "second", "third", "A", "B", "C" and "D".

The corresponding relationships shown in the tables in the present disclosure may be configured or predefined. The values of the information in each table are only examples and may be configured as other values, which are not limited by the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, etc. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hash tables.

The predefined in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional and technical personnel may use different methods to implement the described functions for each specific application, but such implementation should not be considered to be beyond the scope of the present disclosure.

Those skilled in the art may clearly understand that, for the convenience and brevity of description, the specific working processes of the systems, devices and units described above may refer to the corresponding processes in the aforementioned method embodiments and will not be repeated here.

The above are only specific embodiments of the present disclosure, but the protection scope of the present disclosure is not limited thereto. Any person skilled in the art who is familiar with the technical field may easily think of changes or substitutions within the technical scope defined in the present disclosure, which should be included in the protection scope of the present disclosure. Therefore, the protection scope of the present disclosure should be based on the protection scope of the claims.

**Claims**

1.  A method for reporting a selection indication of a basis vector, performed by a terminal, comprising:

    sending basis vector indication information for calculating precoding to a network device, wherein the basis vector indication information is used to indicate the basis vector and/or a basis vector pair selected by the terminal, wherein the basis vector and/or the basis vector pair comprises at least one of:

    one or more time domain (TD) basis vectors;
    one or more doppler domain (DD) basis vectors;
    one or more spatial domain (SD)-frequency domain (FD) basis vector pairs;
    one or more TD-FD basis vector pairs; or
    one or more DD-FD basis vector pairs.

2.  The method according to claim 1, wherein before sending the basis vector indication information for calculating the precoding to the network device, the method further comprises:
    receiving codebook parameter information sent by the network device, wherein the codebook parameter information comprises at least one of:

    lengths of one or more SD basis vectors;
    lengths of one or more FD basis vectors;
    lengths of the one or more TD basis vectors;
    lengths of the one or more DD basis vectors;
    a number of one or more SD basis vectors;
    a number of one or more FD basis vectors;
    a number of one or more TD basis vectors;
    a number of one or more DD basis vectors;
    a number of one or more SD-FD basis vector pairs;
    a number of one or more TD-FD basis vector pairs; or
    a number of one or more DD-FD basis vector pairs.

3.  The method according to claim 1 or 2, wherein the basis vector comprises the one or more DD basis vectors, or the one or more TD basis vectors,

    for the one or more SD basis vectors, the terminal selects the same DD basis vector; or
    for the one or more FD basis vectors, the terminal selects the same DD basis vector; or
    for the one or more SD basis vectors and the one or more FD basis vectors, the terminal selects the same DD basis vector; or
    for the one or more SD basis vectors, the terminal selects the same TD basis vector; or
    for the one or more FD basis vectors, the terminal selects the same TD basis vector; or
    for the one or more SD basis vectors and all FD basis vectors, the terminal selects the same TD basis vector.

4.  The method according to claim 3, wherein sending the basis vector indication information for calculating the precoding to the network device comprises:

sending the basis vector indication information of $X + \lceil \log_2^{O_3} \rceil$ bits for calculating the precoding to the network device,

wherein the basis vector indication information is used to indicate the one or more DD basis vectors or the one or more TD basis vectors selected by the terminal, $O_3 \geq 1$, $O_3$ is a sampling factor of the one or more DD basis vectors or a sampling factor of the one or more TD basis vectors; in a case that X is indicated by a combination coefficient,

$$X = \left\lceil \log_2^{C_{N_4}^{S}} \right\rceil \text{ or } X = \left\lceil \log_2^{C_{N_4-1}^{S-1}} \right\rceil$$, in a case that X is indicated by a bitmap, X= $N_4$ or X= $N_4$-1, wherein $N_4$ is a number of the lengths of the one or more DD basis vectors or of the lengths of the one or more TD basis vectors, S is a number of the one or more DD basis vectors or of the one or more TD basis vectors selected by the terminal, $C_{N_4}^{S}$ indicates a combination number calculation by selecting S from $N_4$, $C_{N_4-1}^{S-1}$ indicates a combination number calculation by selecting S-1 from $N_4$ - 1, and $\lceil x \rceil$ indicates rounding up of x.

5. The method according to claim 1 or 2, wherein the basis vector comprises the one or more DD basis vectors or the one or more TD basis vectors,

for different SD basis vectors, the terminal selects the same DD basis vector; or
for different SD basis vectors, the terminal selects different DD basis vectors; or
for different FD basis vectors, the terminal selects the same DD basis vector; or
for different FD basis vectors, the terminal selects different DD basis vectors; or
for different SD basis vectors, the terminal selects the same TD basis vector; or
for different SD basis vectors, the terminal selects different TD basis vectors; or
for different FD basis vectors, the terminal selects the same TD basis vector; or
for different FD basis vectors, the terminal selects different TD basis vectors.

6. The method according to claim 5, wherein,

for same SD basis vectors in two polarization directions, the terminal selects the same DD basis vector; or
for same SD basis vectors in two polarization directions, the terminal selects the same TD basis vector.

7. The method according to claim 6, wherein sending the basis vector indication information for calculating the precoding to the network device comprises:

sending the basis vector indication information of $L \times \left( \left\lceil \log_2^{C_{N_4}^{S}} \right\rceil + \lceil \log_2^{O_3} \rceil \right)$ bits or $L \times \left( N_4 + \lceil \log_2^{O_3} \rceil \right)$ bits for calculating the precoding to the network device,

wherein the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the one or more DD basis vectors or of the lengths of the one or more TD basis vectors, and S is a number of the one or more DD basis vectors or of the one or more TD basis vectors selected by the terminal.

8. The method according to claim 5, wherein,

for different SD basis vectors in each polarization direction, the terminal selects different DD basis vectors; or
for different SD basis vectors in each polarization direction, the terminal selects different TD basis vectors; or
for different SD basis vectors in each polarization direction, the terminal selects the same DD basis vector; or
for different SD basis vectors in each polarization direction, the terminal selects different TD basis vectors; or
for different SD basis vectors in two polarization directions, the terminal selects the same DD basis vector; or
for different SD basis vectors in two polarization directions, the terminal selects different DD basis vectors; or
for different SD basis vectors in two polarization directions, the terminal selects the same TD basis vector; or

for different SD basis vectors in two polarization directions, the terminal selects different TD basis vectors.

9. The method according to claim 8, wherein sending the basis vector indication information for calculating the precoding to the network device comprises:

sending the basis vector indication information of $2L \times \left( \left\lceil log_2^{C_{N_4}^S} \right\rceil + \left\lceil log_2^{O_3} \right\rceil \right)$ bits or $2L \times \left( N_4 + \left\lceil log_2^{O_3} \right\rceil \right)$ bits for calculating the precoding to the network device, wherein the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the DD basis vectors or of the TD basis vectors, and S is a number of the one or more DD basis vectors or of the one or more TD basis vectors selected by the terminal.

10. The method according to claim 1 or 2, wherein the basis vector comprises the one or more DD basis vectors or the one or more TD basis vectors,

for different SD basis vectors and different FD basis vectors, the terminal selects the same DD basis vector; or
for different SD basis vectors and different FD basis vectors, the terminal selects different DD basis vectors; or
for different SD basis vectors and different FD basis vectors, the terminal selects the same TD basis vector; or
for different SD basis vectors and different FD basis vectors, the terminal selects different TD basis vectors.

11. The method according to claim 10, wherein,

for different SD-FD basis vector pairs in each polarization direction, the terminal selects the same DD basis vector; or
for different SD-FD basis vector pairs in each polarization direction, the terminal selects different DD basis vectors; or
for different SD-FD basis vector pairs in each polarization direction, the terminal selects the same TD basis vector; or
for different SD-FD basis vector pairs in each polarization direction, the terminal selects different TD basis vectors; or
for same SD-FD basis vector pairs in two polarization directions, the terminal selects the same DD basis vector; or
for same SD-FD basis vector pairs in two polarization directions, the terminal selects the same TD basis vector.

12. The method according to claim 11, wherein sending the basis vector indication information for calculating the precoding to the network device comprises:

sending the basis vector indication information of $N' \times \left( \left\lceil log_2^{C_{N_4}^S} \right\rceil + \left\lceil log_2^{O_3} \right\rceil \right)$ bits or $N' \times \left( N_4 + \left\lceil log_2^{O_3} \right\rceil \right)$ bits for calculating the precoding to the network device, wherein the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of one or more TD basis vectors selected by the terminal.

13. The method according to claim 10, wherein,

for different SD-FD basis vector pairs in each polarization direction, the terminal selects different DD basis vectors; or
for different SD-FD basis vector pairs in each polarization direction, the terminal selects different TD basis vectors; or

for different SD-FD basis vector pairs in two polarization directions, the terminal selects the same DD basis vector; or

for different SD-FD basis vector pairs in two polarization directions, the terminal selects different DD basis vectors; or

for different SD-FD basis vector pairs in two polarization directions, the terminal selects the same TD basis vector; or

for different SD-FD basis vector pairs in two polarization directions, the terminal selects different TD basis vectors.

14. The method according to claim 13, wherein sending the basis vector indication information for calculating the precoding to the network device comprises:

sending the basis vector indication information of $2N' \times \left( \left\lceil log_2^{C_{N_4}^S} \right\rceil + \left\lceil log_2^{O_3} \right\rceil \right)$ bits bits or $2N'$ $\times \left( N_4 + \left\lceil log_2^{O_3} \right\rceil \right)$ bits for calculating the precoding to the network device,

wherein the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of the one or more TD basis vectors selected by the terminal.

15. The method according to claim 1 or 2, wherein the basis vector pair comprises the one or more DD-FD basis vector pairs or the one or more TD-FD basis vector pairs,

for the one or more SD basis vectors, the terminal selects the same DD-FD basis vector pair; or
for the one or more SD basis vectors, the terminal selects the same TD-FD basis vector pair.

16. The method according to claim 15, wherein sending the basis vector indication information for calculating the precoding to the network device comprises at least one of:

sending the basis vector indication information of $\left\lceil log_2^{C_{N_3 N_4}^N} \right\rceil + \left\lceil log_2^{O_3} \right\rceil + \left\lceil log_2^{O_4} \right\rceil$ bits bits for calculating the precoding to the network device, wherein the basis vector indication information is used to indicate the one or more DD-FD basis vector pairs or the one or more TD-FD basis vector pairs selected by the terminal;

sending the basis vector indication information of $\left\lceil log_2^{C_{N_3(N_4-1)}^N} \right\rceil + \left\lceil log_2^{O_3} \right\rceil + \left\lceil log_2^{O_4} \right\rceil$ bits for calculating the precoding to the network device, wherein the basis vector indication information is used to indicate the one or more DD-FD basis vector pairs or the one or more TD-FD basis vector pairs selected by the terminal;

sending the basis vector indication information of $\left\lceil log_2^{C_{(N_3-1)N_4}^N} \right\rceil + \left\lceil log_2^{O_3} \right\rceil + \left\lceil log_2^{O_4} \right\rceil$ bits for calculating the precoding to the network device, wherein the basis vector indication information is used to indicate the one or more DD-FD basis vector pairs or the one or more TD-FD basis vector pairs selected by the terminal; or

sending the basis vector indication information of $\left\lceil log_2^{C_{(N_3-1)(N_4-1)}^{N-1}} \right\rceil + \left\lceil log_2^{O_3} \right\rceil + \left\lceil log_2^{O_4} \right\rceil$ bits for calculating the precoding to the network device, wherein the basis vector indication information is used to indicate the one or more DD-FD basis vector pairs or the one or more TD-FD basis vector pairs selected by the terminal,

wherein $N_3$ is a number of frequency domain PMI subbands, N is the number of the one or more DD-FD basis vector pairs or the number of the one or more TD-FD basis vector pairs, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

17. The method according to claim 15, wherein sending the basis vector indication information for calculating the precoding to the network device comprises:

sending first basis vector indication information of $\left\lceil log_2^{C_{N_4}^S} \right\rceil + \left\lceil log_2^{O_3} \right\rceil$ bits or $\left\lceil log_2^{C_{N_4-1}^{S-1}} \right\rceil + \left\lceil log_2^{O_3} \right\rceil$ bits for calculating precoding to the network device, wherein the first basis vector indication information is used to indicate S DD basis vectors or S TD basis vectors selected by the terminal and S is a positive integer;

sending second basis vector indication information of $\left\lceil log_2^{C_{N_3}^M} \right\rceil + \left\lceil log_2^{O_4} \right\rceil$ bits for calculating precoding to the network device, wherein the second basis vector indication information is used to indicate M FD basis vectors selected by the terminal and M is a positive integer;

sending third basis vector indication information of M × S bits for calculating the precoding to the network device, wherein the third basis vector indication information is used to indicate the one or more DD-FD basis vector pairs or the one or more TD-FD basis vector pairs selected by the terminal,

wherein $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

18. The method according to claim 15, wherein sending the basis vector indication information for calculating the precoding to the network device comprises:

sending first basis vector indication information of $\left\lceil log_2^{C_{N_4-1}^{S-1}} \right\rceil + \left\lceil log_2^{O_3} \right\rceil$ bits for calculating the precoding to the network device, wherein the first basis vector indication information is used to indicate S DD basis vectors or DD basis vectors selected by the terminal and S is a positive integer;

sending second basis vector indication information of $\left\lceil log_2^{C_{N_3}^M} \right\rceil + \left\lceil log_2^{O_4} \right\rceil$ bits for calculating the precoding to the network device, wherein the second basis vector indication information is used to indicate M FD basis vectors selected by the terminal and M is a positive integer;

sending third basis vector indication information of $\left\lceil log_2^{C_{MS}^N} \right\rceil$ bits for calculating the precoding to the network device, wherein the third basis vector indication information is used to indicate the one or more DD-FD basis vector pairs or the one or more TD-FD basis vector pairs selected by the terminal,

wherein $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, $O_4$ is an oversampling factor of the one or more FD basis vectors, and N is the number of the one or more the DD-FD basis vector pairs or the number of the one or more the TD-FD basis vector pairs.

19. The method according to claim 1 or 2, wherein the basis vector pair comprises the one or more DD-FD basis vector pairs or the one or more TD-FD basis vector pairs,

for the same SD basis vector, the terminal selects the same DD-FD basis vector pair; or
for the same SD basis vector, the terminal selects different DD-FD basis vector pairs; or
for the same SD basis vector, the terminal selects the same TD-FD basis vector pair; or
for the same SD basis vector, the terminal selects different TD-FD basis vector pairs; or
for different SD basis vectors, the terminal selects the same DD-FD basis vector pair; or
for different SD basis vectors, the terminal selects different DD-FD basis vector pairs; or
for different SD basis vectors, the terminal selects the same TD-FD basis vector pair; or
for different SD basis vectors, the terminal selects different TD-FD basis vector pairs.

20. The method according to claim 19, wherein,

for different SD basis vectors in each polarization direction, the terminal selects the same DD-FD basis vector pair; or
for different SD basis vectors in each polarization direction, the terminal selects the same TD-FD basis vector pair; or
for different SD basis vectors in each polarization direction, the terminal selects different DD-FD basis vector pairs; or
for different SD basis vectors in each polarization direction, the terminal selects different TD-FD basis vector pairs; or
for different SD basis vectors in each polarization direction, and same SD basis vectors in two polarization directions, the terminal selects the same DD-FD basis vector pair; or
for different SD basis vectors in each polarization direction, and same SD basis vectors in two polarization directions, the terminal selects the same TD-FD basis vector pair.

21. The method according to claim 20, wherein sending the basis vector indication information for calculating the precoding to the network device comprises:

sending the basis vector indication information of $L \times \left( \left\lceil log_2^{C_{N_3 N_4}^N} \right\rceil + \left\lceil \log_2^{O_3} \right\rceil + \left\lceil \log_2^{O_4} \right\rceil \right)$ bits for calculating the precoding to the network device,
wherein the basis vector indication information is used to indicate the one or more DD-FD basis vector pairs or the one or more TD-FD basis vector pairs selected by the terminal, L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more the DD-FD basis vector pairs or the number of one or more the TD-FD basis vector pairs, $O_3$ is a sampling factor of the one or more DD basis vectors or a sampling factor of the one or more TD basis vectors, and $O_4$ is an oversampling factor of the one or more FD basis vectors.

22. The method according to claim 20, wherein sending the basis vector indication information for calculating the precoding to the network device comprises:

sending first basis vector indication information of $\left\lceil log_2^{C_{N_4}^S} \right\rceil + \left\lceil \log_2^{O_3} \right\rceil$ bits for calculating the precoding to the network device, wherein the first basis vector indication information is used to indicate S DD basis vectors or S TD basis vectors selected by the terminal and S is a positive integer;

sending second basis vector indication information of $\left\lceil log_2^{C_{N_3}^M} \right\rceil + \left\lceil \log_2^{O_4} \right\rceil$ bits for calculating the precoding to the network device, wherein the second basis vector indication information is used to indicate M FD basis vectors selected by the terminal and M is a positive integer;
sending third basis vector indication information of $L \times M \times S$ bits for calculating the precoding to the network device, wherein the third basis vector indication information is used to indicate a DD-FD basis vector pair corresponding to each SD basis vector or a TD-FD basis vector pair corresponding to each SD basis vector, wherein L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

23. The method according to claim 20, wherein sending the basis vector indication information for calculating the precoding to the network device comprises:

sending first basis vector indication information of $\left\lceil log_2^{C_{N_4}^S} \right\rceil + \left\lceil \log_2^{O_3} \right\rceil$ bits for calculating the precoding to the network device, wherein the first basis vector indication information is used to indicate S DD basis vectors or S TD basis vectors selected by the terminal and S is a positive integer;

sending second basis vector indication information of $\left\lceil log_2^{C_{N_3}^M} \right\rceil + \left\lceil \log_2^{O_4} \right\rceil$ bits for calculating the precoding to the network device, wherein the second basis vector indication information is used to indicate M FD basis vectors selected by the terminal and M is a positive integer;

sending third basis vector indication information of $L \times \left\lceil log_2^{C_{MS}^N} \right\rceil$ bits for calculating the precoding to the network device, wherein the third basis vector indication information is used to indicate a DD-FD basis vector pair corresponding to each SD basis vector or a TD-FD basis vector pair corresponding to each SD basis vector, wherein L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of one or more DD-FD basis vector pairs or the number of one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

24. The method according to claim 19, wherein

for different SD basis vectors in each polarization direction, and same SD basis vectors in two polarization directions, the terminal selects different DD-FD basis vector pairs; or
for different SD basis vectors in each polarization direction, and same SD basis vectors in two polarization directions, the terminal selects different TD-FD basis vector pairs; or
for different SD basis vectors in each polarization direction, and different SD basis vectors in two polarization directions, the terminal selects the same DD-FD basis vector pair; or
for different SD basis vectors in each polarization direction, and different SD basis vectors in two polarization directions, the terminal selects the same TD-FD basis vector pair; or
for different SD basis vectors in each polarization direction, and different SD basis vectors in two polarization directions, the terminal selects different DD-FD basis vector pairs; or
for different SD basis vectors in each polarization direction, and different SD basis vectors in two polarization directions, the terminal selects different TD-FD basis vector pairs.

25. The method according to claim 24, wherein sending the basis vector indication information for calculating the precoding to the network device comprises:

sending the basis vector indication information of $2L \times \left( \left\lceil log_2^{C_{N_3 N_4}^N} \right\rceil + \left\lceil \log_2^{O_3} \right\rceil + \left\lceil \log_2^{O_4} \right\rceil \right)$ bits for calculating the precoding to the network device, wherein the basis vector indication information is used to indicate the one or more DD-FD basis vector pairs or the one or more TD-FD basis vector pairs selected by the terminal, wherein L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more DD-FD basis vector pairs or the number of the one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

26. The method according to claim 24, wherein sending the basis vector indication information for calculating precoding to the network device comprises:

sending first basis vector indication information of $\left\lceil log_2^{C_{N_4}^S} \right\rceil + \left\lceil \log_2^{O_3} \right\rceil$ bits for calculating the precoding to the network device, wherein the first basis vector indication information is used to indicate S DD basis vectors or S TD basis vectors selected by the terminal and S is a positive integer;

sending second basis vector indication information of $\left\lceil log_2^{C_{N_3}^M} \right\rceil + \left\lceil \log_2^{O_4} \right\rceil$ bits for calculating the precoding to the network device, wherein the second basis vector indication information is used to indicate M FD basis vectors selected by the terminal and M is a positive integer;
sending third basis vector indication information of 2L × M × S bits for calculating the precoding to the network device, wherein the third basis vector indication information is used to indicate the DD-FD basis vector pair corresponding to each SD basis vector or the TD-FD basis vector pair corresponding to each SD basis vector, wherein L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

27. The method according to claim 24, wherein sending the basis vector indication information for calculating the precoding to the network device comprises:

sending first basis vector indication information of $\left\lceil log_2^{C_{N_4}^S} \right\rceil + \left\lceil \log_2^{O_3} \right\rceil$ bits for calculating the precoding to the network device, wherein the first basis vector indication information is used to indicate S DD basis vectors or S TD basis vectors selected by the terminal and S is a positive integer;

sending second basis vector indication information of $\left\lceil log_2^{C_{N_3}^M} \right\rceil + \left\lceil \log_2^{O_4} \right\rceil$ bits for calculating the precoding to the network device, wherein the second basis vector indication information is used to indicate M FD basis vectors selected by the terminal and M is a positive integer;

sending third basis vector indication information of $2L \times \left\lceil log_2^{C_{MS}^N} \right\rceil$ bits for calculating the precoding to the network device, wherein the third basis vector indication information is used to indicate a DD-FD basis vector pair corresponding to each SD basis vector or a TD-FD basis vector pair corresponding to each SD basis vector; wherein L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

28. The method according to claim 1 or 2, wherein the basis vector pair comprises the one or more SD-FD basis vector pairs, and sending the basis vector indication information for calculating the precoding to the network device comprises:

sending the basis vector indication information of $\left\lceil log_2^{C_{N_1 N_2 N_3}^{N'}} \right\rceil + \left\lceil \log_2^{O_4} \right\rceil + \left\lceil \log_2^{O_1 O_2} \right\rceil$ bits or

$\left\lceil log_2^{C_{N_1 N_2 (N_3-1)}^{N'}} \right\rceil + \left\lceil \log_2^{O_4} \right\rceil + \left\lceil \log_2^{O_1 O_2} \right\rceil$ bits for calculating the precoding to the network device, wherein the basis vector indication information is used to indicate the one or more SD-FD basis vector pairs selected by the terminal,

wherein $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

29. The method according to claim 1 or 2, wherein the basis vector pair comprises the one or more SD-FD basis vector pair, and sending the basis vector indication information for calculating the precoding to the network device comprises:

sending first basis vector indication information of $\left\lceil log_2^{C_{N_3}^M} \right\rceil + \left\lceil \log_2^{O_4} \right\rceil$ bits or $\left\lceil log_2^{C_{N_3-1}^{M-1}} \right\rceil + \left\lceil \log_2^{O_4} \right\rceil$ bits for calculating the precoding to the network device, wherein the first basis vector indication information is used to indicate M FD basis vectors selected by the terminal and M is a positive integer;

sending second basis vector indication information of $\left\lceil log_2^{C_{N_1 N_2}^L} \right\rceil + \left\lceil \log_2^{O_1 O_2} \right\rceil$ bits for calculating the precoding to the network device, wherein the second basis vector indication information is used to indicate L SD basis vectors selected by the terminal and L is a positive integer;

sending third basis vector indication information of M× L bits for calculating the precoding to the network device, wherein the third basis vector indication information is used to indicate the one or more SD-FD basis vector pairs selected by the terminal,

wherein L is a number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

30. The method according to claim 1 or 2, wherein the basis vector pair comprises the one or more SD-FD basis vector pairs, and sending the basis vector indication information for calculating the precoding to the network device comprises:

sending first basis vector indication information of $\left\lceil log_2^{C_{N_3}^{M}} \right\rceil + \lceil log_2^4 \rceil$ bits or $\left\lceil log_2^{C_{N_3-1}^{M-1}} \right\rceil + \lceil log_2^{O_4} \rceil$ bits for calculating the precoding to the network device, wherein the first basis vector indication information is used to indicate M FD basis vectors selected by the terminal and M is a positive integer;

sending second basis vector indication information of $\left\lceil log_2^{C_{N_1 N_2}^{L}} \right\rceil + \left\lceil log_2^{O_1 O_2} \right\rceil$ bits for calculating the precoding to the network device, wherein the second basis vector indication information is used to indicate L SD basis vectors selected by the terminal and L is a positive integer;

sending third basis vector indication information of $\left\lceil log_2^{C_{ML}^{N'}} \right\rceil$ bits for calculating the precoding to the network device, wherein the third basis vector indication information is used to indicate the one or more SD-FD basis vector pairs selected by the terminal,

wherein L is the number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, N' is the number of the one or more SD-FD basis vector pairs in each polarization direction, $O_1$ is an oversampling factor of the one or more SD basis vectors in the horizontal direction, $O_2$ is an oversampling factor of the one or more SD basis vectors in the vertical direction, $O_4$ is an oversampling factor of the one or more FD basis vectors.

31. The method according to any one of claims 1 to 30, wherein sending the basis vector indication information for calculating the precoding to the network device comprises:
sending the basis vector indication information for calculating the precoding in any data transmission layer to the network device.

32. The method according to claim 31, wherein in a case that a rank of data transmission is greater than 1, each data transmission layer uses same or different basis vectors, and/or each data transmission layer uses same or different basis vector pairs.

33. The method according to claim 32, wherein in a case that different data transmission layers use different basis vectors and/or basis vector pairs, each data transmission layer independently indicates the basis vectors and/or basis vector pairs.

34. The method according to any one of claims 1 to 33, wherein $W_1$ is the SD basis vector or a port selection matrix.

35. A method for reporting a selection indication of a basis vector, performed by a network device, comprising:

receiving basis vector indication information for calculating precoding sent by a terminal, wherein the basis vector indication information is used to indicate the basis vector and/or a basis vector pair selected by the terminal;
determining the basis vector and/or the basis vector pair selected by the terminal based on the basis vector indication information, to calculate the precoding at different times based on the basis vector and/or the basis vector pair for downlink transmission;
wherein the basis vector and/or the basis vector pair comprises at least one of:

one or more time domain (TD) basis vectors;
one or more doppler domain (DD) basis vectors;
one or more spatial domain (SD)-frequency domain (FD) basis vector pairs;
one or more TD-FD basis vector pairs; or
one or more DD-FD basis vector pairs.

36. The method according to claim 35, wherein before receiving the basis vector indication information sent by the terminal for calculating the precoding, the method further comprises:
sending codebook parameter information to the terminal, wherein the codebook parameter information comprises at least one of:

lengths of one or more SD basis vectors;
lengths of one or more FD basis vectors;
lengths of the one or more TD basis vectors;
lengths of the one or more DD basis vectors;
a number of one or more SD basis vectors;
a number of one or more FD basis vectors;
a number of one or more TD basis vectors;
a number of one or more DD basis vectors;
a number of one or more SD-FD basis vector pairs;
a number of one or more TD-FD basis vector pairs; or
a number of one or more DD-FD basis vector pairs.

37. The method according to claim 35 or 36, wherein the basis vector comprises the one or more DD basis vectors or the one or more TD basis vectors,

for the one or more SD basis vectors, the terminal selects the same DD basis vector; or
for the one or more FD basis vectors, the terminal selects the same DD basis vector; or
for the one or more SD basis vectors and the one or more FD basis vectors, the terminal selects the same DD basis vector; or
for the one or more SD basis vectors, the terminal selects the same TD basis vector; or
for the one or more FD basis vectors, the terminal selects the same TD basis vector; or
for the one or more SD basis vectors and all FD basis vectors, the terminal selects the same TD basis vector.

38. The method according to claim 37, wherein receiving the basis vector indication information for calculating the precoding sent by the terminal, comprising:

receiving the basis vector indication information of $X + \left\lceil \log_2^{O_3} \right\rceil$ bits for calculating the precoding sent by the terminal,
wherein the basis vector indication information is used to indicate the one or more DD basis vectors or the one or more TD basis vectors selected by the terminal, $O_3 \geq 1$, $O_3$ is a sampling factor of the one or more DD basis vectors or a sampling factor of the one or more TD basis vectors; in a case that X is indicated by a combination coefficient,

$X = \left\lceil \log_2^{C_{N_4}^S} \right\rceil$ or $X = \left\lceil \log_2^{C_{N_4-1}^{S-1}} \right\rceil$, in a case that X is indicated by a bitmap, $X = N_4$ or $X = N_4-1$, wherein $N_4$ is a number of the lengths of the one or more DD basis vectors or of the lengths of the one or more TD basis vectors, S is a number of the one or more DD basis vectors or of the one or more TD basis vectors selected by the terminal,

$C_{N_4}^S$ indicates a combination number calculation by selecting S from $N_4$, $C_{N_4-1}^{S-1}$ indicates a combination number calculation by selecting S-1 from $N_4$ - 1, and $\lceil x \rceil$ indicates rounding up of x.

39. The method according to claim 35 or 36, wherein the basis vector comprises the one or more DD basis vectors or the one or more TD basis vectors,

for different SD basis vectors, the terminal selects the same DD basis vector; or
for different SD basis vectors, the terminal selects different DD basis vectors; or
for different FD basis vectors, the terminal selects the same DD basis vector; or
for different FD basis vectors, the terminal selects different DD basis vectors; or
for different SD basis vectors, the terminal selects the same TD basis vector; or
for different SD basis vectors, the terminal selects different TD basis vectors; or
for different FD basis vectors, the terminal selects the same TD basis vector; or
for different FD basis vectors, the terminal selects different TD basis vectors.

40. The method according to claim 39, wherein,

for same SD basis vectors in two polarization directions, the terminal selects the same DD basis vector; or
for same SD basis vectors in two polarization directions, the terminal selects the same TD basis vector.

41. The method according to claim 40, wherein receiving the basis vector indication information for calculating the precoding sent by the terminal comprises:

receiving the basis vector indication information of $L \times \left( \left\lceil log_2^{C_{N_4}^S} \right\rceil + \left\lceil log_2^{O_3} \right\rceil \right)$ bits or $L \times \left( N_4 + \left\lceil log_2^{O_3} \right\rceil \right)$ bits for calculating the precoding sent by the terminal, wherein the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the one or more DD basis vectors or of the lengths of the one or more TD basis vectors, and S is a number of the one or more DD basis vectors or of the one or more TD basis vectors selected by the terminal.

42. The method according to claim 39, wherein,

for different SD basis vectors in each polarization direction, the terminal selects different DD basis vectors; or
for different SD basis vectors in each polarization direction, the terminal selects different TD basis vectors; or
for different SD basis vectors in each polarization direction, the terminal selects the same DD basis vector; or
for different SD basis vectors in each polarization direction, the terminal selects different TD basis vectors; or
for different SD basis vectors in two polarization directions, the terminal selects the same DD basis vector; or
for different SD basis vectors in two polarization directions, the terminal selects different DD basis vectors; or
for different SD basis vectors in two polarization directions, the terminal selects the same TD basis vector; or
for different SD basis vectors in two polarization directions, the terminal selects different TD basis vectors.

43. The method according to claim 42, wherein receiving the basis vector indication information for calculating the precoding sent by the terminal comprises:

receiving the basis vector indication information of $2L \times \left( \left\lceil log_2^{C_{N_4}^S} \right\rceil + \left\lceil log_2^{O_3} \right\rceil \right)$ bits or $2L \times \left( N_4 + \left\lceil log_2^{O_3} \right\rceil \right)$ bits for calculating the precoding sent by the terminal, wherein the basis vector indication information is used to indicate the one or more DD basis vectors or the one or more TD basis vectors selected by the terminal; $O_3$ is a sampling factor of the one or more DD basis vector or a sampling factor of the one or more TD basis vector, L is the number of the one or more SD basis vectors selected by the terminal, $N_4$ is a number of the lengths of the DD basis vectors or of the TD basis vectors, and S is a number of the one or more DD basis vectors or of the one or more TD basis vectors selected by the terminal.

44. The method according to claim 35 or 36, wherein the basis vector comprises the one or more DD basis vectors or the one or more TD basis vectors,

for different SD basis vectors and different FD basis vectors, the terminal selects the same DD basis vector; or
for different SD basis vectors and different FD basis vectors, the terminal selects different DD basis vectors; or
for different SD basis vectors and different FD basis vectors, the terminal selects the same TD basis vector; or
for different SD basis vectors and different FD basis vectors, the terminal selects different TD basis vectors.

45. The method according to claim 44, wherein,

for different SD-FD basis vector pairs in each polarization direction, the terminal selects the same DD basis vector; or
for different SD-FD basis vector pairs in each polarization direction, the terminal selects different DD basis vectors; or
for different SD-FD basis vector pairs in each polarization direction, the terminal selects the same TD basis vector; or
for different SD-FD basis vector pairs in each polarization direction, the terminal selects different TD basis vectors; or
for same SD-FD basis vector pairs in two polarization directions, the terminal selects the same DD basis vector; or
for same SD-FD basis vector pairs in two polarization directions, the terminal selects the same TD basis vector.

46. The method according to claim 45, wherein receiving the basis vector indication information for calculating the precoding sent by the terminal comprises:

receiving the basis vector indication information of $N' \times \left( \left\lceil log_2^{C_{N_4}^S} \right\rceil + \left\lceil log_2^{O_3} \right\rceil \right)$ bits or $N' \times \left( N_4 + \left\lceil log_2^{O_3} \right\rceil \right)$ bits for calculating the precoding sent by the terminal,

wherein the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of one or more TD basis vectors selected by the terminal.

47. The method according to claim 44, wherein,

for different SD-FD basis vector pairs in each polarization direction, the terminal selects different DD basis vectors; or
for different SD-FD basis vector pairs in each polarization direction, the terminal selects different TD basis vectors; or
for different SD-FD basis vector pairs in two polarization directions, the terminal selects the same DD basis vector; or
for different SD-FD basis vector pairs in two polarization directions, the terminal selects different DD basis vectors; or
for different SD-FD basis vector pairs in two polarization directions, the terminal selects the same TD basis vector; or
for different SD-FD basis vector pairs in two polarization directions, the terminal selects different TD basis vectors.

48. The method according to claim 47, wherein receiving the basis vector indication information for calculating the precoding sent by the terminal comprises:

receiving the basis vector indication information of $2N' \times \left( \left\lceil log_2^{C_{N_4}^S} \right\rceil + \left\lceil log_2^{O_3} \right\rceil \right)$ bits or $2N' \times \left( N_4 + \left\lceil log_2^{O_3} \right\rceil \right)$ bits for calculating the precoding sent by the terminal,

wherein the basis vector indication information is used to indicate the one or more DD basis vectors or the one or more TD basis vectors selected by the terminal; $O_3$ is a sampling factor of the one or more DD basis vectors or a sampling factor of the one or more TD basis vectors, N' is the number of the one or more SD-FD basis vector pairs in each polarization direction, $N_4$ is a number of the lengths of the one or more DD basis vectors or of the lengths of the one or more TD basis vectors, and S is a number of the one or more DD basis vectors or of the one or more TD basis vectors selected by the terminal.

49. The method according to claim 35 or 36, wherein the basis vector pair comprises the one or more DD-FD basis vector pairs or the one or more TD-FD basis vector pairs,

   for the one or more SD basis vectors, the terminal selects the same DD-FD basis vector pair; or
   for the one or more SD basis vectors, the terminal selects the same TD-FD basis vector pair.

50. The method according to claim 49, wherein receiving the basis vector indication information for calculating the precoding sent by the terminal comprises at least one of:

   receiving the basis vector indication information of $\left\lceil log_2^{C_{N_3N_4}^N} \right\rceil + \left\lceil \log_2^{O_3} \right\rceil + \left\lceil \log_2^{O_4} \right\rceil$ bits for calculating the precoding sent by the terminal, wherein the basis vector indication information is used to indicate the one or more DD-FD basis vector pairs or the one or more TD-FD basis vector pairs selected by the terminal;

   receiving the basis vector indication information of $\left\lceil log_2^{C_{N_3(N_4-1)}^N} \right\rceil + \left\lceil \log_2^{O_3} \right\rceil + \left\lceil \log_2^{O_4} \right\rceil$ bits for calculating the precoding sent by the terminal, wherein the basis vector indication information is used to indicate the one or more DD-FD basis vector pairs or the one or more TD-FD basis vector pairs selected by the terminal;

   receiving the basis vector indication information of $\left\lceil log_2^{C_{(N_3-1)N_4}^N} \right\rceil + \left\lceil \log_2^{O_3} \right\rceil + \left\lceil \log_2^{O_4} \right\rceil$ bits for calculating the precoding sent by the terminal, wherein the basis vector indication information is used to indicate the one or more DD-FD basis vector pairs or the one or more TD-FD basis vector pairs selected by the terminal; or

   receiving the basis vector indication information of $\left\lceil log_2^{C_{(N_3-1)(N_4-1)}^{N-1}} \right\rceil + \left\lceil \log_2^{O_3} \right\rceil + \left\lceil \log_2^{O_4} \right\rceil$ bits for calculating the precoding sent by the terminal, wherein the basis vector indication information is used to indicate the one or more DD-FD basis vector pairs or the one or more TD-FD basis vector pairs selected by the terminal, wherein $N_3$ is a number of frequency domain PMI subbands, N is the number of the one or more DD-FD basis vector pairs or the number of the one or more TD-FD basis vector pairs, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

51. The method according to claim 49, wherein receiving the basis vector indication information for calculating the precoding sent by the terminal comprises:

   receiving first basis vector indication information of $\left\lceil log_2^{C_{N_4}^S} \right\rceil + \left\lceil \log_2^{O_3} \right\rceil$ bits or $\left\lceil log_2^{C_{N_4-1}^{S-1}} \right\rceil + \left\lceil \log_2^{O_3} \right\rceil$ bits for calculating precoding sent by the terminal, wherein the first basis vector indication information is used to indicate S DD basis vectors or S TD basis vectors selected by the terminal and S is a positive integer;

   receiving second basis vector indication information of $\left\lceil log_2^{C_{N_3}^M} \right\rceil + \left\lceil \log_2^{O_4} \right\rceil$ bits for calculating precoding sent by the terminal, wherein the second basis vector indication information is used to indicate M FD basis vectors selected by the terminal and M is a positive integer;
   receiving third basis vector indication information of M× S bits for calculating the precoding sent by the terminal, wherein the third basis vector indication information is used to indicate the one or more DD-FD basis vector pairs or the one or more TD-FD basis vector pairs selected by the terminal,

wherein $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

52. The method according to claim 49, wherein receiving the basis vector indication information for calculating the precoding sent by the terminal comprises:

   receiving first basis vector indication information of $\left\lceil log_2^{C_{N_4-1}^{S-1}} \right\rceil + \left\lceil log_2^{O_3} \right\rceil$ bits for calculating the precoding sent by the terminal, wherein the first basis vector indication information is used to indicate S DD basis vectors or DD basis vectors selected by the terminal and S is a positive integer;

   receiving second basis vector indication information of $\left\lceil log_2^{C_{N_3}^{M}} \right\rceil + \left\lceil log_2^{O_4} \right\rceil$ bits for calculating the precoding sent by the terminal, wherein the second basis vector indication information is used to indicate M FD basis vectors selected by the terminal and M is a positive integer;

   receiving third basis vector indication information of $\left\lceil log_2^{C_{MS}^{N}} \right\rceil$ bits for calculating the precoding sent by the terminal, wherein the third basis vector indication information is used to indicate the one or more DD-FD basis vector pairs or the one or more TD-FD basis vector pairs selected by the terminal,
   wherein $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, $O_4$ is an oversampling factor of the one or more FD basis vectors, and N is the number of the one or more the DD-FD basis vector pairs or the number of the one or more the TD-FD basis vector pairs.

53. The method according to claim 35 or 36, the basis vector pair comprises the one or more DD-FD basis vector pairs or the one or more TD-FD basis vector pairs,

   for the same SD basis vector, the terminal selects the same DD-FD basis vector pair; or
   for the same SD basis vector, the terminal selects different DD-FD basis vector pairs; or
   for the same SD basis vector, the terminal selects the same TD-FD basis vector pair; or
   for the same SD basis vector, the terminal selects different TD-FD basis vector pairs; or
   for different SD basis vectors, the terminal selects the same DD-FD basis vector pair; or
   for different SD basis vectors, the terminal selects different DD-FD basis vector pairs; or
   for different SD basis vectors, the terminal selects the same TD-FD basis vector pair; or
   for different SD basis vectors, the terminal selects different TD-FD basis vector pairs.

54. The method according to claim 53, wherein,

   for different SD basis vectors in each polarization direction, the terminal selects the same DD-FD basis vector pair; or
   for different SD basis vectors in each polarization direction, the terminal selects the same TD-FD basis vector pair; or
   for different SD basis vectors in each polarization direction, the terminal selects different DD-FD basis vector pairs; or
   for different SD basis vectors in each polarization direction, the terminal selects different TD-FD basis vector pairs; or
   for different SD basis vectors in each polarization direction, and same SD basis vectors in two polarization directions, the terminal selects the same DD-FD basis vector pair; or
   for different SD basis vectors in each polarization direction, and same SD basis vectors in two polarization directions, the terminal selects the same TD-FD basis vector pair.

55. The method according to claim 54, wherein receiving the basis vector indication information for calculating the precoding sent by the terminal comprises:

receiving the basis vector indication information of $L \times \left( \left\lceil log_2^{C_{N_3 N_4}^{N}} \right\rceil + \left\lceil log_2^{O_3} \right\rceil + \left\lceil log_2^{O_4} \right\rceil \right)$ bits for calculating the precoding sent by the terminal,

wherein the basis vector indication information is used to indicate the one or more DD-FD basis vector pairs or the one or more TD-FD basis vector pairs selected by the terminal, L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more the DD-FD basis vector pairs or the number of one or more the TD-FD basis vector pairs, $O_3$ is a sampling factor of the one or more DD basis vectors or a sampling factor of the one or more TD basis vectors, and $O_4$ is an oversampling factor of the one or more FD basis vectors.

56. The method according to claim 54, wherein receiving the basis vector indication information for calculating the precoding sent by the terminal comprises:

receiving first basis vector indication information of $\left\lceil log_2^{C_{N_4}^{S}} \right\rceil + \left\lceil log_2^{O_3} \right\rceil$ bits for calculating the precoding sent by the terminal, wherein the first basis vector indication information is used to indicate S DD basis vectors or S TD basis vectors selected by the terminal and S is a positive integer;

receiving second basis vector indication information of $\left\lceil log_2^{C_{N_3}^{M}} \right\rceil + \left\lceil log_2^{O_4} \right\rceil$ bits for calculating the precoding sent by the terminal, wherein the second basis vector indication information is used to indicate M FD basis vectors selected by the terminal and M is a positive integer;

receiving third basis vector indication information of L × M × S bits for calculating the precoding sent by the terminal, wherein the third basis vector indication information is used to indicate a DD-FD basis vector pair corresponding to each SD basis vector or a TD-FD basis vector pair corresponding to each SD basis vector, wherein L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

57. The method according to claim 54, wherein receiving the basis vector indication information for calculating the precoding sent by the terminal comprises:

receiving first basis vector indication information of $\left\lceil log_2^{C_{N_4}^{S}} \right\rceil + \left\lceil log_2^{O_3} \right\rceil$ bits for calculating the precoding sent by the terminal, wherein the first basis vector indication information is used to indicate S DD basis vectors or S TD basis vectors selected by the terminal and S is a positive integer;

receiving second basis vector indication information of $\left\lceil log_2^{C_{N_3}^{M}} \right\rceil + \left\lceil log_2^{O_4} \right\rceil$ bits for calculating the precoding sent by the terminal, wherein the second basis vector indication information is used to indicate M FD basis vectors selected by the terminal and M is a positive integer;

receiving third basis vector indication information of $L \times \left\lceil log_2^{C_{MS}^{N}} \right\rceil$ bits for calculating the precoding sent by the terminal, wherein the third basis vector indication information is used to indicate a DD-FD basis vector pair corresponding to each SD basis vector or a TD-FD basis vector pair corresponding to each SD basis vector, wherein L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of one or more DD-FD basis vector pairs or the number of one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

58. The method according to claim 53, wherein,

for different SD basis vectors in each polarization direction, and same SD basis vectors in two polarization directions, the terminal selects different DD-FD basis vector pairs; or

for different SD basis vectors in each polarization direction, and same SD basis vectors in two polarization directions, the terminal selects different TD-FD basis vector pairs; or

for different SD basis vectors in each polarization direction, and different SD basis vectors in two polarization directions, the terminal selects the same DD-FD basis vector pair; or

for different SD basis vectors in each polarization direction, and different SD basis vectors in two polarization directions, the terminal selects the same TD-FD basis vector pair; or

for different SD basis vectors in each polarization direction, and different SD basis vectors in two polarization directions, the terminal selects different DD-FD basis vector pairs; or

for different SD basis vectors in each polarization direction, and different SD basis vectors in two polarization directions, the terminal selects different TD-FD basis vector pairs.

59. The method according to claim 58, wherein receiving the basis vector indication information for calculating the precoding sent by the terminal comprises:

receiving the basis vector indication information of $2\mathrm{L}\times\left(\left\lceil log_2^{C_{N_3 N_4}^N}\right\rceil + \left\lceil\log_2^{O_3}\right\rceil + \left\lceil\log_2^{O_4}\right\rceil\right)$ bits for calculating the precoding sent by the terminal, wherein the basis vector indication information is used to indicate the one or more DD-FD basis vector pairs or the one or more TD-FD basis vector pairs selected by the terminal, wherein L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, N is the number of the one or more DD-FD basis vector pairs or the number of the one or more TD-FD basis vector pairs, $O_3$ is a sampling factor of the one or more DD basis vectors or a sampling factor of the one or more TD basis vectors, and $O_4$ is an oversampling factor of the one or more FD basis vectors.

60. The method according to claim 58, wherein receiving the basis vector indication information for calculating precoding sent by the terminal comprises:

receiving first basis vector indication information of $\left\lceil log_2^{C_{N_4}^S}\right\rceil + \left\lceil\log_2^{O_3}\right\rceil$ bits for calculating the precoding sent by the terminal, wherein the first basis vector indication information is used to indicate S DD basis vectors or S TD basis vectors selected by the terminal and S is a positive integer;

receiving second basis vector indication information of $\left\lceil log_2^{C_{N_3}^M}\right\rceil + \left\lceil\log_2^{O_4}\right\rceil$ bits for calculating the precoding sent by the terminal, wherein the second basis vector indication information is used to indicate M FD basis vectors selected by the terminal and M is a positive integer;

receiving third basis vector indication information of $2\mathrm{L} \times \mathrm{M} \times \mathrm{S}$ bits for calculating the precoding sent by the terminal, wherein the third basis vector indication information is used to indicate the DD-FD basis vector pair corresponding to each SD basis vector or the TD-FD basis vector pair corresponding to each SD basis vector, wherein L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

61. The method according to claim 58, wherein receiving the basis vector indication information for calculating the precoding sent by the terminal comprises:

receiving first basis vector indication information of $\left\lceil log_2^{C_{N_4}^S}\right\rceil + \left\lceil\log_2^{O_3}\right\rceil$ bits for calculating the precoding sent by the terminal, wherein the first basis vector indication information is used to indicate S DD basis vectors or S TD basis vectors selected by the terminal and S is a positive integer;

receiving second basis vector indication information of $\left\lceil log_2^{C_{N_3}^M} \right\rceil + \left\lceil log_2^{O_4} \right\rceil$ bits for calculating the precoding sent by the terminal, wherein the second basis vector indication information is used to indicate M FD basis vectors selected by the terminal and M is a positive integer;

receiving third basis vector indication information of $2L \times \left\lceil log_2^{C_{MS}^N} \right\rceil$ bits for calculating the precoding sent by the terminal, wherein the third basis vector indication information is used to indicate a DD-FD basis vector pair corresponding to each SD basis vector or a TD-FD basis vector pair corresponding to each SD basis vector; wherein L is the number of the one or more SD basis vectors selected by the terminal, $N_3$ is a number of frequency domain PMI subbands, $N_4$ is a number of the lengths of the one or more DD basis vectors or of the lengths of the one or more TD basis vectors, $O_3$ is a sampling factor of the one or more DD basis vectors or a sampling factor of the one or more TD basis vectors, and $O_4$ is an oversampling factor of the one or more FD basis vectors.

62. The method according to claim 35 or 36, wherein the basis vector pair comprises the one or more SD-FD basis vector pairs, and receiving the basis vector indication information for calculating the precoding sent by the terminal comprises:

receiving the basis vector indication information of $\left\lceil log_2^{C_{N_1 N_2 N_3}^{N'}} \right\rceil + \left\lceil log_2^{O_4} \right\rceil + \left\lceil log_2^{O_1 O_2} \right\rceil$ bits or

$\left\lceil log_2^{C_{N_1 N_2 (N_3-1)}^{N'}} \right\rceil + \left\lceil log_2^{O_4} \right\rceil + \left\lceil log_2^{O_1 O_2} \right\rceil$ bits for calculating the precoding sent by the terminal, wherein the basis vector indication information is used to indicate the one or more SD-FD basis vector pairs selected by the terminal,

wherein $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

63. The method according to claim 35 or 36, wherein the basis vector pair comprises the one or more SD-FD basis vector pairs, and receiving the basis vector indication information for calculating the precoding sent by the terminal comprises:

receiving first basis vector indication information of $\left\lceil log_2^{C_{N_3}^M} \right\rceil + \left\lceil log_2^{O_4} \right\rceil$ bits or $\left\lceil log_2^{C_{N_3-1}^{M-1}} \right\rceil + \left\lceil log_2^{O_4} \right\rceil$ bits for calculating the precoding sent by the terminal, wherein the first basis vector indication information is used to indicate M FD basis vectors selected by the terminal and M is a positive integer;

receiving second basis vector indication information of $\left\lceil log_2^{C_{N_1 N_2}^L} \right\rceil + \left\lceil log_2^{O_1 O_2} \right\rceil$ bits for calculating the precoding sent by the terminal, wherein the second basis vector indication information is used to indicate L SD basis vectors selected by the terminal and L is a positive integer;

receiving third basis vector indication information of $M \times L$ bits for calculating the precoding sent by the terminal, wherein the third basis vector indication information is used to indicate the one or more SD-FD basis vector pairs selected by the terminal,

wherein L is a number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, $O_1$ is an oversampling factor of the one or more SD basis vectors in the horizontal direction, $O_2$ is an oversampling factor of the one or more SD basis vectors in the vertical direction, and $O_4$ is an oversampling factor of the one or more FD basis vectors.

64. The method according to claim 35 or 36, wherein the basis vector pair comprises the one or more SD-FD basis vector pairs, and receiving the basis vector indication information for calculating the precoding sent by the terminal comprises:

receiving first basis vector indication information of $\left\lceil log_2^{C_{N_3}^M} \right\rceil + \lceil \log_2^4 \rceil$ bits or $\left\lceil log_2^{C_{N_3-1}^{M-1}} \right\rceil + \lceil \log_2^{O_4} \rceil$ bits for calculating the precoding sent by the terminal, wherein the first basis vector indication information is used to indicate M FD basis vectors selected by the terminal and M is a positive integer;

receiving second basis vector indication information of $\left\lceil \log_2^{C_{N_1 N_2}^L} \right\rceil + \left\lceil \log_2^{O_1 O_2} \right\rceil$ bits for calculating the precoding sent by the terminal, wherein the second basis vector indication information is used to indicate L SD basis vectors selected by the terminal and L is a positive integer;

receiving third basis vector indication information of $\left\lceil log_2^{C_{ML}^{N'}} \right\rceil$ bits for calculating the precoding sent by the terminal, wherein the third basis vector indication information is used to indicate the one or more SD-FD basis vector pairs selected by the terminal,
wherein L is the number of the one or more SD basis vectors selected by the terminal, $N_1$ is a number of antenna ports in a horizontal direction in a single polarization direction, $N_2$ is a number of antenna ports in a vertical direction in the single polarization direction, $N_3$ is a number of frequency domain PMI subbands, N' is the number of the one or more SD-FD basis vector pairs in each polarization direction, $O_1$ is an oversampling factor of the one or more SD basis vectors in the horizontal direction, $O_2$ is an oversampling factor of the one or more SD basis vectors in the vertical direction, $O_4$ is an oversampling factor of the one or more FD basis vectors.

65. The method according to any one of claims 35 to 64, wherein receiving the basis vector indication information for calculating the precoding sent by the terminal comprises:
receiving the basis vector indication information for calculating the precoding in any data transmission layer sent by the terminal.

66. The method according to claim 65, wherein in a case that a rank of data transmission is greater than 1, each data transmission layer uses same or different basis vectors, and/or each data transmission layer uses same or different basis vector pairs.

67. The method according to claim 66, wherein in a case that different data transmission layers use different basis vectors and/or basis vector pairs, each data transmission layer independently indicates the basis vectors and/or basis vector pairs.

68. The method according to any one of claims 35 to 67, wherein $W_1$ is the SD basis vector or a port selection matrix.

69. A communication device, comprising:

a transceiver module, configured to send basis vector indication information for calculating precoding to a network device, wherein the basis vector indication information is used to indicate a basis vector and/or a basis vector pair selected by the terminal,
the basis vector and/or the basis vector pair comprises at least one of:

one or more time domain (TD) basis vectors;
one or more doppler domain (DD) basis vectors;
one or more spatial domain (SD)-frequency domain (FD) basis vector pairs;
one or more TD-FD basis vector pairs; or
one or more DD-FD basis vector pairs.

70. A communication device, comprising:

a transceiver module, configured to receive basis vector indication information for calculating precoding sent by a terminal, wherein the basis vector indication information is used to indicate a basis vector and/or a basis vector pair selected by the terminal;

a processing module, configured to determine the basis vector and/or the basis vector pair selected by the terminal based on the basis vector indication information, to calculate precoding at different times based on the basis vector and/or the basis vector pair for downlink transmission;
the basis vector and/or the basis vector pair comprises at least one of:

one or more time domain (TD) basis vectors;
one or more doppler domain (DD) basis vectors;
one or more spatial domain (SD)-frequency domain (FD) basis vector pairs;
one or more TD-FD basis vector pairs; or
one or more DD-FD basis vector pairs.

71. A communication device, comprising a processor and a memory, wherein the memory has stored therein a computer program, the processor is configured to execute the computer program stored in the memory to cause the communication device to perform the method according to any one of claims 1 to 34, or the method according to any one of claims 35 to 68.

72. A communication device, comprising: a processor and an interface circuit;

the interface circuit is configured to receive code instructions and transmit the code instructions to the processor;
the processer is configured to execute the code instructions to implement the method according to any one of claims 1 to 34, or the method according to any one of claims 35 to 68.

73. A computer readable storage medium for storing instructions that, when executed, implement the method according to any one of claims 1 to 34, or the method according to any one of claims 35 to 68.

communication system — 10

network device — 101

terminal — 102

FIG. 1

basis vector indication information for calculating precoding is sent to a network device, in which the basis vector indication information is used to indicate the basis vector and/or a basis vector pair selected by the terminal — S21

FIG. 2

basis vector indication information for calculating precoding is sent to a network device, in which the basis vector indication information is used to indicate the basis vector and/or a basis vector pair selected by the terminal — S31

codebook parameter information sent by the network device is received — S32

FIG. 3

the basis vector indication information of $X + \lceil \log_2^{O_3} \rceil$ bits for calculating the precoding is sent to the network device, in which the basis vector indication information is used to indicate the DD basis vector or the TD basis vector selected by the terminal. — S41

FIG. 4

basis vector indication information of $L \times \left( \lceil log_2^{C_{N_4}^S} \rceil + \lceil \log_2^{O_3} \rceil \right)$ bits or $L \times \left( N_4 + \lceil \log_2^{O_3} \rceil \right)$ bits for calculating the precoding is sent to the network device, in which the basis vector indication information is used to indicate the DD basis vector or the TD basis vector selected by the terminal — S51

FIG. 5

the basis vector indication information of $2L \times \left( \left\lceil log_2^{C_{N_4}^S} \right\rceil + \left\lceil \log_2^{O_3} \right\rceil \right)$ bits or $2L \times \left( N_4 + \left\lceil \log_2^{O_3} \right\rceil \right)$ bits for calculating the precoding is sent to the network device; in which the basis vector indication information is used to indicate the DD basis vector or the TD basis vector selected by the terminal | S61

FIG. 6

the basis vector indication information of $N' \times \left( \left\lceil log_2^{C_{N_4}^S} \right\rceil + \left\lceil \log_2^{O_3} \right\rceil \right)$ bits or $N' \times \left( N_4 + \left\lceil \log_2^{O_3} \right\rceil \right)$ bits for calculating the precoding is sent to the network device, in which the basis vector indication information is used to indicate the DD basis vector or TD basis vector selected by the terminal | S71

FIG. 7

the basis vector indication information of $2N' \times \left( \left\lceil log_2^{C_{N_4}^S} \right\rceil + \left\lceil \log_2^{O_3} \right\rceil \right)$ bits or $2N' \times \left( N_4 + \left\lceil \log_2^{O_3} \right\rceil \right)$ bits for calculating the precoding is sent to the network device, in which the basis vector indication information is used to indicate the DD basis vector or TD basis vector selected by the terminal | S81

FIG. 8

the basis vector indication information of $\left\lceil log_2^{C_{N_3 N_4}^N} \right\rceil + \left\lceil \log_2^{O_3} \right\rceil + \left\lceil \log_2^{O_4} \right\rceil$ bits for calculating the precoding is sent to the network device, in which the basis vector indication information is used to indicate a DD-FD basis vector pair or a TD-FD basis vector pair selected by the terminal; or the base vector indication information of $\left\lceil log_2^{C_{N_3 (N_4 - 1)}^N} \right\rceil + \left\lceil \log_2^{O_3} \right\rceil + \left\lceil \log_2^{O_4} \right\rceil$ bits for calculating the precoding is sent to the network device, in which the base vector indication information is used to indicate the DD-FD base vector pair or the TD-FD base vector pair selected by the terminal; or the base vector indication information of $\left\lceil log_2^{C_{(N_3 - 1) N_4}^N} \right\rceil + \left\lceil \log_2^{O_3} \right\rceil + \left\lceil \log_2^{O_4} \right\rceil$ bits for calculating the precoding is sent to the network device, in which the base vector indication information is used to indicate the DD-FD base vector pair or the TD-FD base vector pair selected by the terminal; or the base vector indication information of $\left\lceil log_2^{C_{(N_3 - 1)(N_4 - 1)}^{N-1}} \right\rceil + \left\lceil \log_2^{O_3} \right\rceil + \left\lceil \log_2^{O_4} \right\rceil$ bits for calculating the precoding is sent to the network device, in which the basis vector indication information is used to indicate the DD-FD basis vector pair or the TD-FD basis vector pair selected by the terminal | S91

FIG. 9

first basis vector indication information of $\left\lceil log_2^{C_{N_4}^S} \right\rceil + \lceil log_2^{O_3} \rceil$ bits or $\left\lceil log_2^{C_{N_4-1}^{S-1}} \right\rceil + \lceil log_2^{O_3} \rceil$ bits for calculating the precoding is sent to the network device, in which the first basis vector indication information is used to indicate S DD basis vectors or S TD basis vectors selected by the terminal — S101

second basis vector indication information of $\left\lceil log_2^{C_{N_3}^M} \right\rceil + \lceil log_2^{O_4} \rceil$ bits for calculating the precoding is sent to the network device, in which the second basis vector indication information is used to indicate M FD basis vectors selected by the terminal — S102

third basis vector indication information of M× S bits for calculating the precoding is sent to the network device, in which the third basis vector indication information is used to indicate the one or more DD-FD basis vector pairs or the one or more TD-FD basis vector pairs selected by the terminal — S103

FIG. 10

first basis vector indication information of $\left\lceil log_2^{C_{N_4-1}^{S-1}} \right\rceil + \lceil log_2^{O_3} \rceil$ bits for calculating the precoding is sent to the network device, in which the first basis vector indication information is used to indicate S DD basis vectors or DD basis vectors selected by the terminal — S111

second basis vector indication information of $\left\lceil log_2^{C_{N_3}^M} \right\rceil + \lceil log_2^{O_4} \rceil$ bits for calculating the precoding is sent to the network device, in which the second basis vector indication information is used to indicate M FD basis vectors selected by the terminal — S112

third basis vector indication information of $\left\lceil log_2^{C_{MS}^N} \right\rceil$ bits for calculating the precoding is sent to the network device, in which the third basis vector indication information is used to indicate the one or more DD-FD basis vector pairs or the one or more TD-FD basis vector pairs selected by the terminal — S113

FIG. 11

the basis vector indication information of L× $\left( \left\lceil log_2^{C_{N_3 N_4}^N} \right\rceil + \lceil log_2^{O_3} \rceil + \lceil log_2^{O_4} \rceil \right)$ bits for calculating the precoding to the network device, in which the basis vector indication information is used to indicate the DD-FD basis vector pair or the TD-FD basis vector pair selected by the terminal — S121

FIG. 12

first basis vector indication information of $\left\lceil log_2^{C_{N_4}^S}\right\rceil + \lceil\log_2^{O_3}\rceil$ bits for calculating the precoding is sent to the network device, in which the first basis vector indication information is used to indicate S DD basis vectors or S TD basis vectors selected by the terminal — S131

second basis vector indication information of $\left\lceil log_2^{C_{N_3}^M}\right\rceil + \lceil\log_2^{O_4}\rceil$ bits for calculating the precoding is sent to the network device, in which the second basis vector indication information is used to indicate M FD basis vectors selected by the terminal — S132

third basis vector indication information of L × M × S bits for calculating the precoding is sent to the network device, in which the third basis vector indication information is used to indicate a DD-FD basis vector pair corresponding to each SD basis vector or a TD-FD basis vector pair corresponding to each SD basis vector. — S133

FIG. 13

first basis vector indication information of $\left\lceil log_2^{C_{N_4}^S}\right\rceil + \lceil\log_2^{O_3}\rceil$ bits for calculating the precoding is sent to the network device, in which the first basis vector indication information is used to indicate S DD basis vectors or S TD basis vectors selected by the terminal — S141

second basis vector indication information of $\left\lceil log_2^{C_{N_3}^M}\right\rceil + \lceil\log_2^{O_4}\rceil$ bits for calculating the precoding is sent to the network device, in which the second basis vector indication information is used to indicate M FD basis vectors selected by the terminal — S142

third basis vector indication information of L× $\left\lceil log_2^{C_{MS}^N}\right\rceil$ bits for calculating the precoding is sent to the network device, in which the third basis vector indication information is used to indicate a DD-FD basis vector pair corresponding to each SD basis vector or a TD-FD basis vector pair corresponding to each SD basis vector. — S143

FIG. 14

the basis vector indication information of 2L × $\left(\left\lceil log_2^{C_{N_3 N_4}^N}\right\rceil + \lceil\log_2^{O_3}\rceil + \lceil\log_2^{O_4}\rceil\right)$ bits for calculating the precoding is sent to the network device, in which the basis vector indication information is used to indicate the one or more DD-FD basis vector pairs or the one or more TD-FD basis vector pairs selected by the terminal — S151

FIG. 15

first basis vector indication information of $\left\lceil log_2^{C_{N_4}^S} \right\rceil + \lceil log_2^{O_3} \rceil$ bits for calculating the precoding is sent to the network device, in which the first basis vector indication information is used to indicate S DD basis vectors or S TD basis vectors selected by the terminal. — S161

second basis vector indication information of $\left\lceil log_2^{C_{N_3}^M} \right\rceil + \lceil log_2^{O_4} \rceil$ bits for calculating the precoding is sent to the network device, in which the second basis vector indication information is used to indicate M FD basis vectors selected by the terminal. — S162

third basis vector indication information of $2 L \times M \times S$ bits for calculating the precoding is sent to the network device, in which the third basis vector indication information is used to indicate the DD-FD basis vector pair corresponding to each SD basis vector or the TD-FD basis vector pair corresponding to each SD basis vector. — S163

FIG. 16

first basis vector indication information of $\left\lceil log_2^{C_{N_4}^S} \right\rceil + \lceil log_2^{O_3} \rceil$ bits for calculating the precoding is sent to the network device, in which the first basis vector indication information is used to indicate S DD basis vectors or S TD basis vectors selected by the terminal. — S171

second basis vector indication information of $\left\lceil log_2^{C_{N_3}^M} \right\rceil + \lceil log_2^{O_4} \rceil$ bits for calculating the precoding is sent to the network device, in which the second basis vector indication information is used to indicate M FD basis vectors selected by the terminal. — S172

third basis vector indication information of $2L \times \left\lceil log_2^{C_{MS}^N} \right\rceil$ bits for calculating the precoding is sent to the network device, in which the third basis vector indication information is used to indicate a DD-FD basis vector pair corresponding to each SD basis vector or a TD-FD basis vector pair corresponding to each SD basis vector. — S173

FIG. 17

the basis vector indication information of $\left\lceil log_2^{C_{N_1 N_2 N_3}^{N'}} \right\rceil + \left\lceil log_2^{O_4} \right\rceil + \left\lceil log_2^{O_1 O_2} \right\rceil$ bits or $\left\lceil log_2^{C_{N_1 N_2 (N_3-1)}^{N'}} \right\rceil + \left\lceil log_2^{O_4} \right\rceil + \left\lceil log_2^{O_1 O_2} \right\rceil$ bits for calculating the precoding is sent to the network device, in which the basis vector indication information is used to indicate the one or more SD-FD basis vector pairs selected by the terminal. — S181

FIG. 18

first basis vector indication information of $\left\lceil log_2^{C_{N_3}^{M}} \right\rceil + \lceil log_2^{O_4} \rceil$ bits or $\left\lceil log_2^{C_{N_3-1}^{M-1}} \right\rceil + \lceil log_2^{O_4} \rceil$ bits for calculating the precoding is sent to the network device, in which the first basis vector indication information is used to indicate M FD basis vectors selected by the terminal — S191

second basis vector indication information of $\left\lceil log_2^{C_{N_1 N_2}^{L}} \right\rceil + \lceil log_2^{O_1 O_2} \rceil$ bits for calculating the precoding is sent to the network device, in which the second basis vector indication information is used to indicate L SD basis vectors selected by the terminal — S192

third basis vector indication information of M×L bits for calculating the precoding is sent to the network device, in which the third basis vector indication information is used to indicate the one or more SD-FD basis vector pairs selected by the terminal — S193

FIG. 19

first basis vector indication information of $\left\lceil log_2^{C_{N_3}^{M}} \right\rceil + \lceil log_2^{O_4} \rceil$ bits or $\left\lceil log_2^{C_{N_3-1}^{M-1}} \right\rceil + \lceil log_2^{O_4} \rceil$ bits for calculating the precoding is sent to the network device, in which the first basis vector indication information is used to indicate M FD basis vectors selected by the terminal — S201

second basis vector indication information of $\left\lceil log_2^{C_{N_1 N_2}^{L}} \right\rceil + \lceil log_2^{O_1 O_2} \rceil$ bits for calculating the precoding is sent to the network device, in which the second basis vector indication information is used to indicate L SD basis vectors selected by the terminal — S202

third basis vector indication information of $\left\lceil log_2^{C_{ML}^{N'}} \right\rceil$ bits for calculating the precoding is sent to the network device, in which the third basis vector indication information is used to indicate the one or more SD-FD basis vector pairs selected by the terminal — S203

FIG. 20

basis vector indication information for calculating precoding sent by a terminal is received, in which the basis vector indication information is used to indicate the basis vector and/or a basis vector pair selected by the terminal ⟋⟍ S211

↓

the basis vector and/or the basis vector pair selected by the terminal is determined based on the basis vector indication information, to calculate the precoding at different times based on the basis vector and/or the basis vector pair for downlink transmission ⟋⟍ S212

FIG. 21

basis vector indication information for calculating precoding sent by a terminal is received, in which the basis vector indication information is used to indicate a basis vector and/or a basis vector pair selected by the terminal ⟋⟍ S221

↓

the basis vector and/or the basis vector pair selected by the terminal is determined based on the basis vector indication information, to calculate precoding at different times based on the basis vector and/or the basis vector pair for downlink transmission ⟋⟍ S222

↓

codebook parameter information is sent to the terminal ⟋⟍ S223

FIG. 22

communication device ⟋— 1

transceiver module ⟋— 11

processing module ⟋— 12

FIG. 23

1000

1001

processor 1003

computer
program

1002

memory 1004

computer
program

1006

1005

transceiver

receiver

transmitter

antenna

1007

interface
circuit

FIG. 24

1100

1101

processor

1103

interface

1102

memory

FIG. 25

# INTERNATIONAL SEARCH REPORT

| International application No. |
|---|
| **PCT/CN2022/105830** |

**A. CLASSIFICATION OF SUBJECT MATTER**

H04W 24/10(2009.01)i

According to International Patent Classification (IPC) or to both national classification and IPC

**B. FIELDS SEARCHED**

Minimum documentation searched (classification system followed by classification symbols)

H04W;H04B

Documentation searched other than minimum documentation to the extent that such documents are included in the fields searched

Electronic data base consulted during the international search (name of data base and, where practicable, search terms used)

CNKI; CNPAT; WPI; EPODOC; 3GPP: 预编码, preco+, CSI, 信道状态信息, 上报, 报告, report, 时域, 多普勒, 空域, 频域, time, doppler, spatial, frequency, domain, TD, DD, SD, FD, 基, 向量, base, basis, vector

**C. DOCUMENTS CONSIDERED TO BE RELEVANT**

| Category* | Citation of document, with indication, where appropriate, of the relevant passages | Relevant to claim No. |
|---|---|---|
| X | SAMSUNG. "Moderator Summary#3 on Rel-18 CSI enhancements: ROUND 3" *3GPP TSG RAN WG1 #109-e, R1-2205362*, 20 May 2022 (2022-05-20), section 1 and section 2.2 | 1-73 |
| X | CN 113840324 A (HUAWEI TECHNOLOGIES CO., LTD.) 24 December 2021 (2021-12-24) description, paragraphs 136-291 | 1-73 |
| X | CN 113965232 A (HUAWEI TECHNOLOGIES CO., LTD.) 21 January 2022 (2022-01-21) description, paragraphs 192-378 | 1-73 |
| X | CN 114667758 A (ZTE CORP.) 24 June 2022 (2022-06-24) description, paragraphs 21-149 | 1-73 |
| X | CN 114557073 A (ZTE CORP.) 27 May 2022 (2022-05-27) description, paragraphs 21-149 | 1-73 |
| X | US 2022182122 A1 (HUAWEI TECHNOLOGIES CO., LTD.) 09 June 2022 (2022-06-09) description, paragraphs 99-319 | 1-73 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 December 2022** | **19 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/105830**

| Patent document cited in search report | | | Publication date (day/month/year) | Patent family member(s) | | | Publication date (day/month/year) |
|---|---|---|---|---|---|---|---|
| CN | 113840324 | A | 24 December 2021 | WO | 2021259180 | A1 | 30 December 2021 |
| CN | 113965232 | A | 21 January 2022 | WO | 2020156103 | A1 | 06 August 2020 |
| | | | | CN | 111510189 | A | 07 August 2020 |
| CN | 114667758 | A | 24 June 2022 | WO | 2021102954 | A1 | 03 June 2021 |
| | | | | KR | 20220080004 | A | 14 June 2021 |
| | | | | US | 2022286261 | A1 | 08 September 2022 |
| CN | 114557073 | A | 27 May 2022 | CA | 3157045 | A1 | 03 June 2021 |
| | | | | WO | 2021102952 | A1 | 03 June 2021 |
| | | | | US | 2022286257 | A1 | 08 September 2022 |
| | | | | IN | 202217029145 | A | 02 September 2022 |
| US | 2022182122 | A1 | 09 June 2022 | EP | 4020854 | A1 | 29 June 2022 |
| | | | | WO | 2021037200 | A1 | 04 March 2021 |
| | | | | CN | 112448743 | A | 05 March 2021 |

Form PCT/ISA/210 (patent family annex) (January 2015)